# EUROPEAN PATENT SPECIFICATION

(11) **EP 0 834 752 B1**
(45) Date of publication and mention of the grant of the patent: **29.12.2004**
(21) Application number: 96908361.7
(22) Date of filing: 08.04.1996
(51) Int. Cl.: G02B 5/30, G02F 1/1335

(54) **LIQUID-CRYSTALLINE OPTICAL FILM AND ITS UTILIZATION**
FLÜSSIGKRISTALLINE OPTISCHE SCHICHT UND IHRE VERWENDUNG
FILM OPTIQUE A CRISTAUX LIQUIDES ET SON UTILISATION

(30) Priority: 07.04.1995 JP 11759195; 21.04.1995 JP 13096395; 16.06.1995 JP 18316895
(43) Date of publication of application: 08.04.1998
(73) Proprietor: Nippon Mitsubishi Oil Corporation, Minato-ku, Tokyo 105-8412 (JP)
(72) Inventor: MAZAKI, Hitoshi, Kanagawa 211 (JP); SATO, Yasushi, Kanagawa 230 (JP)
(74) Representative: Colmer, Stephen Gary
(86) International application number: PCT/JP1996/000947
(87) International publication number: WO 1996/031793

(56) References cited:
- EP-A- 0 628 847
- DE-A- 19 519 928

## Description

### BACKGROUND OF THE INVENTION

### Field of the Invention

The present invention relates to a novel liquid crystalline optical film and its utilization, and more specifically, a liquid crystalline optical film in which an orientation form of discotic liquid crystal is stabilized, its utilization as a compensating film for a liquid crystal display element and a liquid crystal display incorporating the liquid crystal optical film.

### Description of the Prior Art

A liquid crystalline optical film in which an orientation form of liquid crystal is stabilized shows a peculiar optical feature coming from a liquid crystal structure, and it is an unique material presenting excellent endurance against environment. The liquid crystal generally has strong birefringence, and its orientation form is diversified. Thus, the liquid crystal can display optical ability which cannot be obtained by a birefringent stretched film, etc.

In these years, in order to utilize the feature of the liquid crystal, in particular, the peculiar optical feature accompanied by the orientation form, various reports have been made on the stabilization of the orientation.

Since nematic liquid crystals, smectic liquid crystals and cholesteric liquid crystals which have been examined are such that rod-like liquid crystal molecules are oriented, the variety of obtained orientation forms is limited, and thus the application of the liquid crystal to new optical fields and coping with required physical properties have reached the limit.

Discotic liquid crystals whose molecular shape is entirely different from that of the above mentioned other liquid crystals have attracted attention, and thus are tried to be utilized in the optical fields, etc. similarly to the above mentioned other liquid crystals.

Discotic liquid crystals are generally such that the molecules have a disc-like shape and when the liquid crystal is oriented on a substrate a homeotropic orientation, in which the molecular plane is parallel with a surface of the substrate, or a tilt orientation, in which the molecules are tiled at a constant angle, are obtained. The refractive index structure which is shown by the above orientations is a negative uniaxial structure.

The utilization of discotic liquid crystals in the optical field is disclosed in, for instance, Japanese Patent Application Laid-Open No. 6-214116/1994. This publication discloses an optical element producing method in which after a discotic liquid crystal compound is dispersed in a polymeric matrix, a magnetic field is applied thereto slantingly, and a negative uniaxial structure, where an optic axis is tilted from the normal to the substrate, is formed.

As it is clear from the above description in the publication, it is assumed that the discotic liquid crystal is an optical material which is expected to improve the optical property, which has not been obtained, and to be applied to the new optical field because of the peculiar orientation form and refractive index due to the molecular shape of the liquid crystal and the peculiar optical feature based on the refractive index.

However, according to the technique described in the above publication, the orientation form and the refractive index structure based on the orientation form are limited to the form and the uniaxial structure which are peculiar to the discotic liquid crystal, and the orientation method should be complicated because in this method a liquid crystal compound is dispersed in a polymeric matrix and a magnetic field or an electric field is applied thereto. Therefore, this technique was limited in the aspect of industrial application.

One of the typical utilization of liquid crystalline optical films is as compensating plates for liquid crystal displays.

Since the liquid crystal display has such features as a low-voltage driving, light weigh and low cost, it is in common use widely as display for a notebook-type personal computer, a portable electronic equipment, a portable television, etc. The liquid crystal display adopts various systems with various orientation forms of the liquid crystal and various driving electrodes to be utilized. Particularly, an active matrix-type LCD (Liquid Crystal Display), which is represented by a TFT (Thin Film Transistor) -LCD using TN (Twisted Nematic) -type liquid crystal, is greatly expected as a high-performance display because of its high-speed response and high image quality instead of a cathode-ray tube. However, when the LCD is compared with the cathode-ray tube, it becomes clear that the TFT-LCD has a decisive disadvantage, that is, a viewing angle dependence of display. The viewing angle dependence is a problem that when viewing a display sideways, display performance (contrast ratio and gray scales) is deteriorated. This is caused by utilizing members such as liquid crystal and a deflecting plate having optical anisotropy, and this problem arises generally in the liquid crystal display. However, since the TFT-LCD takes aim at high-quality display, the problem of the viewing angle dependence is more serious to the TFT-LCD than to another display systems. For instance, as to a liquid crystal television which is one of the important applications of the TFT-LCD, even a slight change in colors and in contrast due to the viewing angle displease people. Moreover, in the case where an area is made larger, since the viewing angle changes with a position of the screen, there arises such a problem that display of constant quality cannot be obtained between the central portion and the edge portion of the screen.

The compensating plate for the LCD display which is provided conventionally has an insufficient viewing angle, and thus further improvement is desired. An example of a compensating plate made of nematic liquid crystal polymers is disclosed in EP0628847.

### OBJECT OF THE INVENTION

An object of the present invention is to provide a novel liquid crystalline optical film which exploits the orientation form and the refractive index structure of conventional discotic liquid crystals, and more specifically, to provide a liquid crystalline optical film, which is obtained by, in particular, hybrid orientation and stabilization of the discotic liquid crystal over a large area, and which is obtained by an industrially easy method.

Another object of the present invention is to provide a compensating film for a liquid crystal display element which is capable of enlarging the viewing angle as a compensator for a liquid crystal display.

The present invention solves the above problems and provides a compensating film for a liquid crystal display element which is capable of enlarging the viewing angle as a compensating plate especially for a TN liquid crystal display which is driven by a normally white mode with either a rotatory mode or a birefringence mode.

A main object of the present invention is to provide a liquid crystal display into which a compensating film is incorporated.

Still another object of the present invention is clarified by the following description.

### SUMMARY OF THE INVENTION

The present invention, in the first aspect thereof, relates to a liquid crystalline optical film formed by a single-layered film of a discotic liquid crystalline material having a stabilized amorphous glassy state in which the liquid crystal orientation is frozen. The orientation is a hybrid orientation in which the angle between the discotic crystal director near the upper interface of the film and a film plane is different from the angle between the discotic crystal director near the lower interface of the film and the film plane.

The present invention, in the second aspect thereof, relates to the above first liquid crystalline optical film wherein the hybrid orientation is such that on one side of the film the discotic liquid crystal director makes an angle of between 60° and 90° relative to the film plane, while on the other side of the film the discotic liquid crystal director makes an angle of between 0° and 50° relative to the film plane.

The present invention, in the third aspect thereof, relates to the above first or second liquid crystalline optical film formed on a substrate.

The present invention, in the fourth aspect, relates to a liquid crystal display element compensating film formed by the above first or second liquid crystalline optical film.

The present invention, in the fifth aspect thereof, relates to the above fourth liquid crystal display element compensating film formed by at least one sheet of the above fourth compensating film being used for a liquid crystal element employing a normally white mode provided with a TN liquid crystal cell and with a pair of upper and lower polarizing plates sandwiching the liquid crystal cell.

The present invention, in the sixth aspect thereof, relates to the above fourth liquid crystal display element compensating film at least one sheet of which is used on one or both sides of the TN liquid crystal cell and is between a pair of upper and lower polarizers sandwiching the TN liquid crystal cell.

The present invention, in the seventh aspect thereof, relates to a liquid crystal display element compensating film is a compensating film used for a birefringence mode and normally white mode liquid crystal display element having a TN liquid crystal cell and a pair of polarizing plates whose transmission axes intersect perpendicularly to each other. The compensating film is formed by the above first or second liquid crystalline optical film.

The present invention, in the eighth aspect thereof, relates to a liquid crystal display element compensating film is a compensating film used for a rotatory mode and normally white mode liquid crystal display element having a TN liquid crystal cell and a pair of polarizing plates whose transmission axes intersect perpendicularly to each other. The compensating film is formed by a single-layered film of a discotic liquid crystalline material having a stabilized amorphous glassy state in which the liquid crystal orientation is frozen, the orientation is a hybrid orientation in which the angle between the discotic crystal director near the upper interface of the film and a film plane is different from the angle between the discotic crystal director near the lower interface of the film and the film plane.

The present invention, in the ninth aspect thereof, relates to a liquid crystal display incorporating therein at least one sheet of the above eighth liquid crystal display element compensating film.

The present invention, in the tenth aspect thereof, relates to an optical element comprising at least the above first or second liquid crystalline optical film described and a substrate and wherein the angle between discotic liquid crystal directors in the vicinity of the film interface on the substrate side and the film plane is in the range of 0° to 50°.

The present invention, in the eleventh aspect thereof, relates to an optical element comprising a substrate and the above first or second liquid crystalline optical film. The substrate substantially has no anchoring effect on the discotic liquid crystal.

The present invention, in the twelfth aspect thereof, relates to an optical element comprising a substrate not having an alignment film and the above first or second compensating film.

The present invention, in the thirteenth aspect thereof, relates to a compensating element comprising the above tenth, eleventh or twelfth optical element.

The present invention, in the fourteenth aspect thereof, relates to a liquid crystal display incorporating therein at least one sheet of the above thirteenth compensating element.

The following describes the present invention in detail.

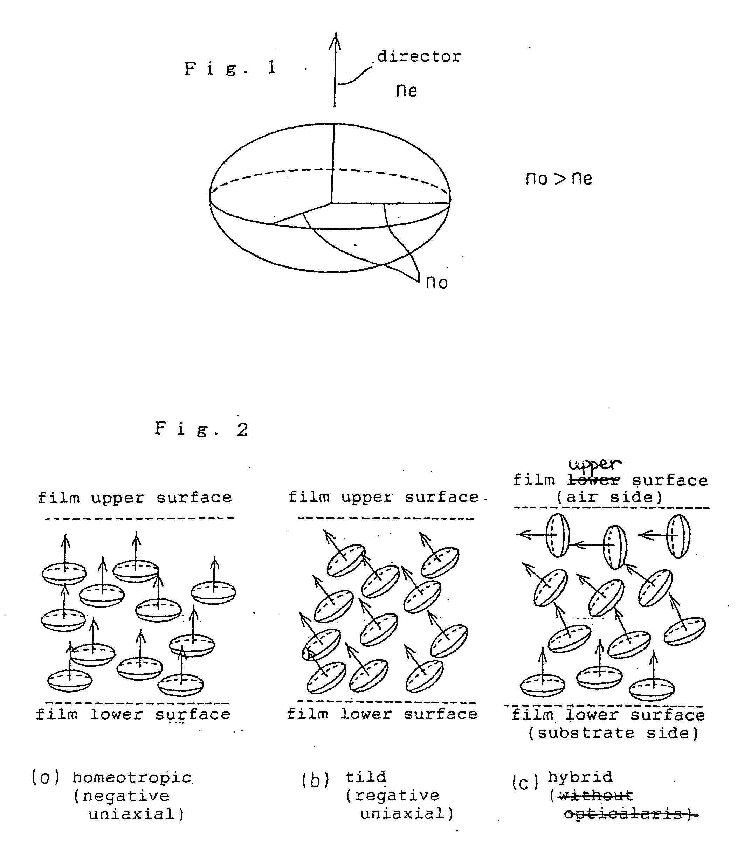

In general, discotic liquid crystals are formed by molecules each having a disc-like mesogen of high flatness. The discotic liquid crystal is characterized in that the refractive index in a very small area in the liquid crystal layer has a negative uniaxial property. As shown in Fig. 1, if refractive indexes in a certain plane are equal (assumed to be "no"), the direction perpendicular to that plane is called director (a unit vector representing a local orientation direction of the liquid crystal). The refractive index in the director direction is assumed to be "ne". There exists the relation of no>ne. The refractive index characteristic and hence the optical characteristics of the resulting structure are determined depending on how the director in a very small area is arranged.

When the director direction (angle) is the same throughout the whole of the liquid crystal layer, the direction corresponds to the optic axis of the entire liquid crystal layer.

Usually, when the director faces in the same direction throughout the whole of a discotic liquid crystal layer, the liquid crystal layer exhibits a negative uniaxial property. An orientation of a discotic liquid crystal obtained by a conventional method gives the negative uniaxial structure as shown in Fig. 2 (a) and 2 (b). The orientation shown in Fig. 2 (a) is called a homeotropic orientation because the discotic liquid crystal director in the liquid crystal layer is uniformly arranged normal to the substrate. The optic axis of the liquid crystal layer where such orientation is formed is normal to the substrate. The orientation shown in Fig. 2 (b) is a tilted orientation wherein the discotic liquid crystal director in the liquid crystal layer is uniformly tilted at a certain angle to the normal of the substrate. In the tilted orientation, the optic axis of the entire liquid crystal layer is tilted (tilt angle direction).

The orientation form of the optical film according to the present invention is entirely different from the above-mentioned negative uniaxial structure including the homeotropic orientation and tilt orientation. The optical film according to the present invention is a single-layer film wherein the angle between the discotic liquid crystal director and the film plane is different between the portion near the upper interface of the film and the portion near the lower interface of the film. More particularly, the angle between the director and the film plane is different at various points in the film thickness direction. In the optical film according to the present invention, moreover, the directions obtained when the director is projected on the film plane (director directions) are almost the same throughout the entire liquid crystal layer, namely, throughout the compensating film. Now that the director angle is different between the portion near the upper interface of the film and the portion near the lower interface of the film and that the director directions face in one direction, the optical film is presumed to present a unique orientation such that the angle between the discotic liquid crystal directors and the film plane varies almost continuously in the film thickness direction, as shown in Fig. 2(c).

In a rod-like nematic liquid crystal, the orientation which presents such a continuous change in the director angle in the film thickness direction is called a hybrid orientation. In view of this point, the orientation form of the optical film according to the present invention will also be designated hybrid orientation hereinafter.

In the present invention, the tilt of the hybrid orientation in the film thickness direction is usually between 60° and 90° in the vicinity of the upper interface or the lower interface of the film and between 0° and 50° in the vicinity of the opposite interface in terms of an absolute value of a minimum angle between the discotic liquid crystal director and the film plane, namely, an angle obtained by (90° - a°) wherein "a" is an angle between the discotic liquid crystal director and the normal line to the film plane which is not an obtuse angle (i.e. within the range of from 0° to 90°). More preferably, the absolute value of one angle is between 80° and 90° and that of the other angle is between 0° and 30°.

Here; the portions near the interfaces means a depth for about 1% to 5% of the film thickness from the surface of the film towards the film thickness direction.

As mentioned above, since the liquid crystalline optical film according to the present invention exhibits the hybrid orientation where the angle between the discotic liquid crystal director and the film plane is different between the portion near the upper interface and the portion near the lower interface, the director tilt is different in the thickness direction, and thus from the point of view of a structure as a film, the uniaxial property is lost. When light passes through the liquid crystal having such an orientation form, complicated birefringence which has not been obtained can be observed.

Now, a description will be given of the discotic liquid crystalline material used in the present invention. Said material is constituted by a discotic liquid crystalline material alone or a composition containing at least one such liquid crystalline compound.

By C. Destrade et al. discotic liquid crystals are classified according to their molecular orientation order into ND phase (discotic nematic), Dhd phase (hexagonal ordered columnar phase), Dhd phase (hexagonal disordered columnar phase), Drd phase (rectangular disordered columnar phase), and Dob phase (oblique columnar phase) [C. Destrade et al. Mol. Cryst. Liq. Cryst. 106, 121 (1984)]. The molecular orientation order is not specially limited in the present invention, but from the point of view of easiness of orientation it is preferable to use a material having at least an ND phase which is the lowest in orientation order. Particularly preferred is a material which has only an ND phase as the only liquid crystal phase.

The discotic liquid crystalline material used in the present invention preferably does not exhibit transition from liquid crystal phase to crystal phase at the time of fixing its orientation form so that the orientation form in the liquid crystal state of may be fixed. Moreover, it is desirable that the discotic liquid crystalline material when formed into a film can maintain the orientation form under the conditions of practical use and can be handled in the same manner as a solid. The "fixed" state as referred to herein indicates a stabilized amorphous glassy state in which the liquid crystal orientation in the liquid crystal state is frozen. That is, the fixed state in question indicates a state in which under the conditions of practical use of the liquid crystalline optical film of the present invention, more specifically in the temperature range usually from 0°C to 50°C, more severely from -30°C to 70°C, the fixed orientation form can be retained stably without fluidity of the film and without a change in the orientation caused by an external field or force. In view of the above points, it is preferable that the discotic liquid crystalline material used in the present invention possesses any of the following properties.
1) At a lower temperature than the state of liquid crystalline the material has only a glassy state and does not have a crystalline phase. As the temperature drops from the state of liquid crystal, the material is fixed into the glassy state.
2) The material has a crystalline phase at a lower temperature than the state of liquid crystal and has a glassy state at a lower temperature region than the crystalline phase. As the temperature drops from the state of liquid crystal, a crystal phase does not appear (due to supercooling of crystal phase or due to monotropicity involving crystallization only during the rise of temperature), but the material is fixed into the glassy state.
3) The material has a crystal phase at a lower temperature region than the state of the liquid crystal, but at a still lower temperature region the material does not exhibit a clear glass transition, and when the temperature drops from the state of liquid crystal, there does not appear a crystalline phase (due to supercooling of crystalline phase or due to monotropicity involving crystallization only during the rise of temperature). At a still lower temperature than the melting point, which is observed upon re-heating after fixing, the material is extremely limited in its molecular fluidity and can be regarded as a solid material in practical use.
4) At a lower temperature region than the state of liquid crystal a clear transition to crystal phase or to glassy state is observed neither during the rise of temperature nor during the fall of temperature. There is no fluidity in the working temperature range of the film in question, and even when an external force such as shear or an external field is applied to the film, the orientation form does not change.

Of the above properties, more preferable ones are 1) and 2), and the most preferred is 1). Also as to 3) and 4), both properties are applicable to practical use without any trouble, but it is necessary to make sure carefully that there will be no possibility of occurrence of orientation disorder under the working conditions of practical use of the film. More specifically, usually in the temperature range from 0°C to 50°C, if the ordered orientation form is not destroyed under force application of shear for example, there is no problem. On the other hand, if the ordered orientation form is destroyed due to shear for example, the inherent optical performance is lost, and no matter what treatment may be conducted subsequently, it is difficult to restore the original orientation form, thus posing a serious problem in practical use.

It is desirable that the discotic liquid crystalline material used in the present invention possesses any of the above mentioned properties and exhibits a good domain uniformity due to a uniform and satisfactory orientation. If the domain uniformity is bad, the resulting structure will be a polydomain structure, in which light is scattered due to orientation defects at the boundary of domains. Deterioration in the transmittance of the film will also result. Thus, a poor domain uniformity is not desirable.

Description is now directed to discotic liquid crystalline compounds each employable as the liquid crystalline material in question. These compounds are each composed principally of a disc-shaped central portion (discogen) essential for developing a discotic liquid crystal phase and substituent groups necessary for stabilizing the liquid crystal phase. Monofunctional substituent groups ones are preferred, but even a compound obtained by using bifunctional substituent groups and partially coupling discogens with each other, allowing oligomerization or polymerization to take place, is also employable as liquid crystalline material in the present invention.

The following are molecular structures of discotic liquid crystalline compounds employable in the present invention:

Hereinafter, the molecular structures of the discotic liquid crystalline compounds used in the present invention are illustrated concretely: 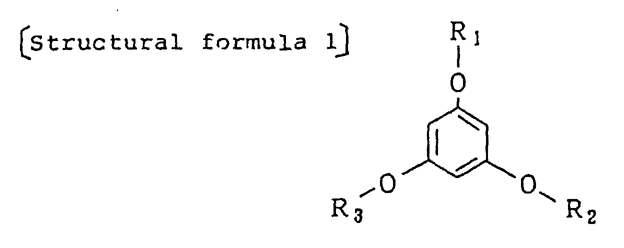 wherein R₁, R₂ and R₃ are each independently monofunctional or bifunctional substituent groups selected from the following groups:

Monofunctional substituent groups: 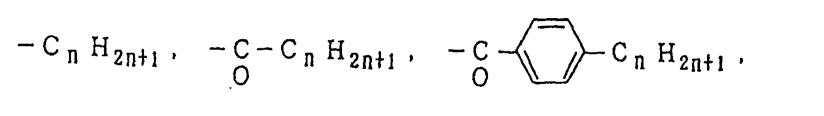 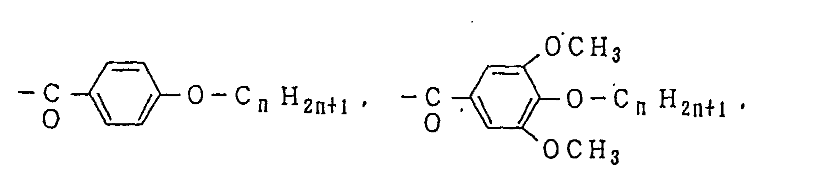 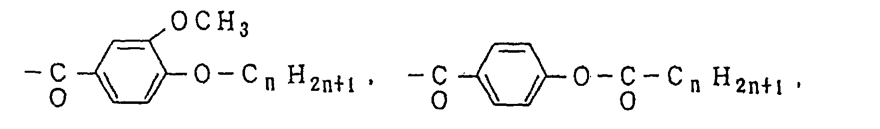 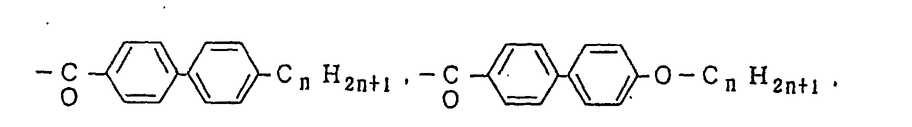 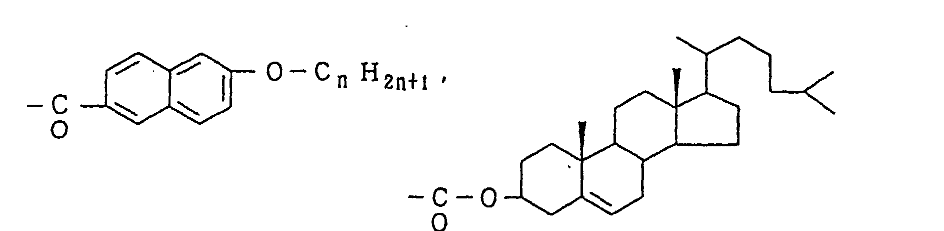 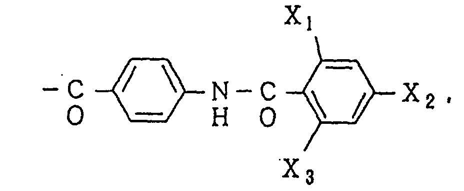 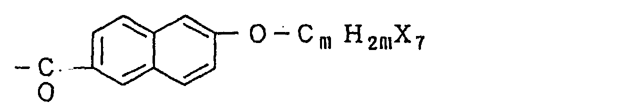 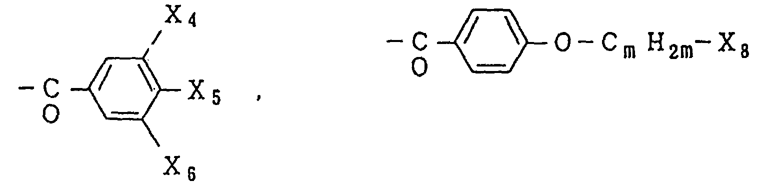 etc.
wherein CₙH₂ₙ₊₁ is a linear or branched alkyl group, and n is an integer of 1-18, preferably 3-14, X₁-X₈ are each independently H-, F-, Cl-, Br-, C_{ℓ}H_{2ℓ+1}, C_{ℓ}H_{2ℓ+1}O-, C₆H₅-, C₆H₅CO- or C₆H₅O-, C_{ℓ}H_{2ℓ+1} is a linear or branched alkyl groups, ℓ is an integer of 1-18, preferably 1-10, CₘH₂ₘ is a linear or branched alkylene chain and m is an integer of 1-6, preferably 2-10. Bifunctional substituent groups: 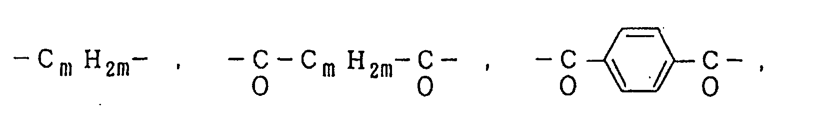 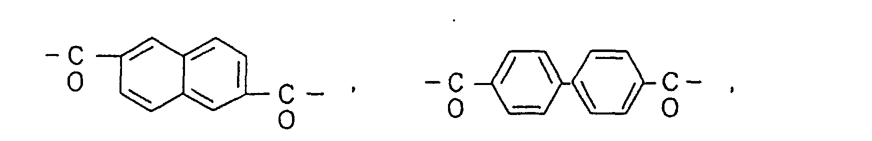 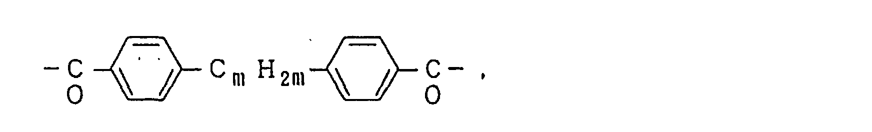 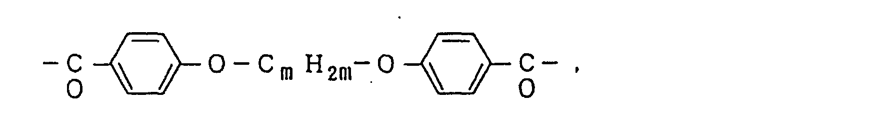 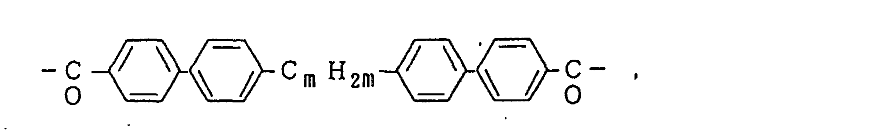 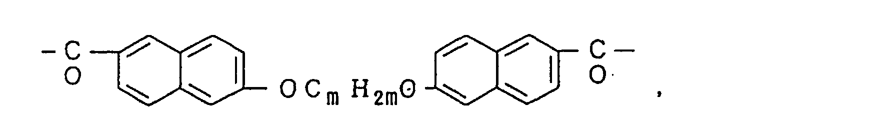 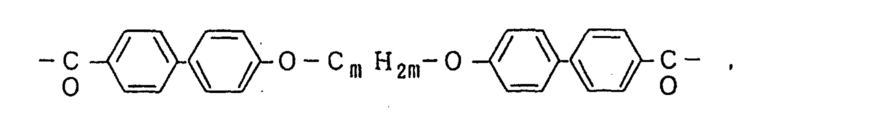 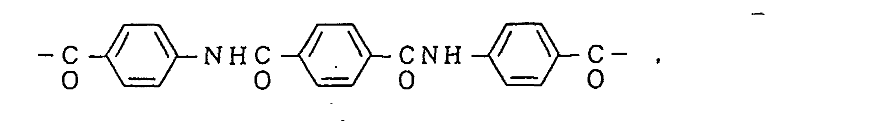 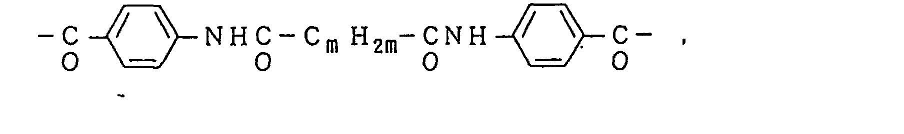 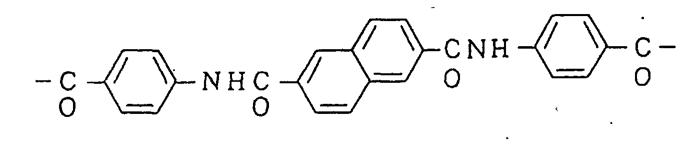 etc.
wherein CₘH₂ₘ is a linear or branched alkylene chain, and m is an integer of 2-16, more preferably 4-12.

Examples of the concrete structures: 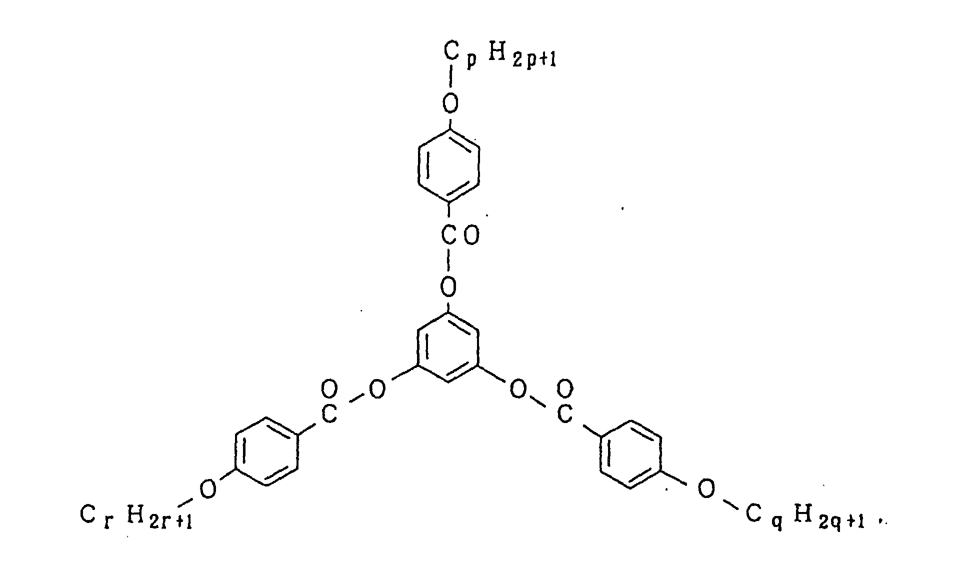 wherein p, q and r are each an integer of 1-18, preferably 3-14. 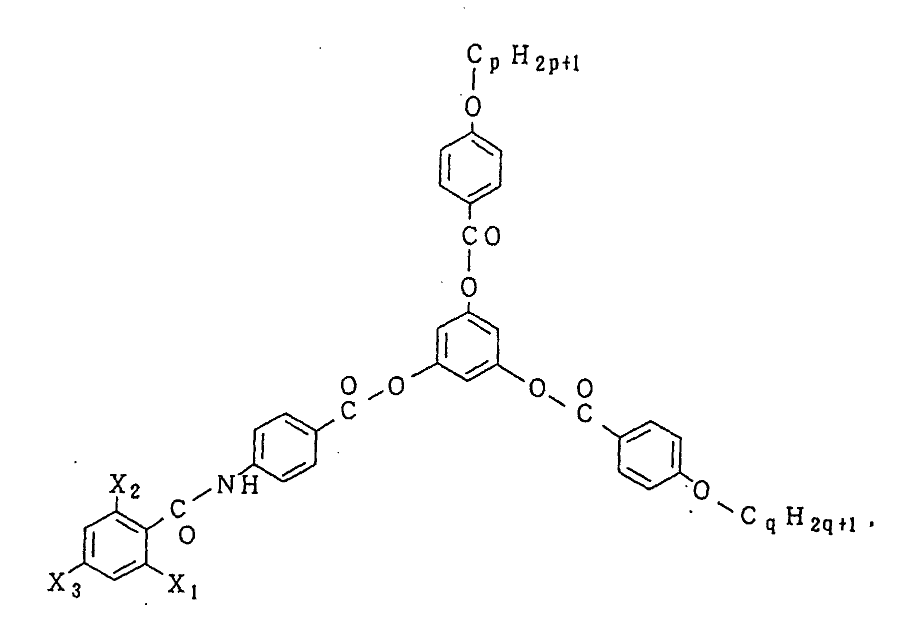 wherein p and q are each an integer of 1-18, preferably 3-14, X₁, X₂ and X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1}. is a linear or branched alkyl group, and ℓ is an integer of 1-18, preferably 1-10. 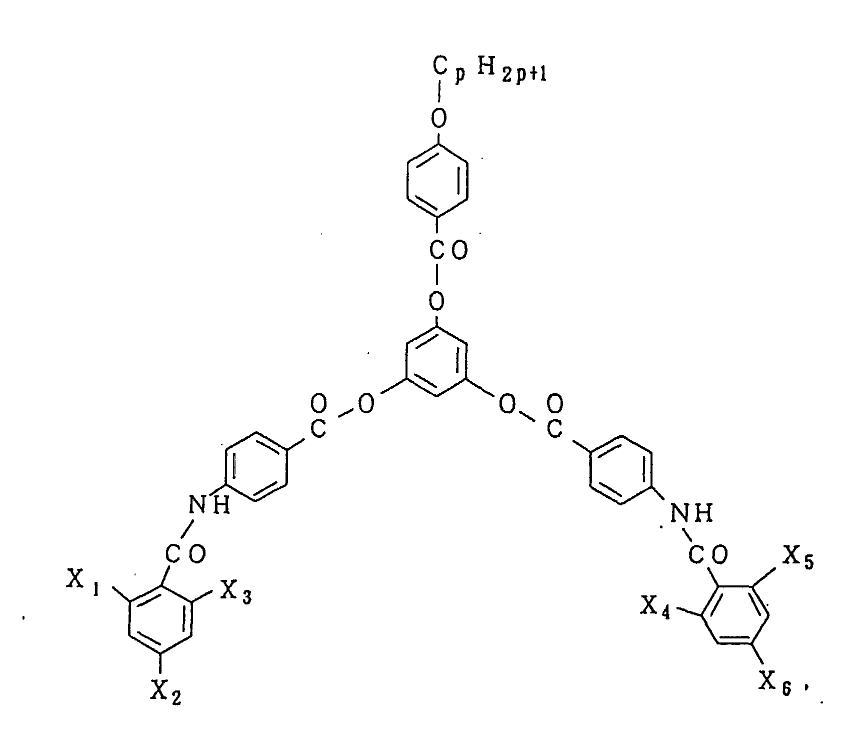 wherein p is an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl, and ℓ is an integer of 1-18, preferably 1-10. 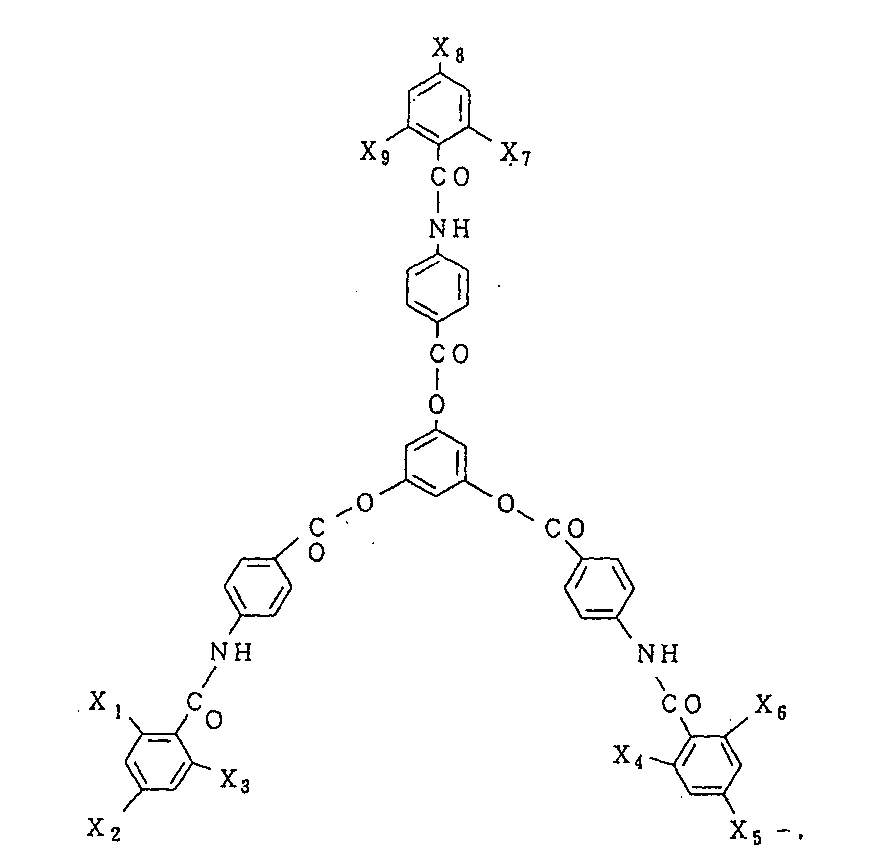 wherein X₁-X₉ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 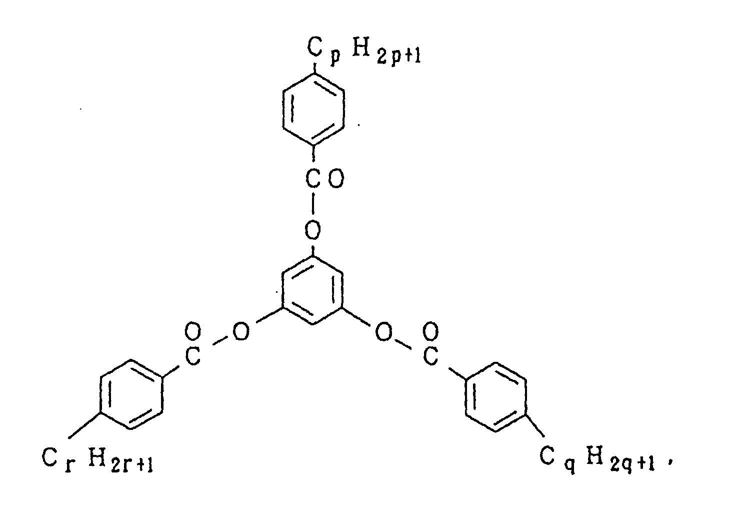 wherein p, q and r are each an integer of 1-18, preferably 3-14. 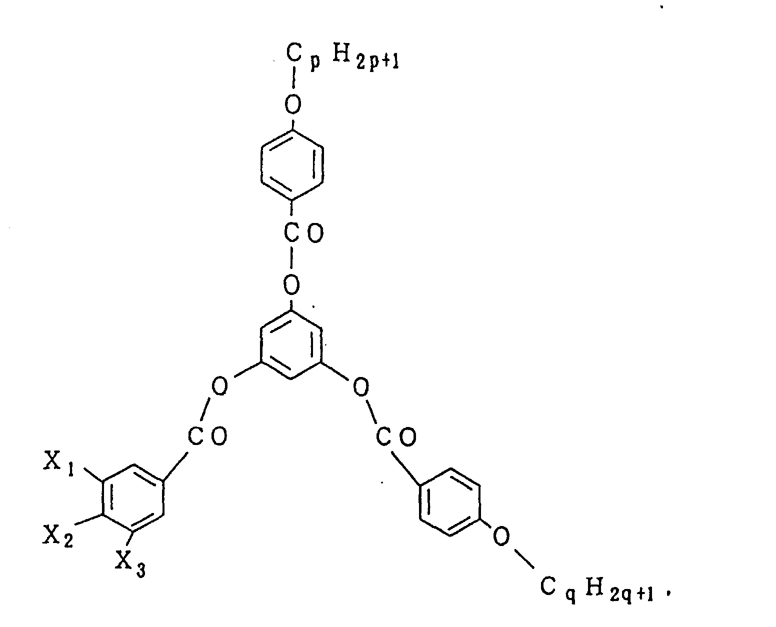 wherein p, q are each an integer of 1-18, preferably 3-14. X₁ and X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 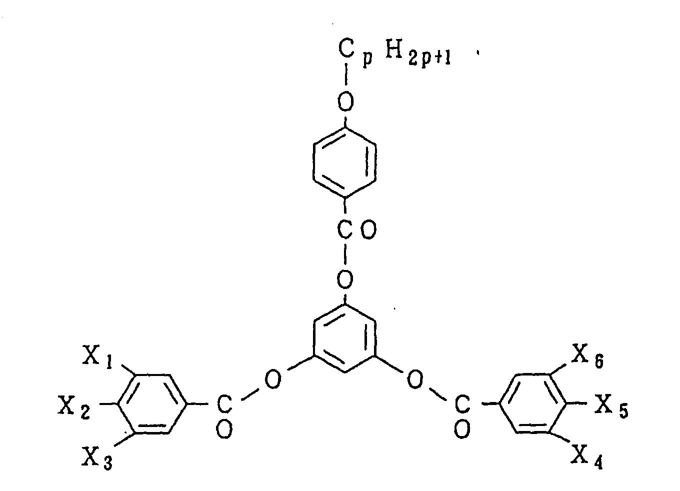 wherein p is an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 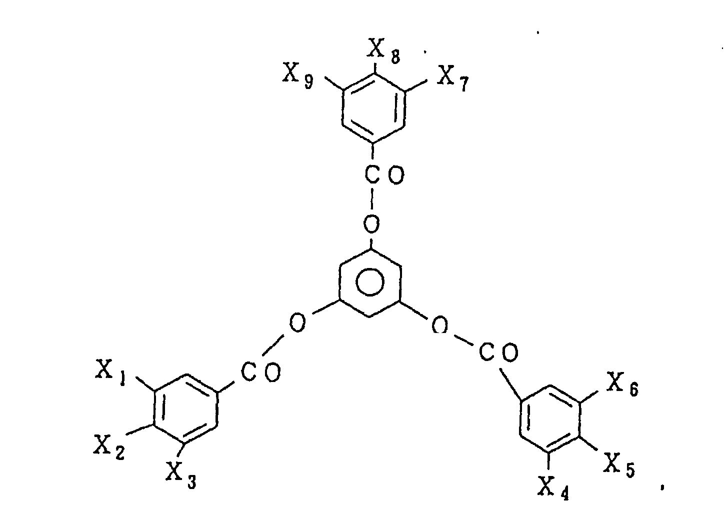 wherein X₁-X₉ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 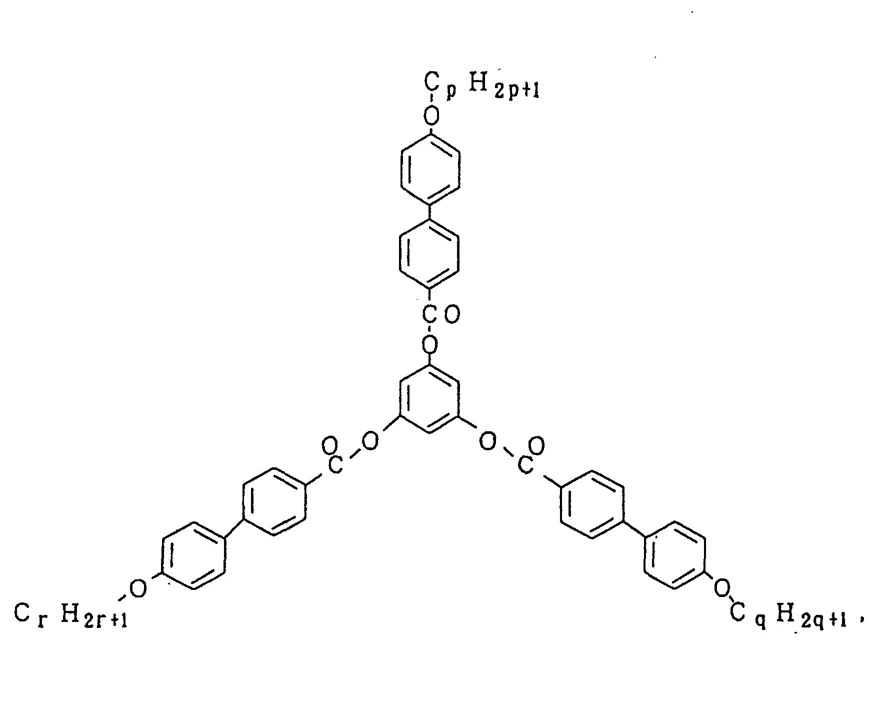 wherein p, q and r are each an integer of 1-18, preferably 3-14. 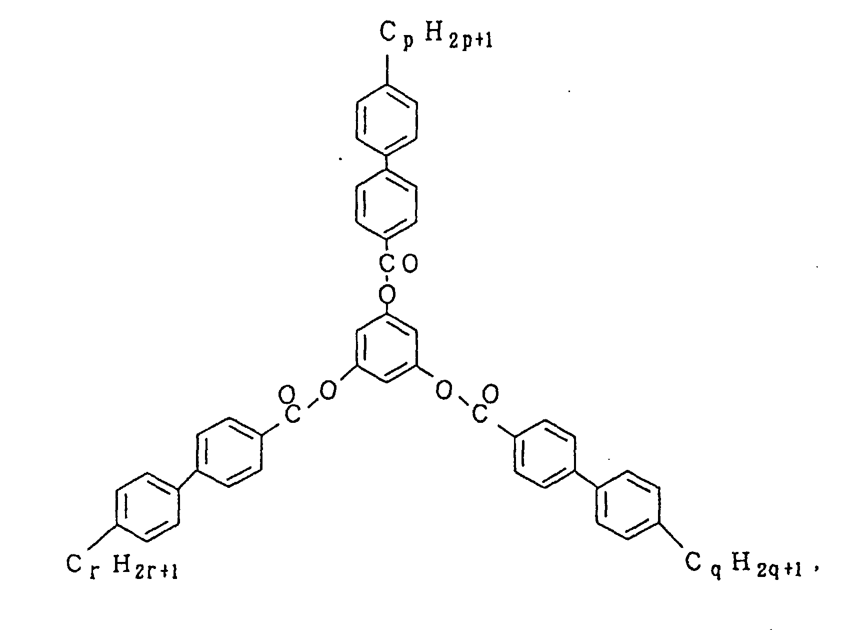 wherein p, q and r are each an integer of 1-18, preferably 3-14. 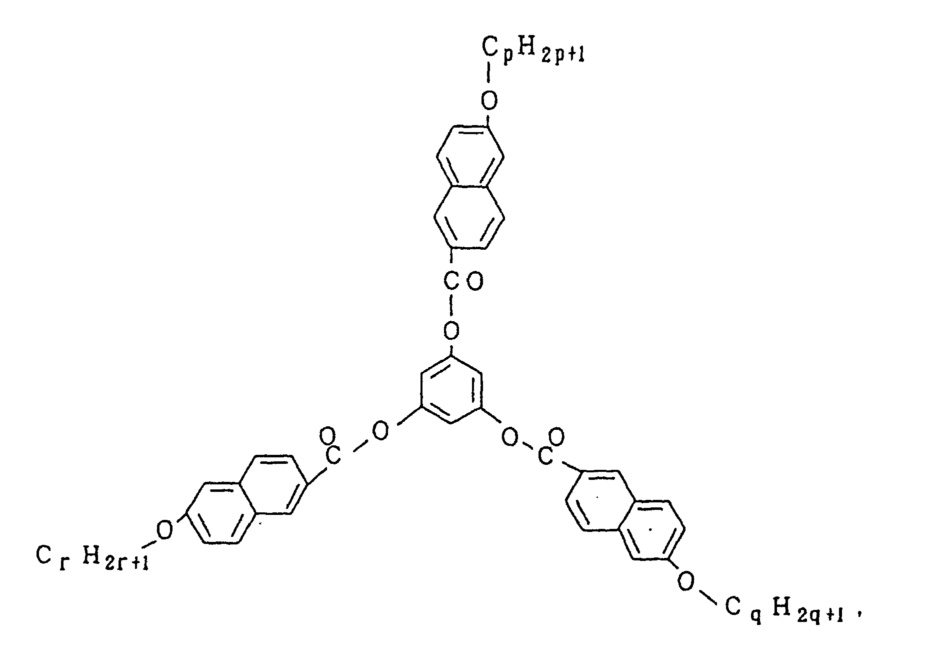 wherein p, q and r are each an integer of 1-18, preferably 3-14. 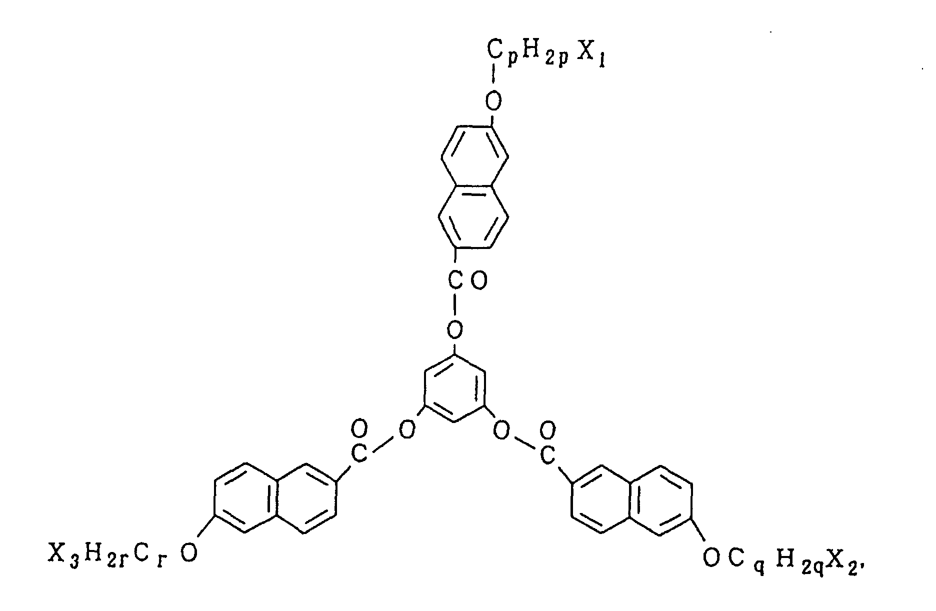 wherein p, q and r are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 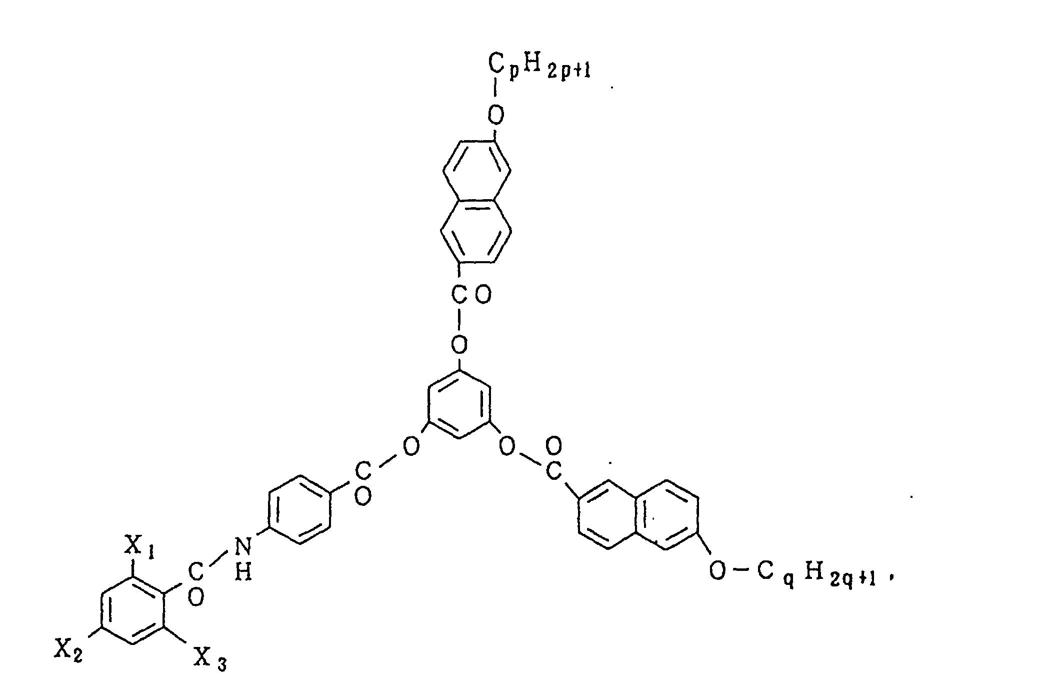 wherein p and q are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 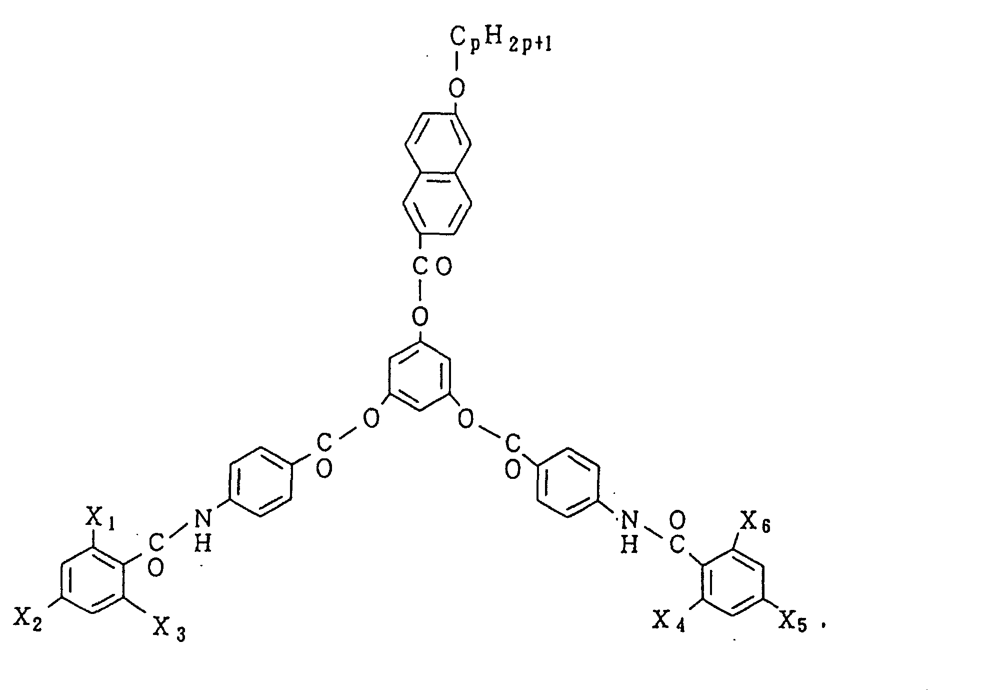 wherein p is an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Polymer represented by 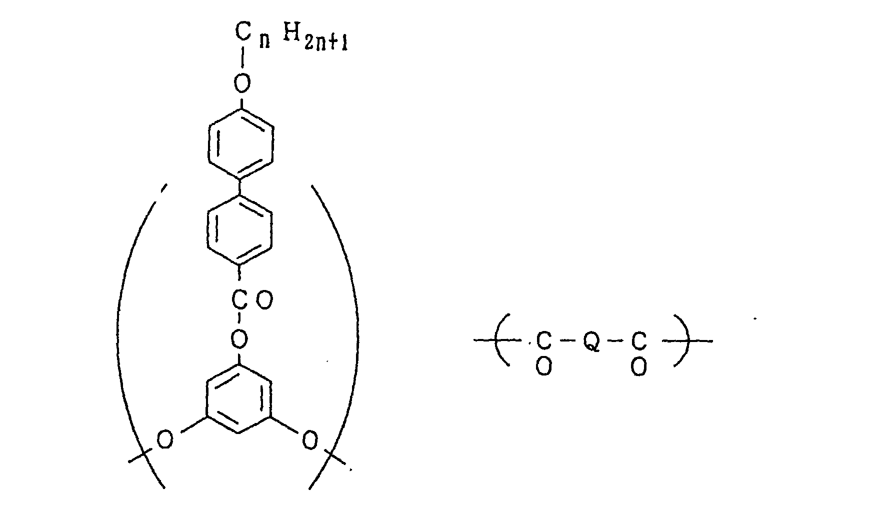 wherein Q is 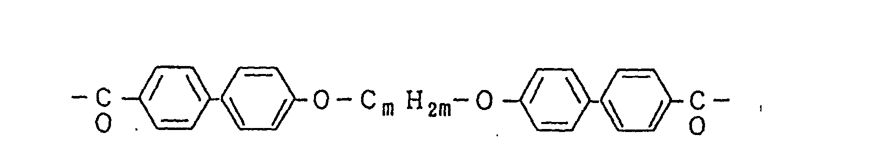 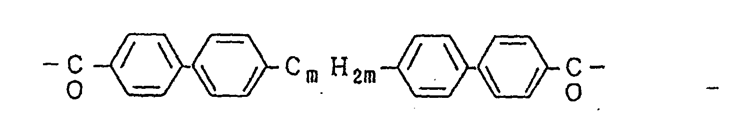 wherein n is an integer of 1-18, preferably 3-14, m is an integer of 2-16, more preferably 4-12 and the average molecular weight is 4,000 - 100,000. 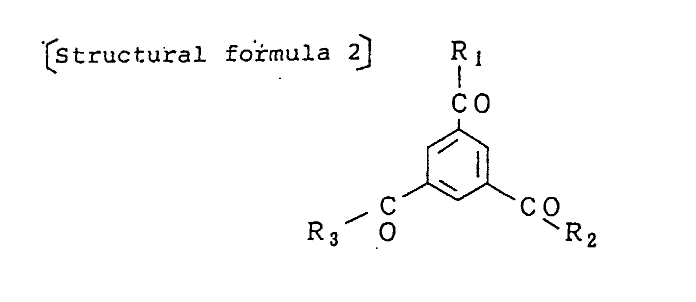 wherein R₁, R₂ and R₃ are each a monofunctional or bifunctional substituent group.

Monofunctional groups: 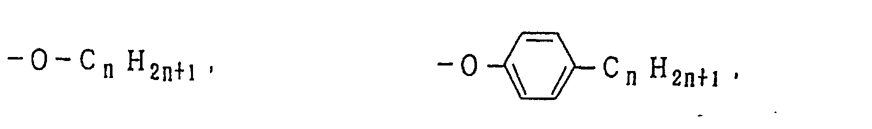 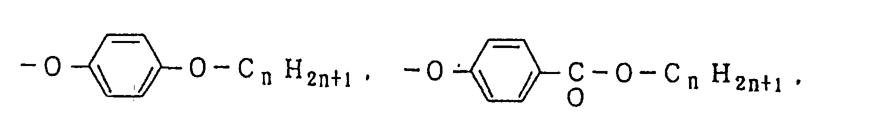 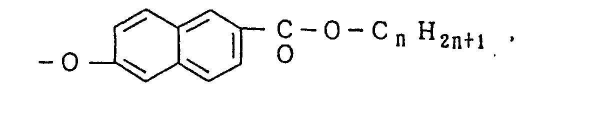 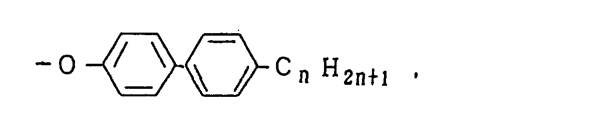 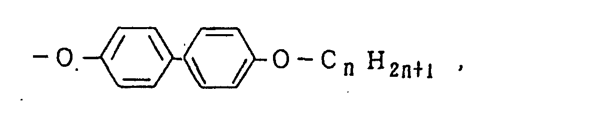 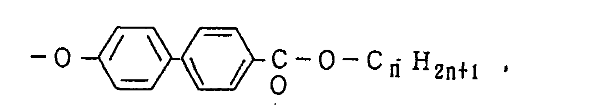 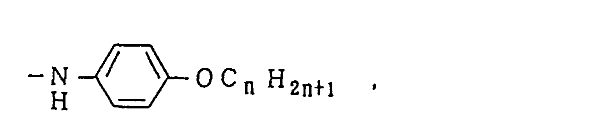 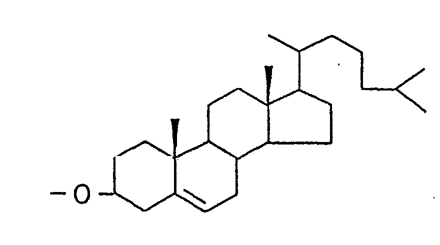 etc.
wherein CₙH₂ₙ₊₁ is a linear or branched alkyl gorup, and n is an integer of 1-18, preferably 3-14.

Bifunctional groups: 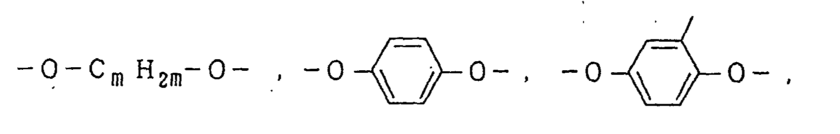 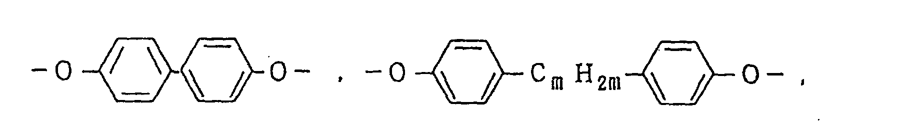 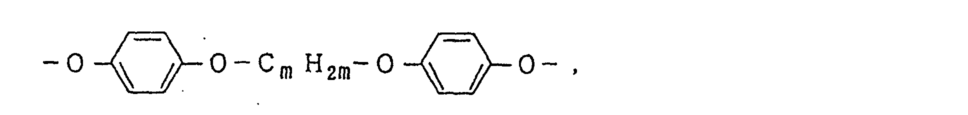 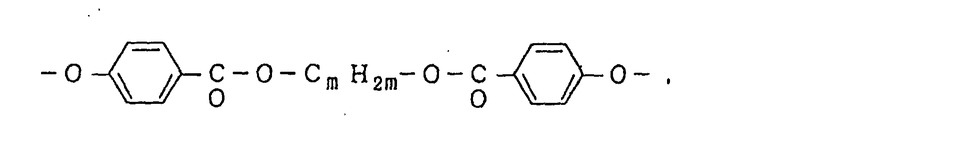 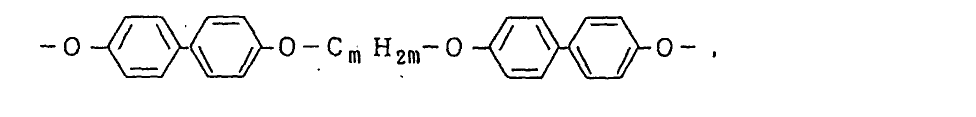 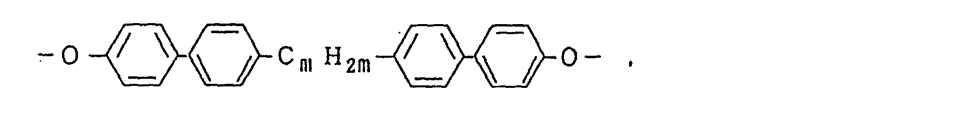 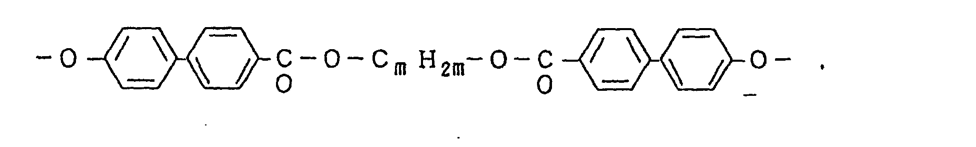 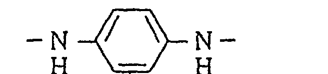 etc.
wherein CₘH₂ₘ is a linear or branched alkylene chain, and m is an integer of 2-16, preferably 4-12.

Examples of the concrete structures: 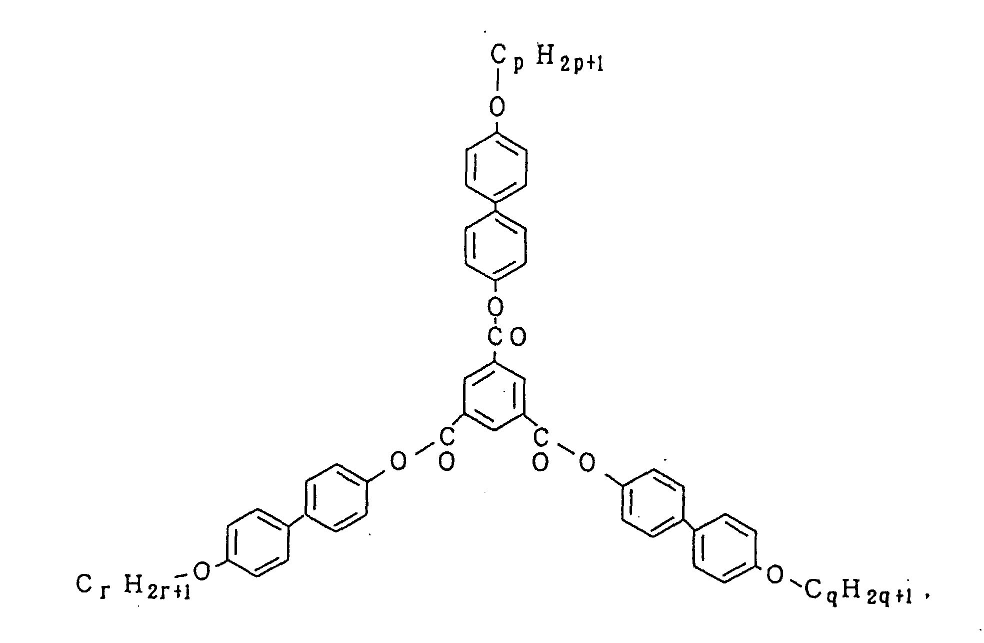 wherein p, q and r are each an integer of 1-18, preferably 3-14. 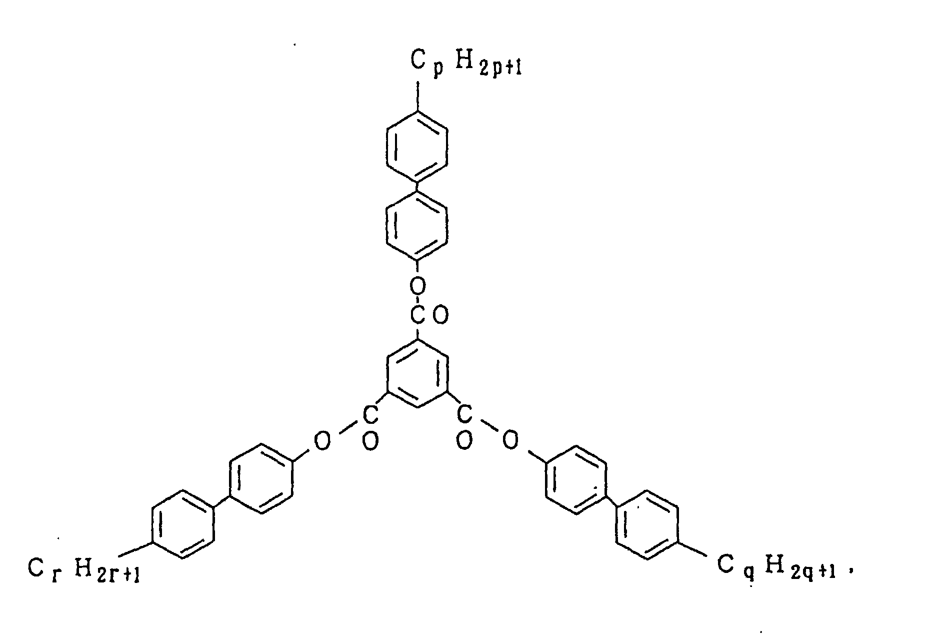 wherein p, q and r are each an integer of 1-18, preferably 3-14. 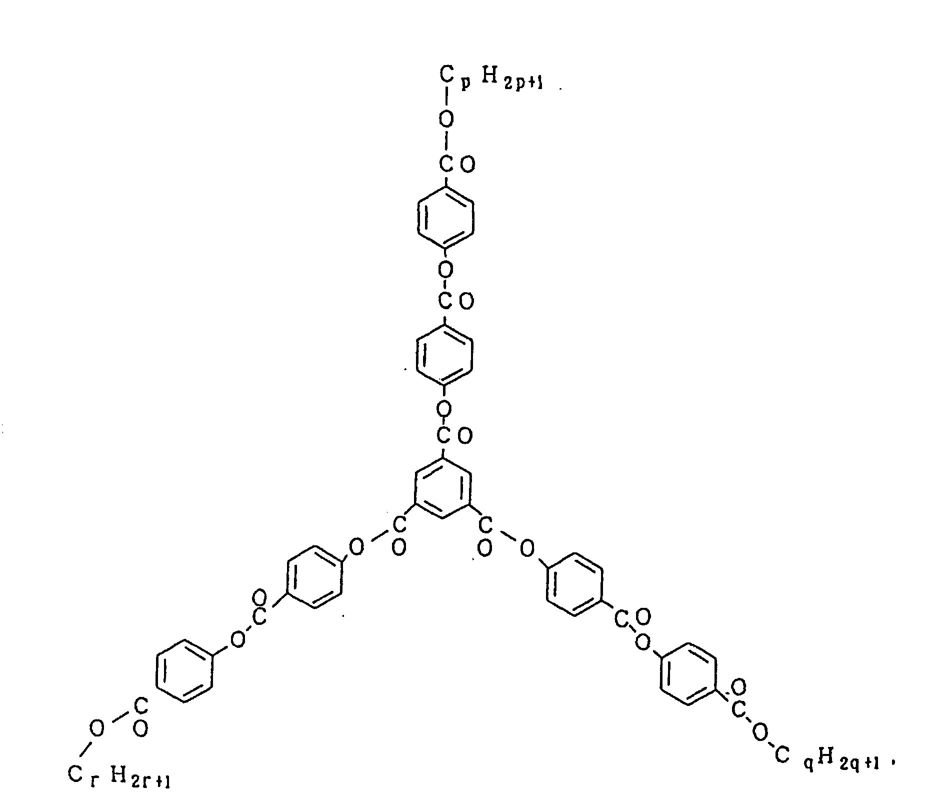 wherein p, q and r are each an integer of 1-18, preferably 3-14. 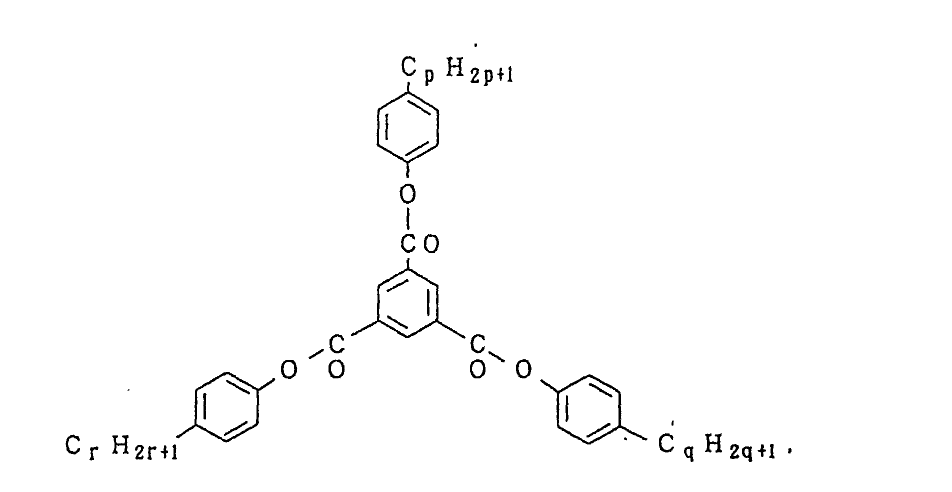 wherein p, q and r are each an integer of 1-18, preferably 3-14. 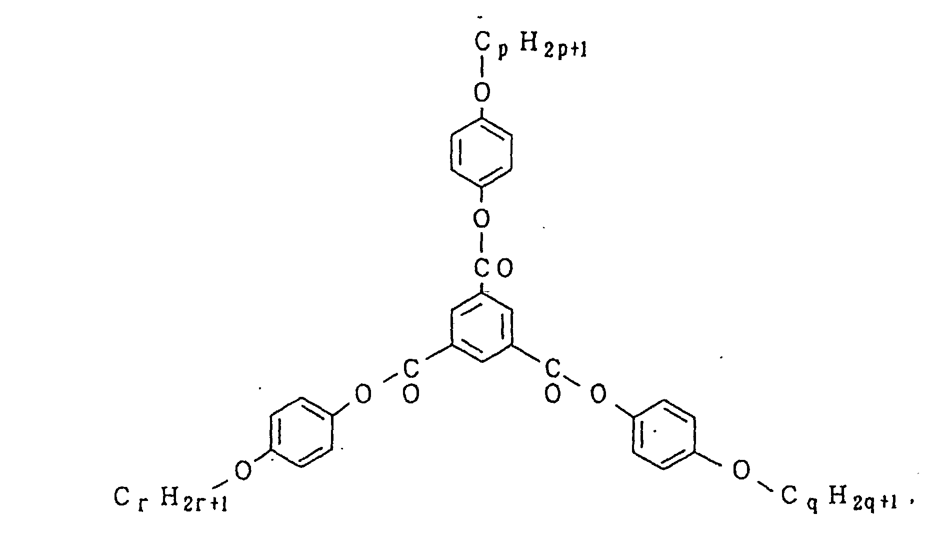 wherein p, q and r are each an integer of 1-18, preferably 3-14. 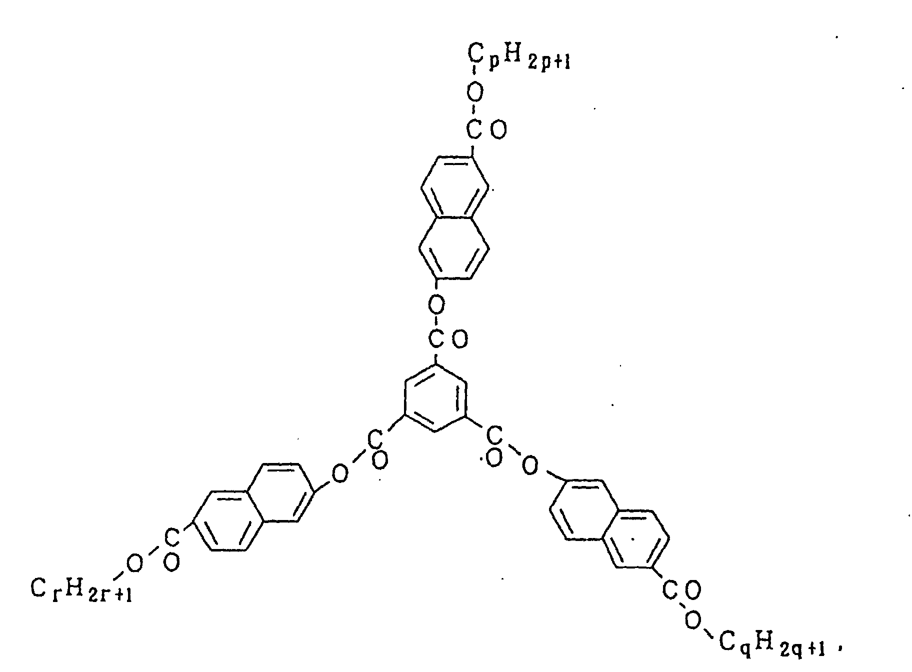 wherein p, q and r are each an integer of 1-18, preferably 3-14.

Polymer represented by 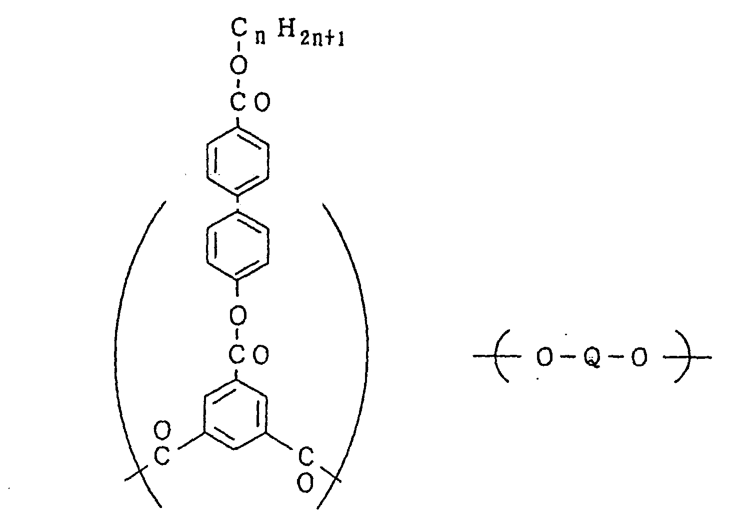 wherein the average molecular weight is 4,000 - 100,000 and Q is 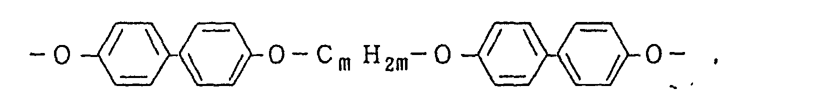 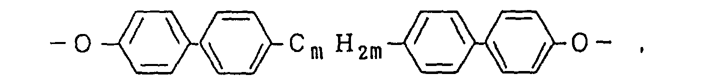 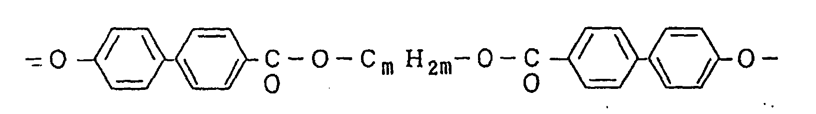 etc.
wherein n is an integer of 1-18, preferably 3-14, and m is an integer of 2-16, preferably 4-12 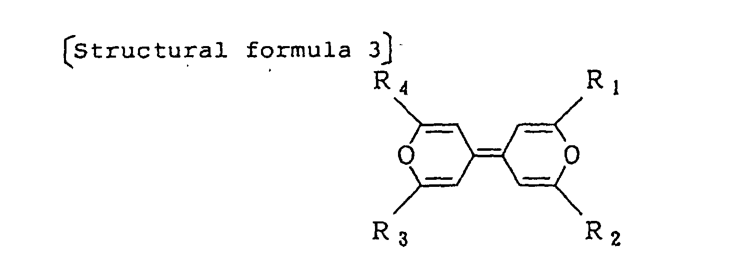 wherein R₁, R₂, R₃ and R₄ are each a monofunctional or bifunctional substituent group selected from the following groups:

Monofunctional substituent groups: 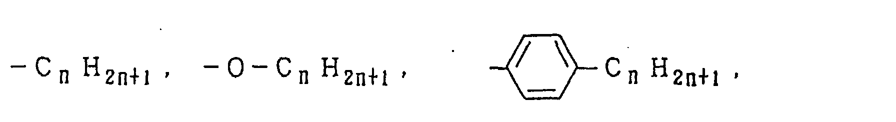 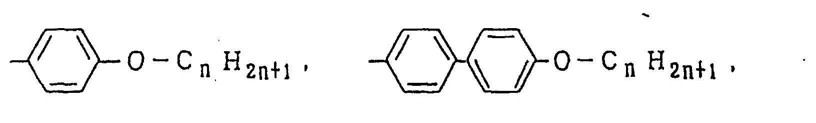 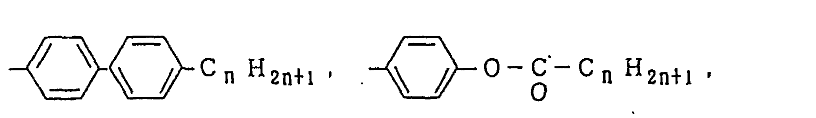 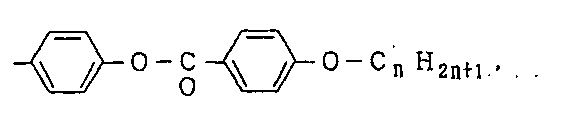 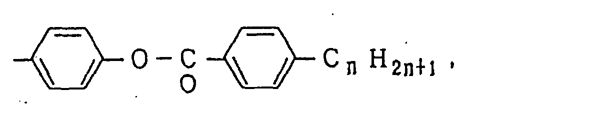 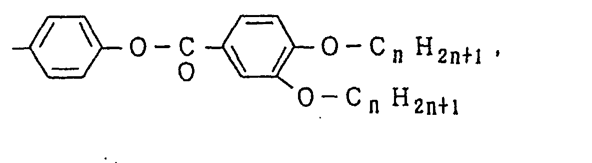 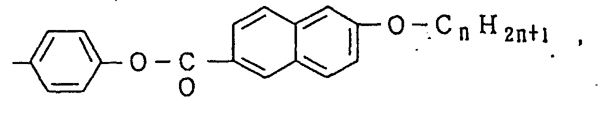 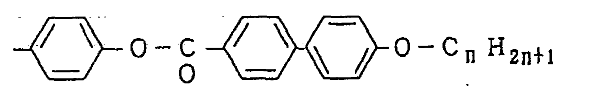 etc.
wherein n is an integer of 1-18, preferably 3-14, and m is an integer of 2-16, preferably 4-12.

Bifunctional substituent groups: 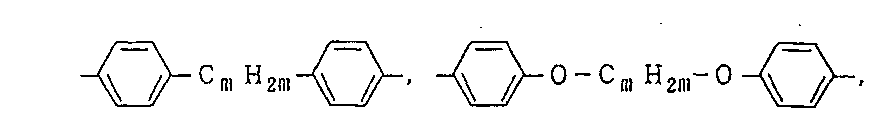 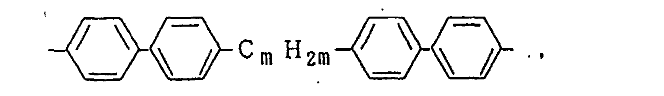 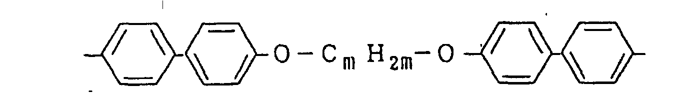 etc.
wherein CₘH₂ₘ is a linear or branched alkylene chain, and m is an integer of 2-16, preferably 4-12. Examples of the concrete structures: 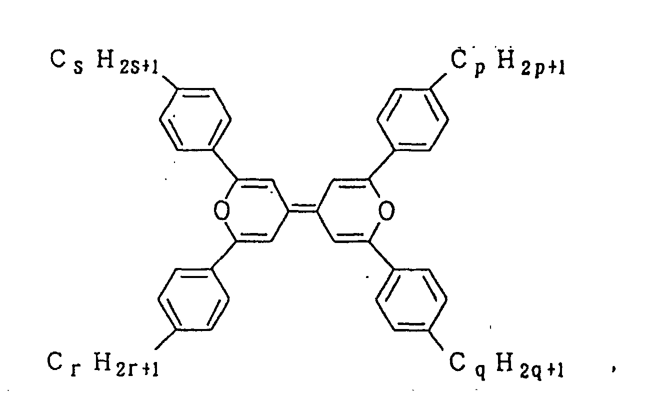 wherein p, q, r and s are each an integer of 1-18, preferably 3-14. 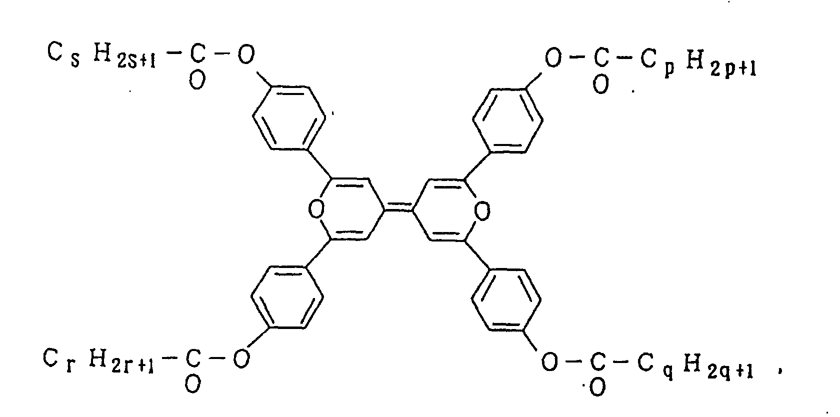 wherein p, q, r and s are each an integer of 1-18, preferably 3-14. 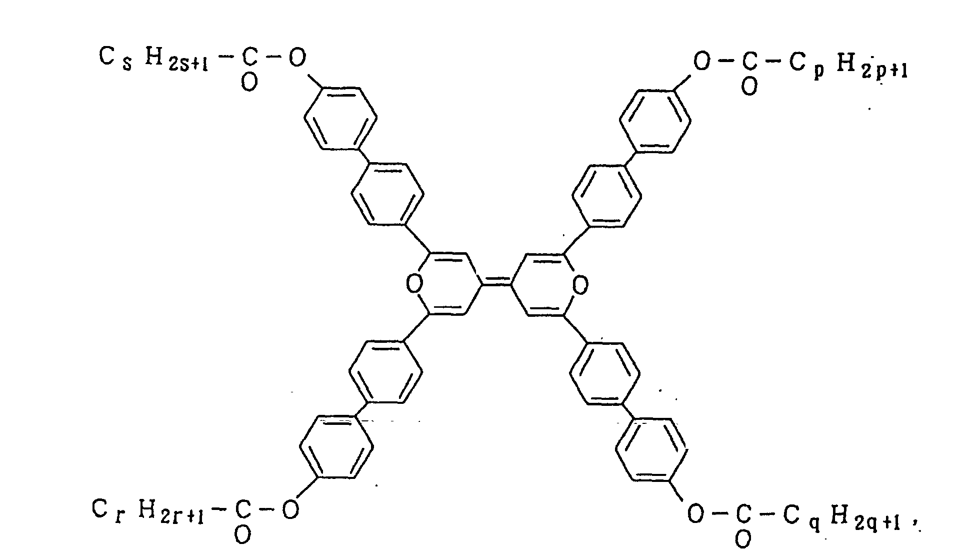 wherein p, q, r and s are each an integer of 1-18, preferably 3-14. 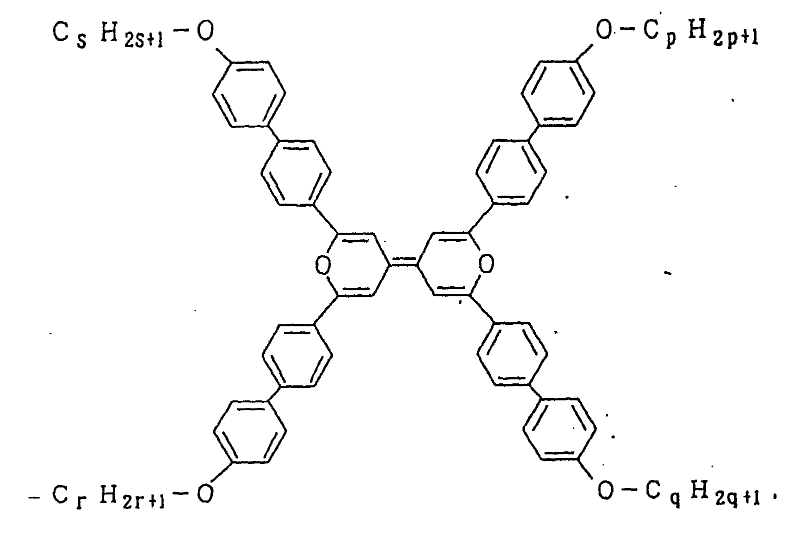 wherein p, q, r and s are each an integer of 1-18, preferably 3-14. 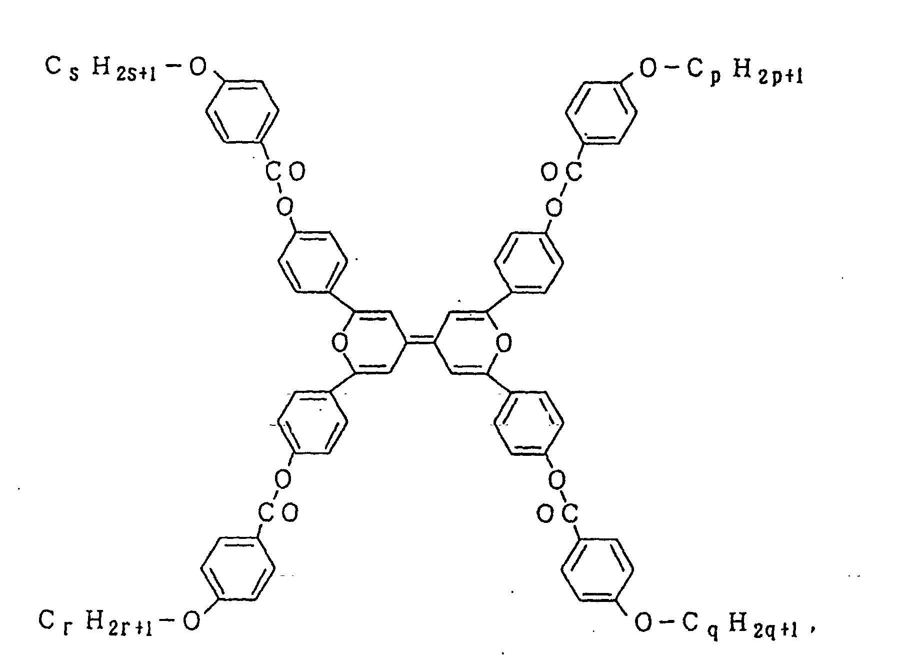 wherein p, q, r and s are each an integer of 1-18, preferably 3-14. 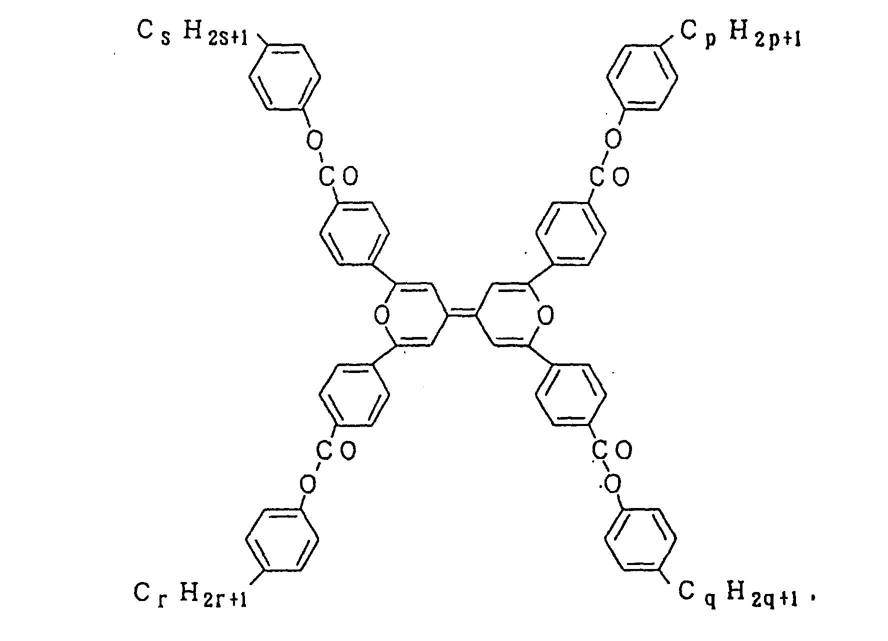 wherein p, q, r and s are each an integer of 1-18, preferably 3-14. 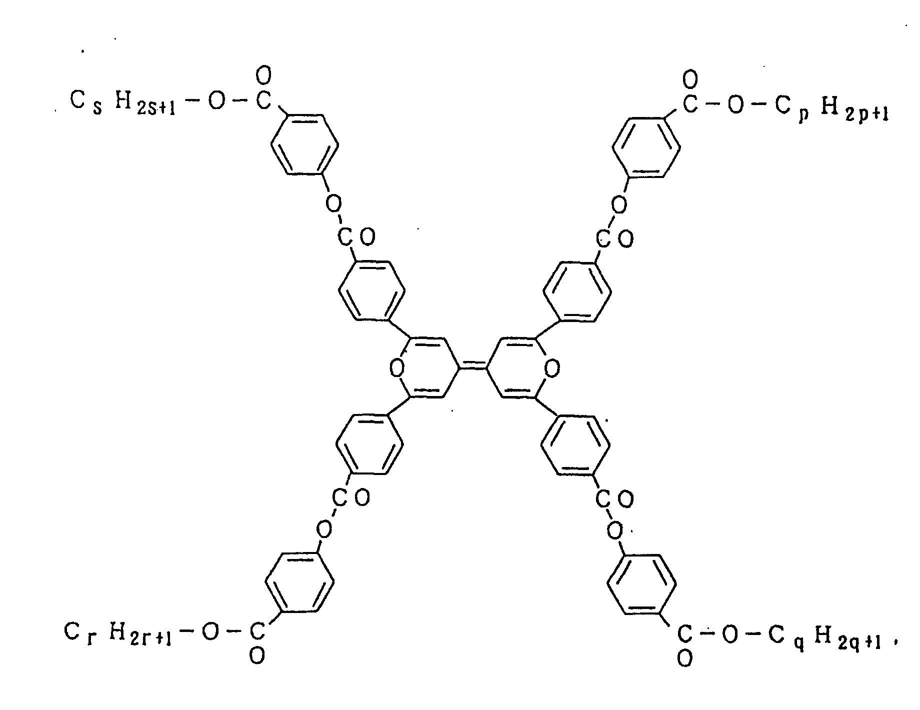 wherein p, q, r and s are each an integer of 1-18, preferably 3-14. 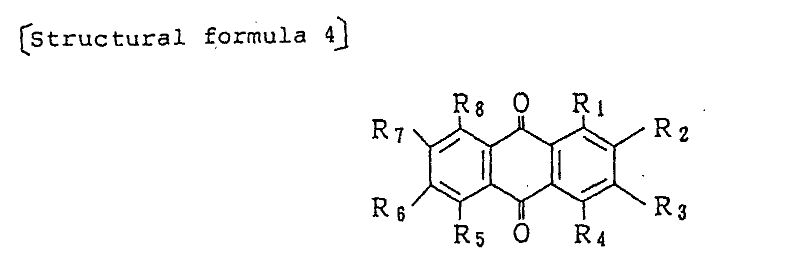 wherein R₁-R₈ are each independently a monofunctional or bifunctional substituent group selected from the following groups:

Monofunctional substituent groups:
-H (at most 4), 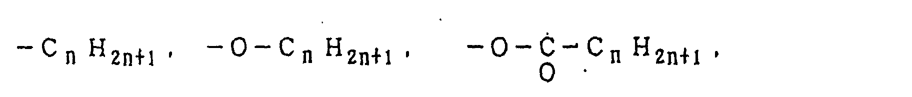 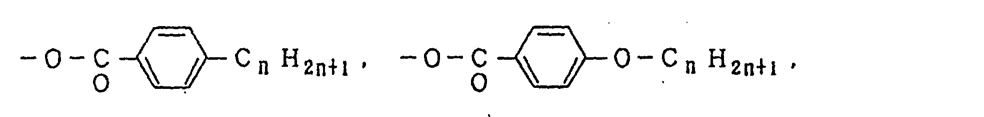 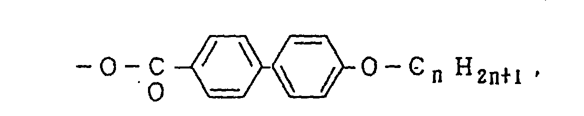 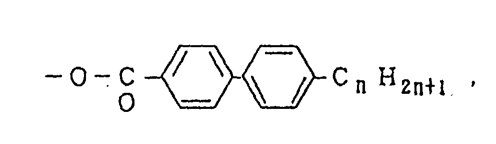 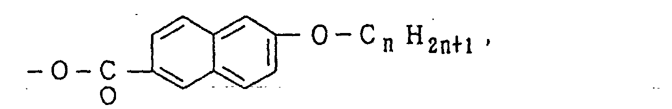 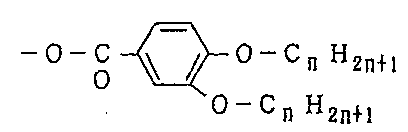 etc.
wherein CₙH₂ₙ₊₁ is a linear or branched alkyl group, and n is an integer of 1-18, preferably 3-14.

Bifunctional substituent groups: 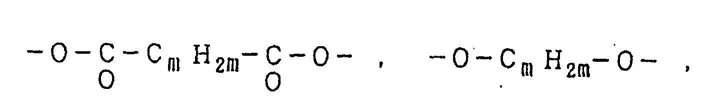 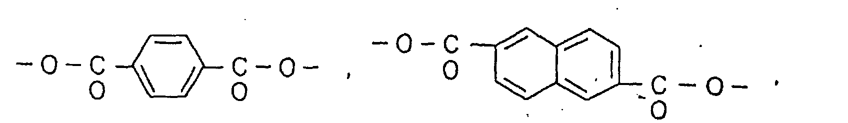 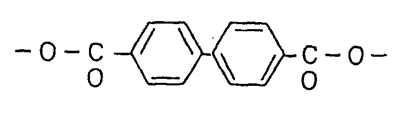 etc.
wherein CₘH₂ₘ is a linear or branched alkylene chain, and m is an integer of 2-16, preferably 4-12.

Examples of the concrete structures: 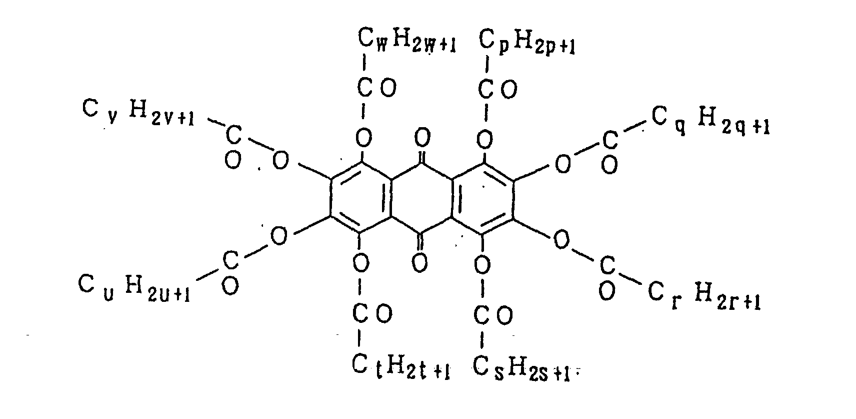 wherein p, q, r, s, t, u, v and w are each an integer of 1-18, preferably 3-14. 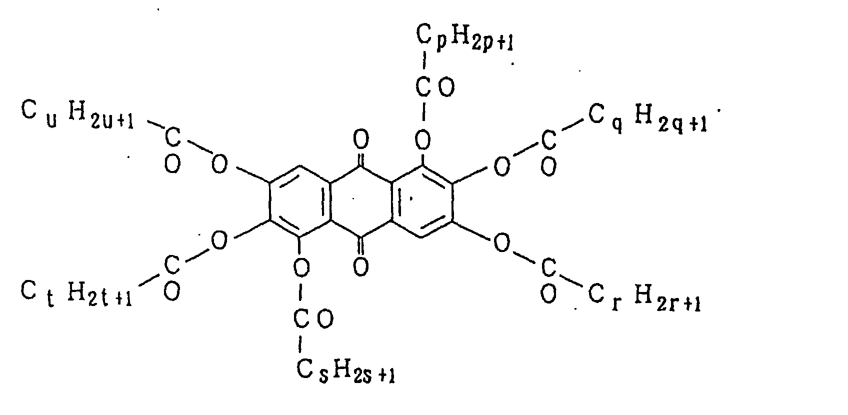 wherein p, q, r, s, t, and u are each an integer of 1-18, preferably 3-14. 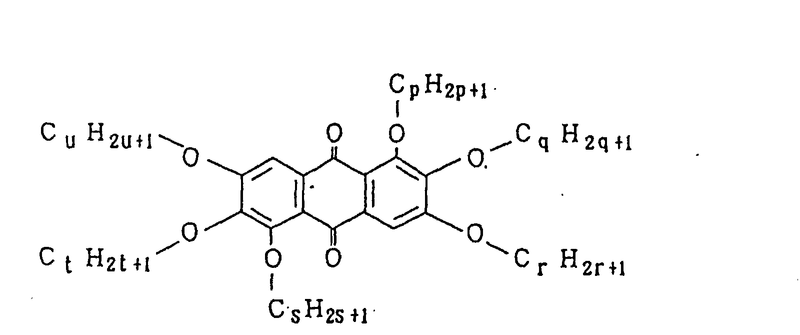 wherein p, q, r, s, t and u are each an integer of 1-18, preferably 3-14. 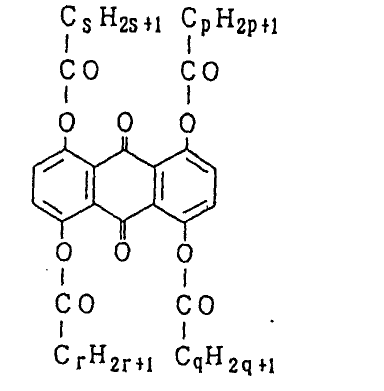 wherein p, q, r, and s are each an integer of 1-18, preferably 3-14. 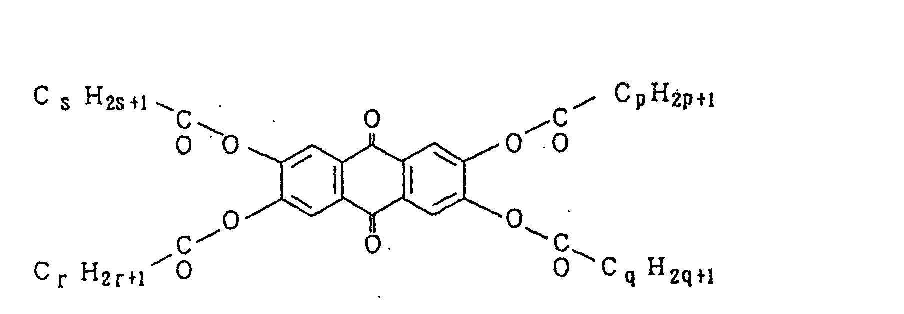 wherein p, q, r, and s are each an integer of 1-18, preferably 3-14. 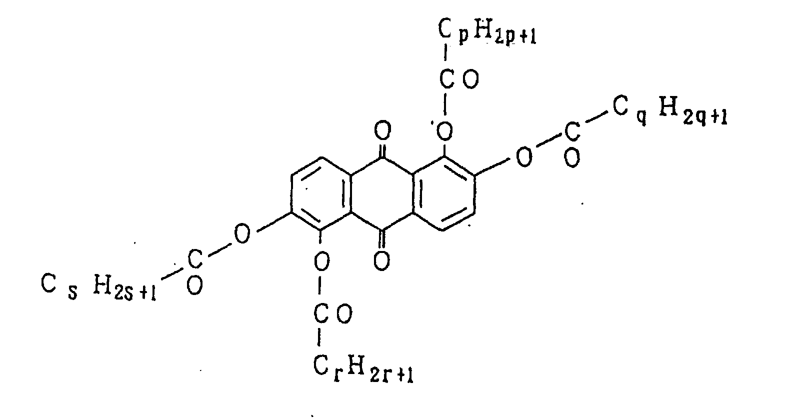 wherein p, q, r, and s are each an integer of 1-18, preferably 3-14. 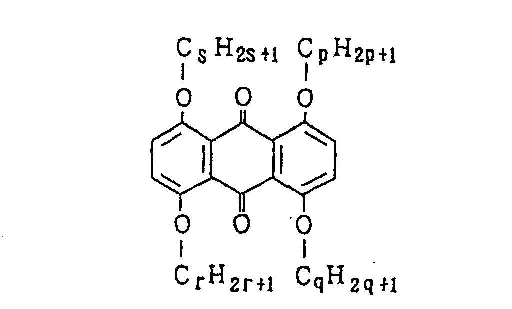 wherein p, q, r, and s are each an integer of 1-18, preferably 3-14. 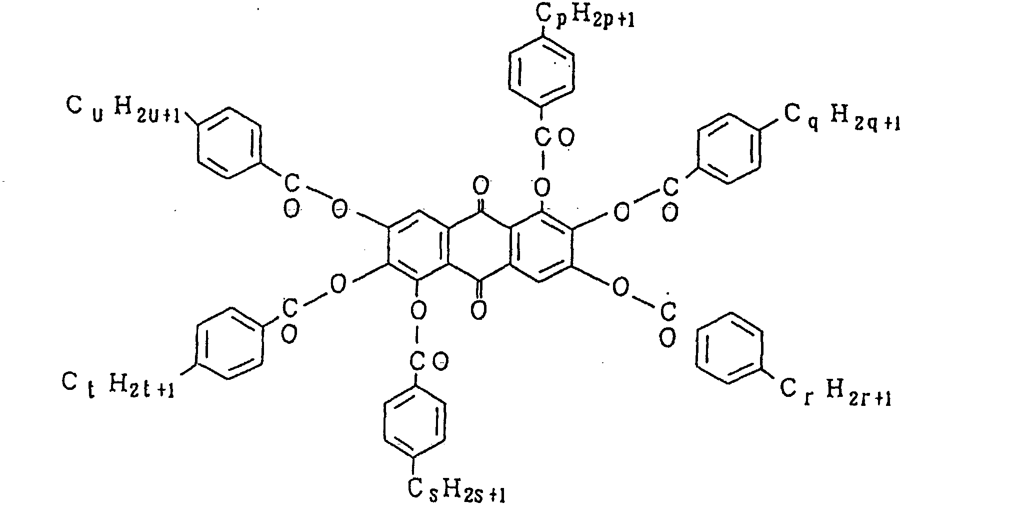 wherein p, q, r, s, t and u are each an integer of 1-18, preferably 3-14. 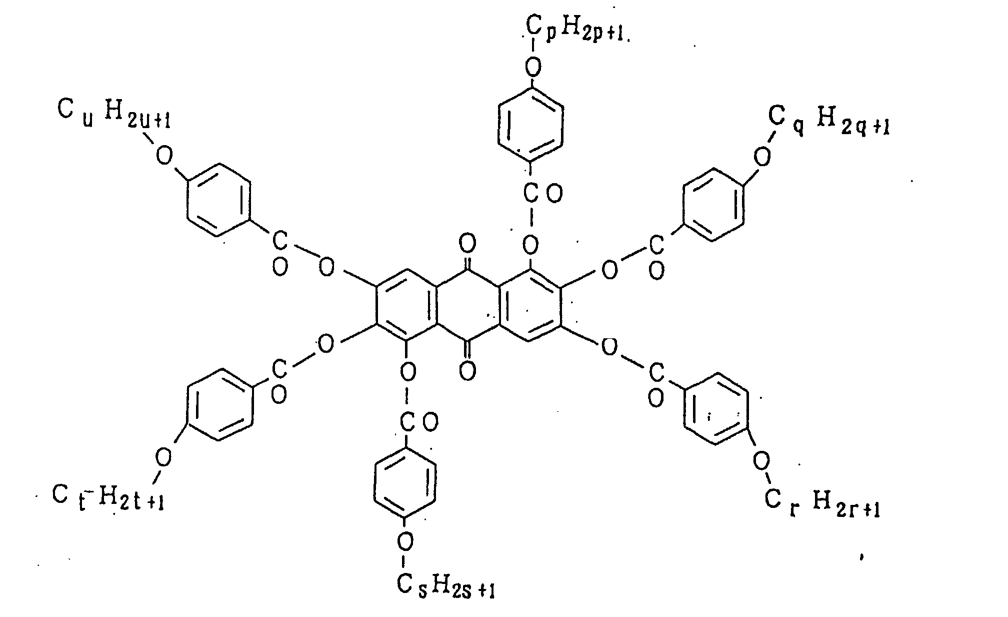 wherein p, q, r, s, t and u are each an integer of 1-18, preferably 3-14. 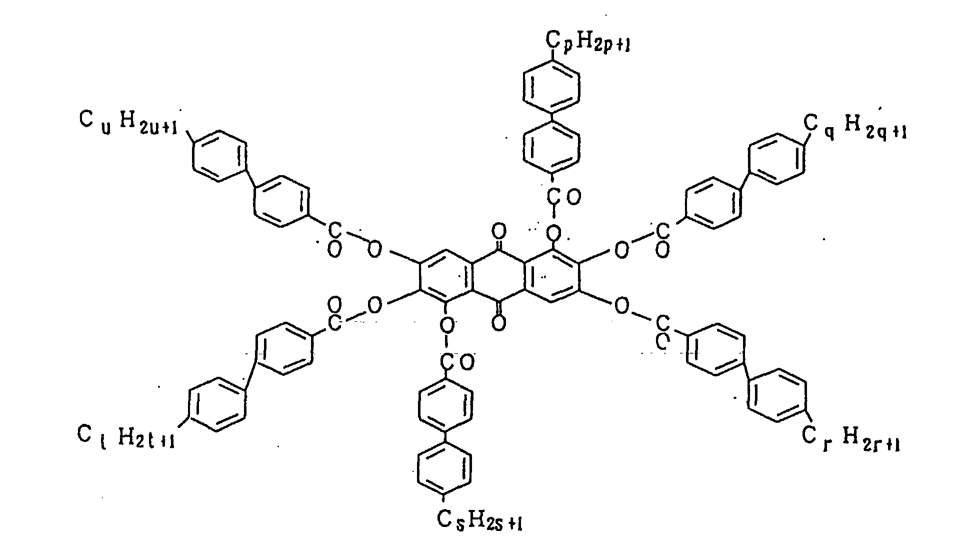 wherein p, q, r, s, t and u are each an integer of 1-18, preferably 3-14. 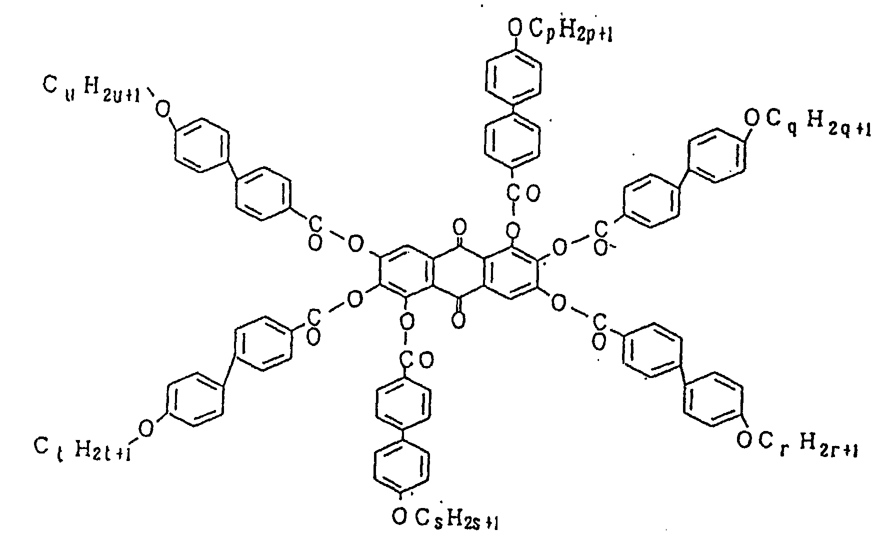 wherein p, q, r, s, t and u are each an integer of 1-18, preferably 3-14. 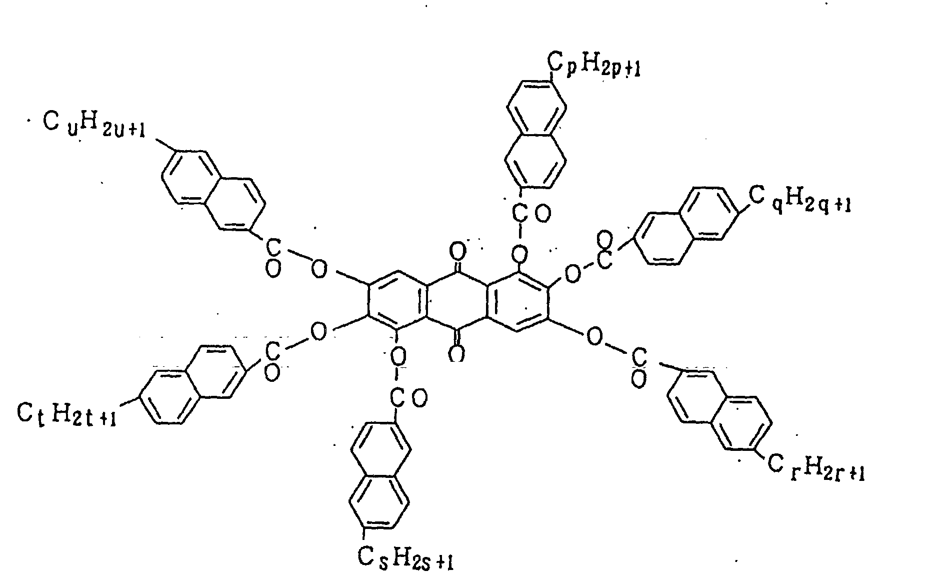 wherein p, q, r, s, t and u are each an integer of 1-18, preferably 3-14. 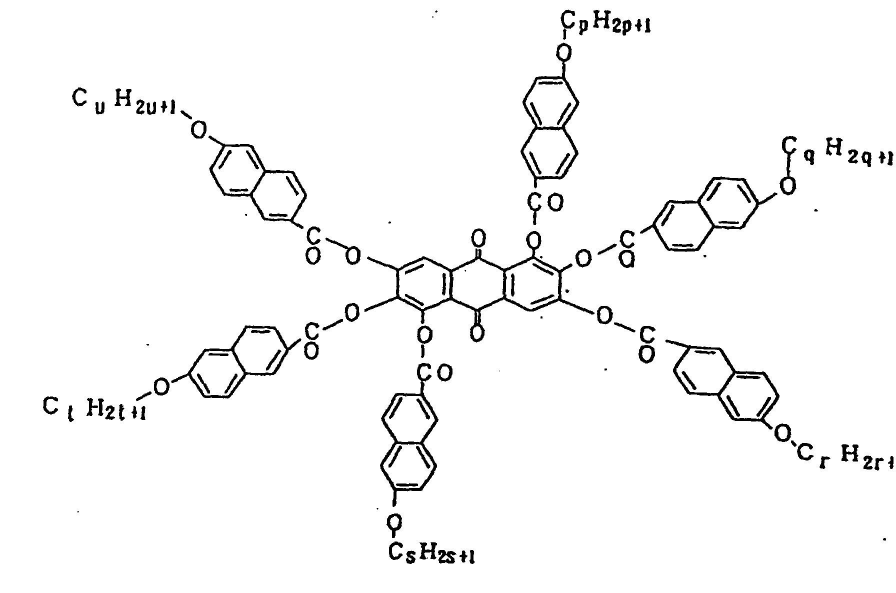 wherein p, q, r, s, t and u are each an integer of 1-18, preferably 3-14. 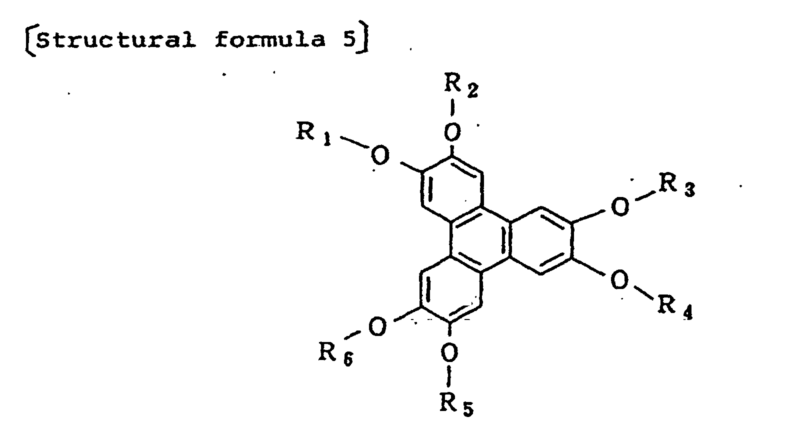 wherein R₁-R₆ are each independently a monofunctional or bifunctional substituent group selected from the following groups:

Monofunctional substituent groups: 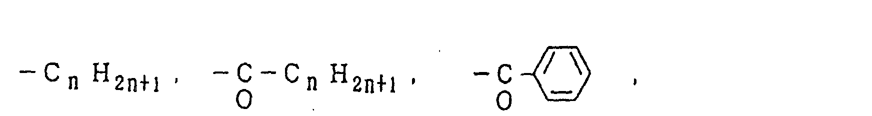 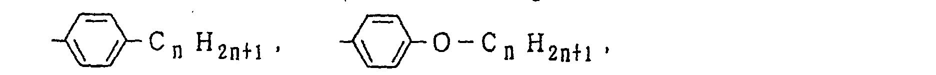 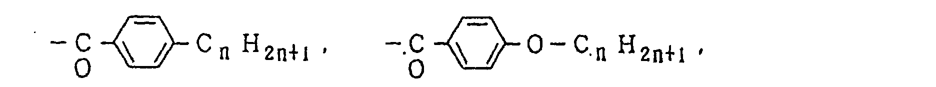 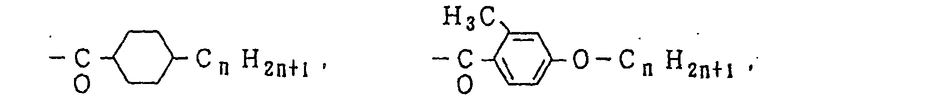 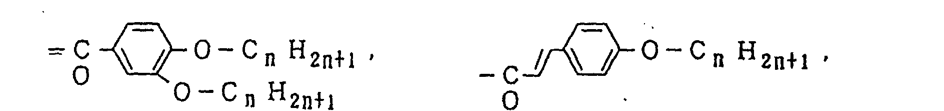 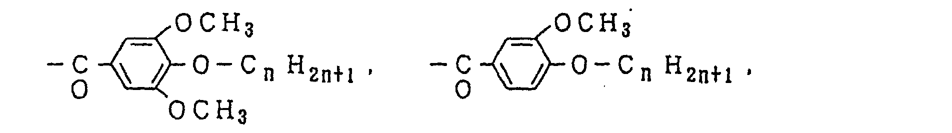 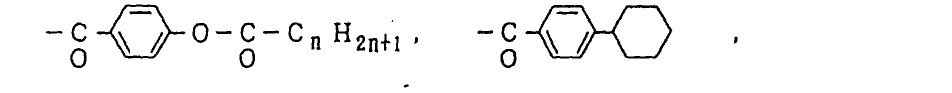 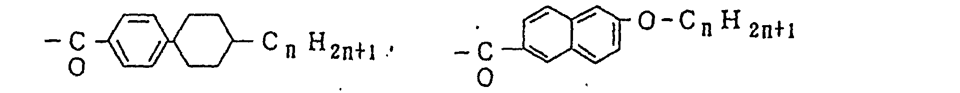 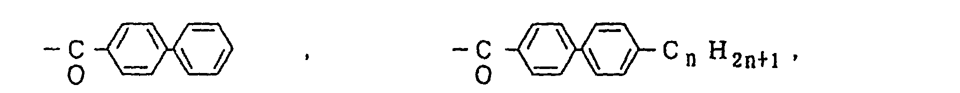 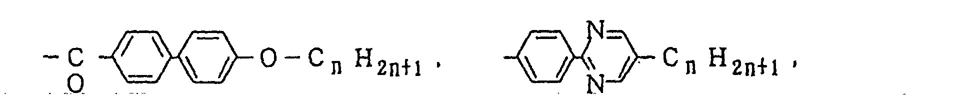 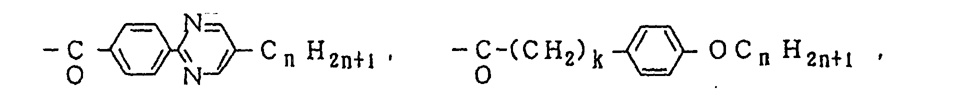 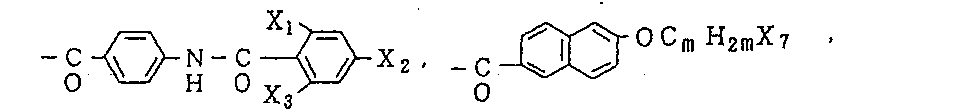 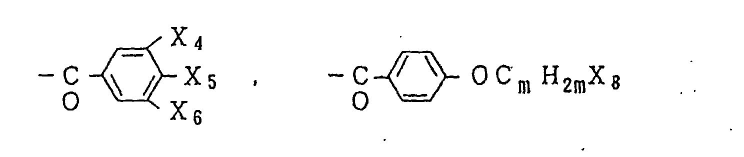 etc.
wherein CₙH₂ₙ₊₁ is a linear or branched alkyl group, n is an integer of 1-18, preferably 3-14, X₁-X₈ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10, CₘH₂ₘ is a linear or branched alkylene group, and m is an integer of 1-16, preferably 2-10.

Bifunctional substituent groups: 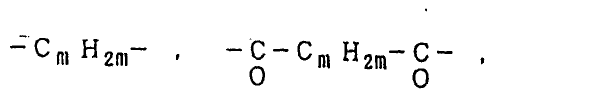 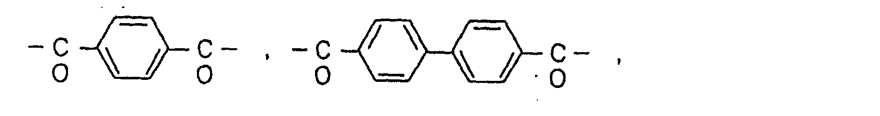 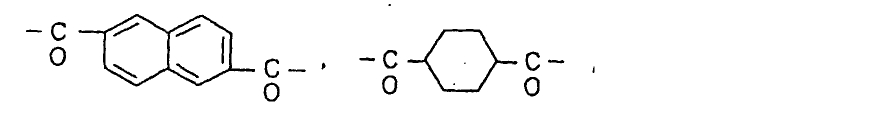 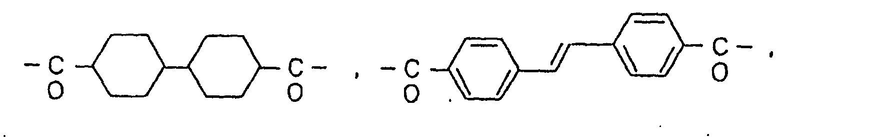 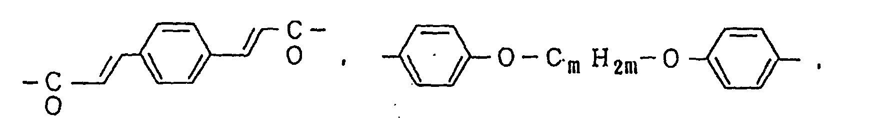 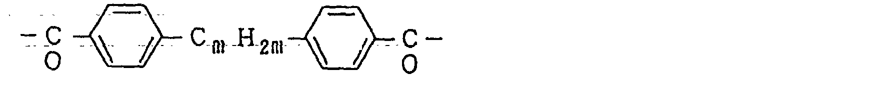 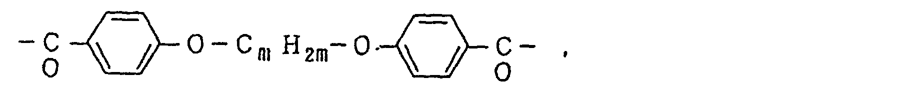 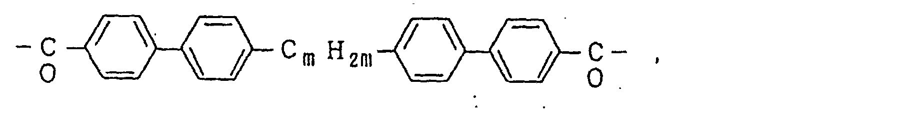 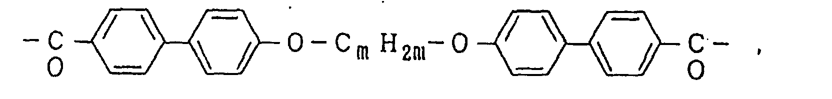 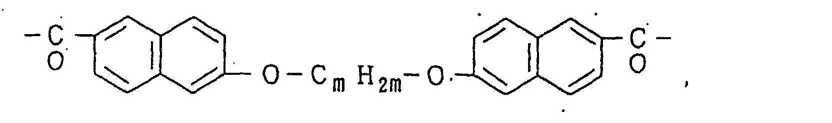 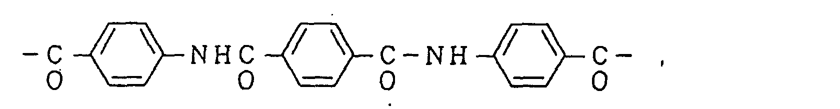 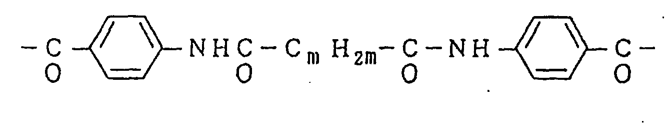 etc.
wherein CₘH₂ₘ is a linear or branched alkylene group, and m is an integer of 2-16, preferably 4-12.

Examples of the concrete structures: 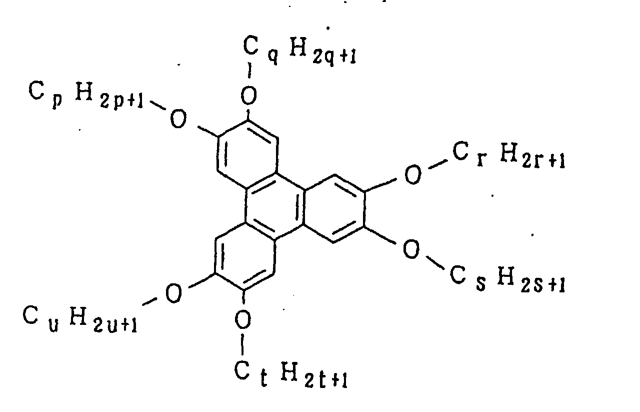 wherein p, q, r, s, t and u are each an integer of 1-18, preferably 3-14. 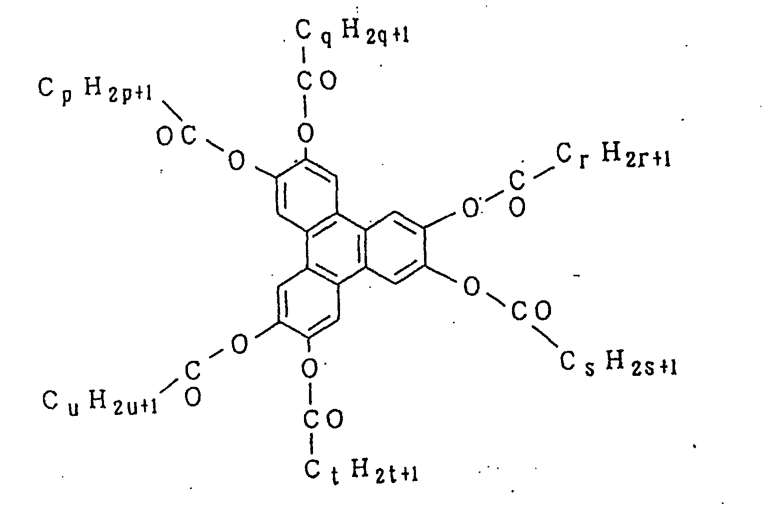 wherein p, q, r, s, t and u are each an integer of 1-18, preferably 3-14. 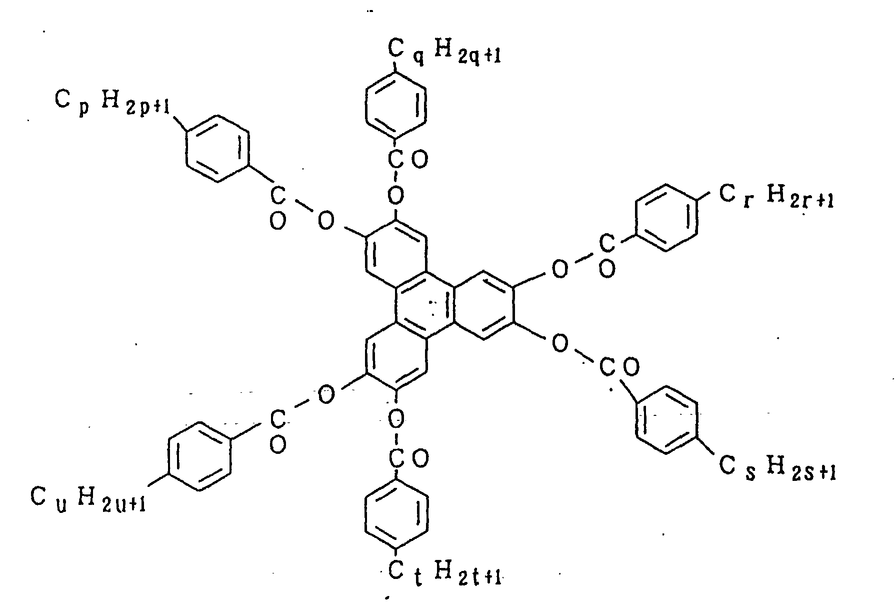 wherein p, q, r, s, t and u are each an integer of 1-18, preferably 3-14. 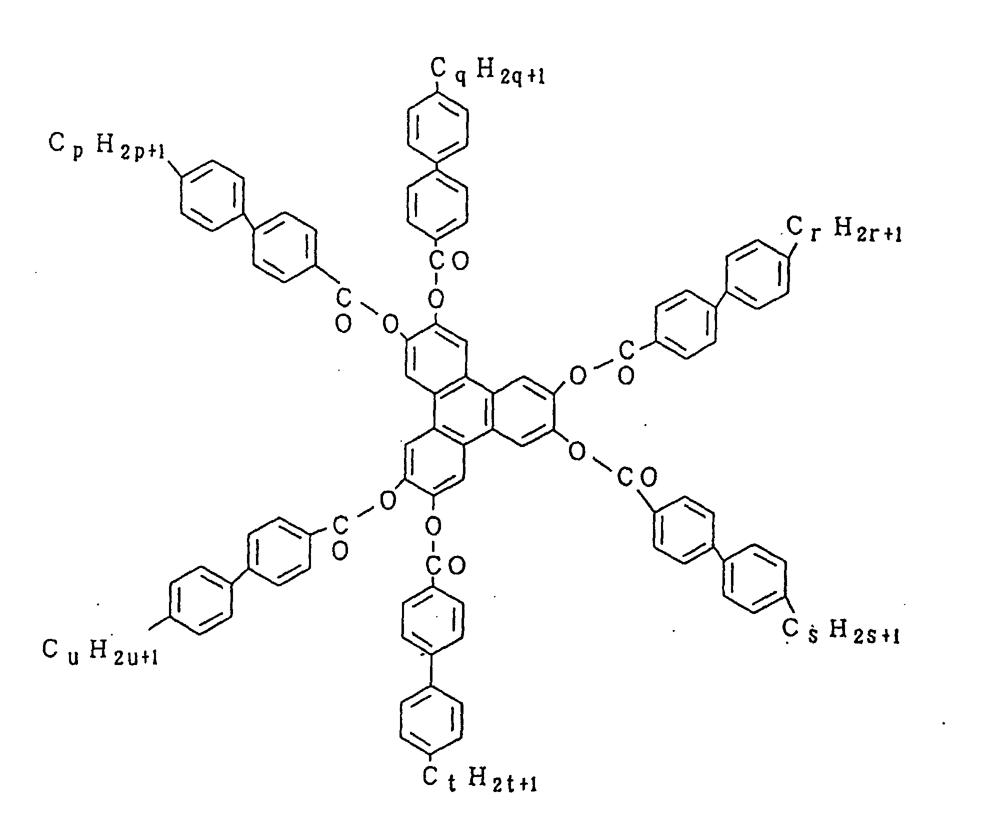 wherein p, q, r, s, t and u are each an integer of 1-18, preferably 3-14. 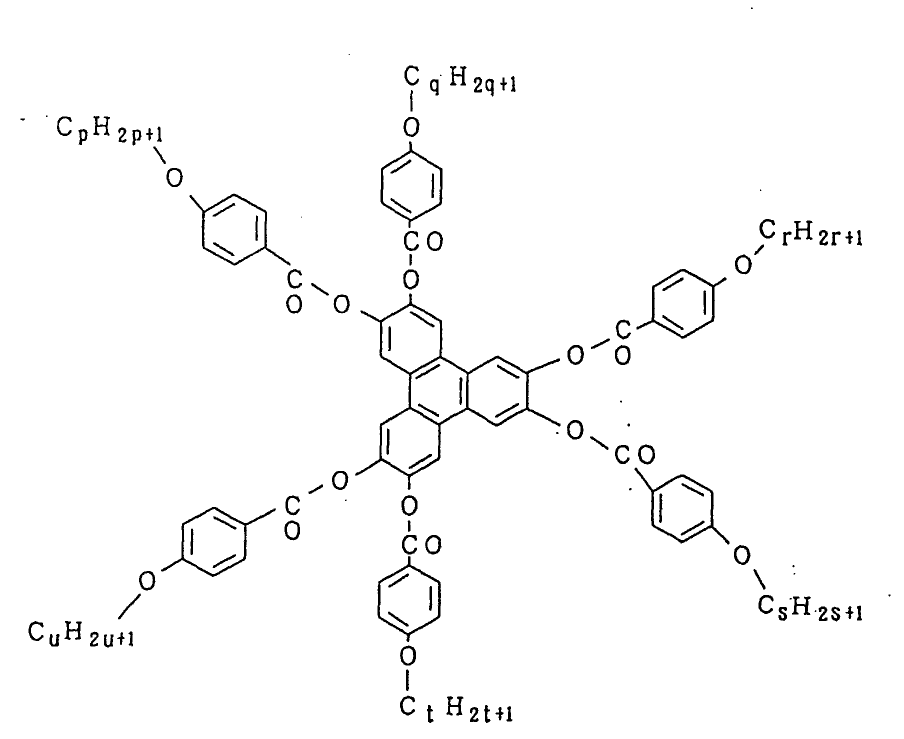 wherein p, q, r, s, t and u are each an integer of 1-18, preferably 3-14. 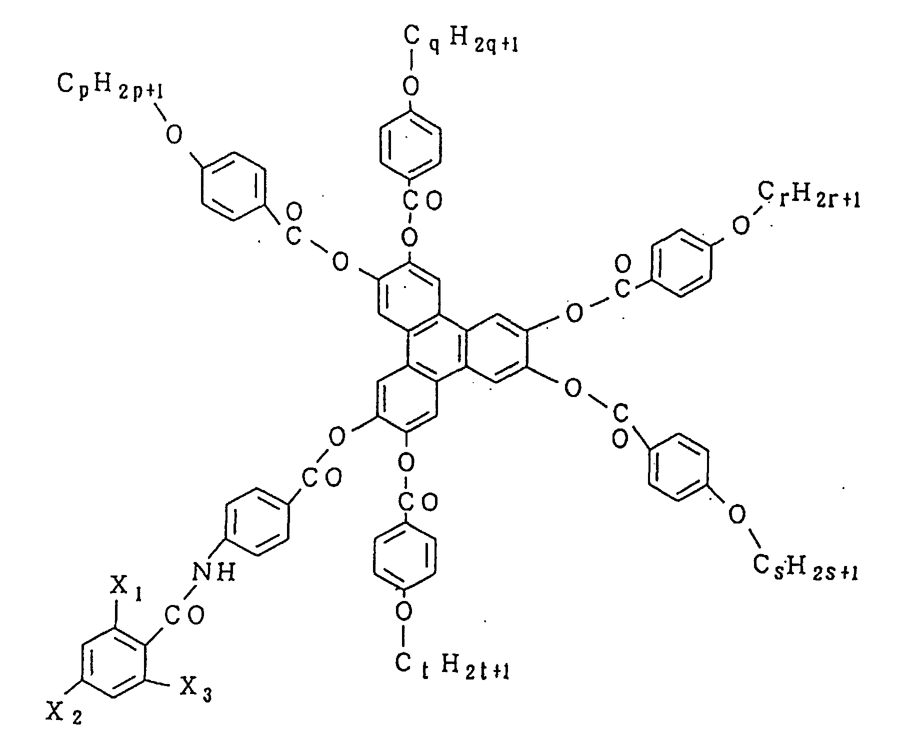 wherein p, q, r, s and t are each an integer of 1-18, preferably 3-14, X₁-X₃ are each independently H-, F-, Cl-, Br-, C_{ℓ}H_{2 +1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 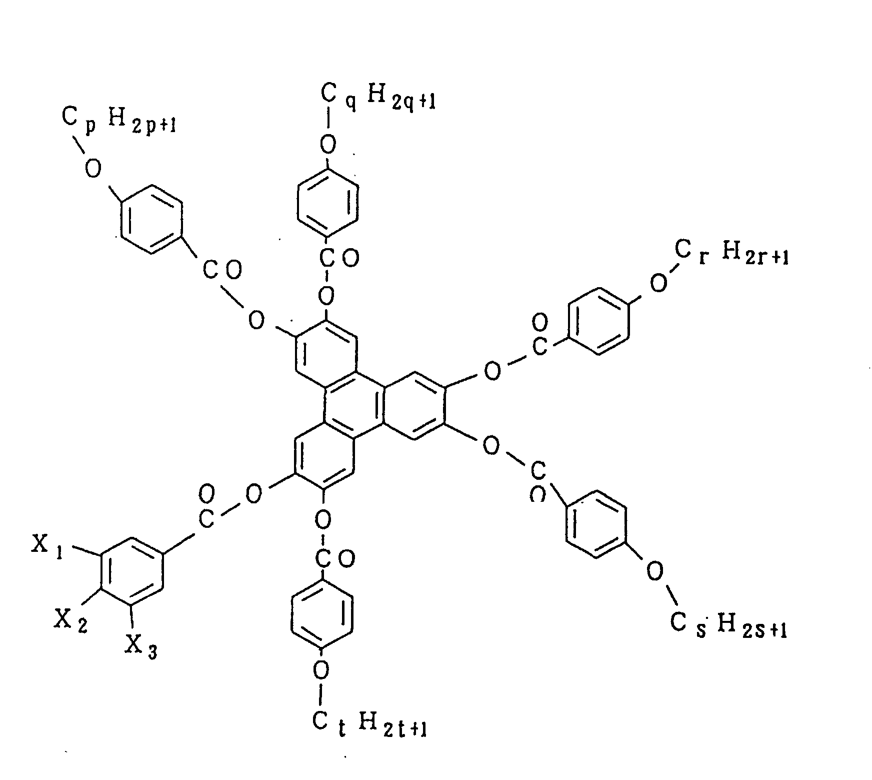 wherein p, q, r, s and t are each an integer.of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10 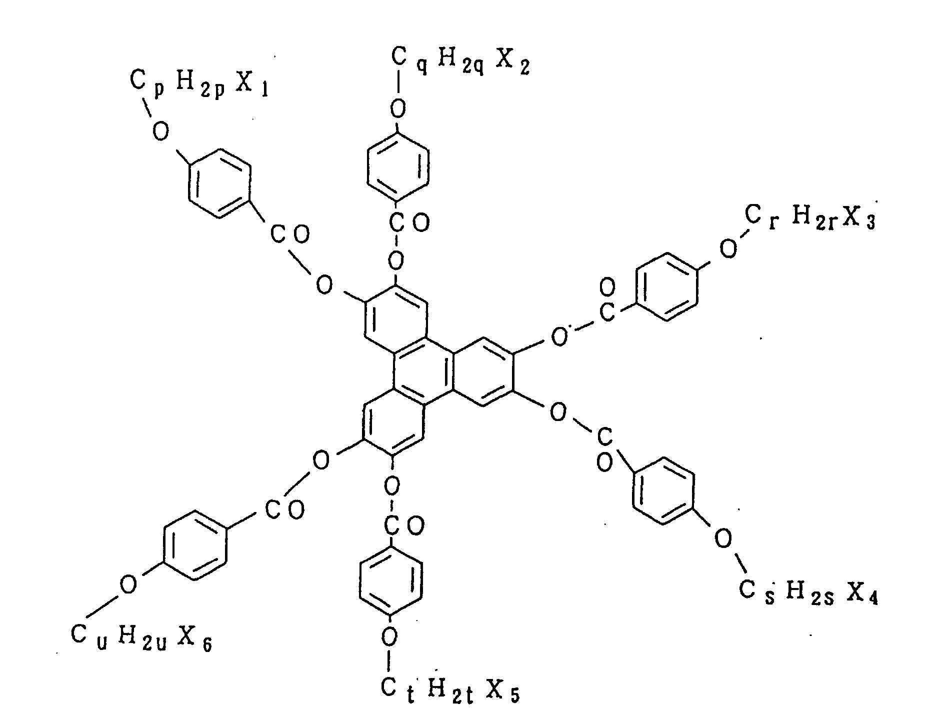 wherein p, q, r, s, t and u are each an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 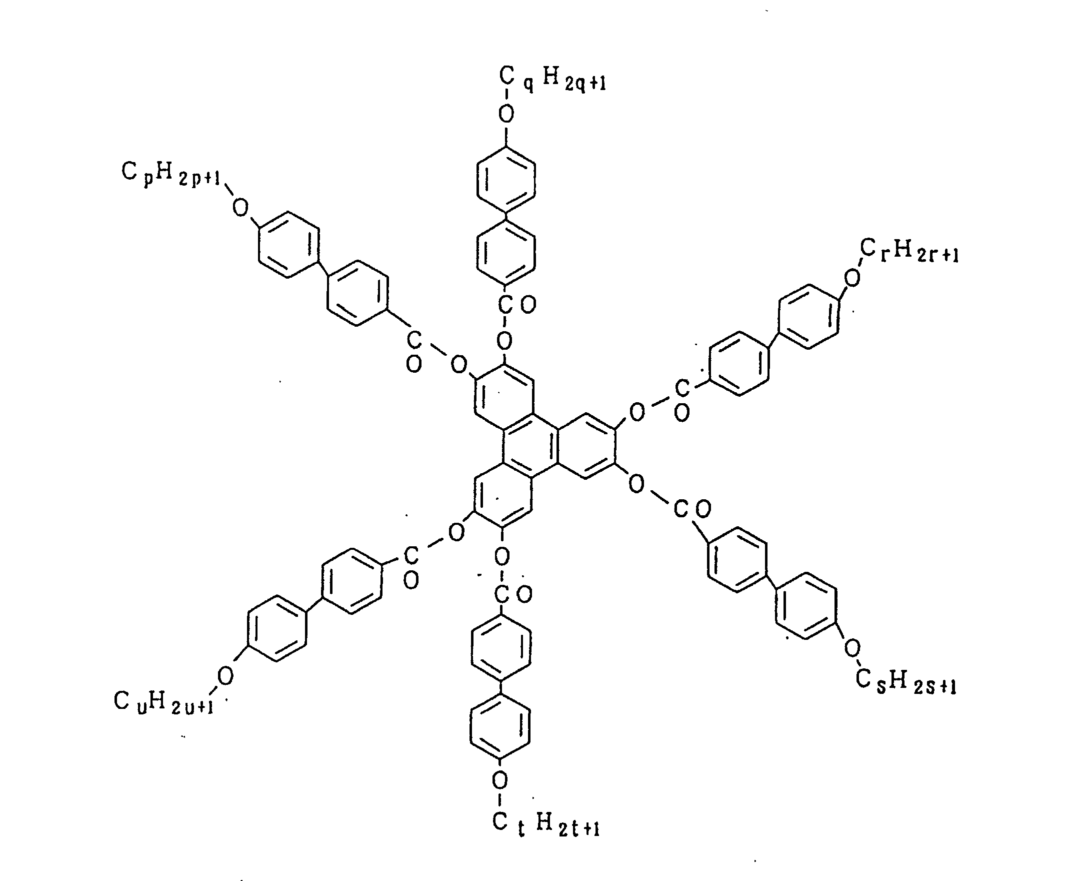 wherein p, q, r, s, t and u are each an integer of 1-18, preferably 3-14. 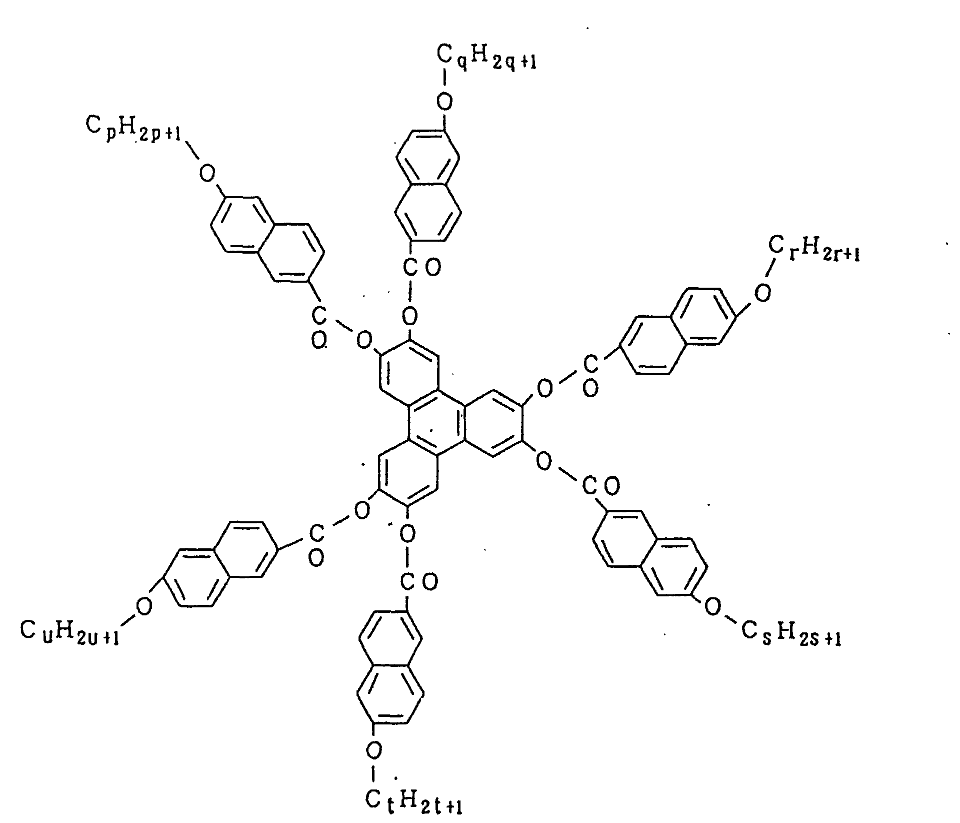 wherein p, q, r, s, t and u are each an integer of 1-18, preferably 3-14. 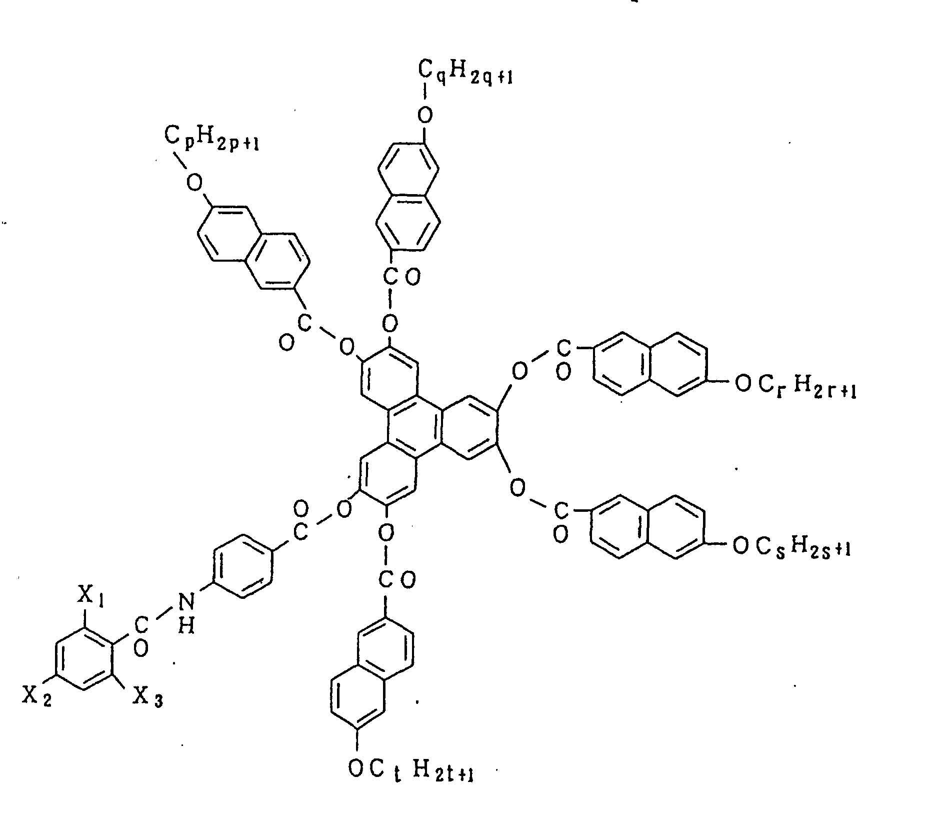 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 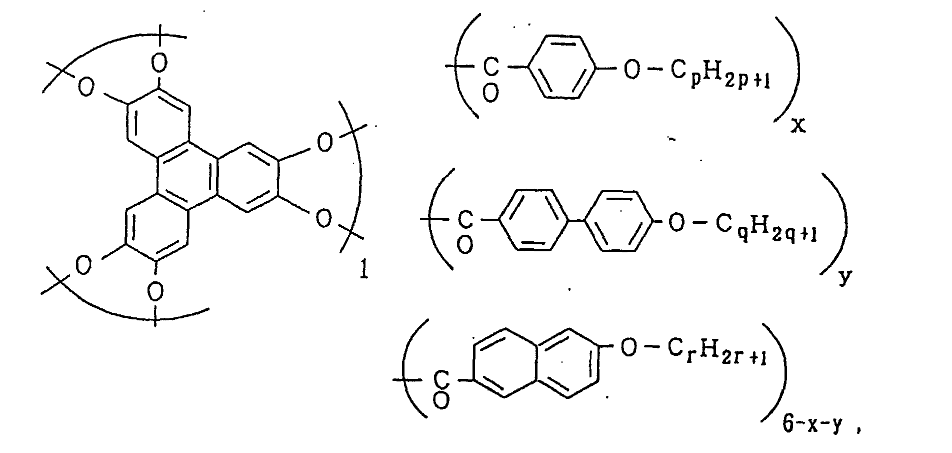 wherein 0 ≦ x ≦ 6, 0 ≦ y ≦ 6 in the molar ratio, and p, q, r are each an integer of 1-18, preferably 3-14. Composition of the following: 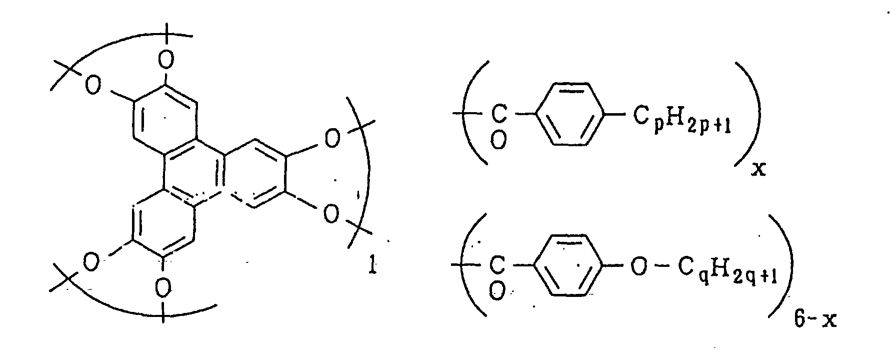 wherein 0 ≦ x ≦ 6 in the molar ratio, and p, q are each an integer of 1-18, preferably 3-14.

Composition of the following: 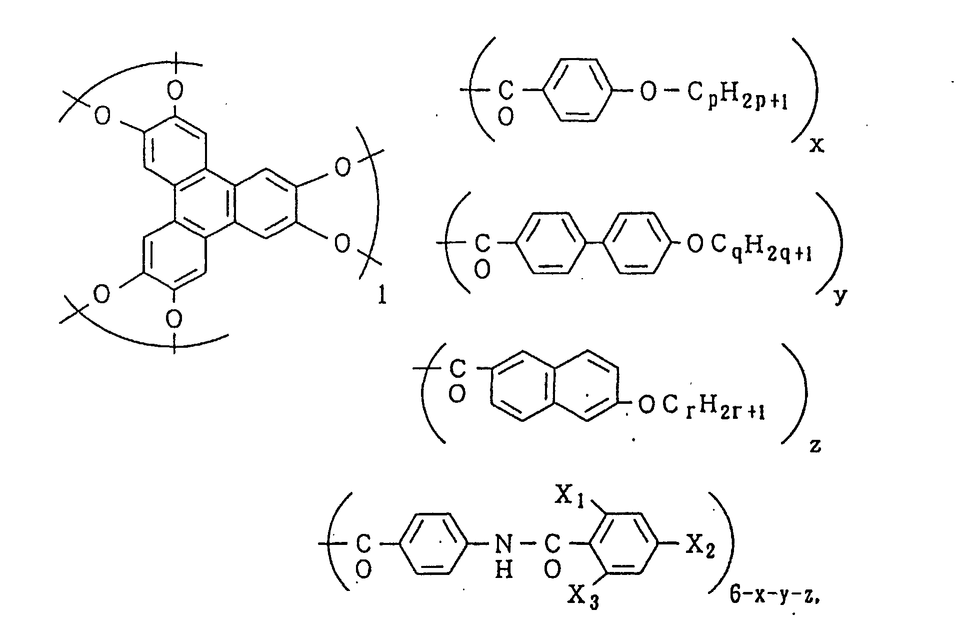 wherein 0 ≦ x ≦ 6, 0 ≦ y ≦ 6, 0 ≦ z ≦ 6 in the molar ratio, p, q, and r are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 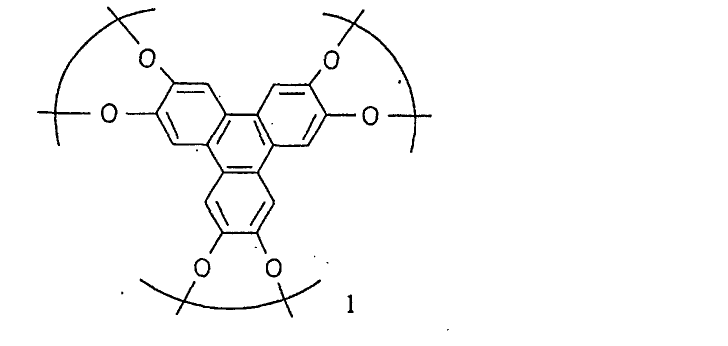 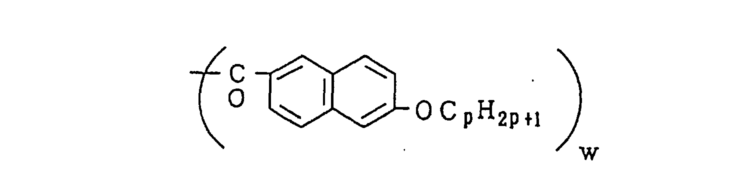 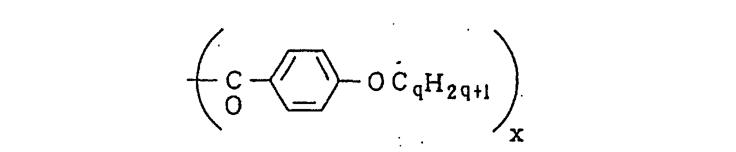 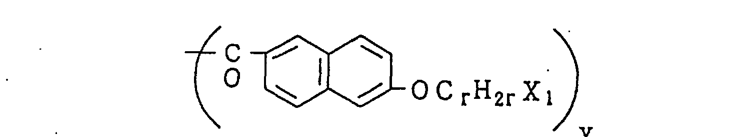 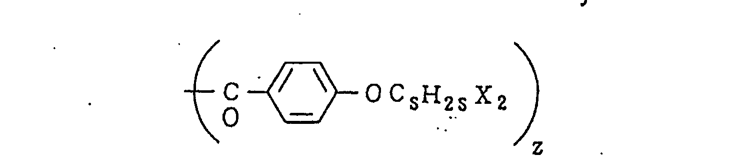 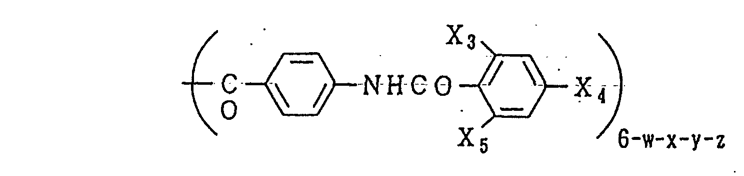 wherein 0 ≦ w ≦ 6, 0 ≦ x ≦ 6, 0 ≦ y ≦ 6, 0 ≦ z ≦ 6 in the molar ratio, p, q, r and s are each an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 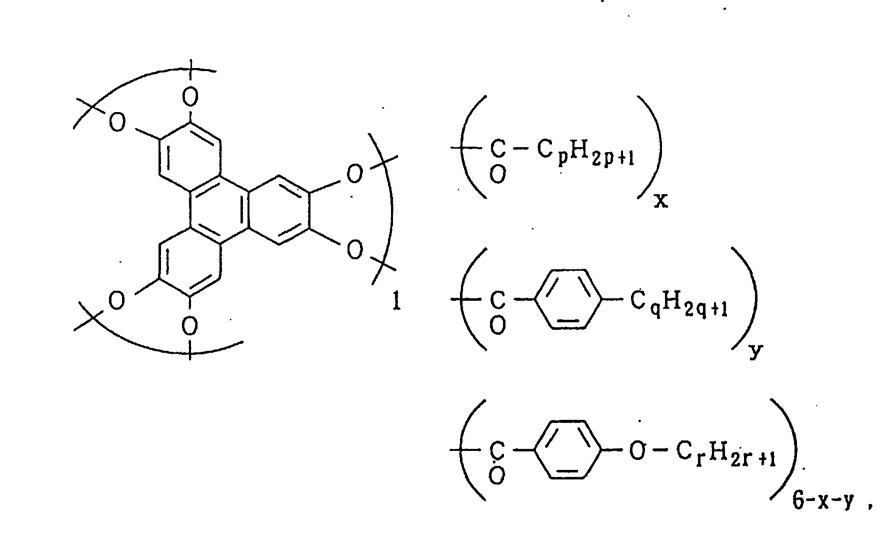 wherein 0 ≦ x ≦ 6, 0 ≦ y ≦ 6 in the molar ratio, p, q and r are each an integer of 1-18, preferably 3-14.

Composition of the following: 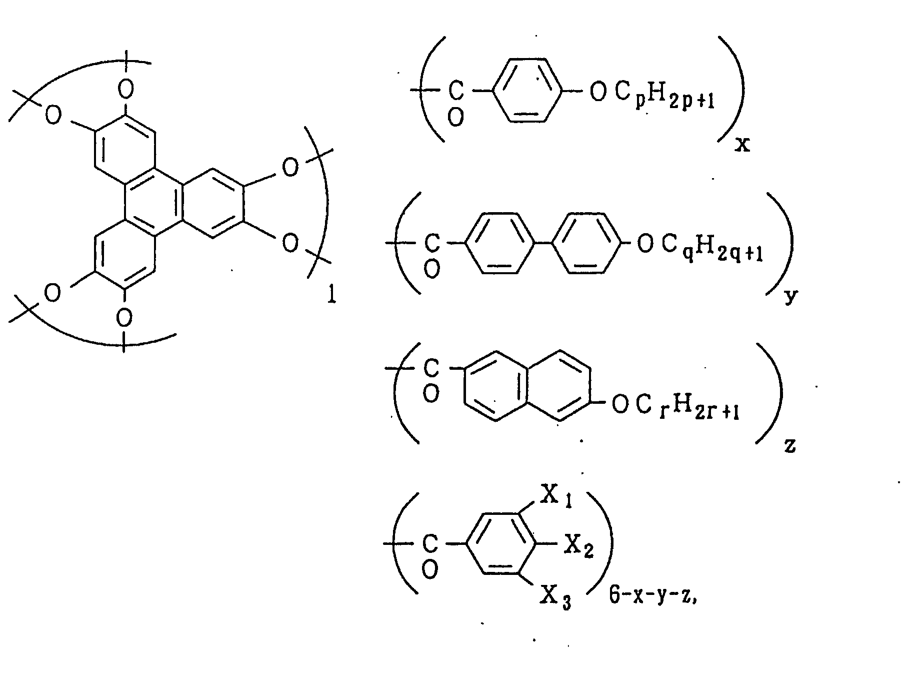 wherein 0 ≦ x ≦ 6, 0 ≦ y ≦ 6, 0 ≦ z ≦ 6 in the molar ratio, p, q and r are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 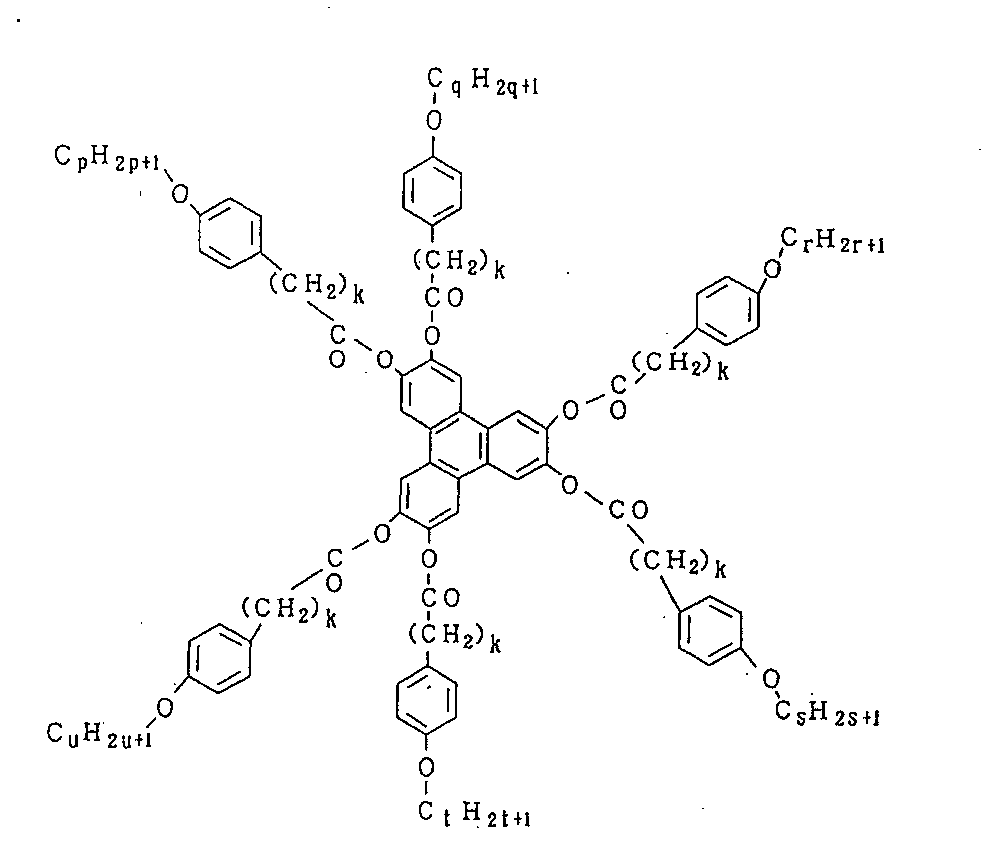 wherein p, q, r, s, t, u, v and w are each an integer of 1-18, preferably 5-14, and k is 1, 2 or 3. 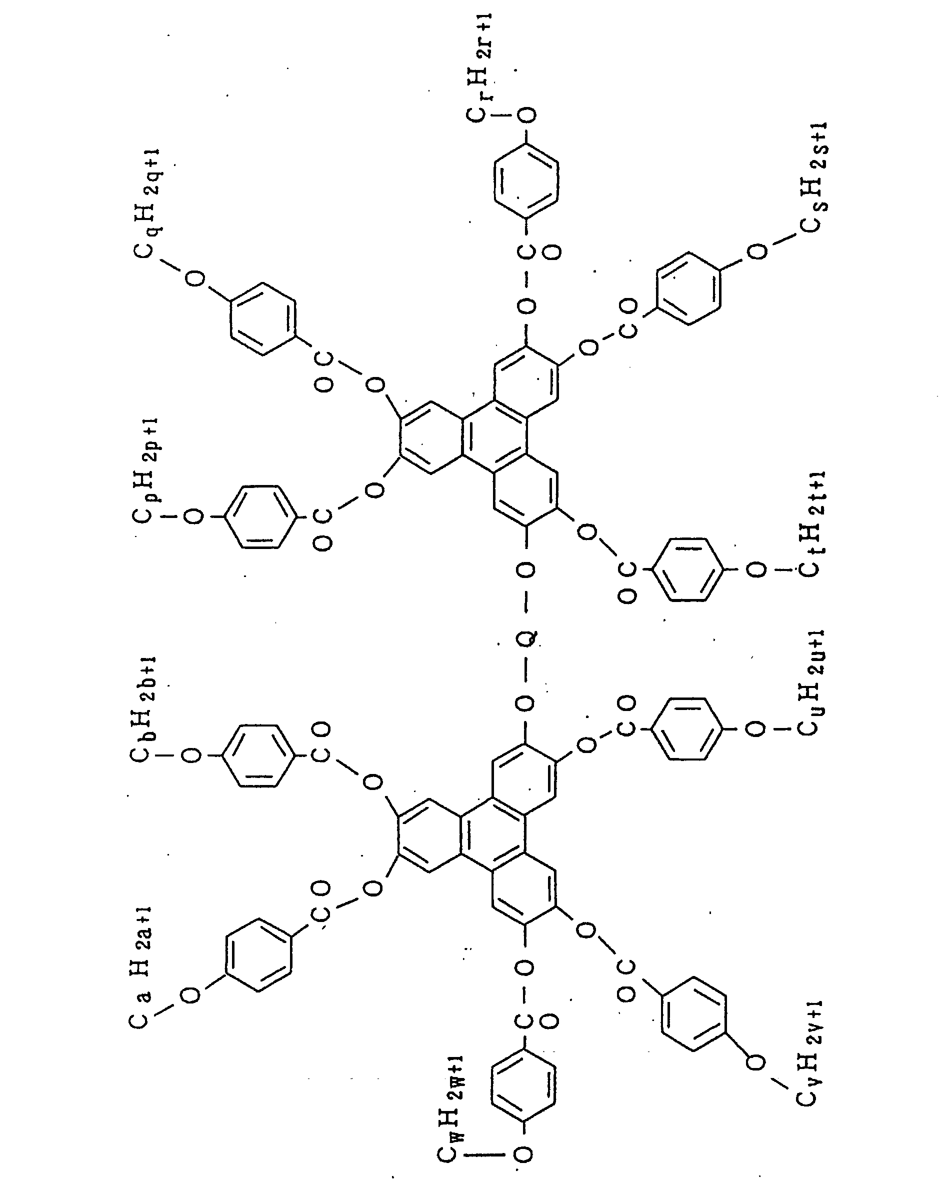 wherein p, q, r, s, t, u, v, w, a and b are each an integer of 1-18, preferably 3-14, and

Q is the following: 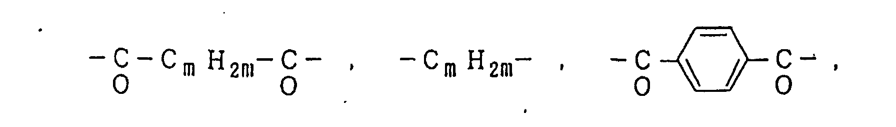 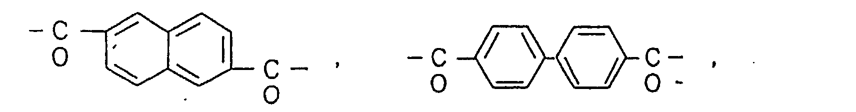 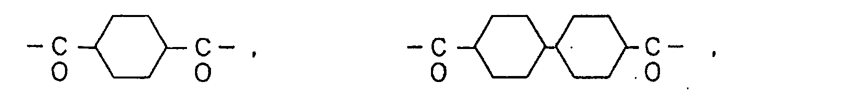 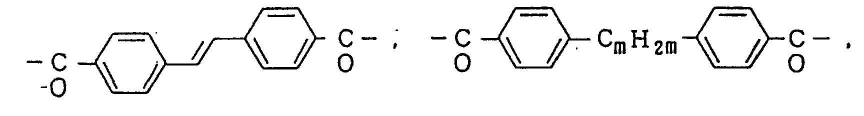 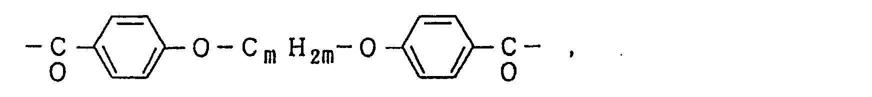 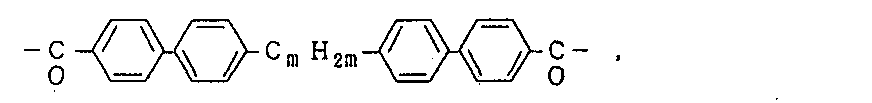 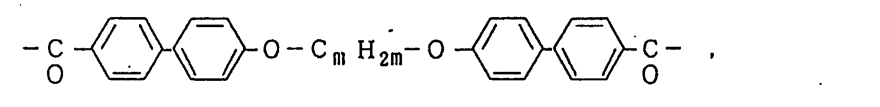 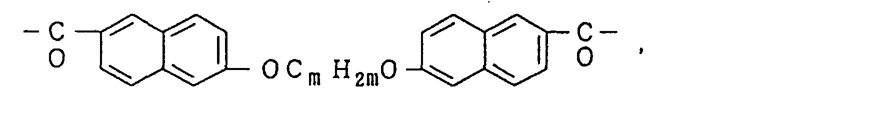 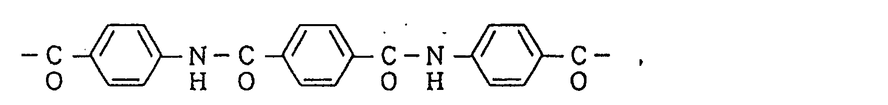 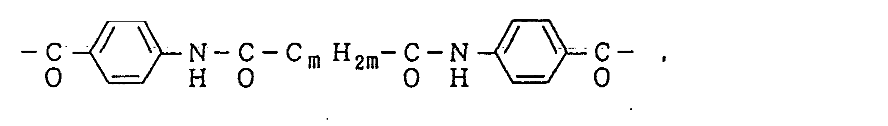 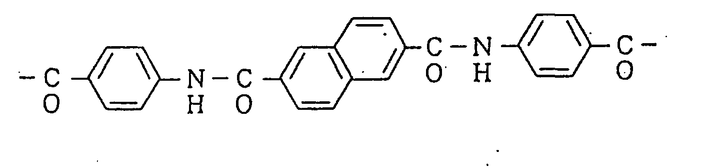 etc..
wherein m is an integer of 2-16.

Preferable Q: 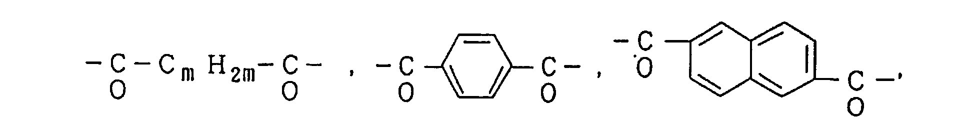 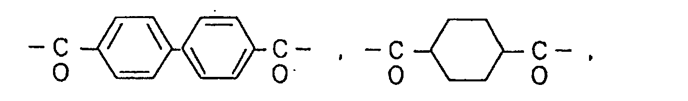 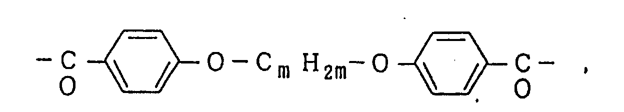 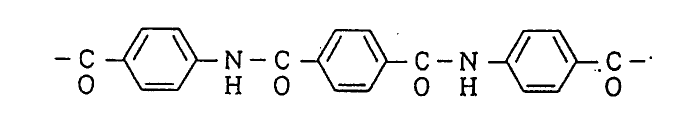 etc.
wherein m is an integer of 2-18, more preferably 4-12. 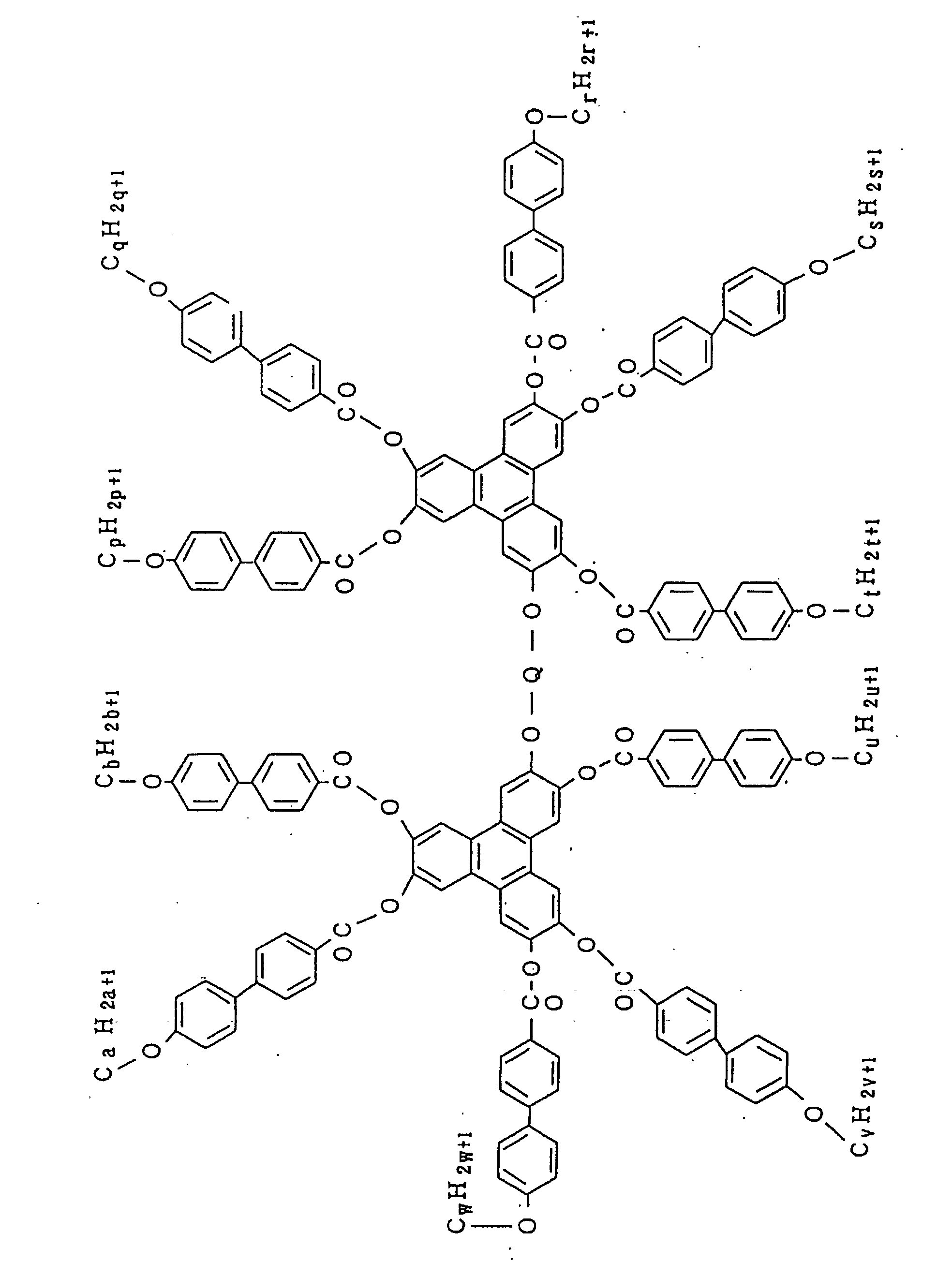 wherein p, q, r, s, t, u, v, w, a and b are each an integer of 1-18, preferably 3-14.

Q is the following: 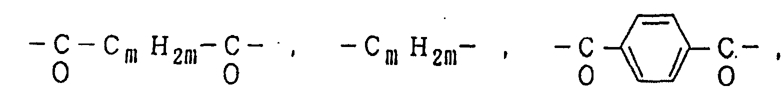 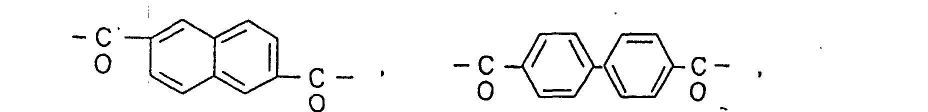 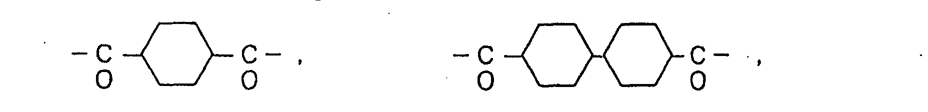 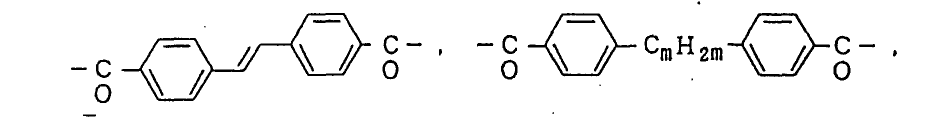 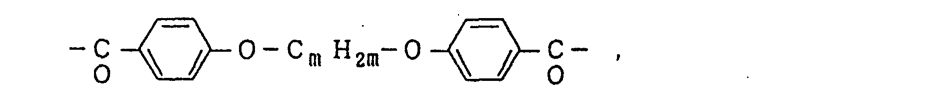 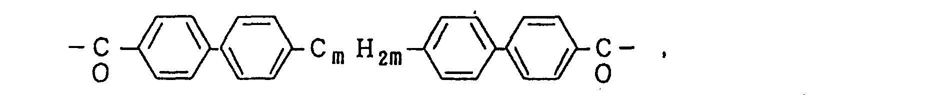 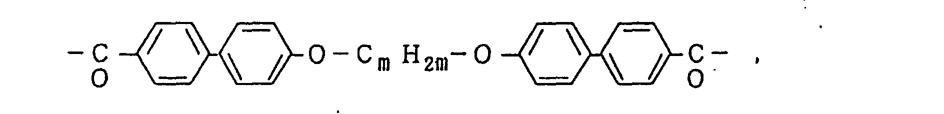 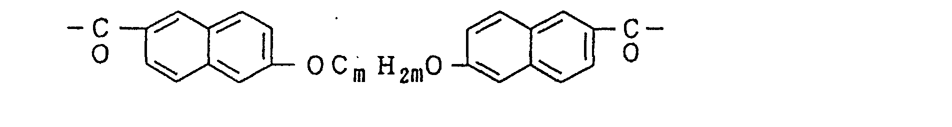 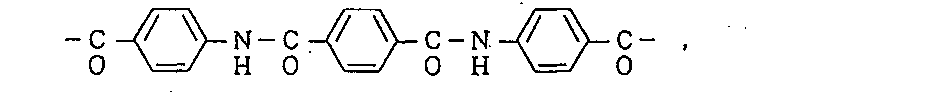 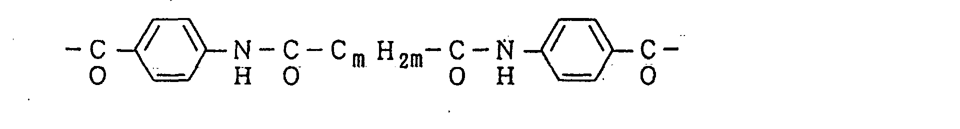 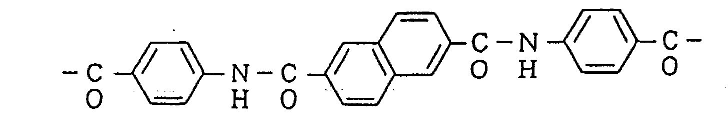 etc.
wherein m is an integer of 2-16.

Preferable Q: 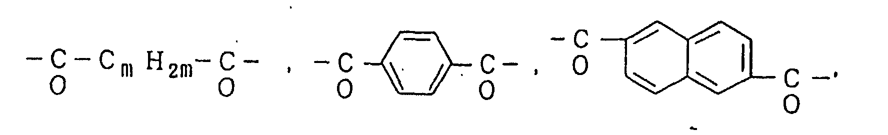 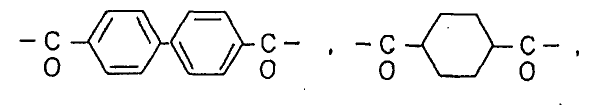 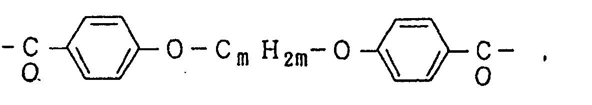 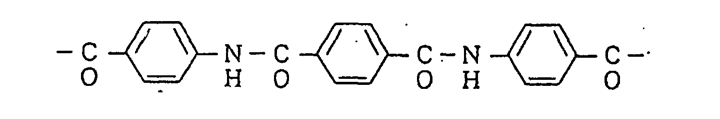 etc.
wherein m is an integer of 2-16, more preferably 4-12. 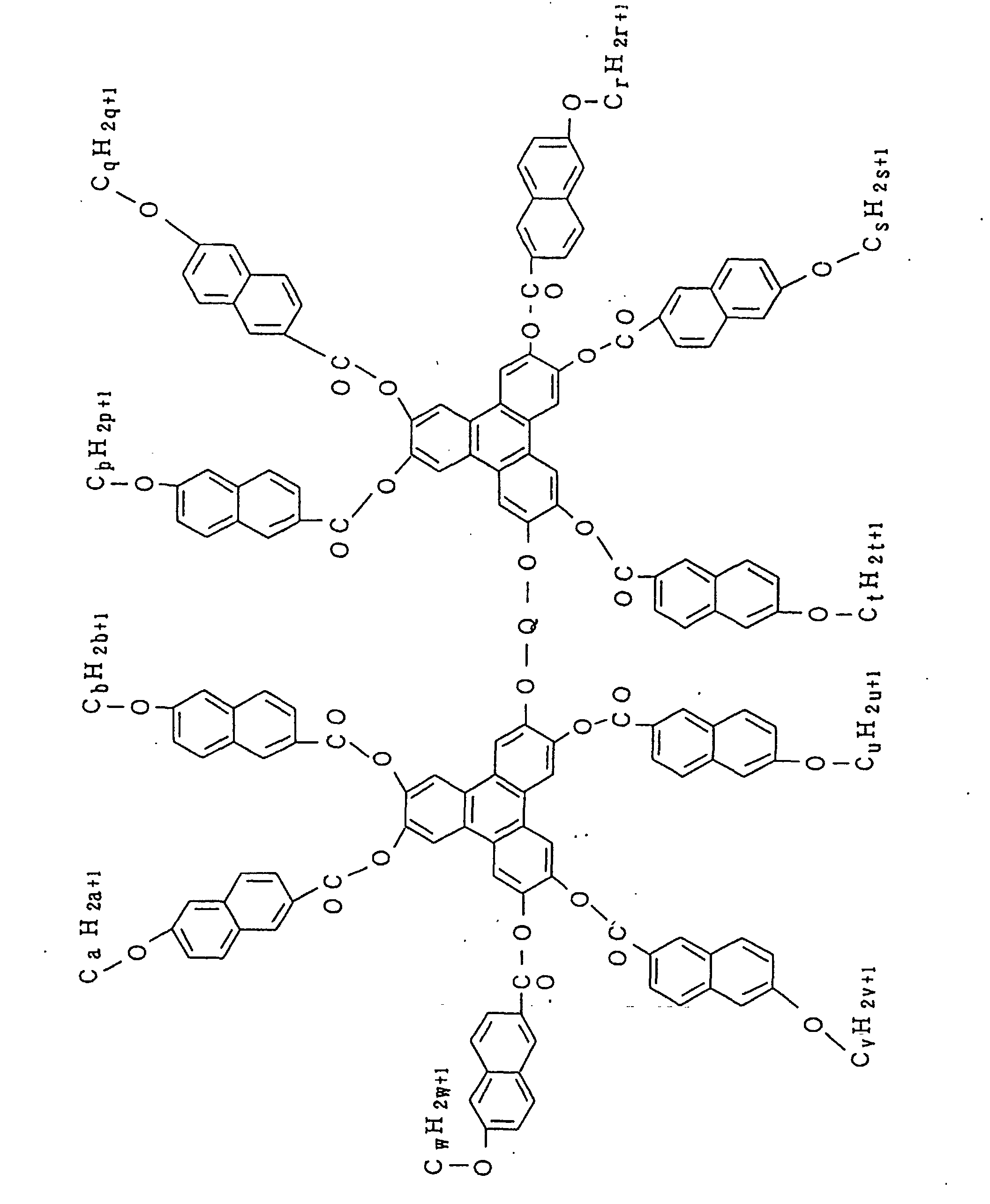 wherein p, q, r, s, t, u, v, w, a and b are each an integer of 1-18, preferably 3-14.

is the following: 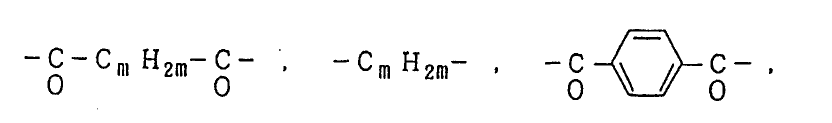 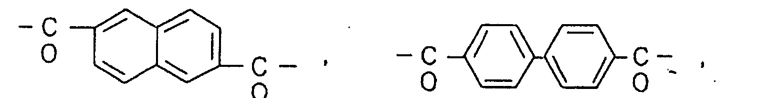 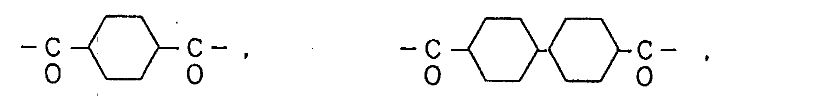 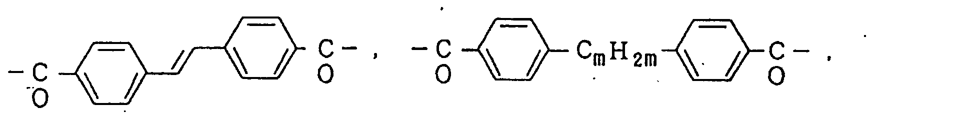 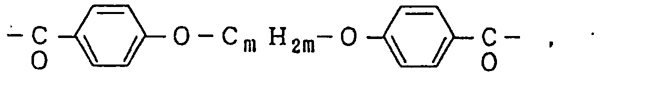 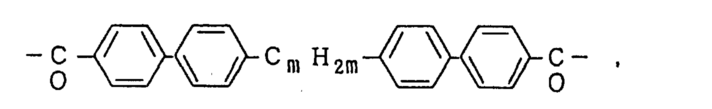 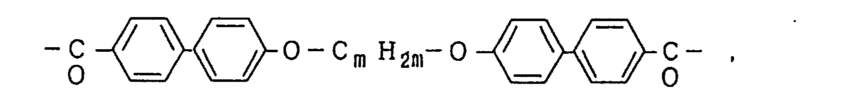 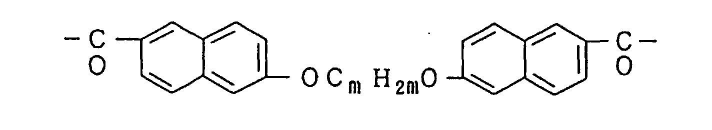 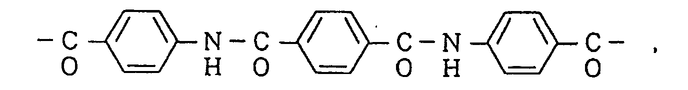 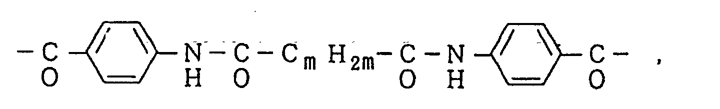 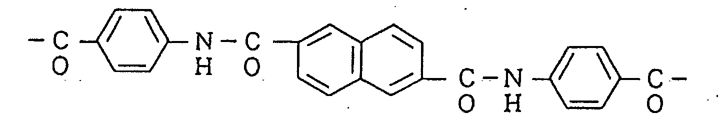 etc.
wherein m is an integer of 2-16.

Preferable Q: 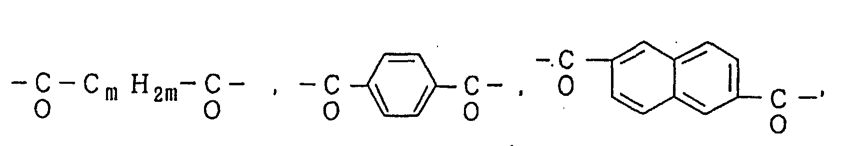 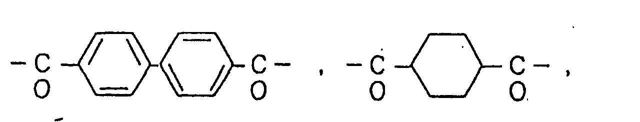 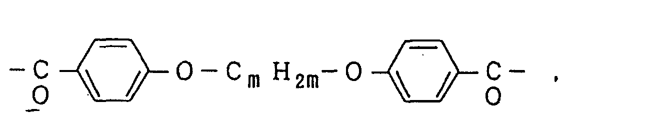 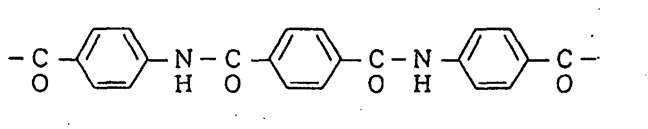 etc.
wherein m is an integer of 2-16, preferably 4-12. 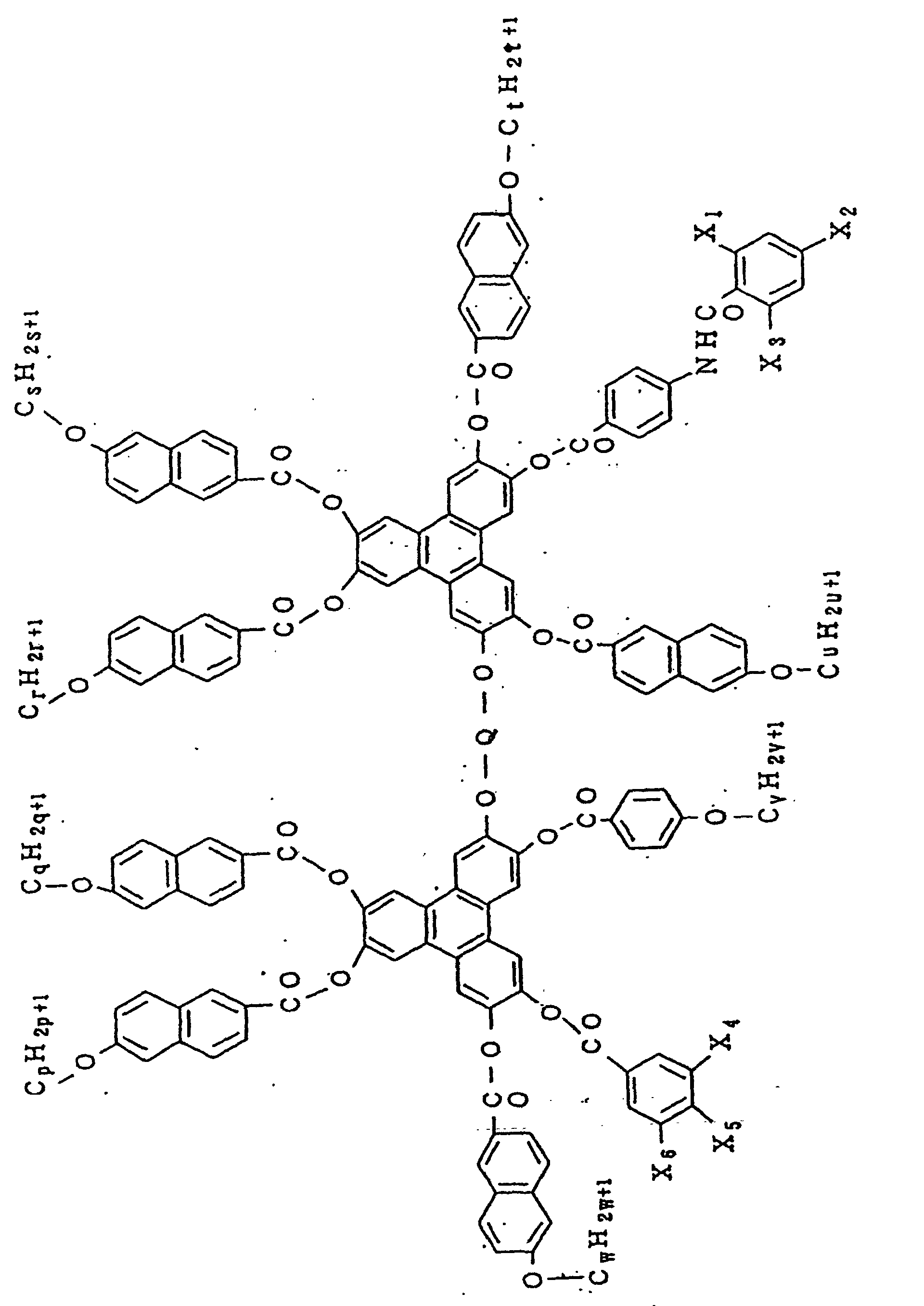 wherein p, q, r, s, t, u, v and w are each an integer of 1-18, preferably 3-14,X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Q is the following: 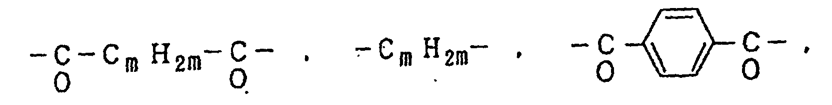 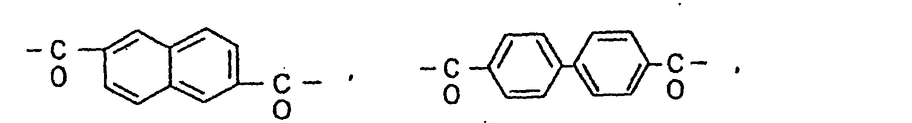 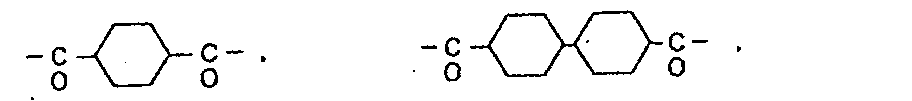 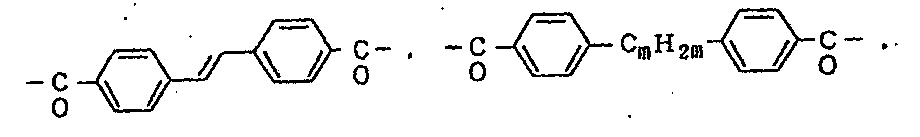 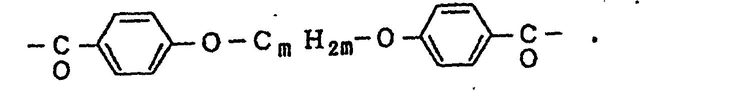 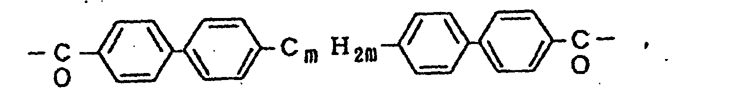 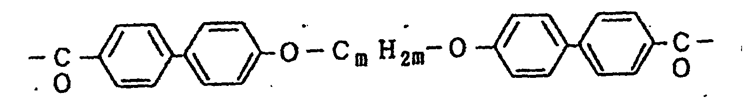 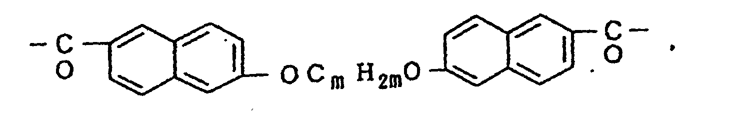 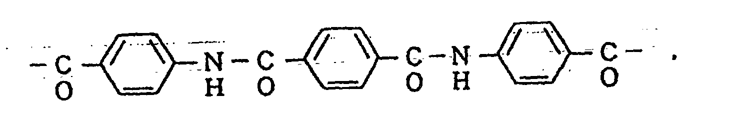 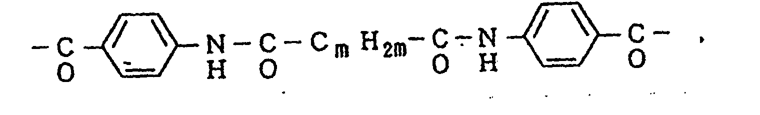 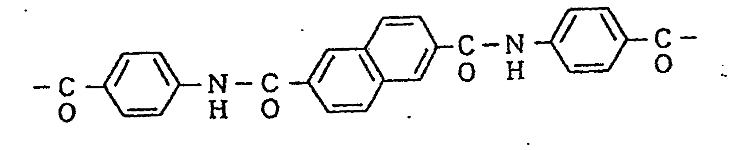 etc.
wherein m is an integer of 2-16.

Preferable Q: 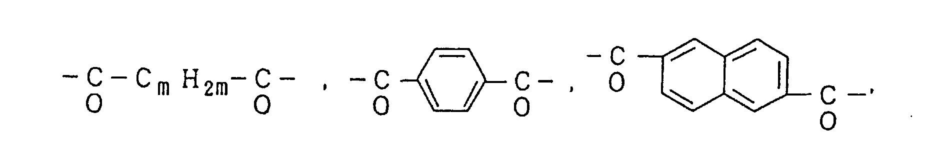 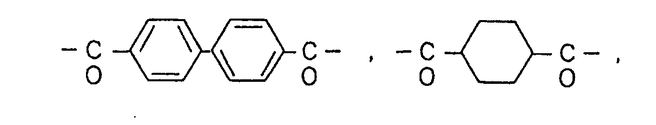 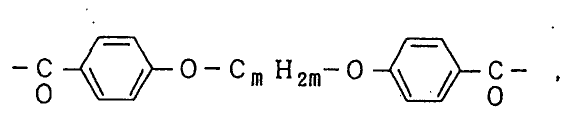 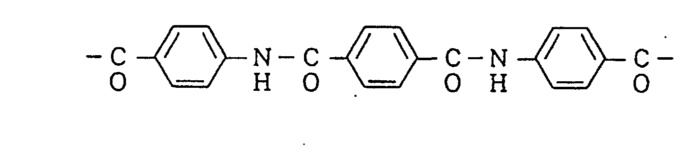 etc.
wherein m is an integer of 2-16, preferably 4-12. 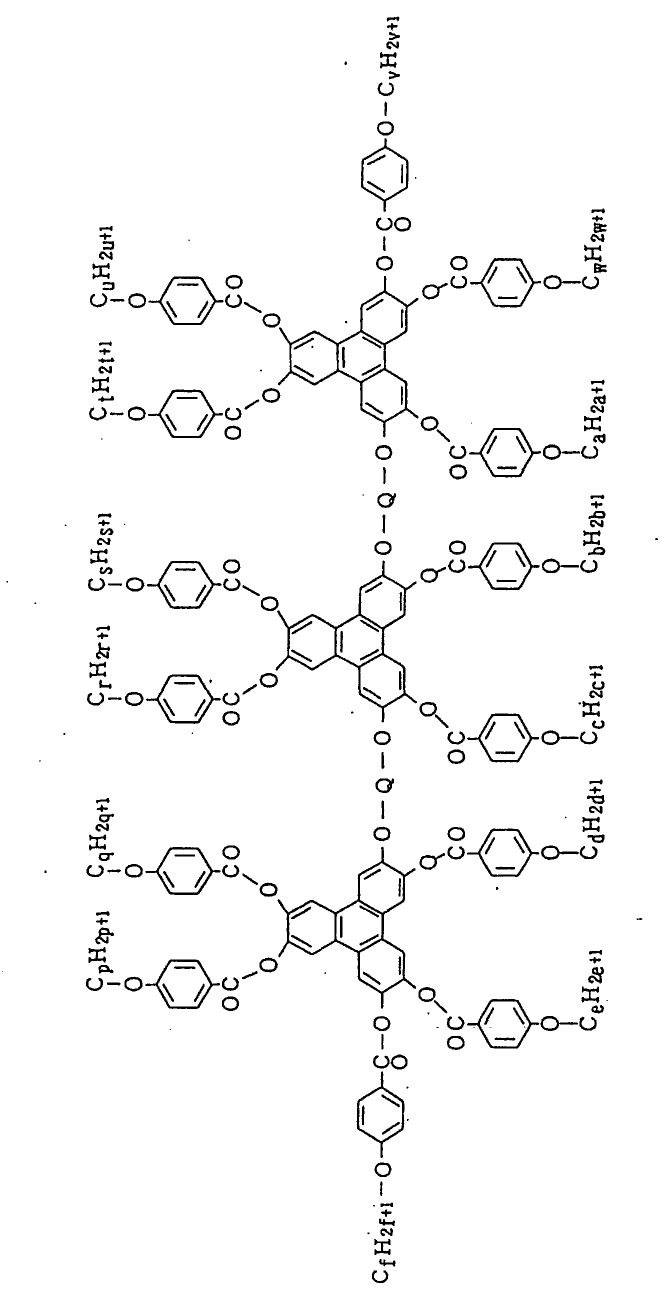 wherein p, q, r, s, t, u, v, w, a, b, c, d, e and f are each an integer of 1-18, preferably 3-14.

Q is the following: 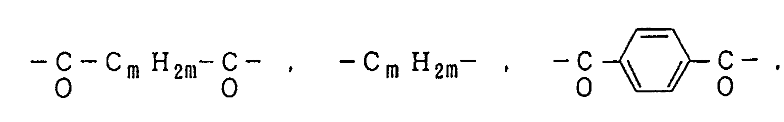 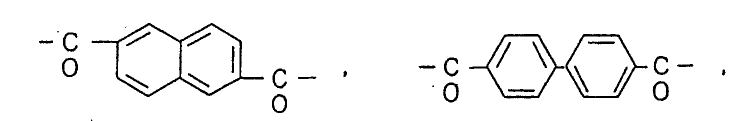 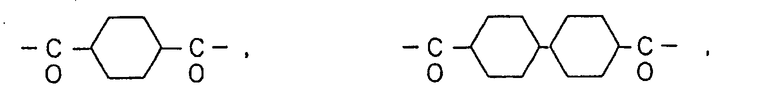 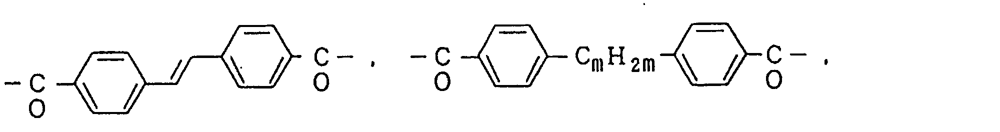 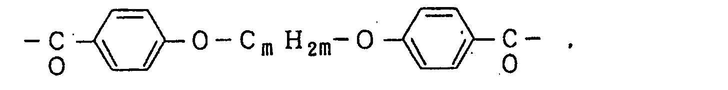 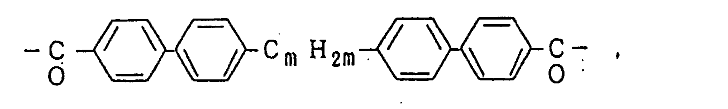 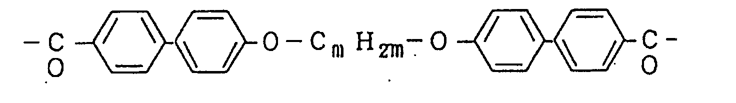 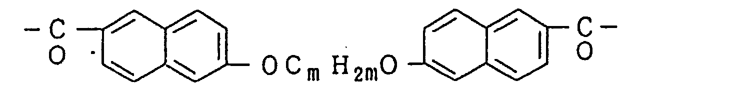 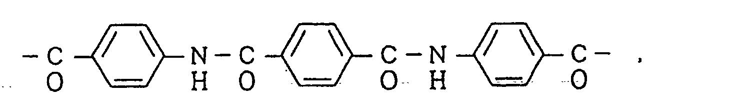 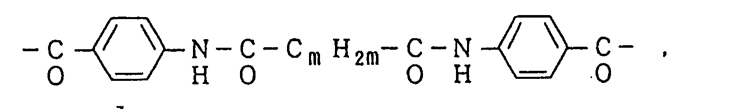 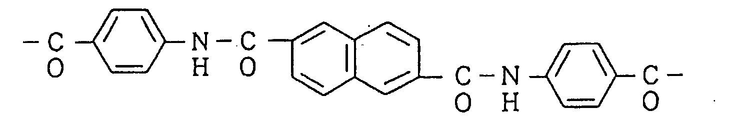 etc.
wherein m is an integer of 2-16.

Preferable Q: 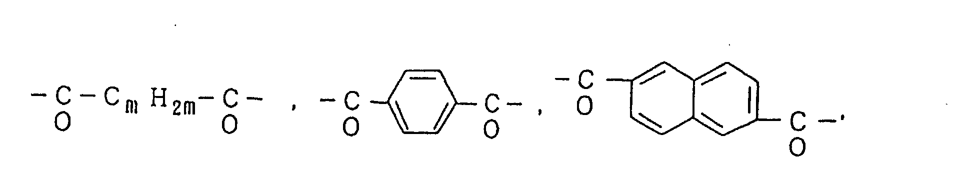 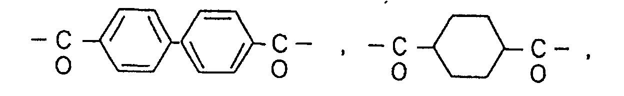 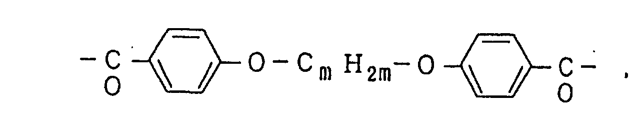 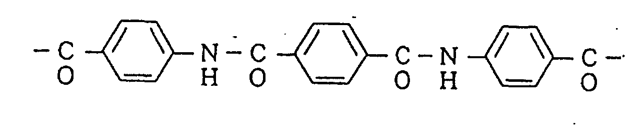 etc.
wherein m is an integer of 2-16, preferably 4-12. 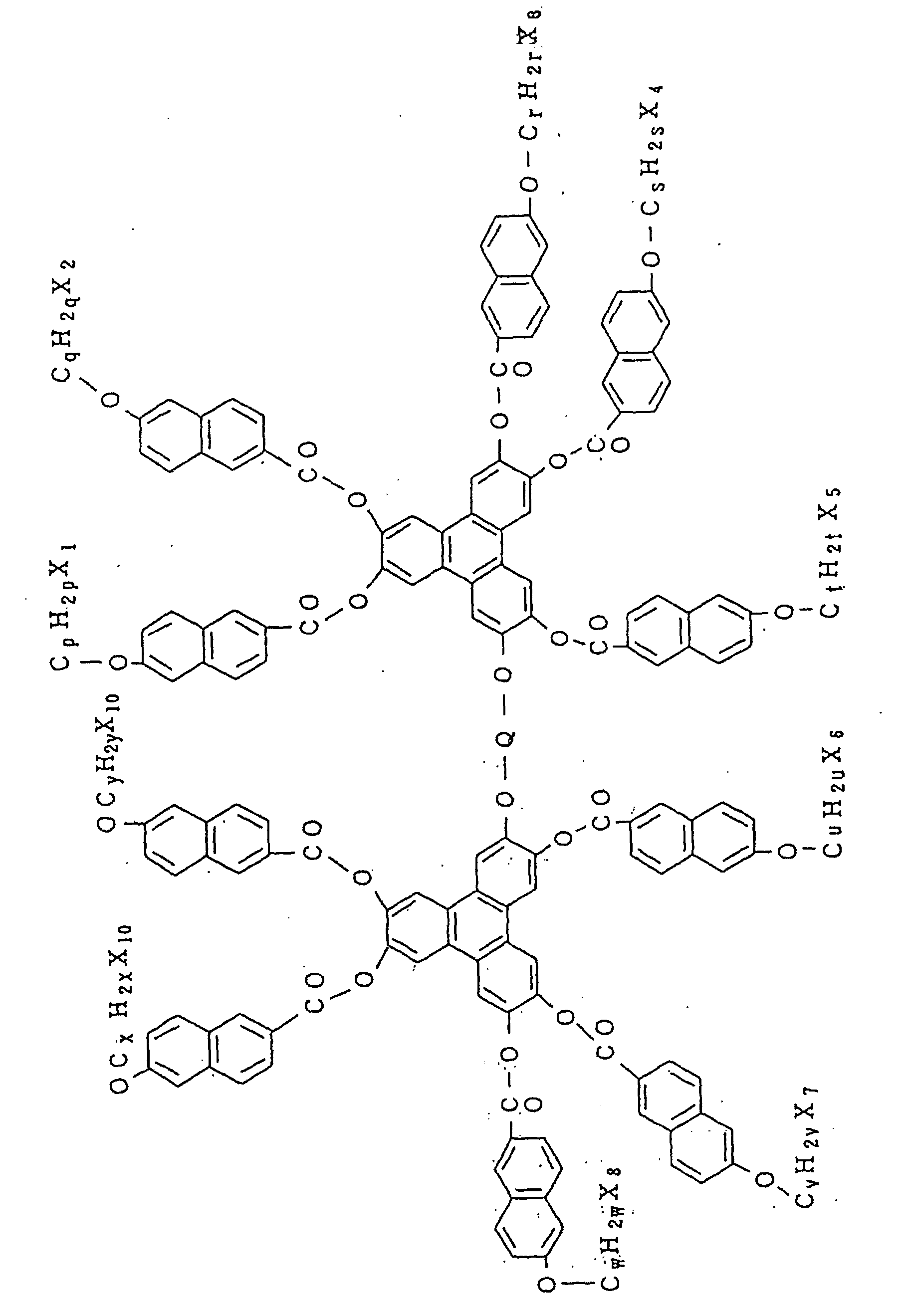 wherein p, q, r, s, t, u, v, w, x and y are each an integer of 1-18, preferably 3-14, X₁-X₁₀ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Q is the following: 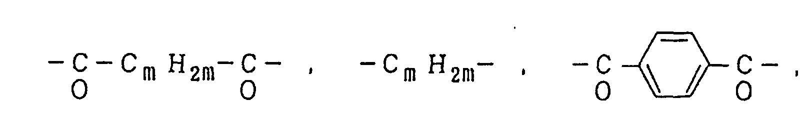 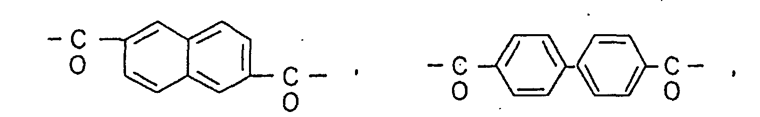 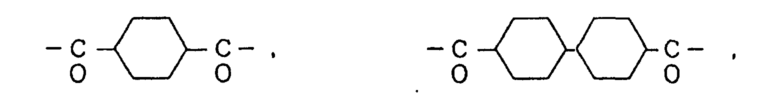 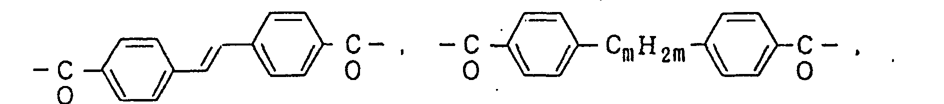 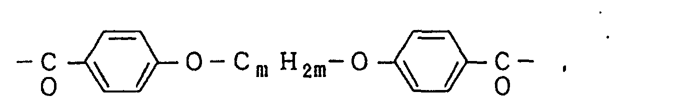 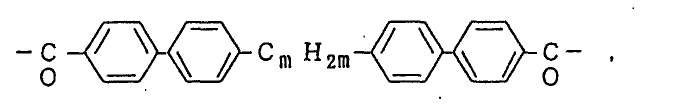 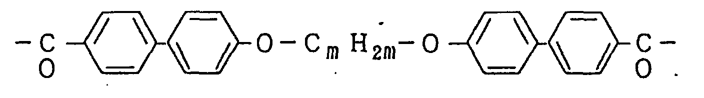 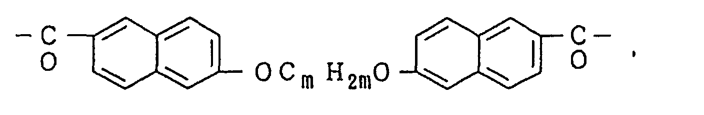 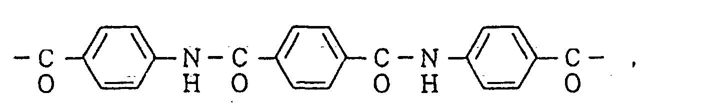 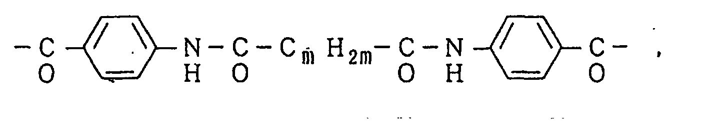 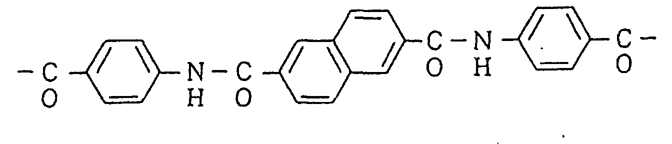 etc.
wherein m is an integer of 2-16.

Preferable Q: 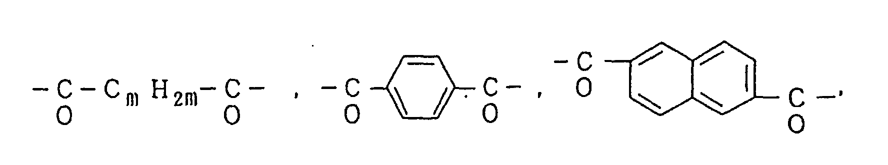 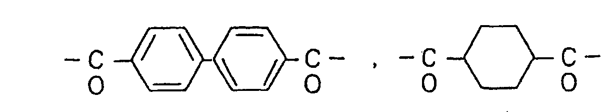 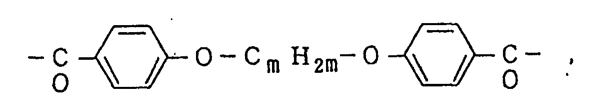 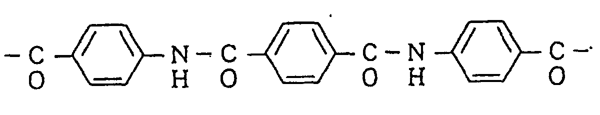 etc.
wherein m is an integer of 2-16, preferably 4-12. 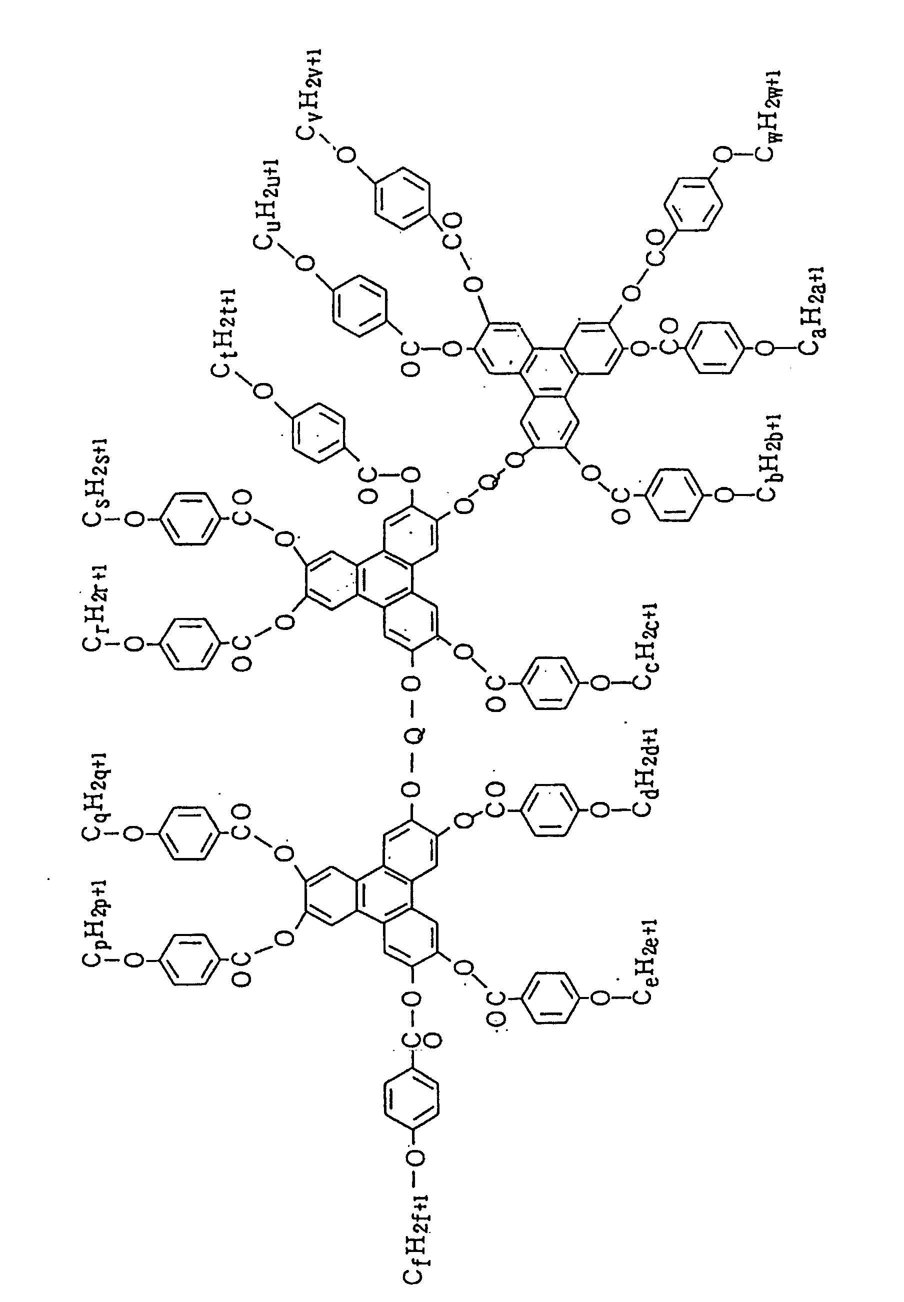 wherein p, q, r, s, t, u, v, w, a, b, c, d, e and f are each an integer of 1-18, preferably 3-14.

Q is the following: 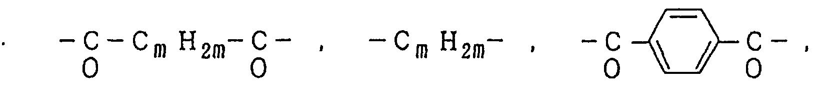 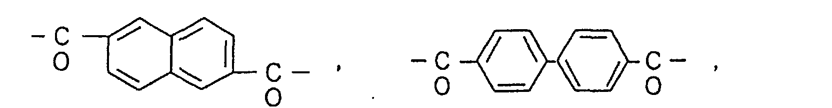 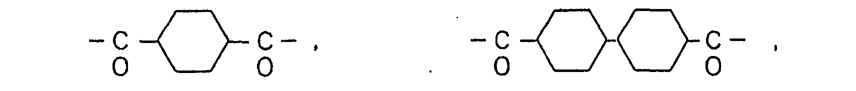 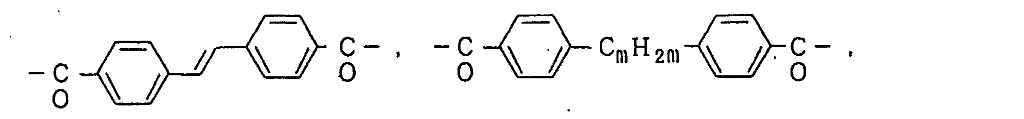 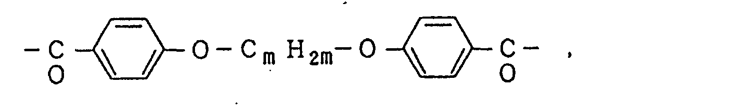 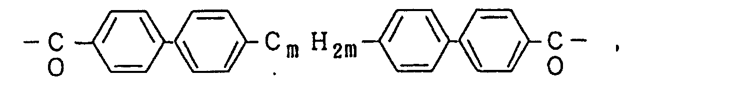 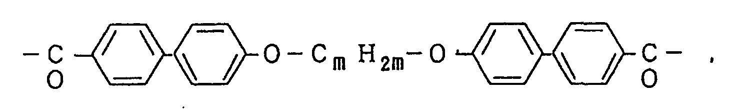 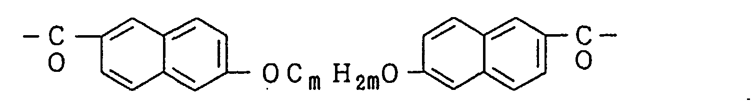 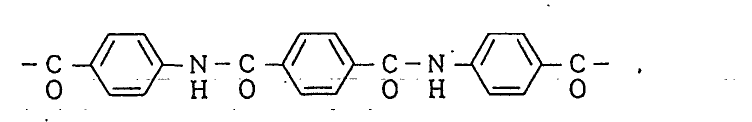 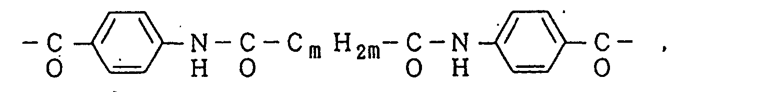 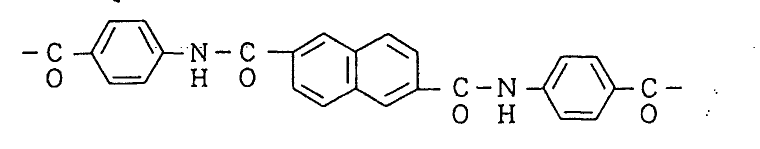 etc.
wherein m is an integer of 2-16.

Preferable Q: 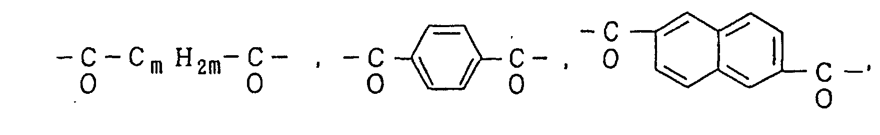 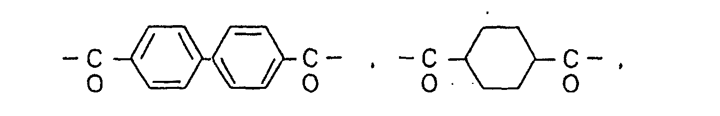 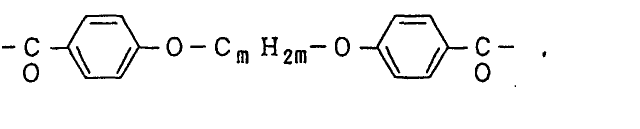 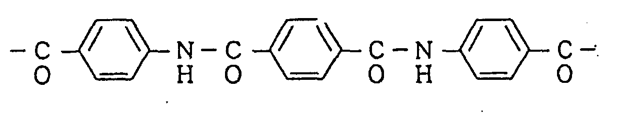 etc.
wherein m is an integer of 2-16, preferably 4-12.

Polymer represented by the following: 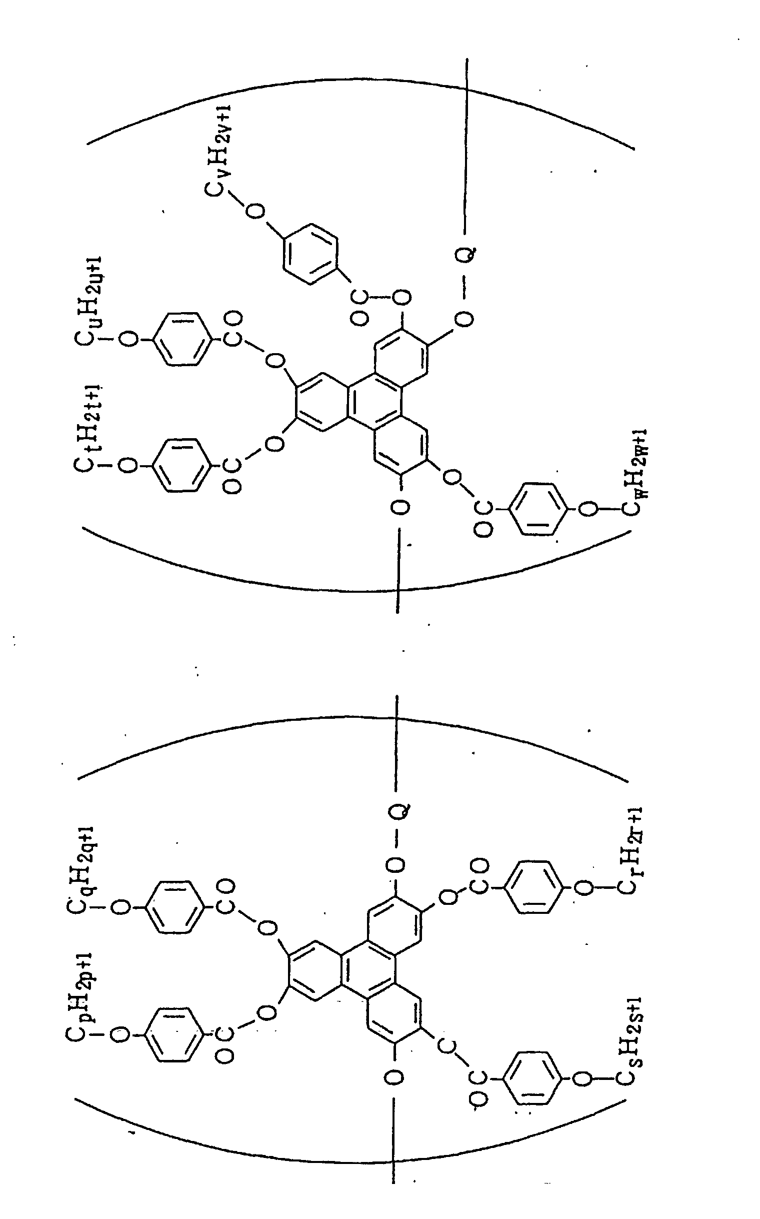 wherein p, q, r, s, t, u, v and w are each an integer of 1-18, preferably 3-14, and the average molecular weight is 5,000 - 100,000.

Q is'the following: 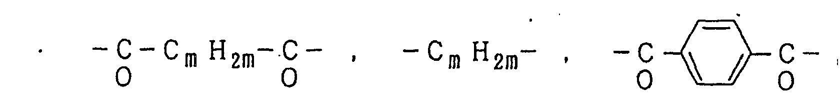 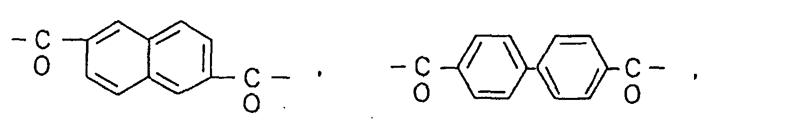 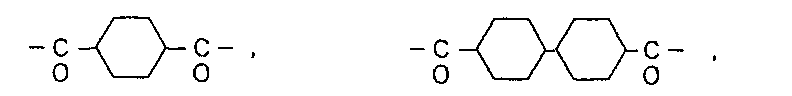 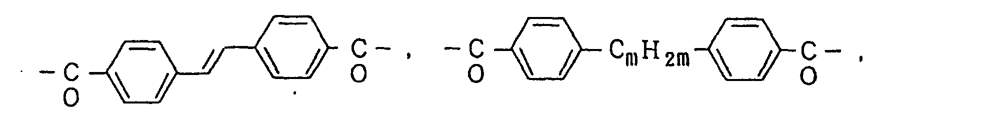 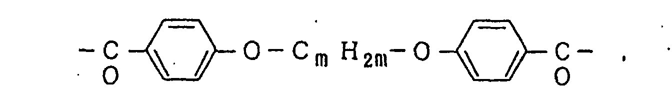 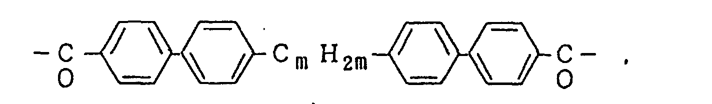 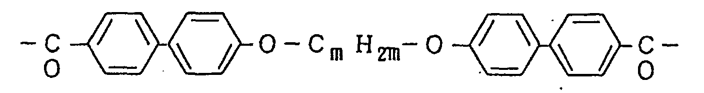 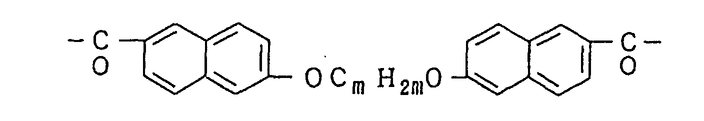 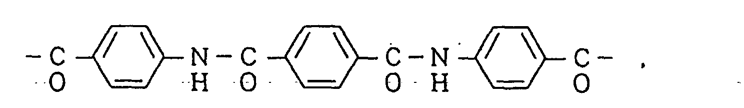 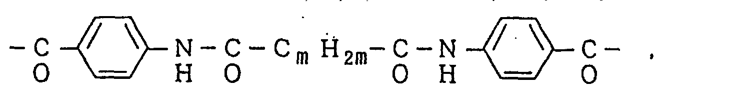 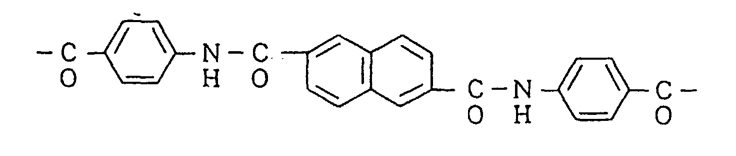 etc.
wherein m is an integer of 2-16.

Preferable Q: 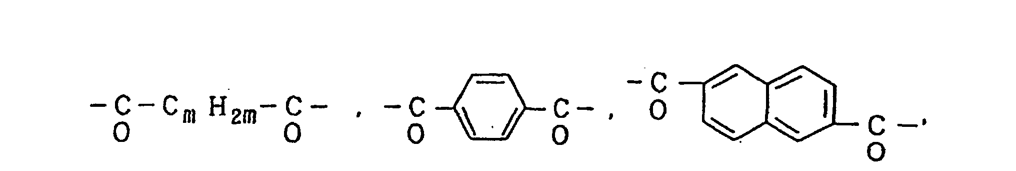 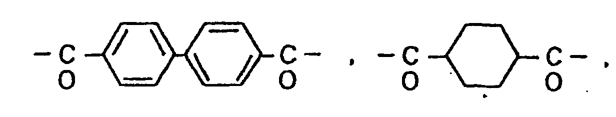 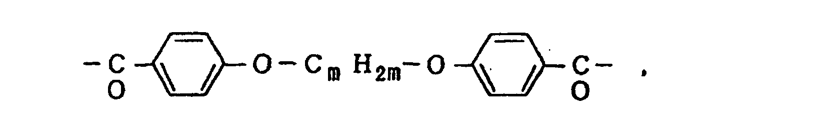 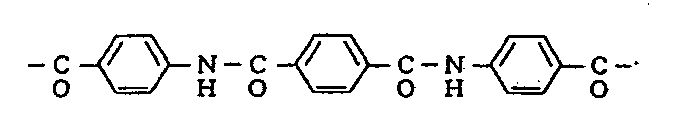 etc.
wherein m is an integer of 2-16, preferably 4-12. 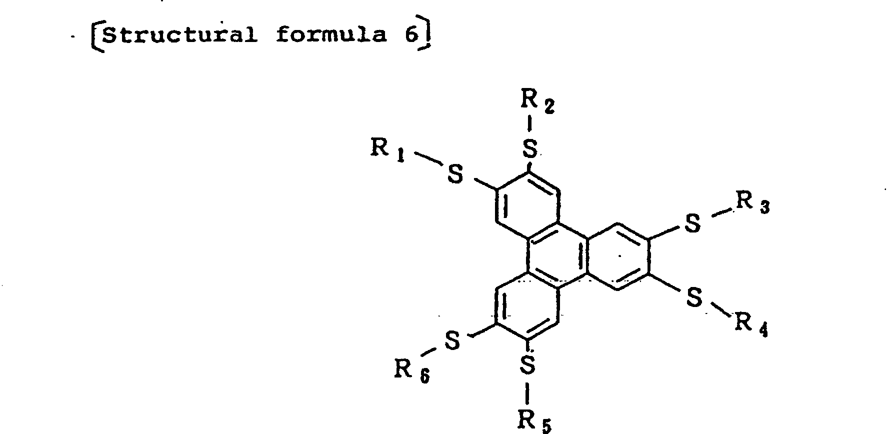 wherein R₁-R₆ are each independently a monofunctional or bifunctional substituent group selected from the following:

Mono functional substituent groups: 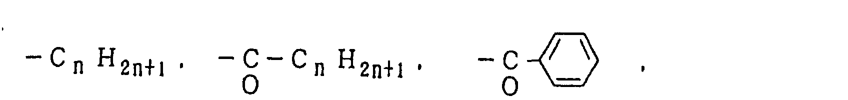 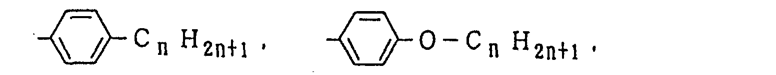 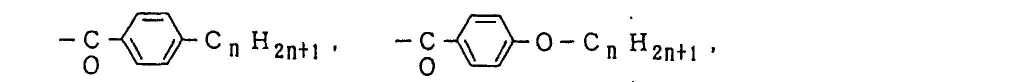 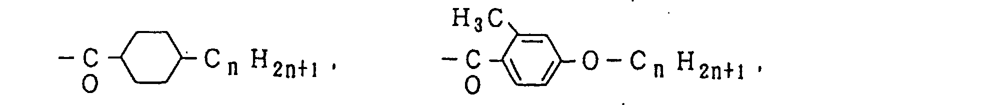 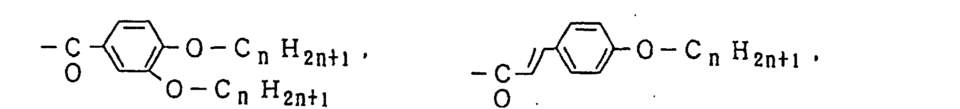 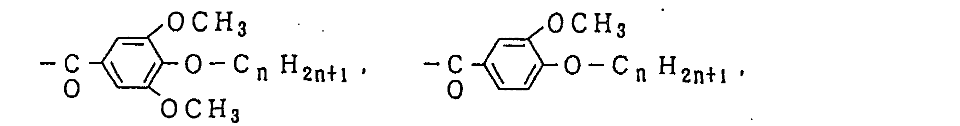 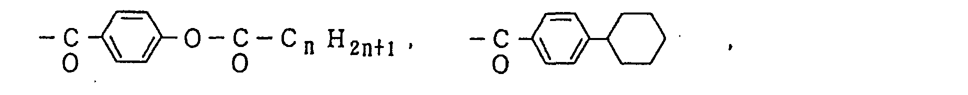 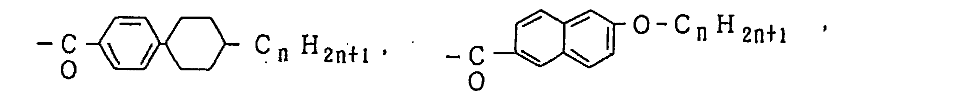 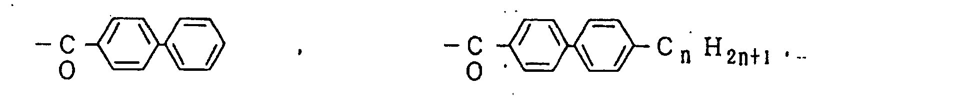 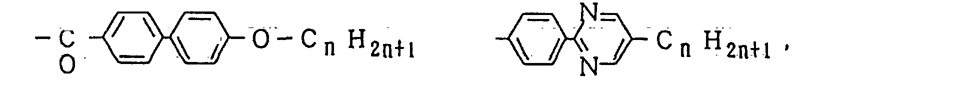 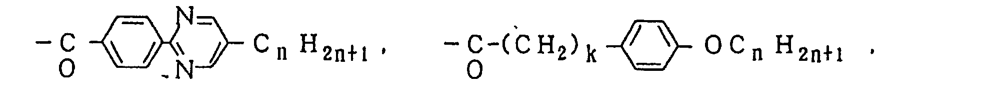 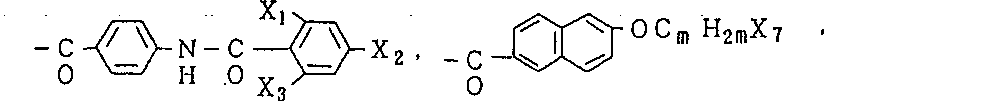 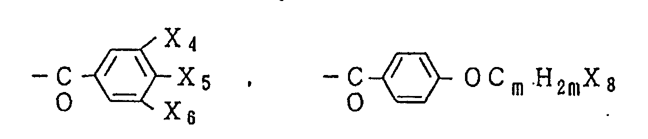 etc.
wherein CₙH₂ₙ₊₁ is a linear or branched alkyl group, n is an integer of 1-18, preferably 3-14, X₁-X₈ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, ℓ is an integer of 1-18, preferably 1-10, CₘH₂ₘ is a linear or branched alkylene chain, and m is an integer of 1-18, preferably 2-10.

Bifunctional substituent groups: 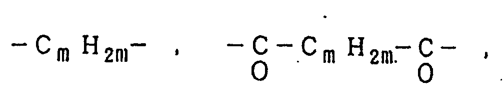 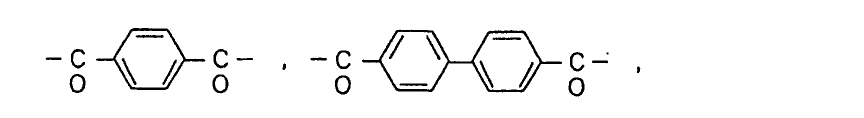 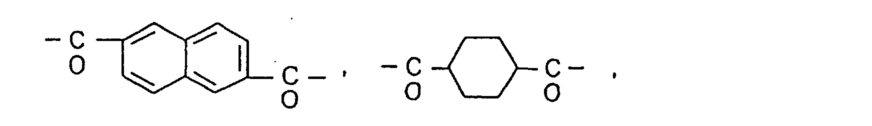 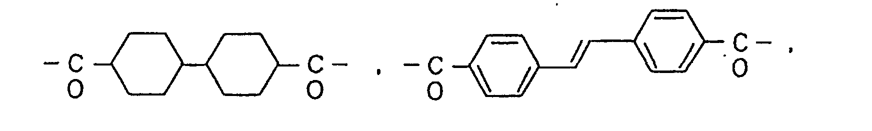 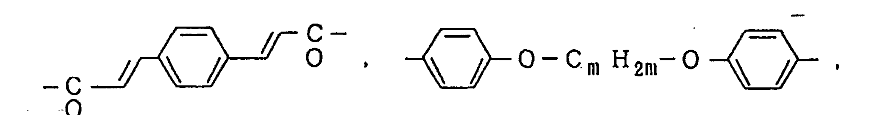 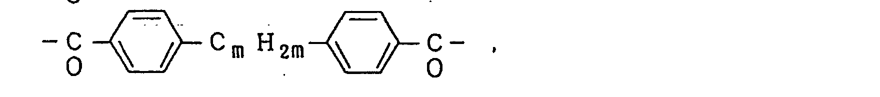 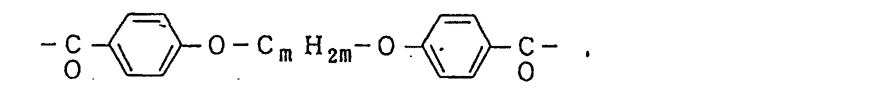 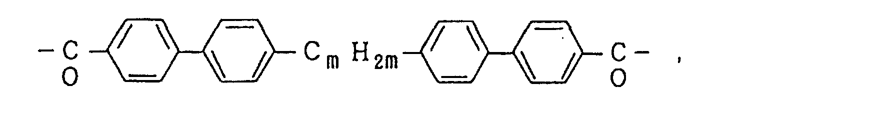 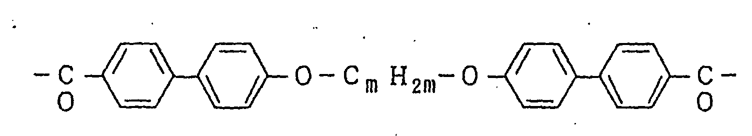 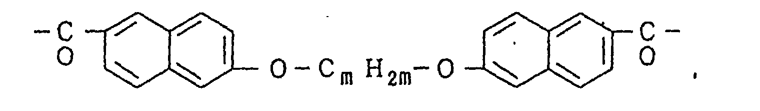 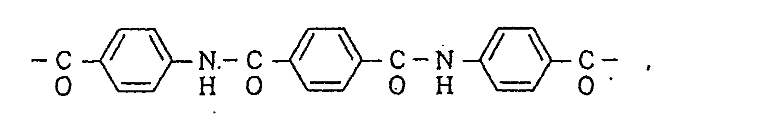 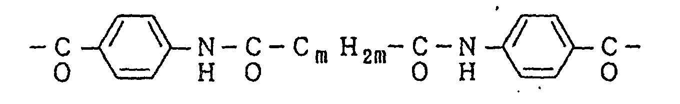 etc.
wherein CₘH₂ₘ is a linear or branched alkylene group, and m is an integer of 2-16, preferably 4-12.

Examples of the concrete structures: 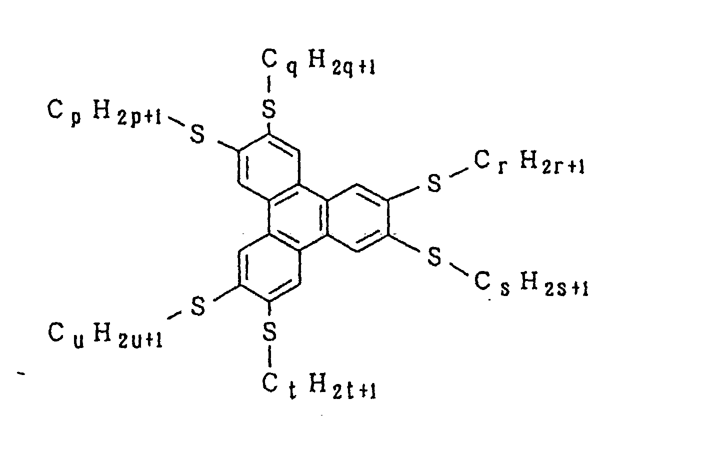 wherein p, q, r, s, t and u are each an integer of 1-18, preferably 3-14. 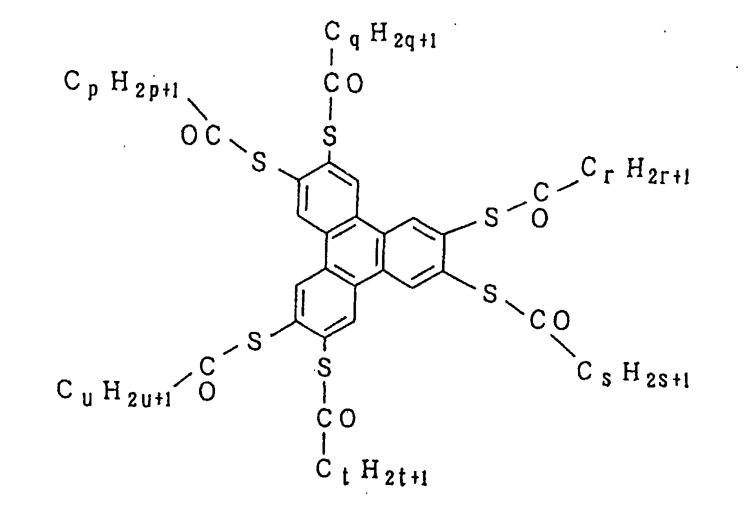 wherein p, q, r, s, t and u are each an integer of 1-18, preferably 3-14. 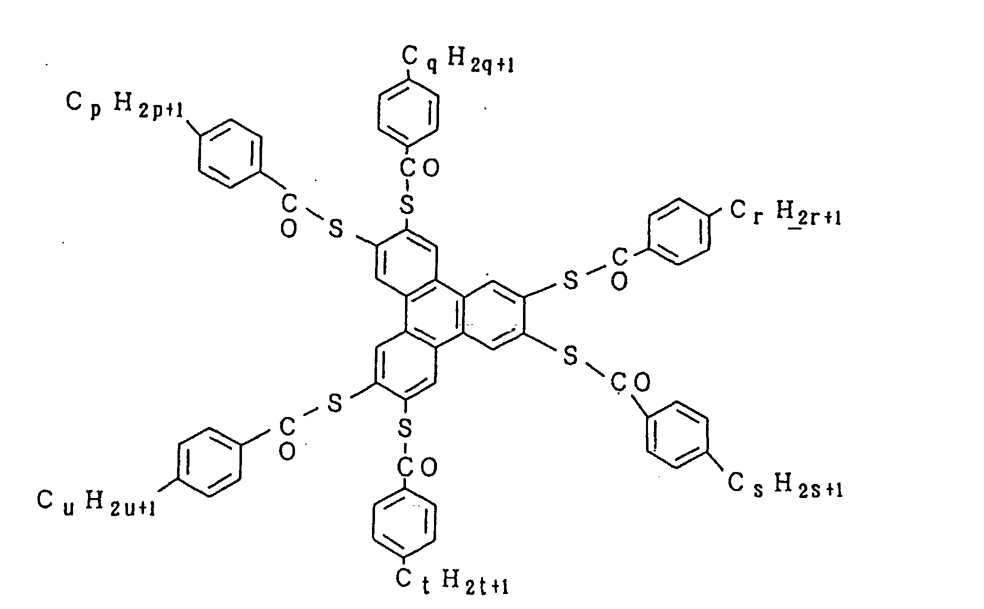 wherein p, q, r, s, t and u are each an integer of 1-18, preferably 3-14. 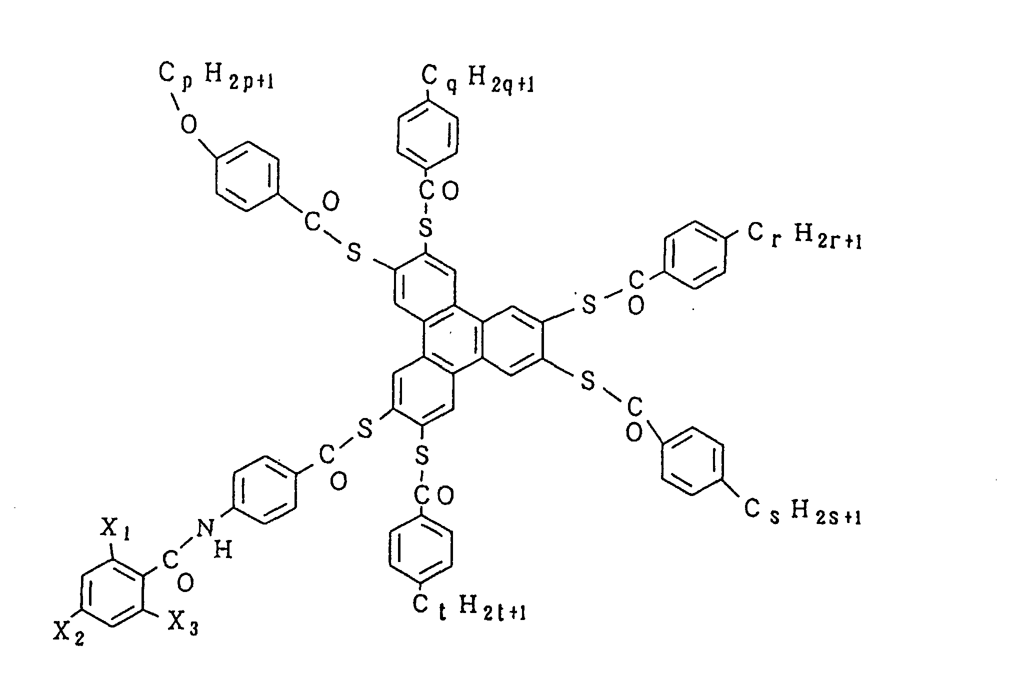 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 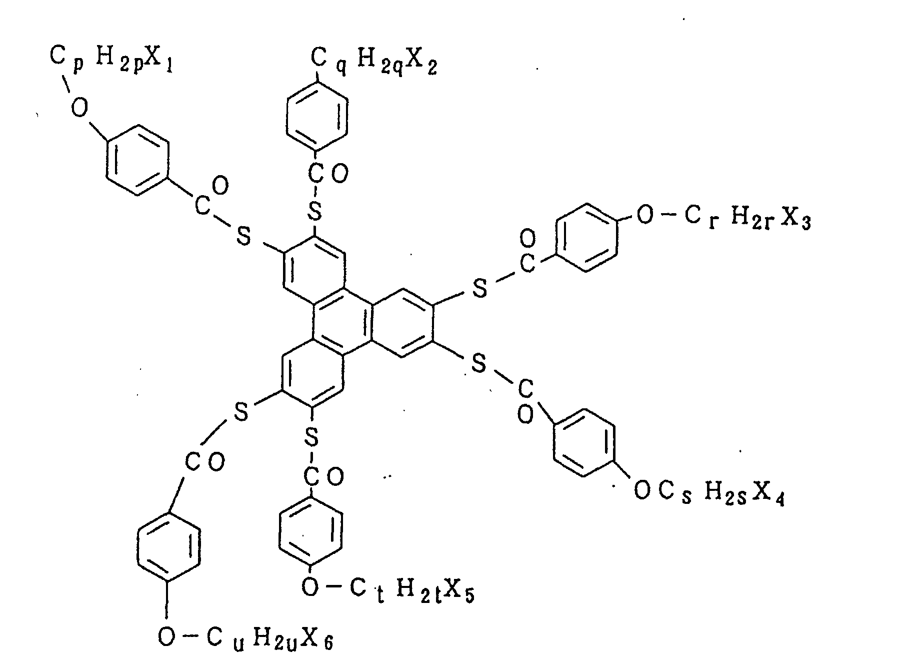 wherein p, q, r, s, t and u are each an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 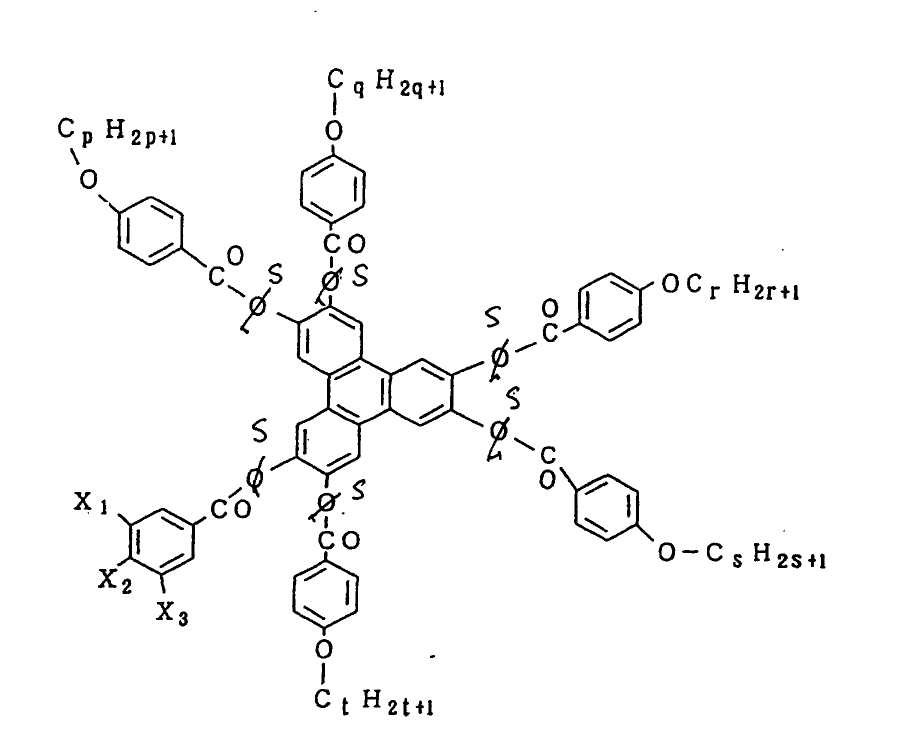 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 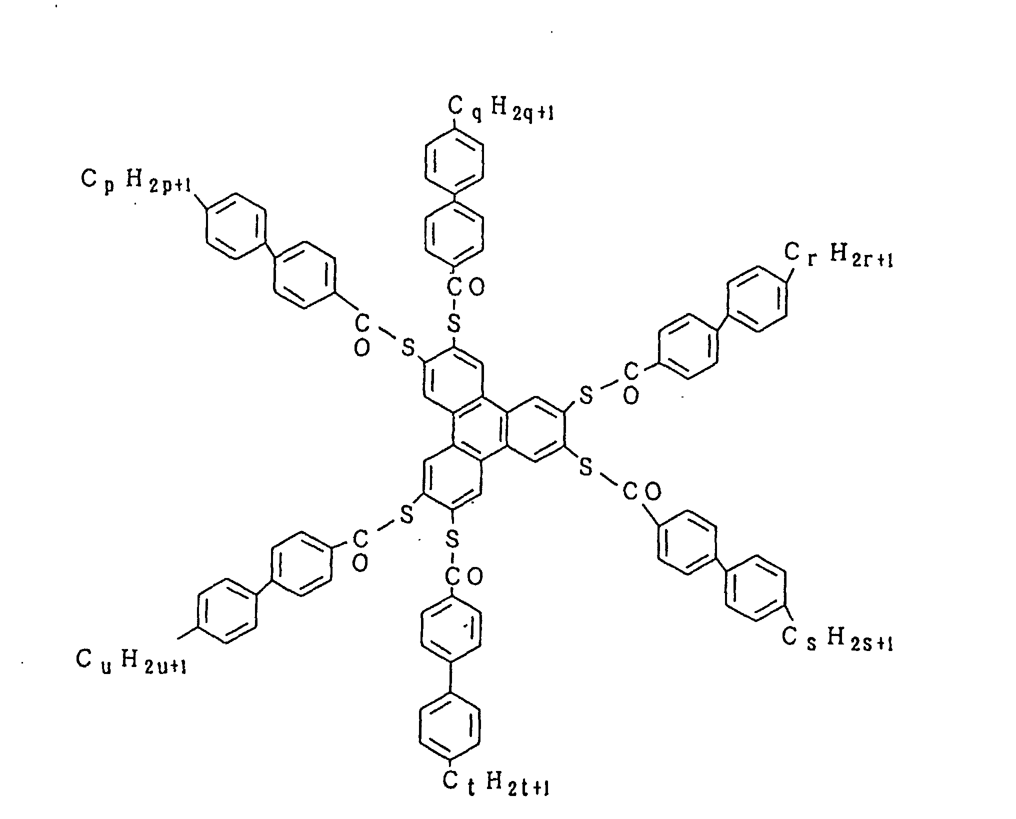 wherein p, q, r, s, t and u are each an integer of 1-18, preferably 3-14. 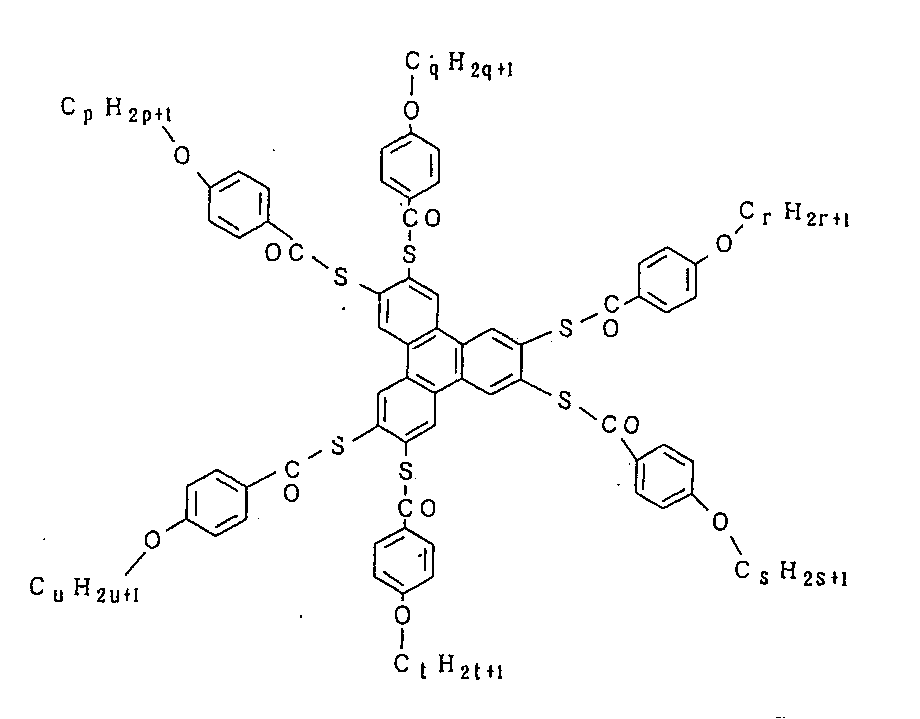 wherein p, q, r, s, t and u are each an integer of 1-18, preferably 3-14. 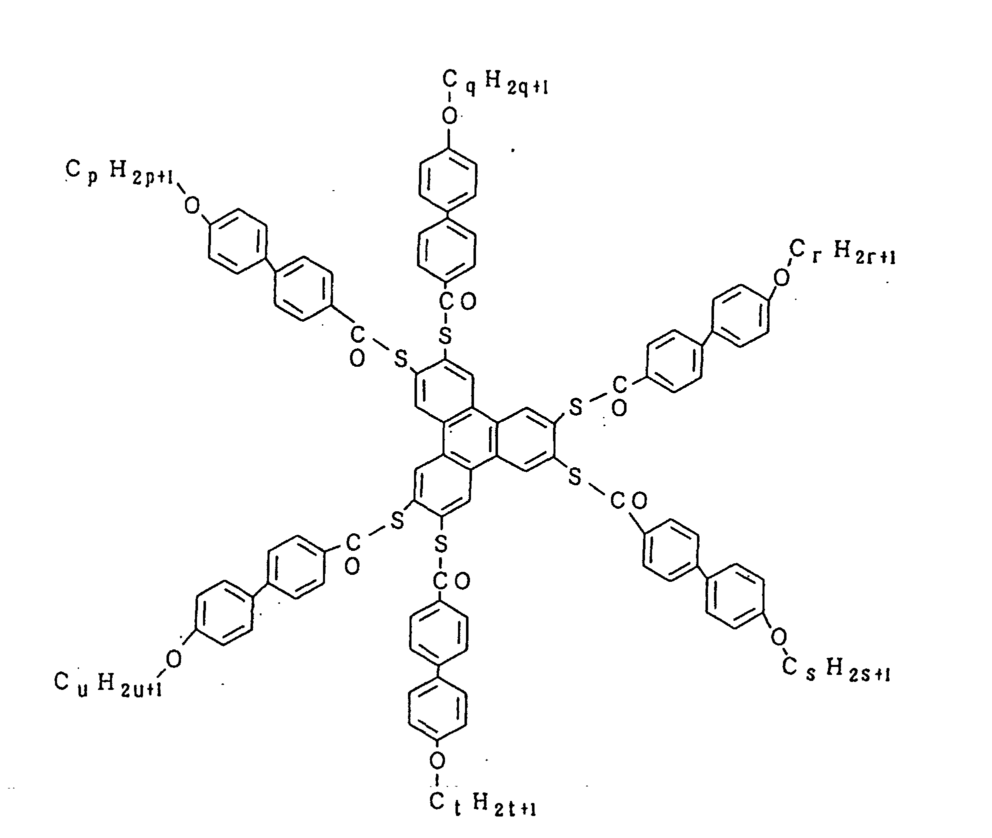 wherein p, q, r, s, t and u are each an integer of 1-18, preferably 3-14. 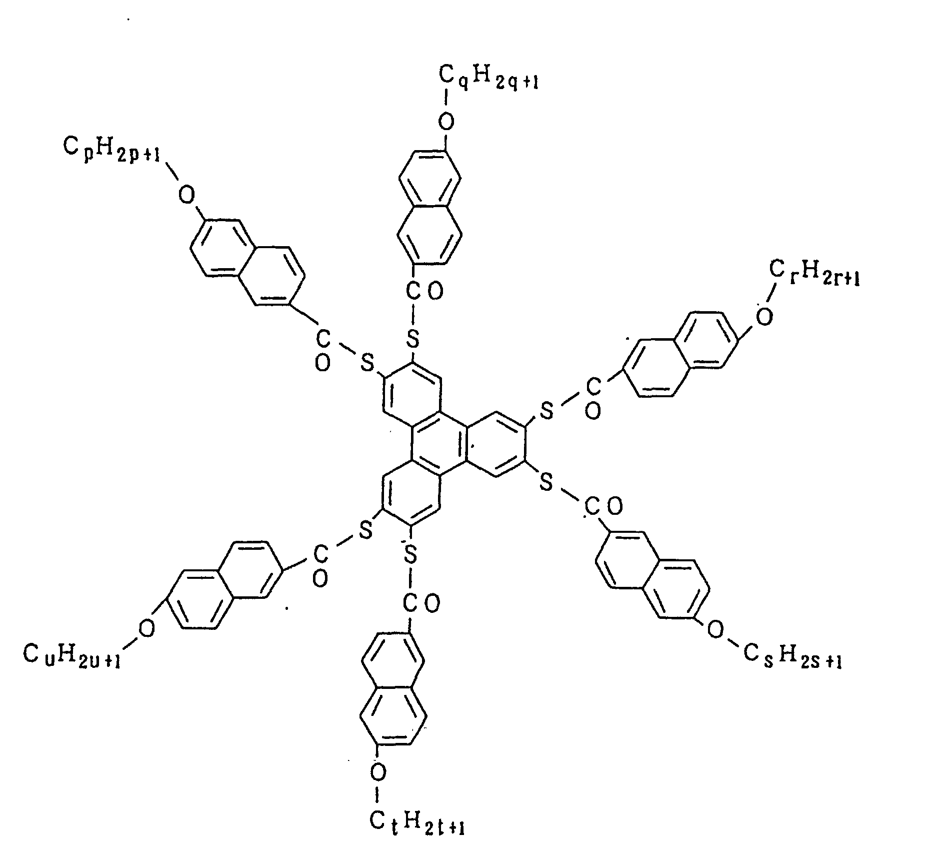 wherein p, q, r, s, t and u are each an integer of 1-18, preferably 3-14.

Composition of the following: 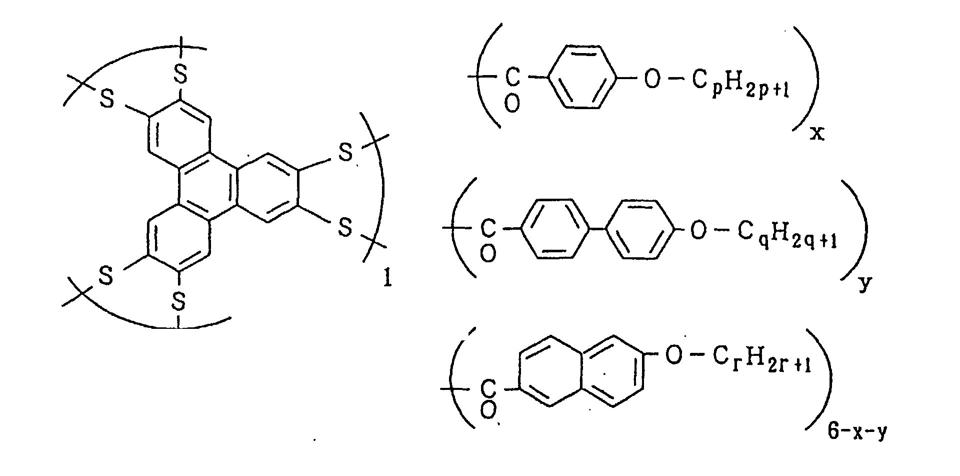 wherein 0 ≦ x ≦ 6, 0 ≦ y ≦ 6 in the molar ratio, and p, q and r are each an integer of 1-18, preferably 3-14.

Composition of the following: 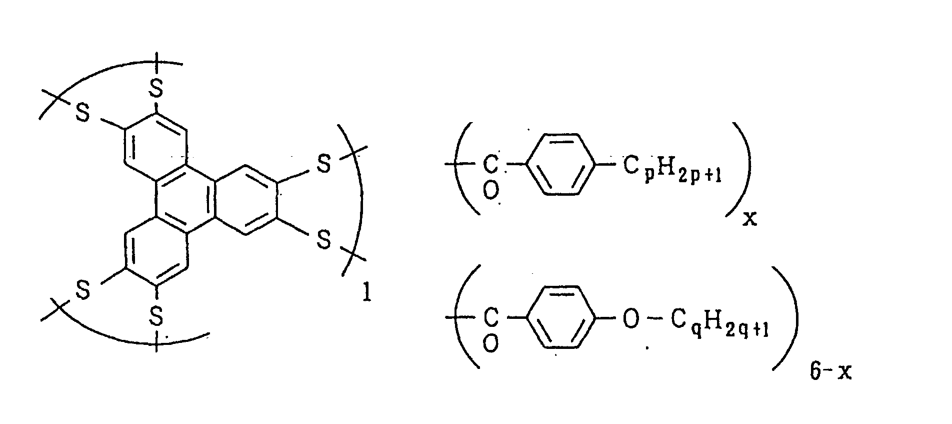 wherein 0 ≦ x ≦ 6 in the molar ratio, and p and q are each an integer of 1-18, preferably 3-14.

Composition of the following: 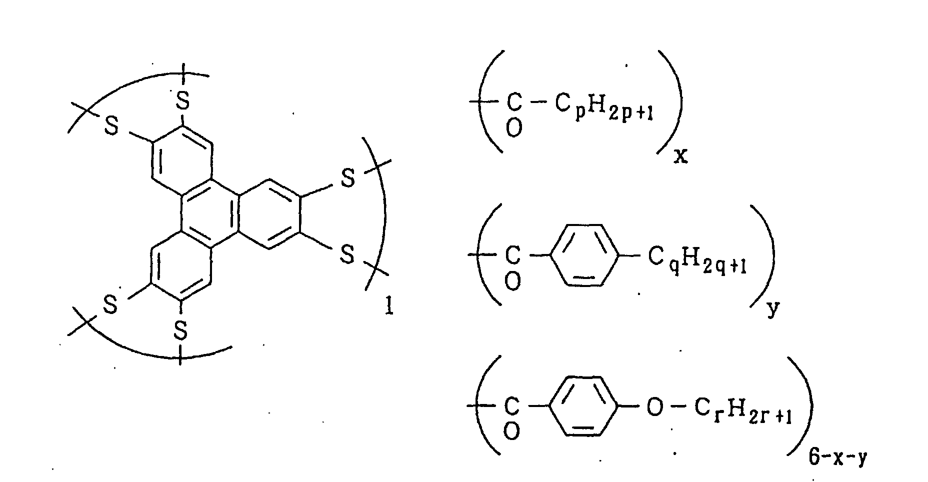 wherein 0 ≦ x ≦ 6, 0 ≦ y ≦ 6 in the molar ratio, and p, q and r are each an integer of 1-18, preferably 3-14. 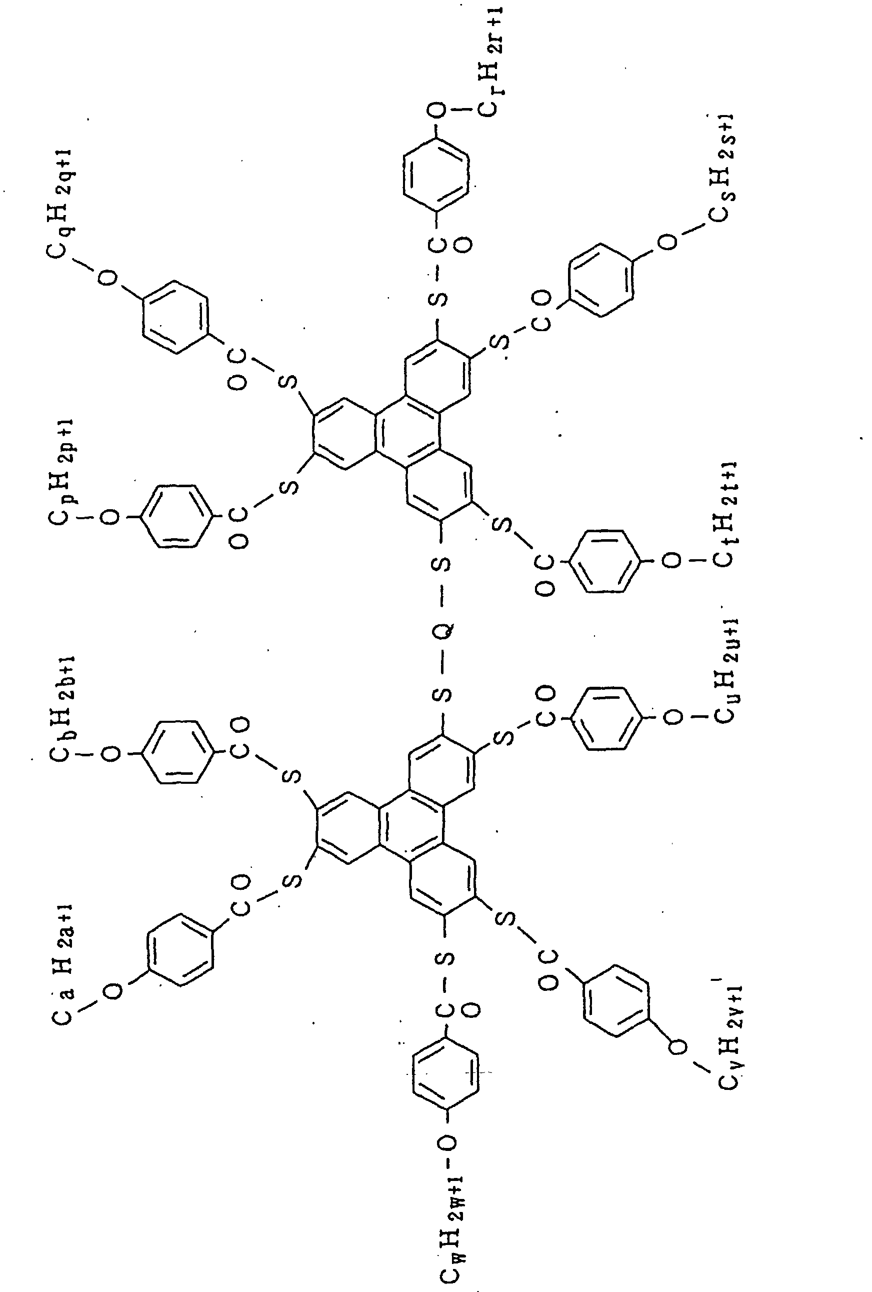 wherein p, q, r, s, t, u, v, w, a and b are each an integer of 1-18, preferably 3-14.

Q is the following: 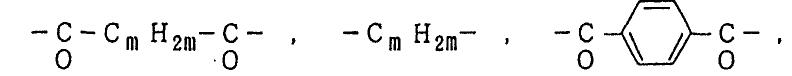 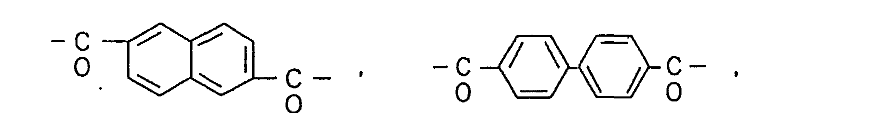 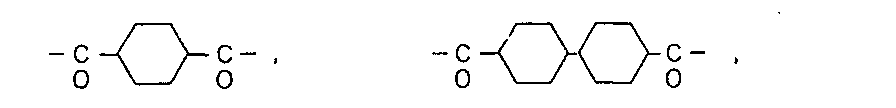 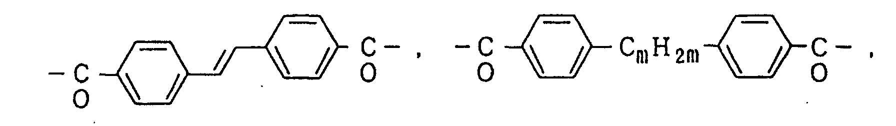 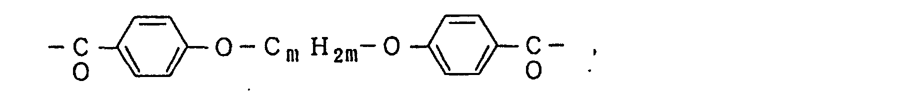 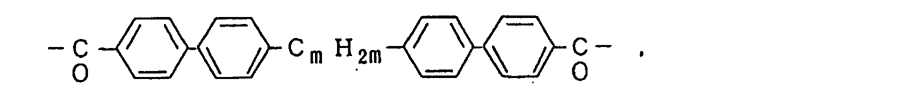 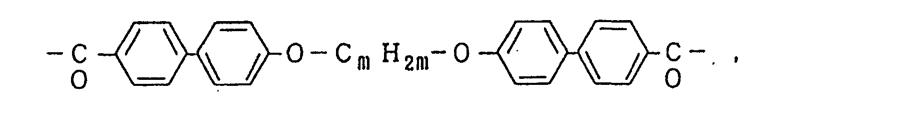 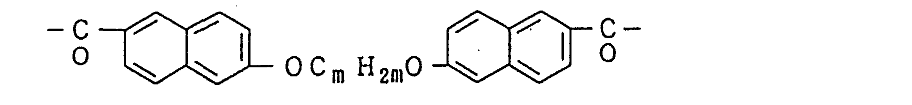 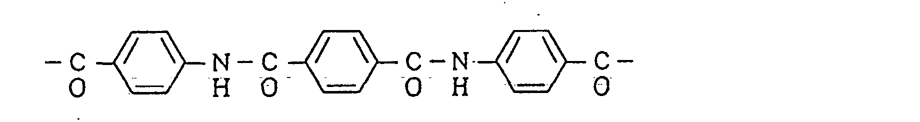 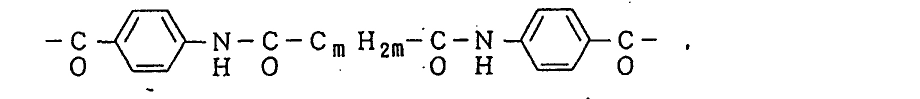 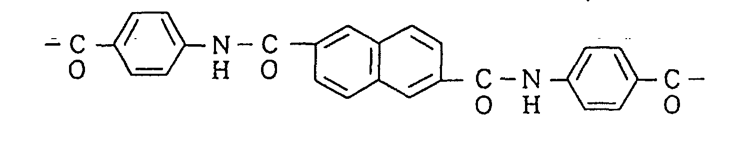 etc.
wherein m is an integer of 2-16.

Preferable Q: 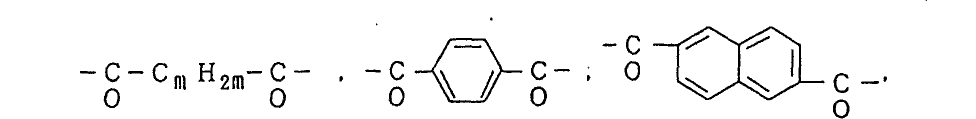 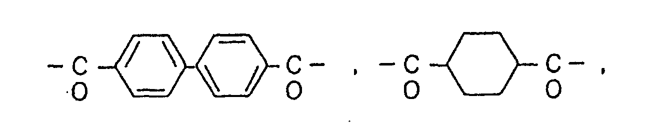 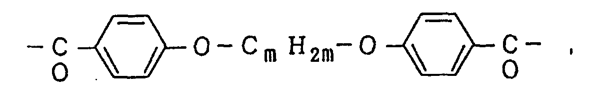 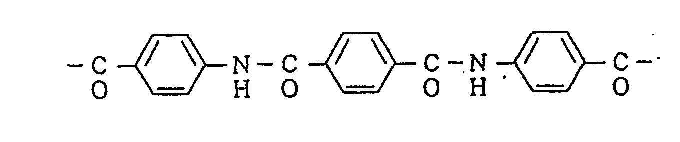 etc.
wherein m is an integer of 2-16, preferably 4-12.

Polymer represented by the following: 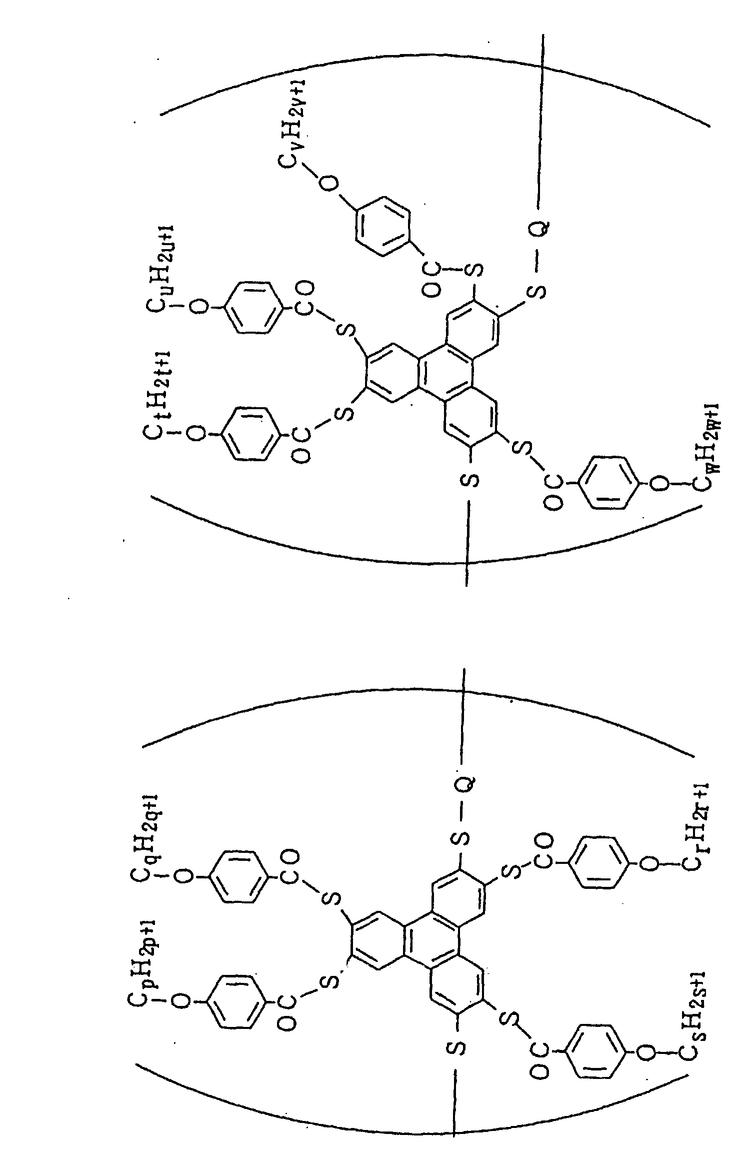 wherein p, q, r, s, t, u, v and w are each an integer of 1-18, preferably 3-14, and the average molecular weight is 5,000 - 100,000.

Q is the following: 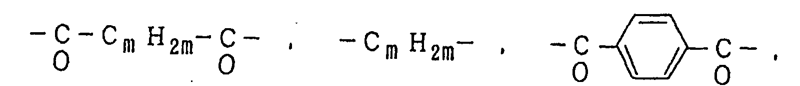 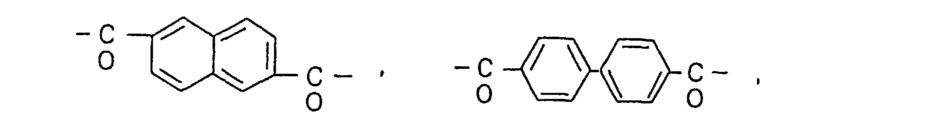 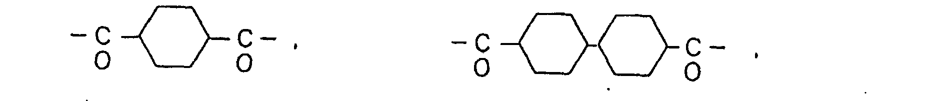 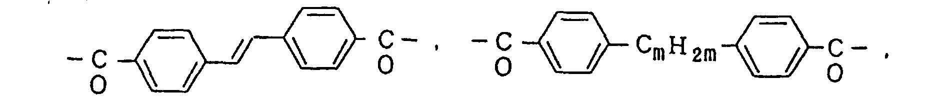 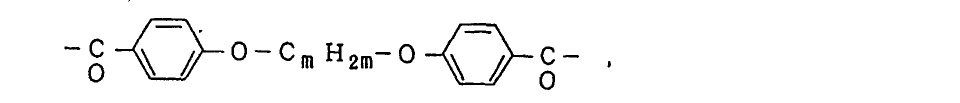 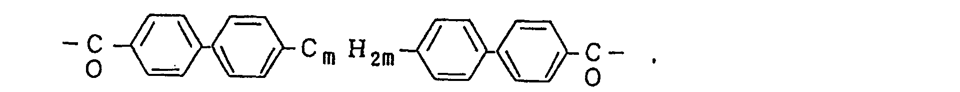 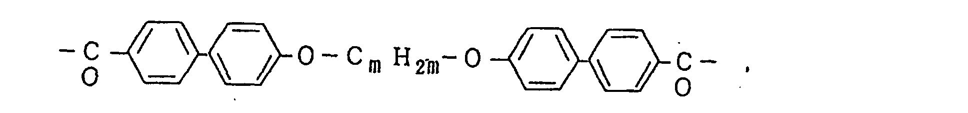 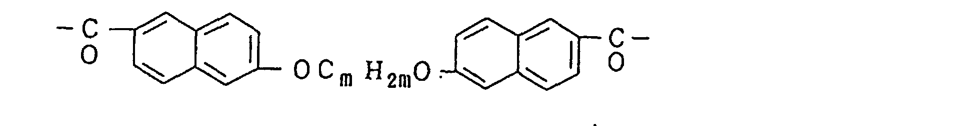 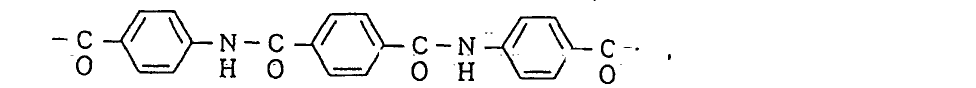 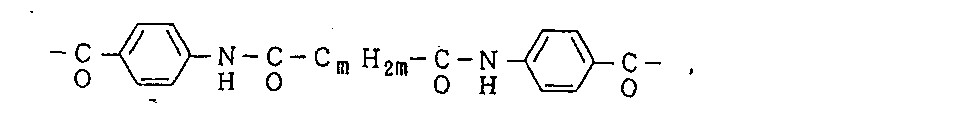 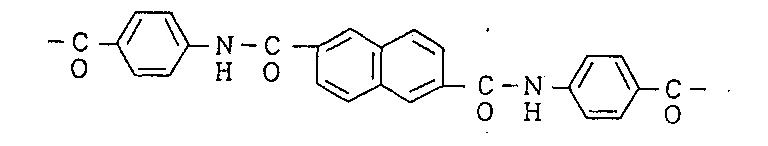 etc.
wherein m is an integer of 2-16.

Preferable Q: 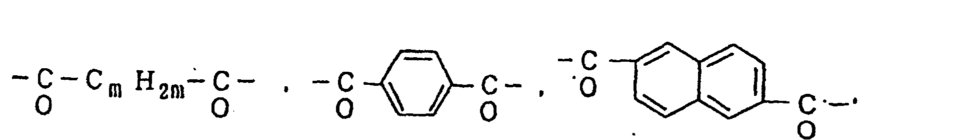 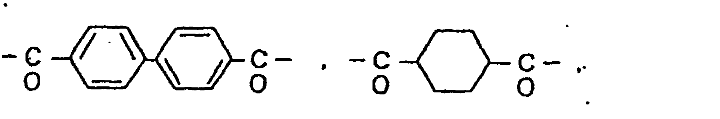 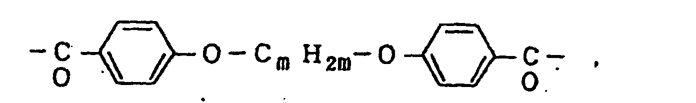 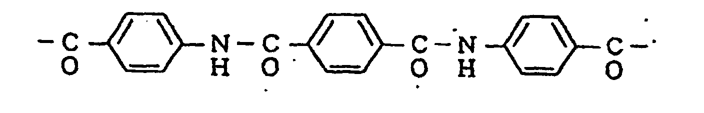 etc.
wherein m is an integer of 2-16, preferably 4-12. 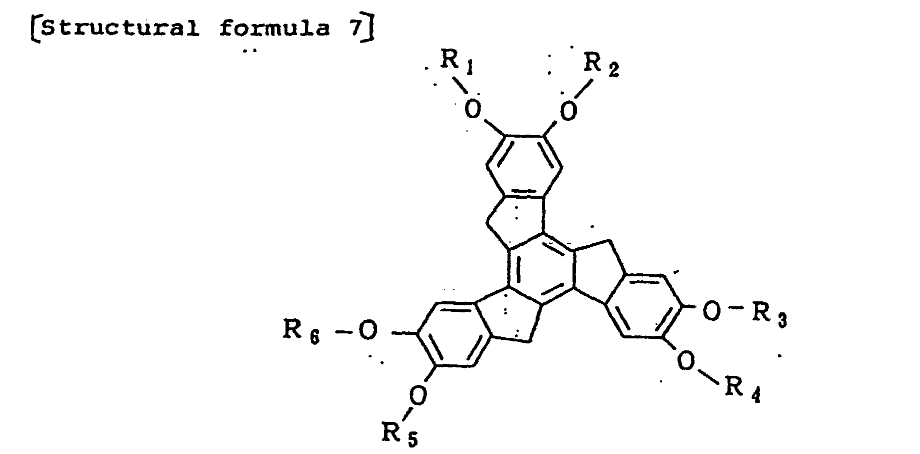 wherein R₁-R₆ are each independently a monofunctional or bifunctional substituent group selected from the following groups:

Mono functional substituent groups: 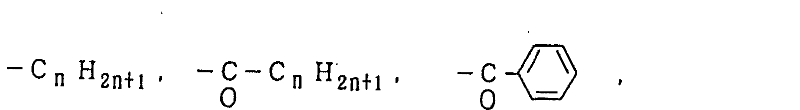 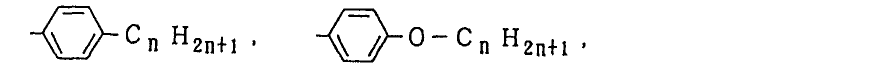 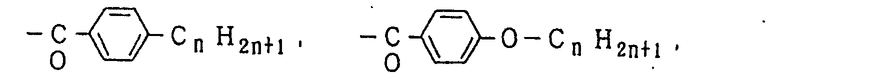 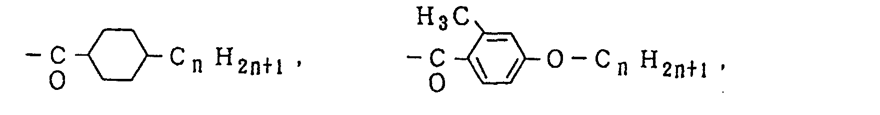 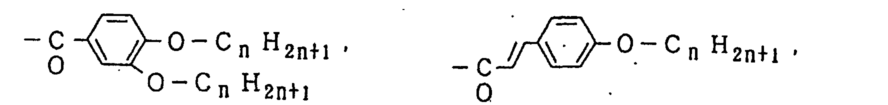 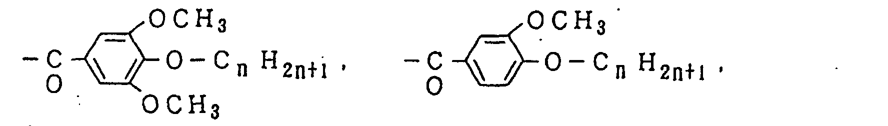 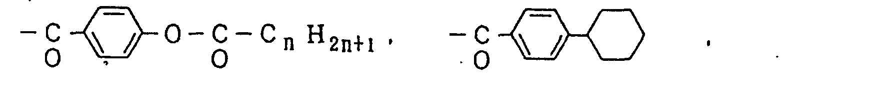 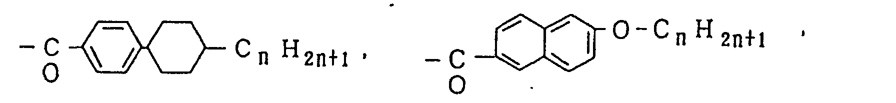 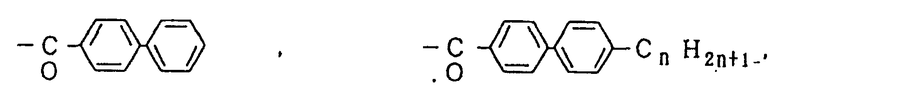 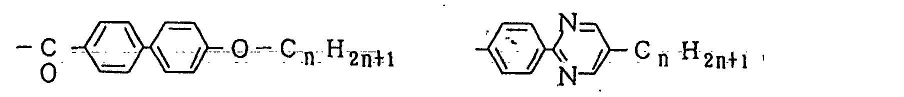 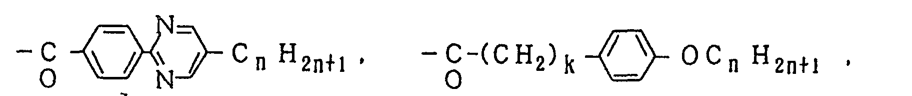 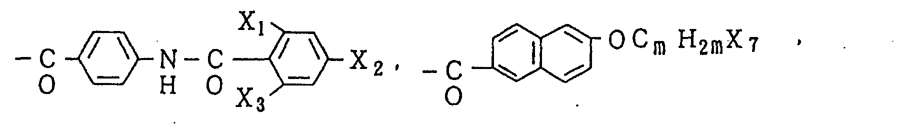 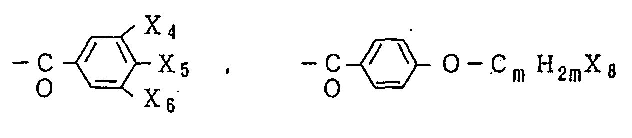 etc.
wherein CₙH₂ₙ₊₁ is a linear or branched alkyl group, n is an integer of 1-18, preferably 3-14, X₁-X₈ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10, CₘH₂ₘ is a linear or branched alkylene chain, and m is an integer of 1-16, preferably 2-10.

Bifunctional substituent groups: 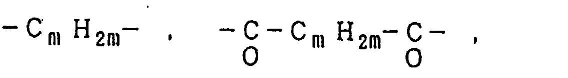 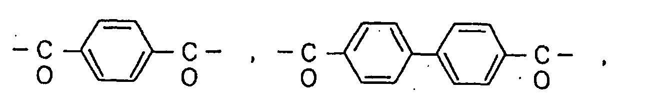 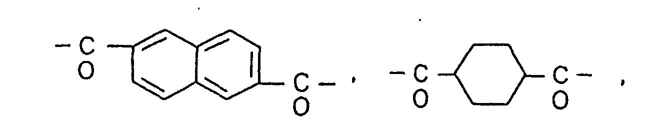 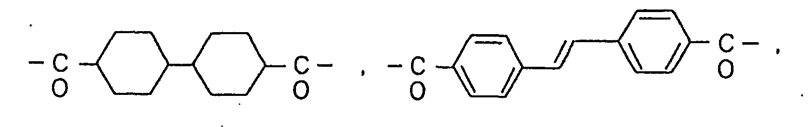 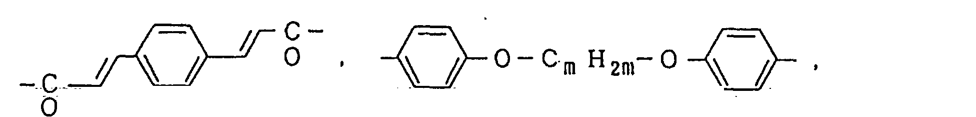 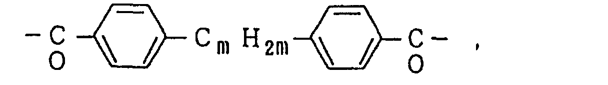 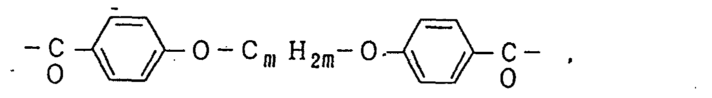 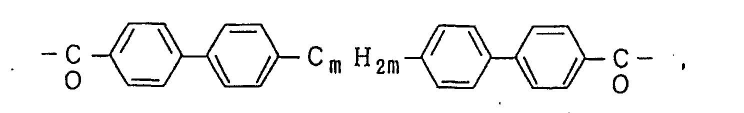 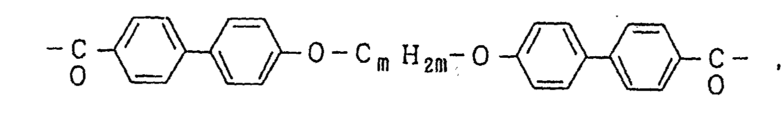 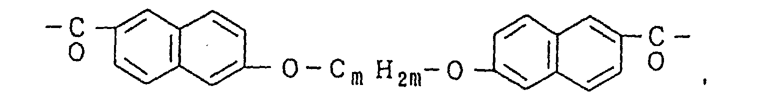 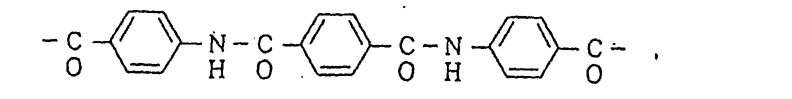 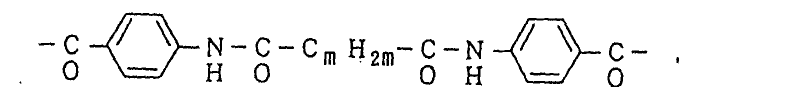 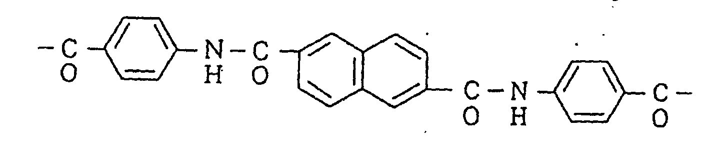 etc.
wherein CₘH₂ₘ is a linear or branched alkylene chain, and m is an integer of 2-16, preferably 4-12.

Examples of the concrete structures: 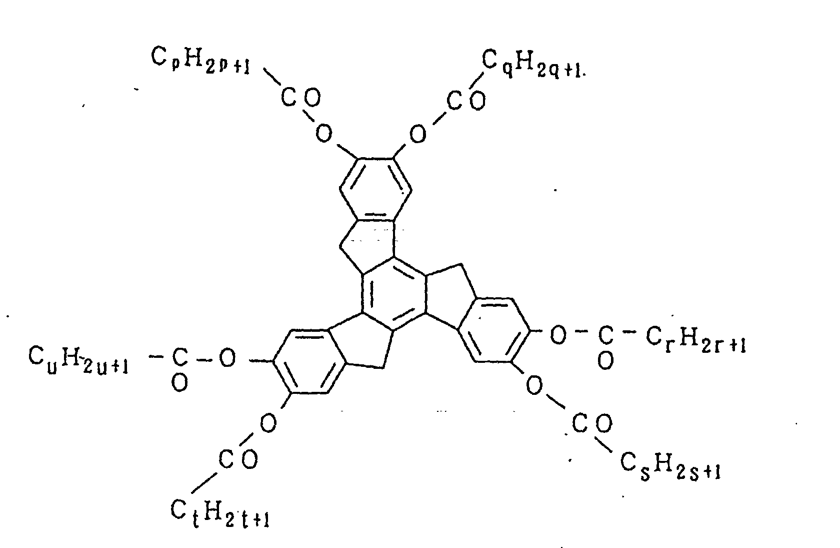 wherein p, q, r, s, t and u are each an integer of 1-18, preferably 3-14. 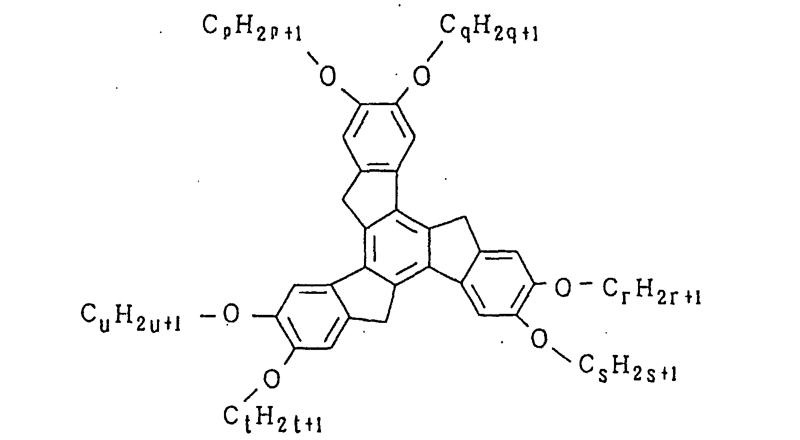 wherein p, q, r, s, t and u are each an integer of 1-18, preferably 3-14. 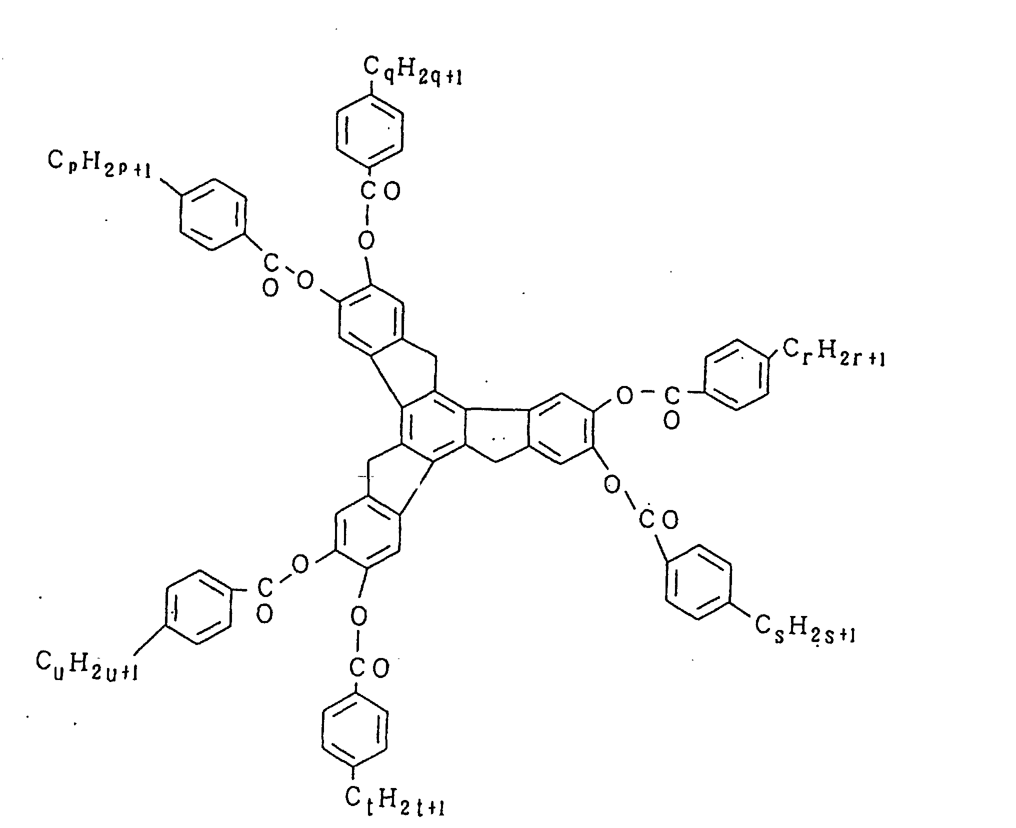 wherein p, q, r, s, t and u are each an integer of 1-18, preferably 3-14. 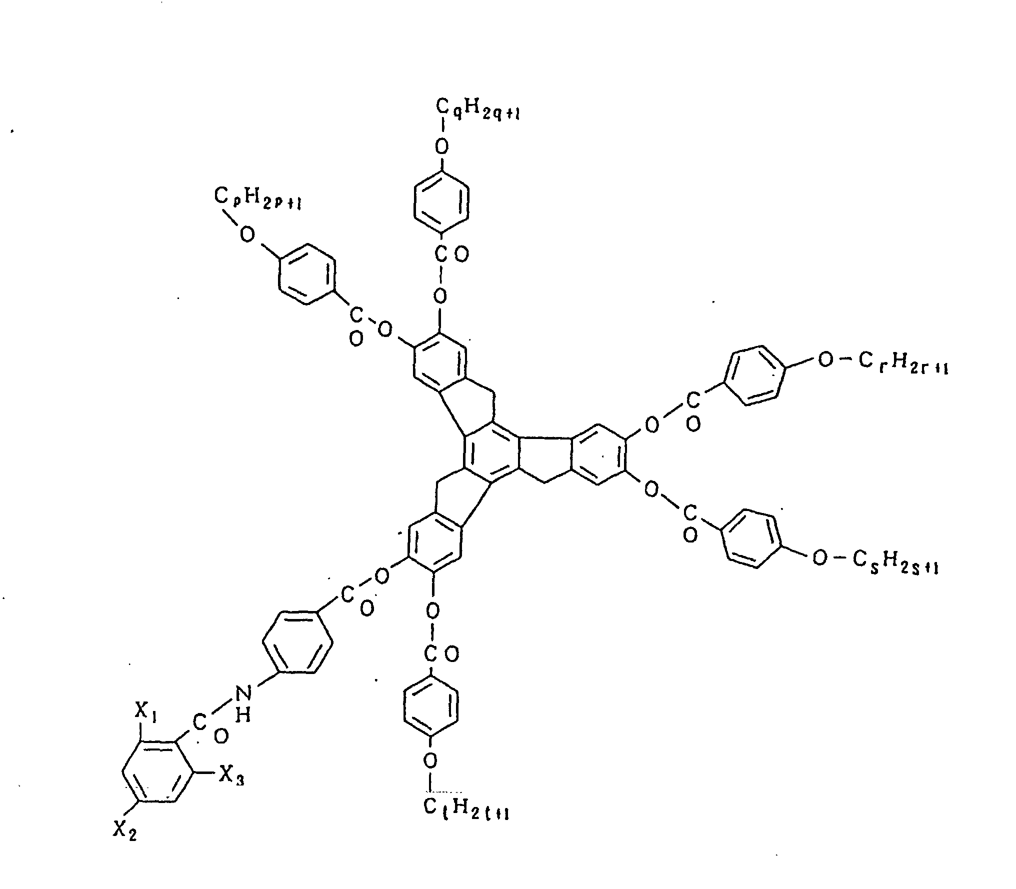 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 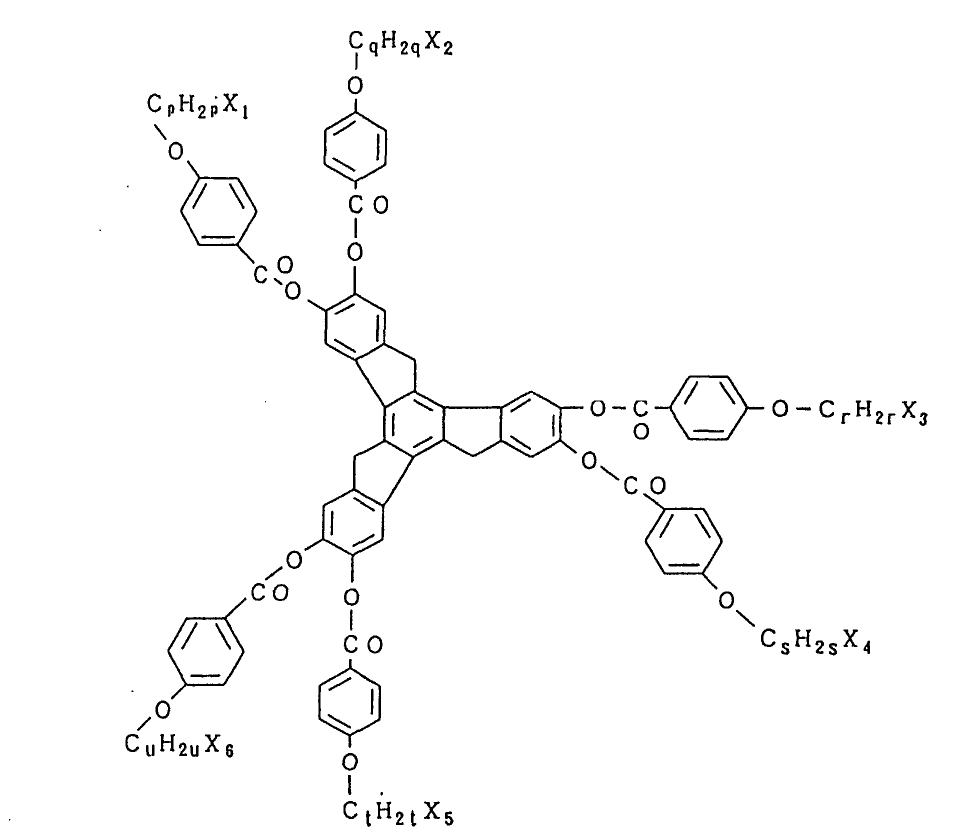 wherein p, q, r, s, t and u are each an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 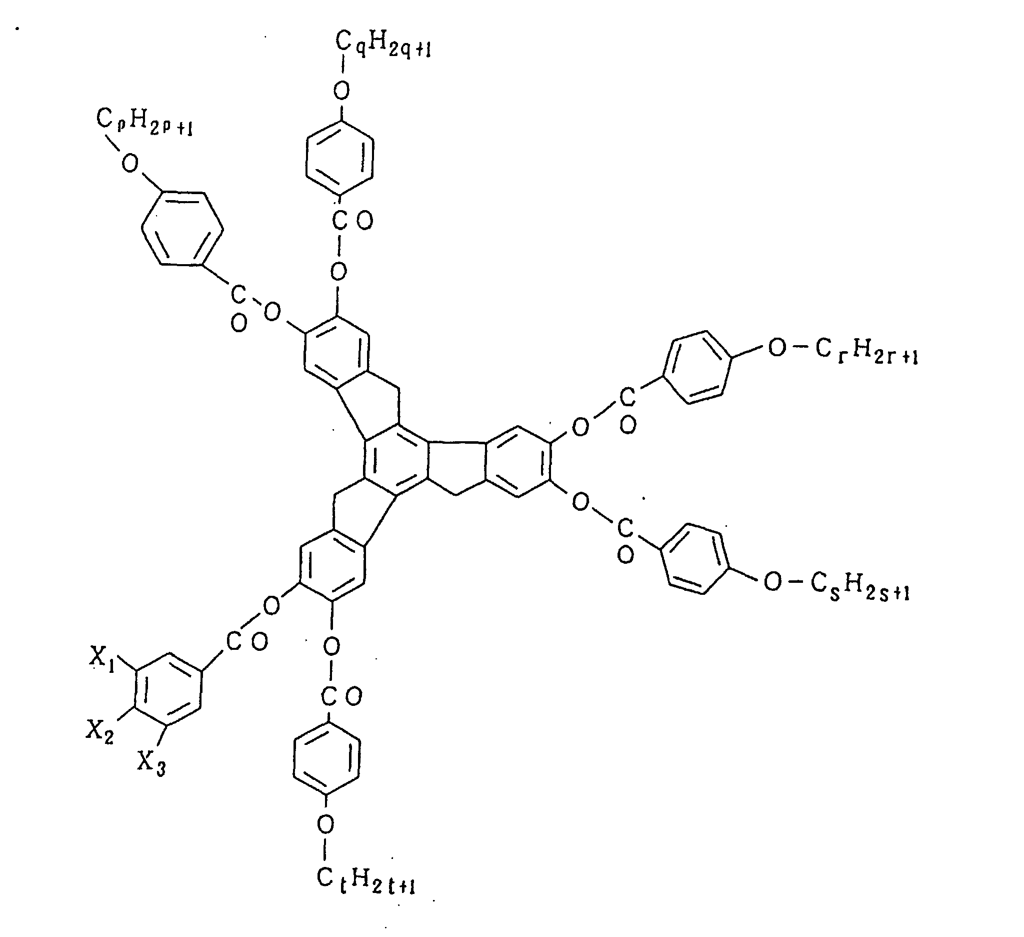 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 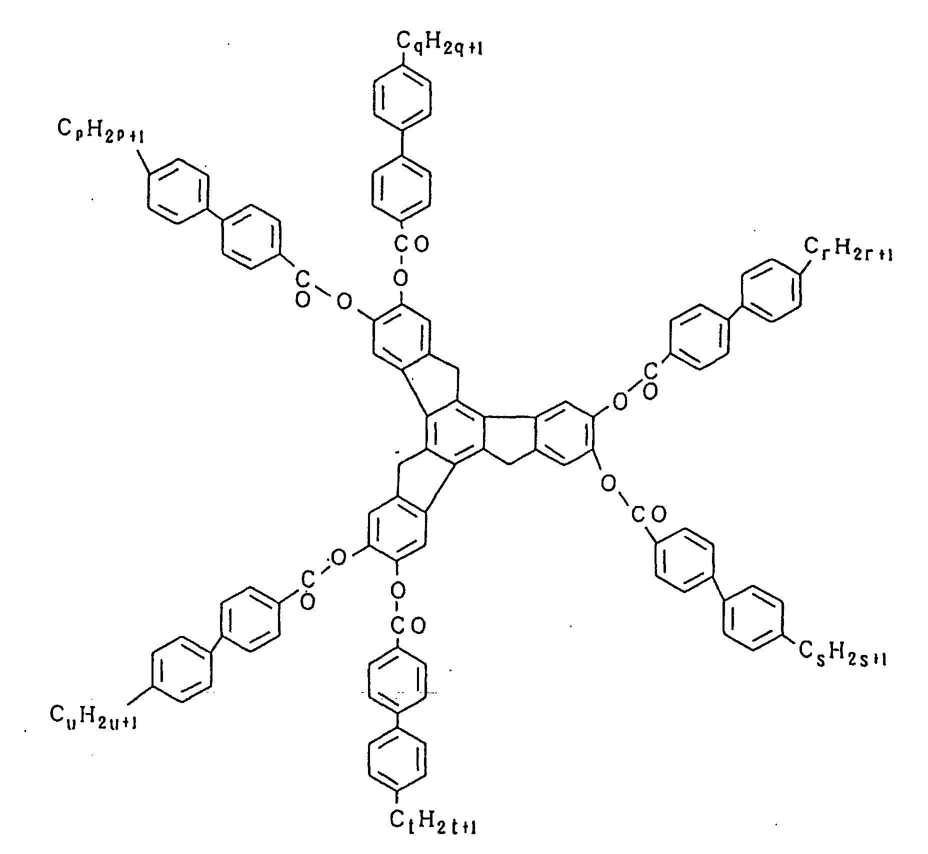 wherein p, q, r, s, t and u are each an integer of 1-18, preferably 3-14. 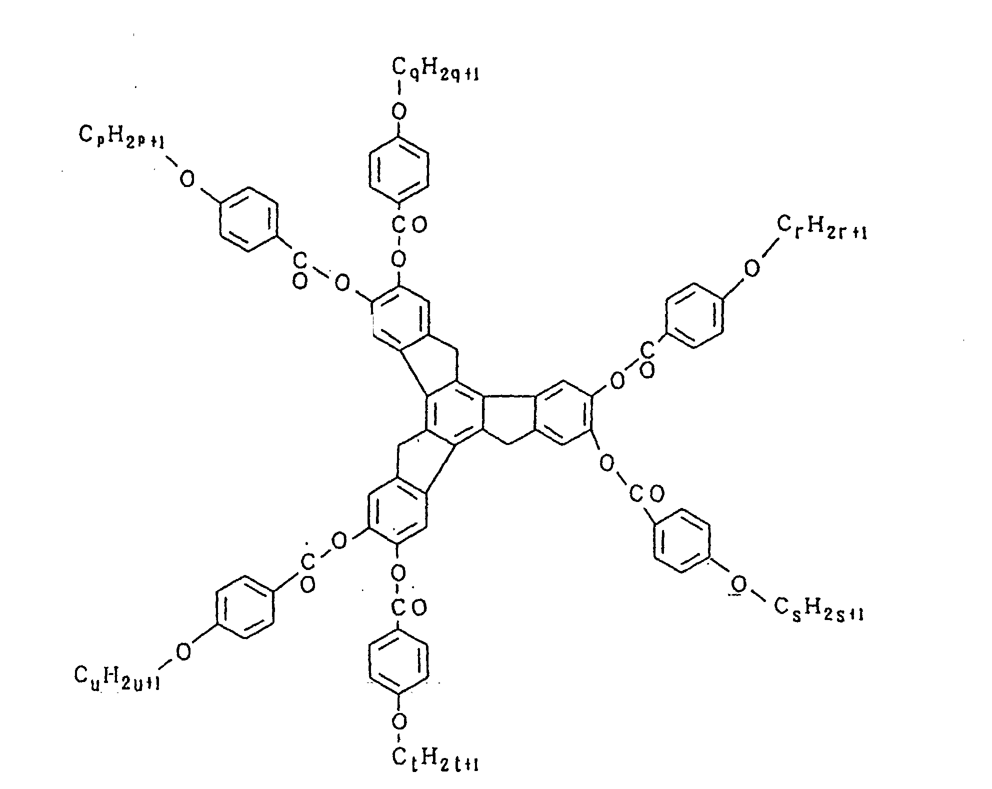 wherein p, q, r, s, t and u are each an integer of 1-18, preferably 3-14. 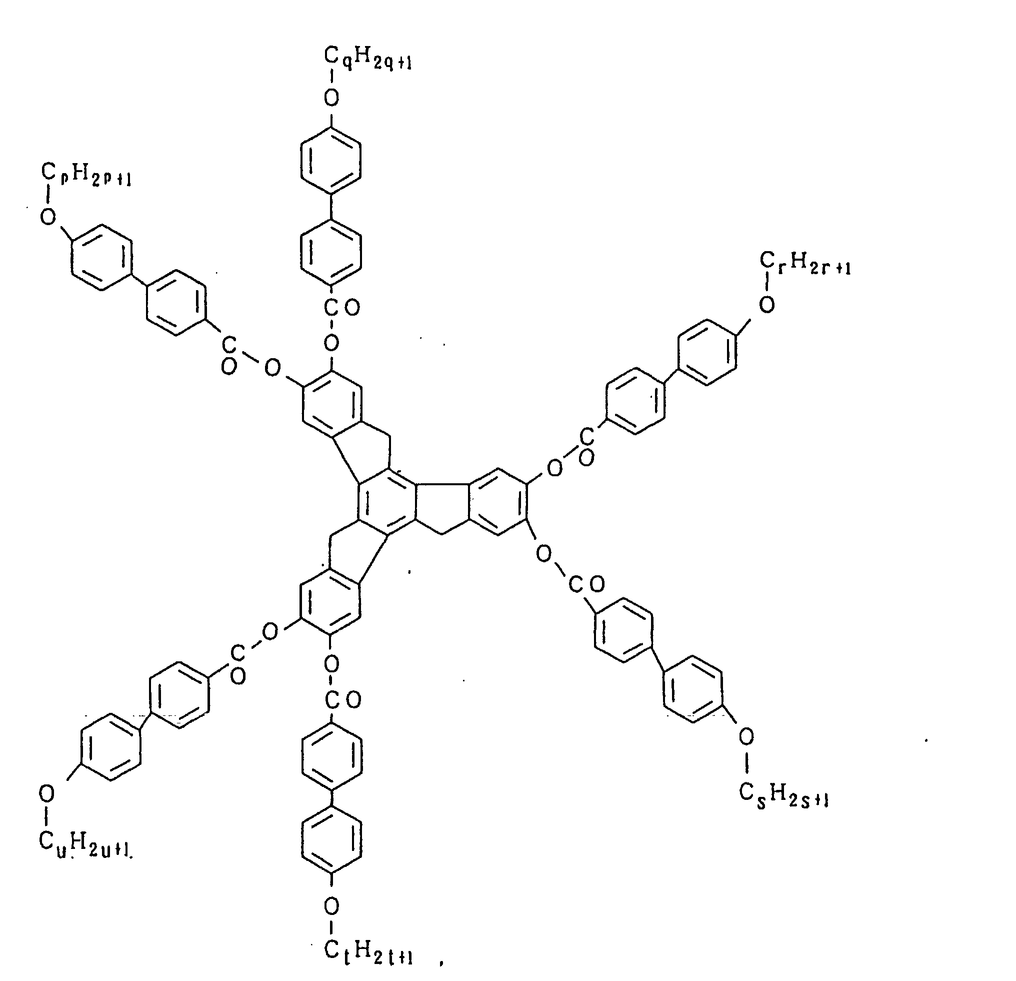 wherein p, q, r, s, t and u are each an integer of 1-18, preferably 3-14. 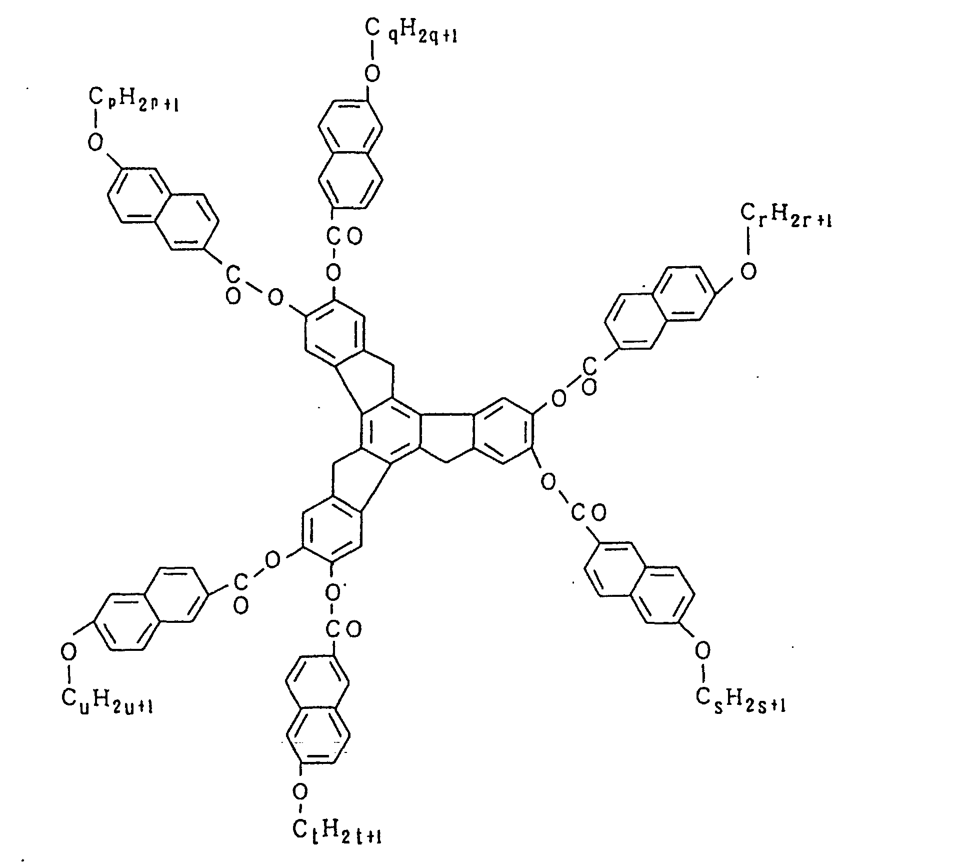 wherein p, q, r, s, t and u are each an integer of 1-18, preferably 3-14.

Composition of the following: 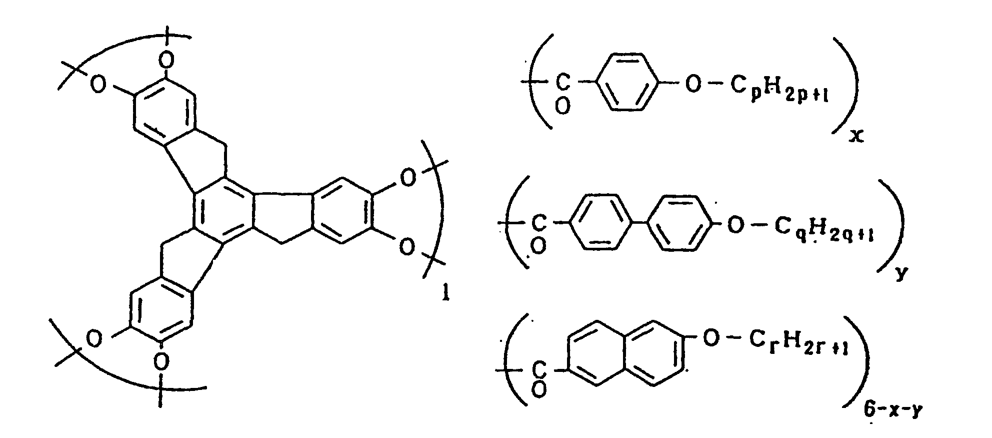 wherein 0 ≦ x ≦ 6, 0 ≦ y ≦ 6 in the molar ratio, and p, q and r are each an integer of 1-18, preferably 3-14.

Composition of the following: 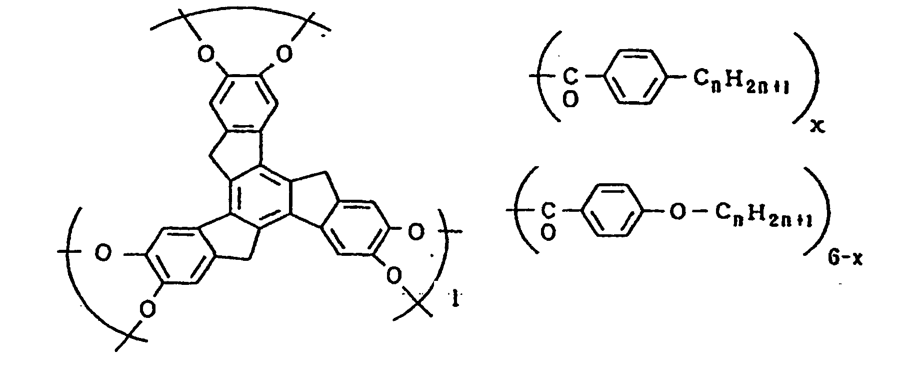 wherein 0 ≦ x ≦ 6 in the molar ratio, and n is an integer of 1-18, preferably 3-14.

Composition of the following: 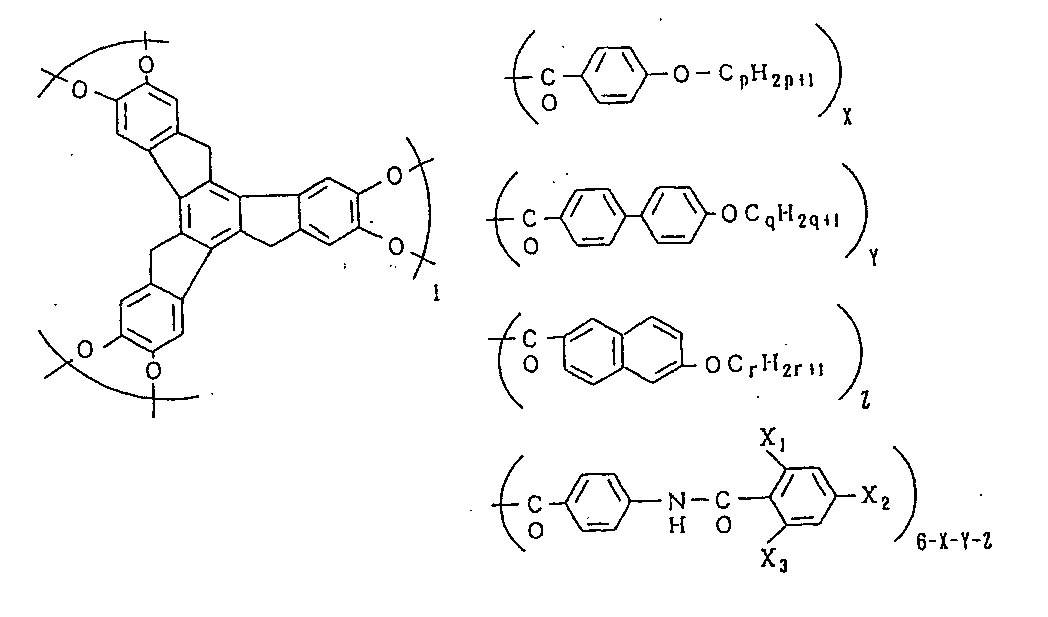 wherein 0 ≦ x ≦ 6, 0 ≦ y ≦ 6, 0 ≦ z ≦ 6 in the molar ratio, and p, q and r are each an integer of 1-18, preferably 3-14, X₁-X₃ are each independently H-, F-, Cl-, Br-, C_{ℓ}H_{2ℓ+1}, C_{ℓ}H_{2ℓ+1}Q-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 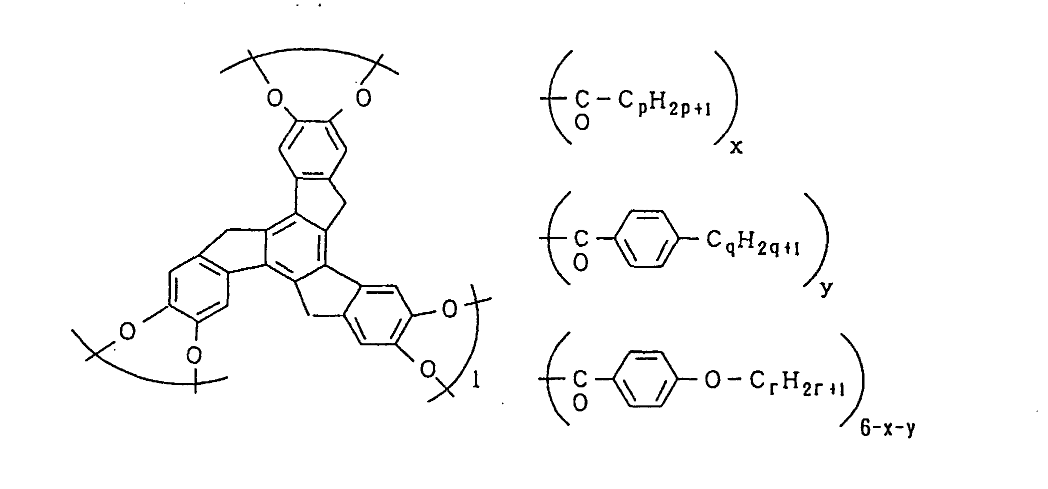 wherein 0 ≦ x ≦ 6, 0 ≦ y ≦ 6 in the molar ratio, and p, q and r are each an integer of 1-18, preferably 3-14.

Composition of the following: 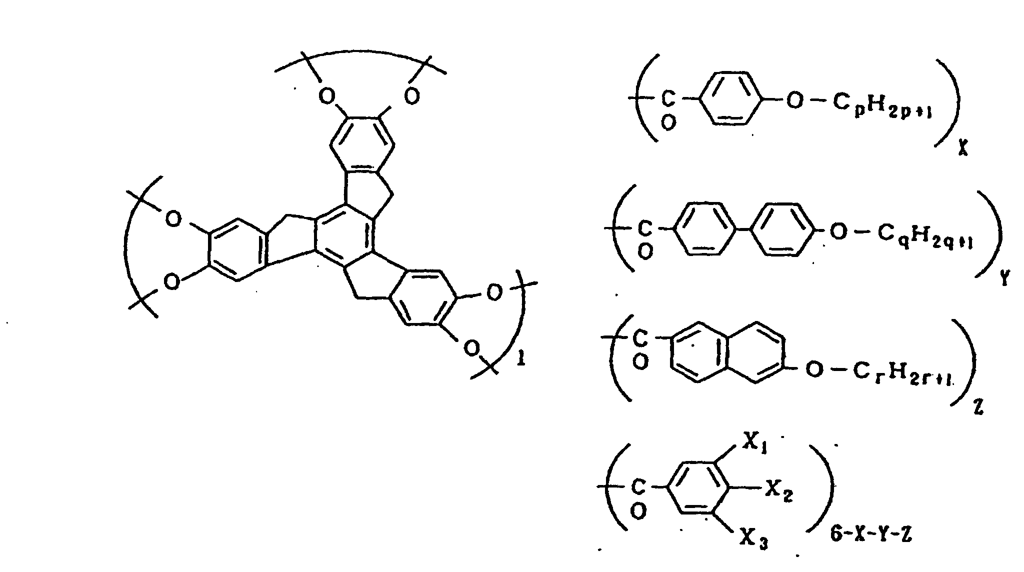 wherein 0 ≦ x ≦ 6, 0 ≦ y ≦ 6, 0 ≦ z ≦ 6 in the molar ratio, and p, q and r are each an integer of 1-18, preferably 3-14, X₁-X₃ are each independently, H-, F-, Cl-, Br-, C_{ℓ}H_{2ℓ+1}; C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 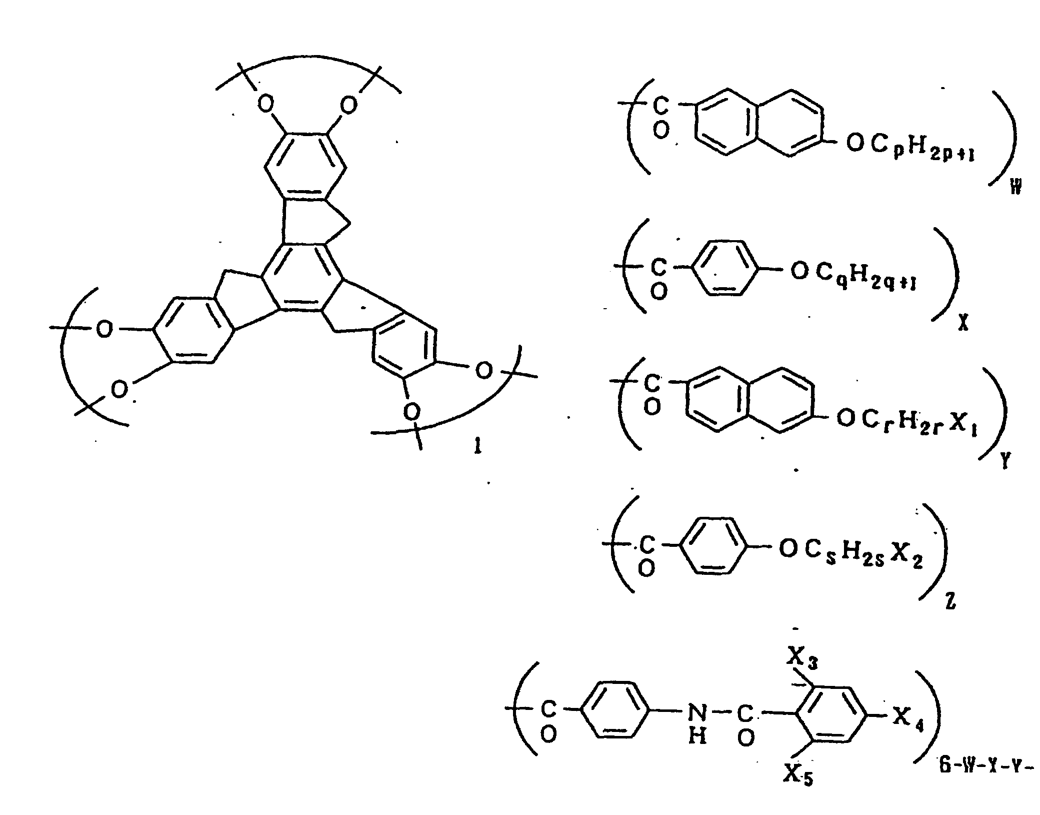 wherein 0 ≦ w ≦ 6, 0 ≦ x ≦ 6, 0 ≦ y ≦ 6, 0 ≦ z ≦ 6 in the molar ratio, p, q, r and s are each an integer of 1-18, preferably 3-14, X₁-X₅ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 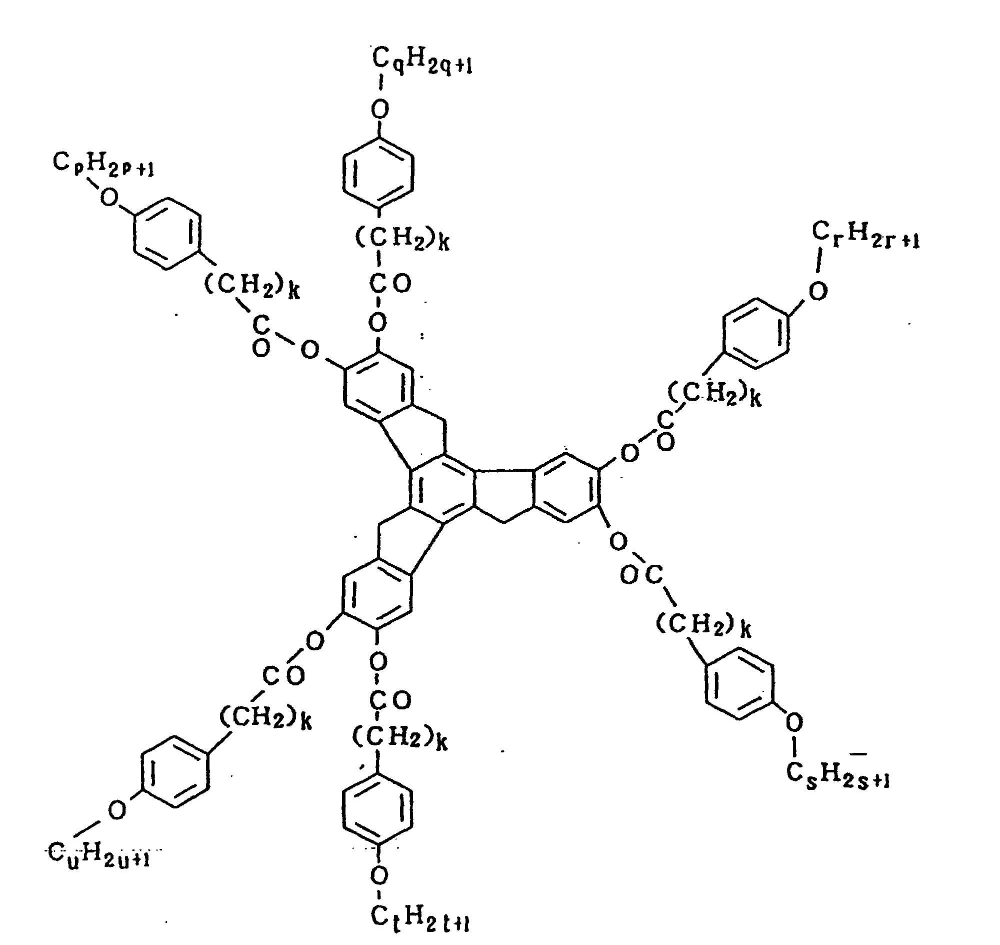 wherein p, q, r, s, t, and u are each an integer of 3-18, preferably 5-14, k is 1, 2 or 3. 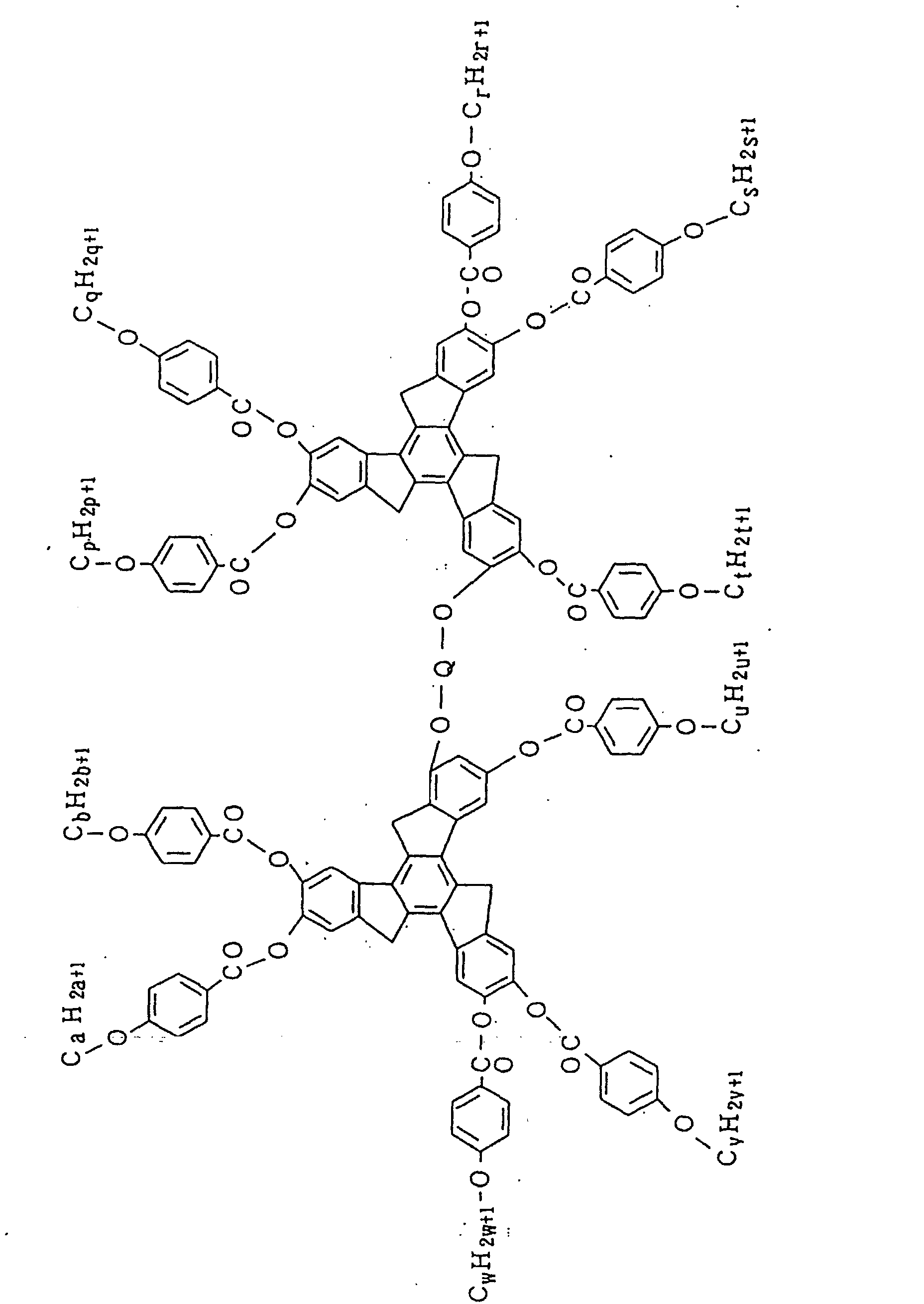 wherein p, q, r, s, t, u, v, w, a and b are each an integer of 1-18, preferably 3-14.

Q is the following: 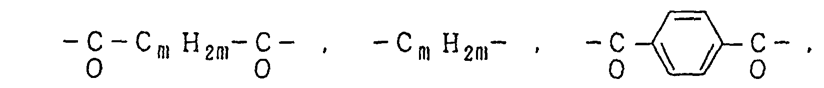 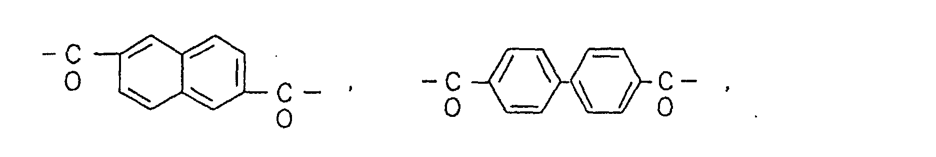 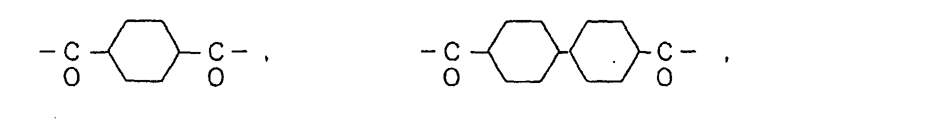 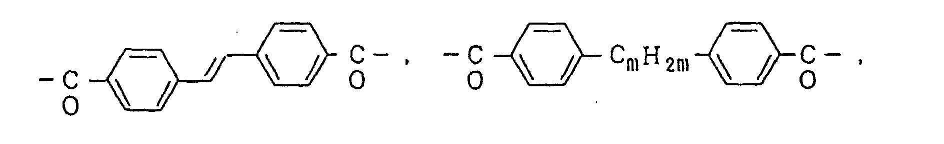 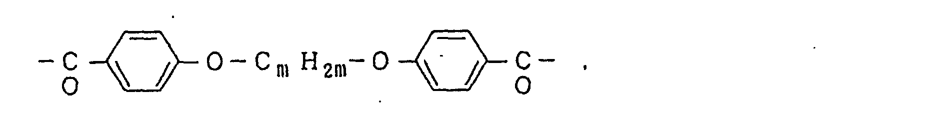 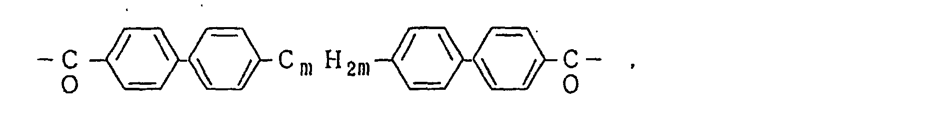 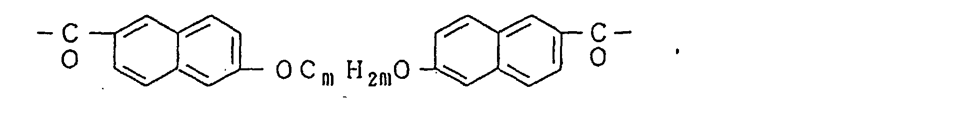 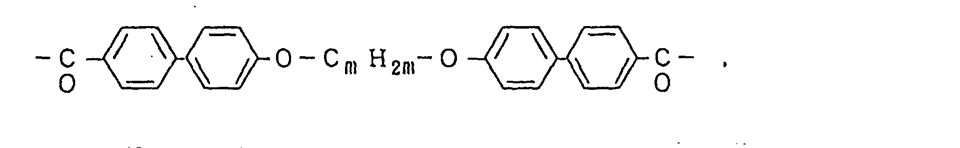 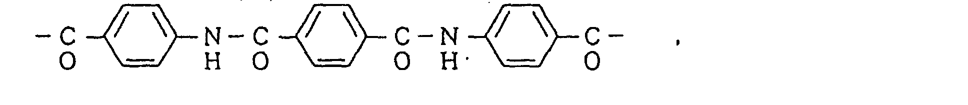 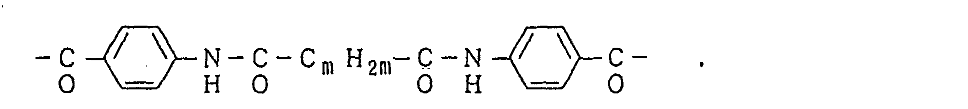 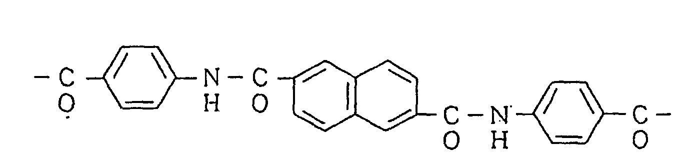 etc.
wherein m is an integer of 2-16.

Preferable Q: 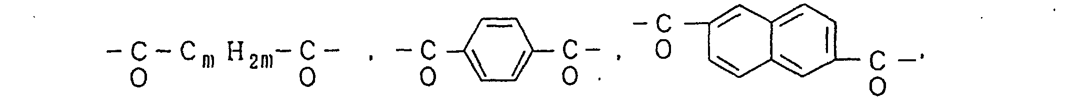 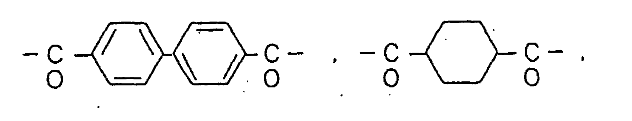 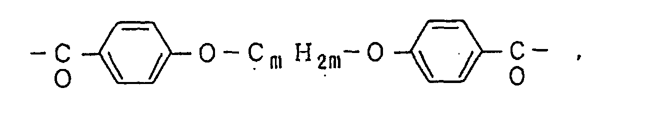 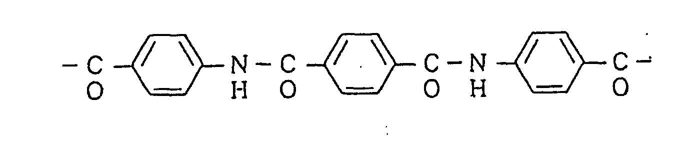 etc.
wherein m is an integer of 2-16, preferably 4-12. 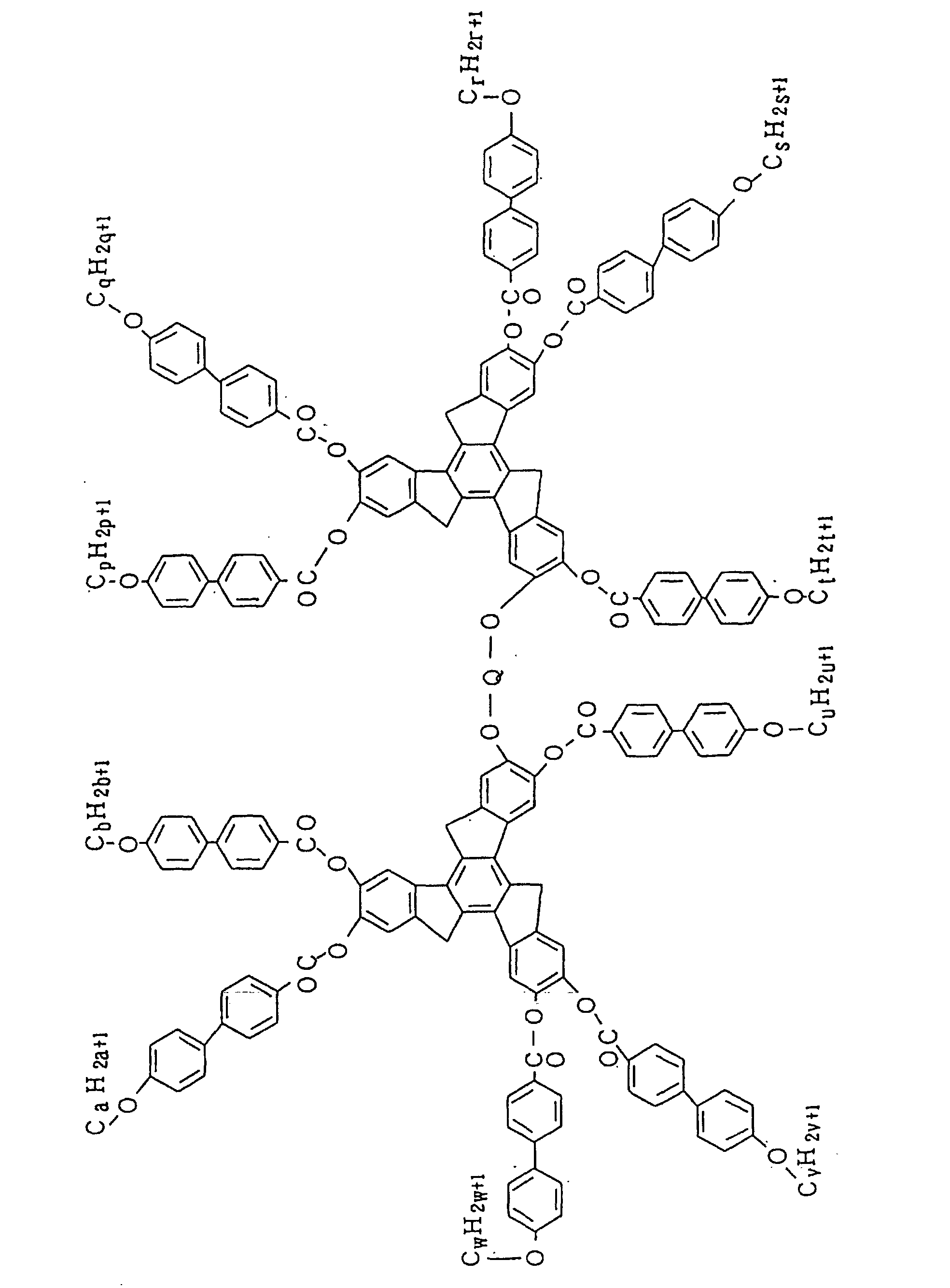 wherein p, q, r, s, t, u, v, w, a and b are each an integer of 1-18, preferably 3-14.

Q is the following: 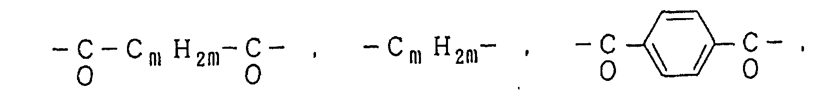 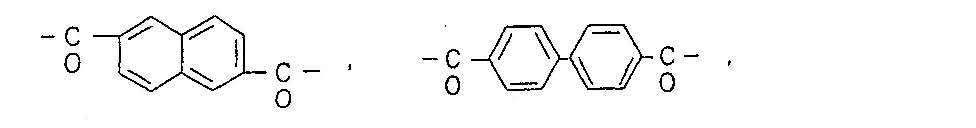 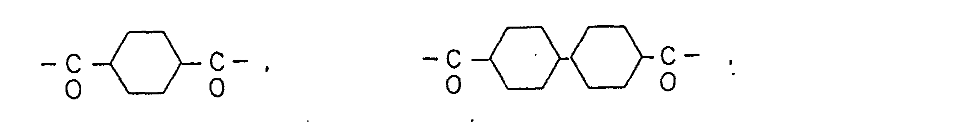 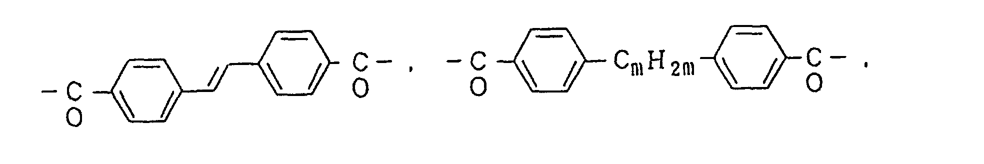 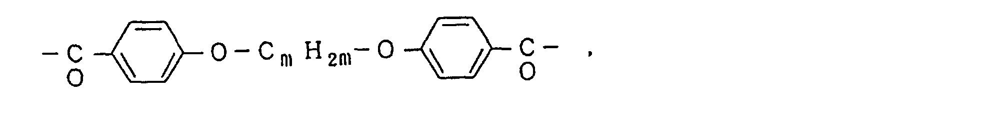 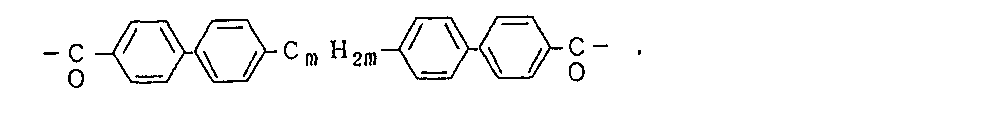 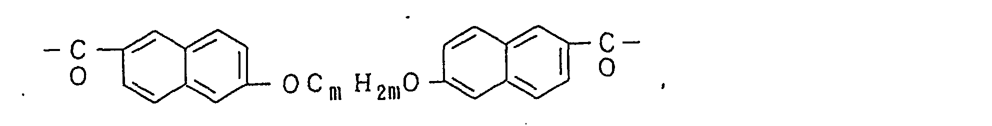 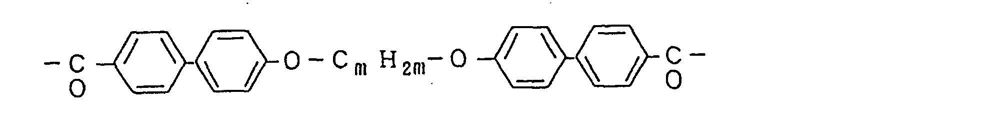 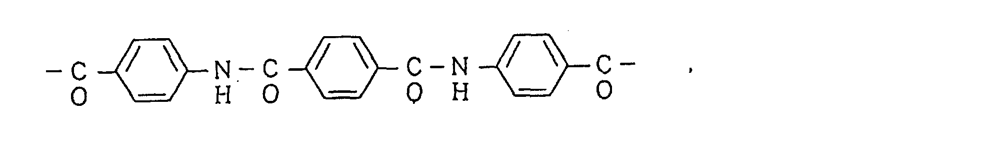 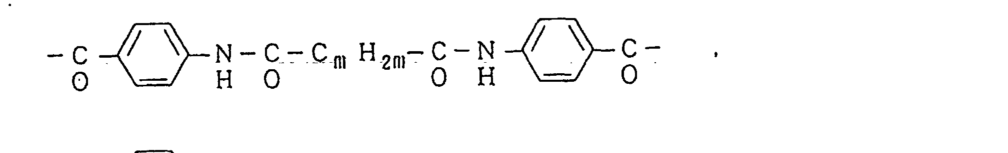 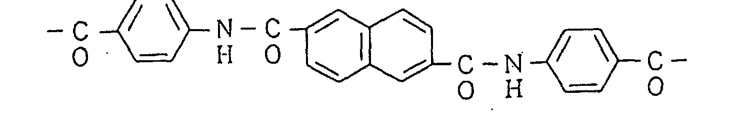 etc.
wherein m is an integer of 2-16.

Preferable Q: 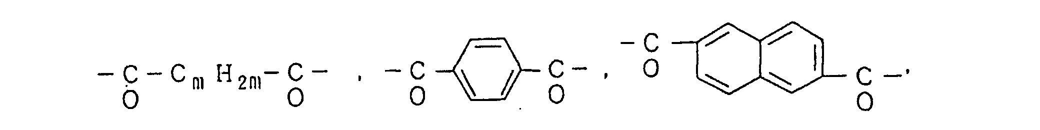 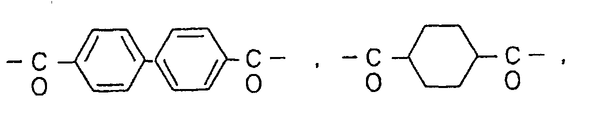 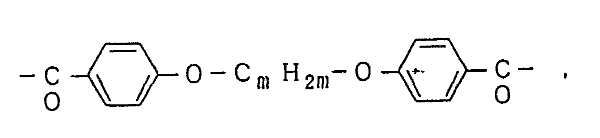 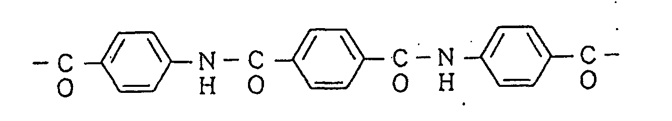 etc.
wherein m is an integer of 2-16, preferably 4-12. 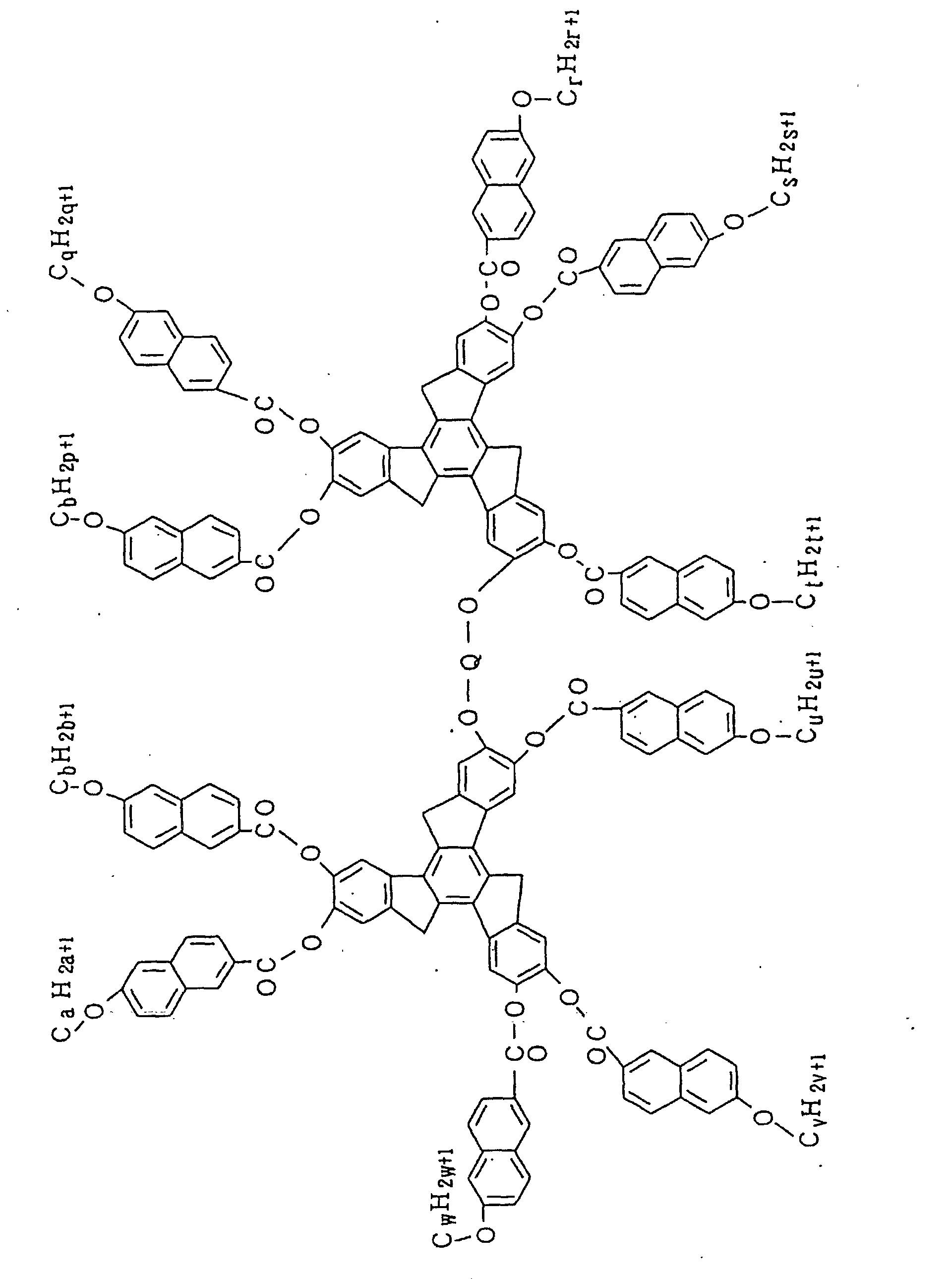 wherein p, q, r, s, t, u, v, w, a and b are each an integer of 1-18, preferably 3-14.

Q is the following: 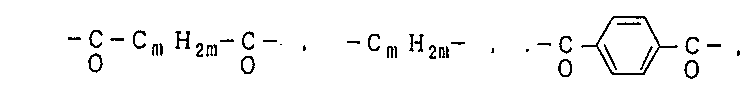 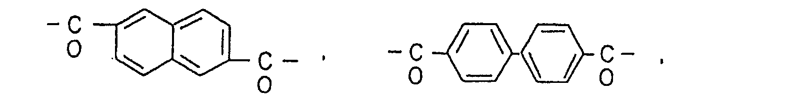 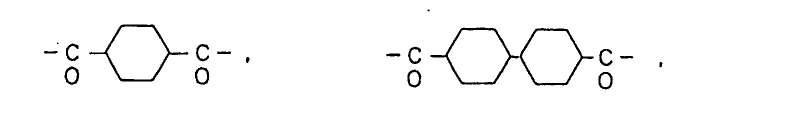 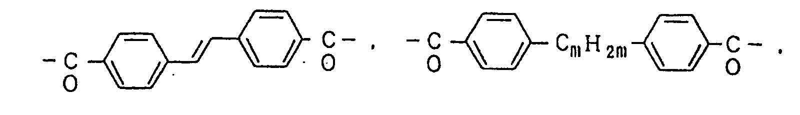 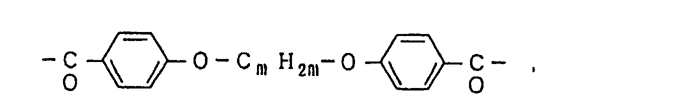 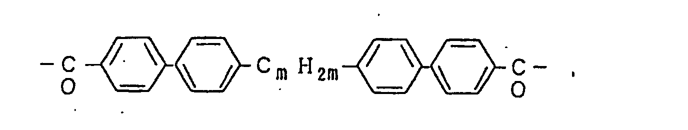 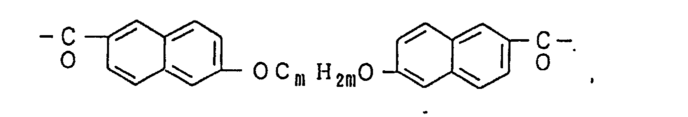 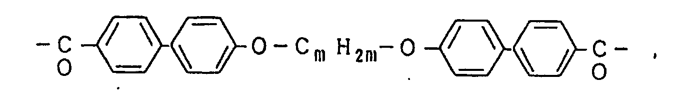 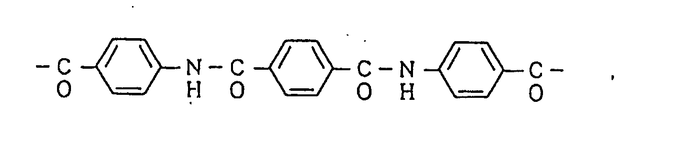 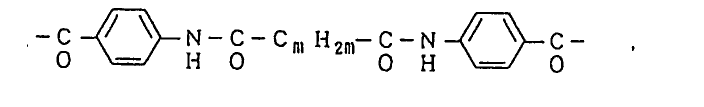 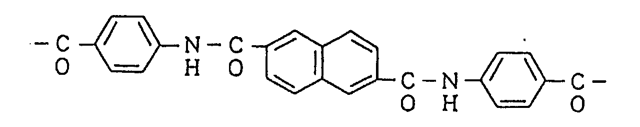 etc.
wherein m is an integer of 2-16.

Preferable Q: 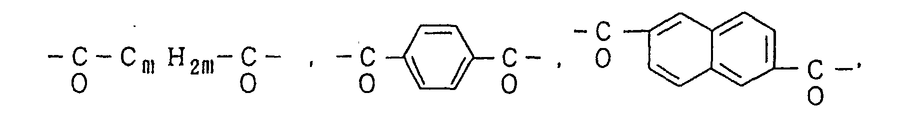 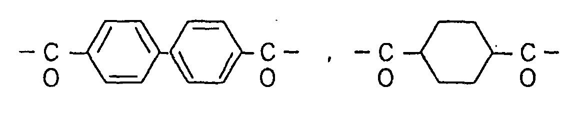 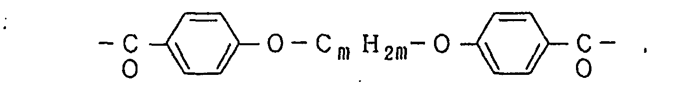 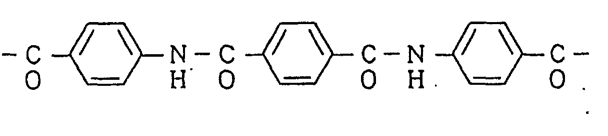 etc.
wherein m is an integer of 2-16, preferably 4-12. 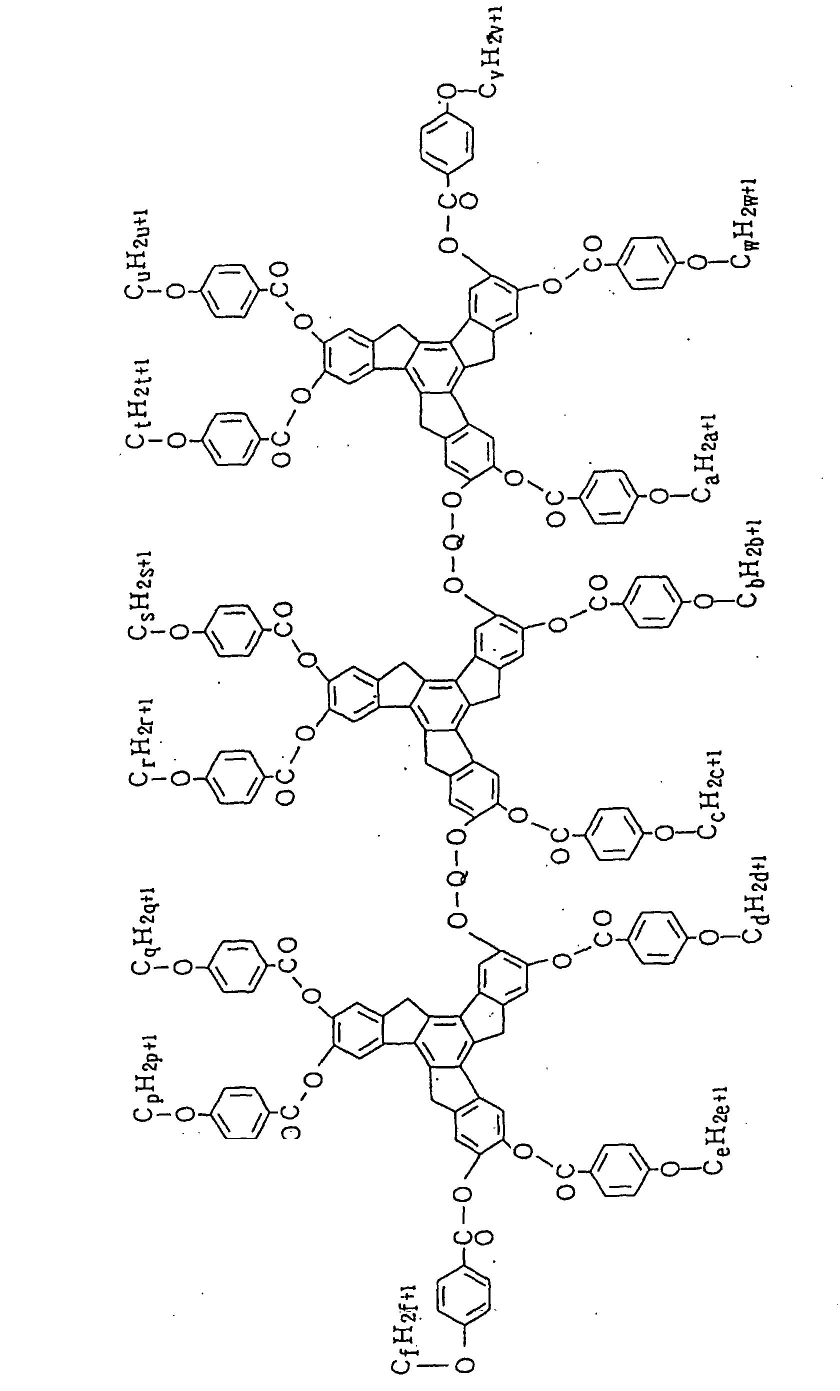 wherein p, q, r, s, t, u, v, w, a, b, c, d, e and f are each an integer of 1-18, preferably 3-14.

Q is the following: 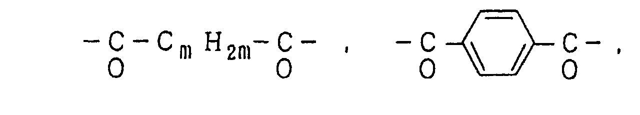 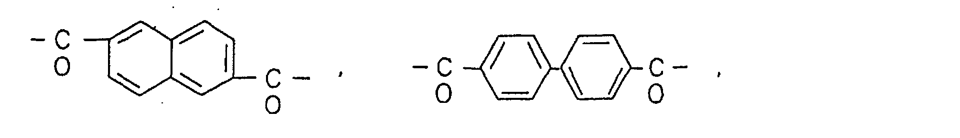 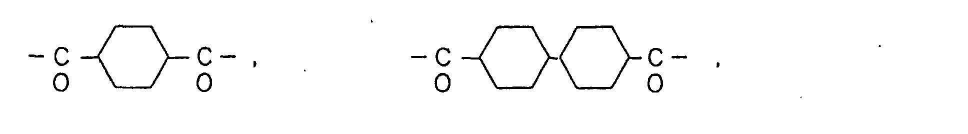 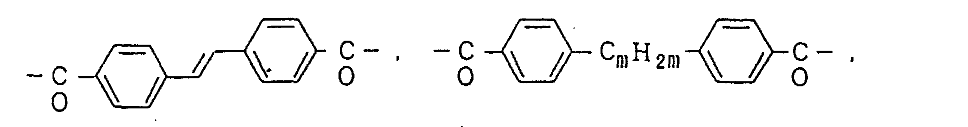 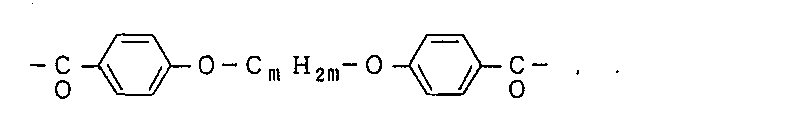 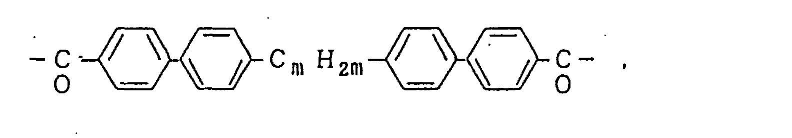 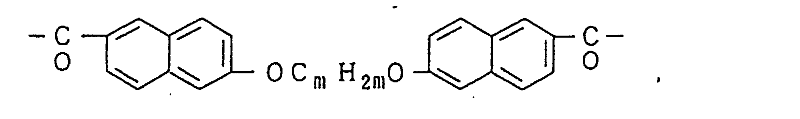 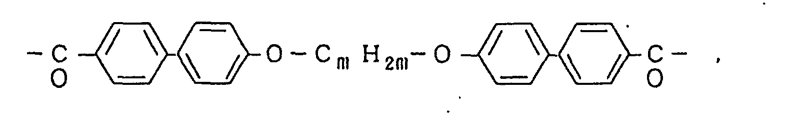 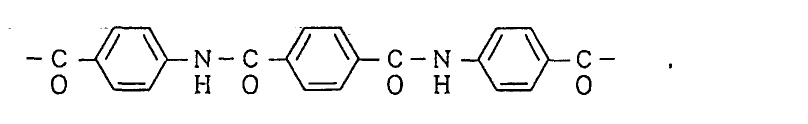 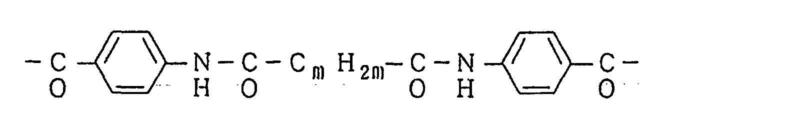 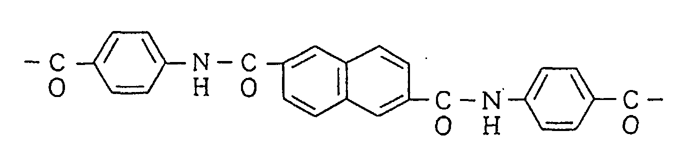 etc.
wherein m is an integer of 2-16.

Preferable Q: 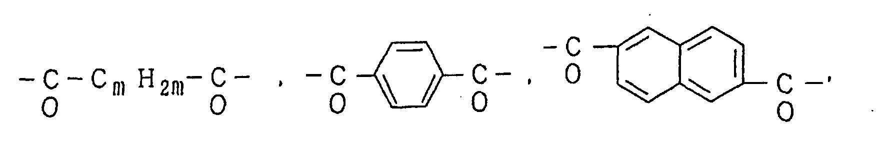 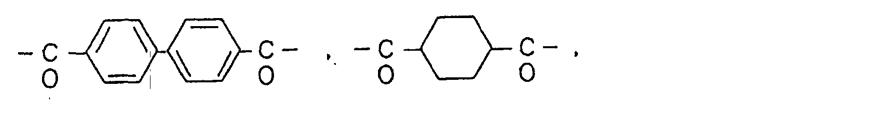 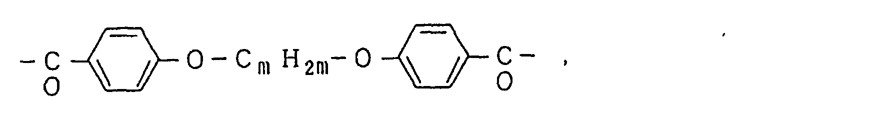 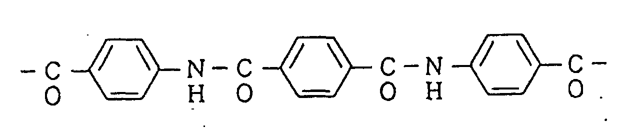 etc.
wherein m is an integer of 2-16, preferably 4-12.

Polymer represented by the following : 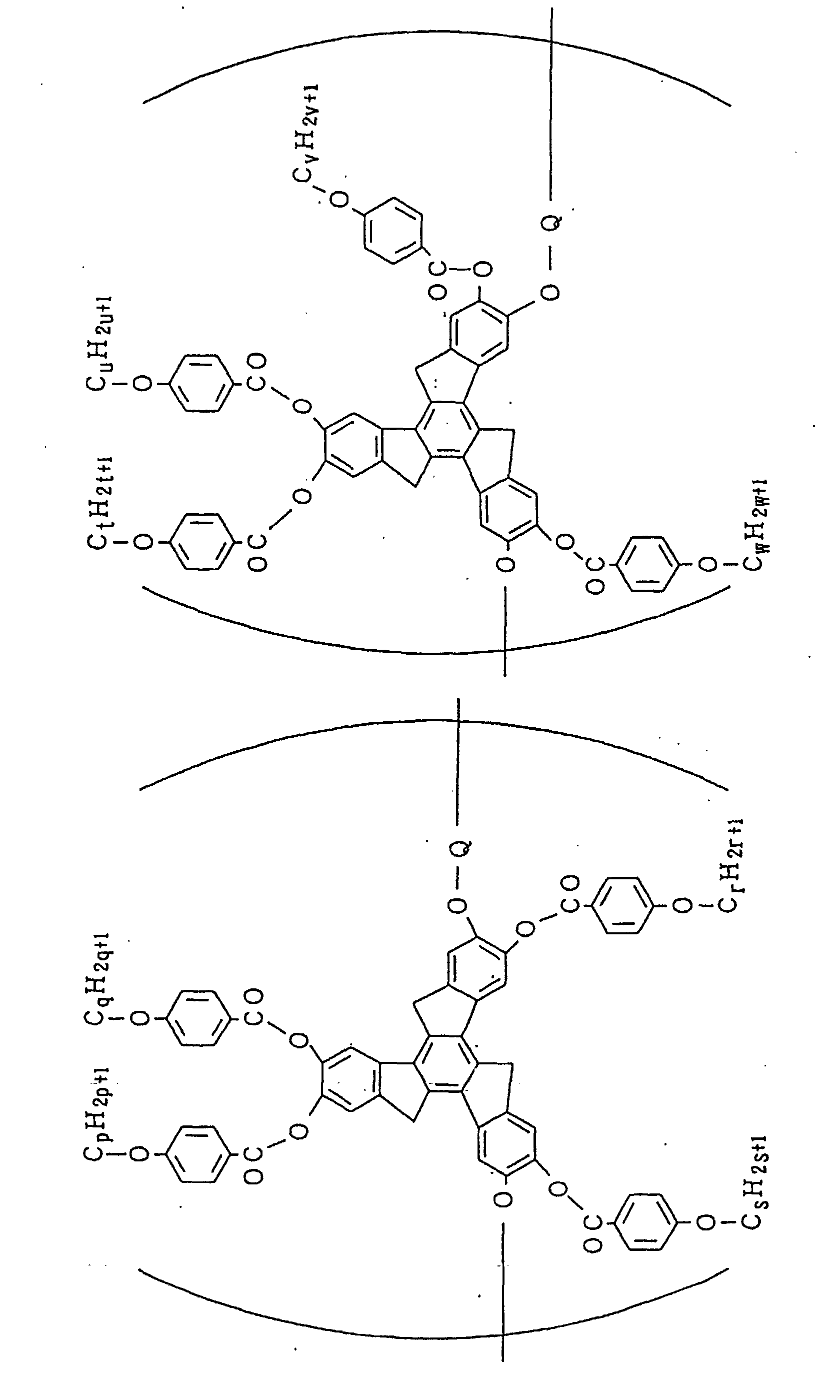 wherein p, q, r, s, t, u, v and w are each an integer of 1-18, preferably 3-14, and the average molecular weight is 5,000 - 100,000.

Q is the following: 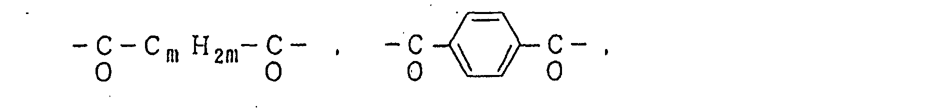 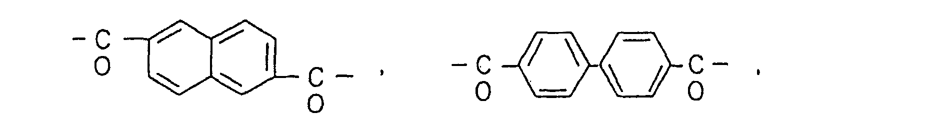 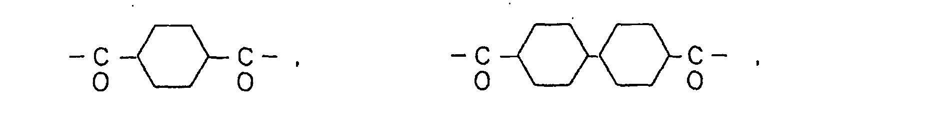 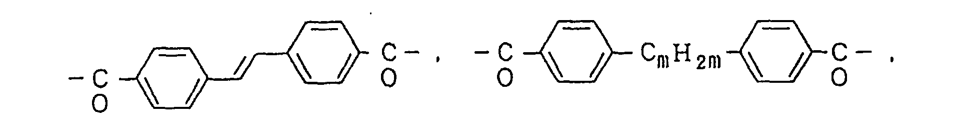 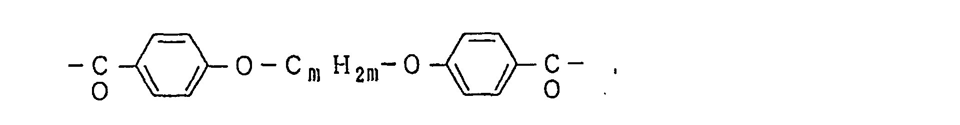 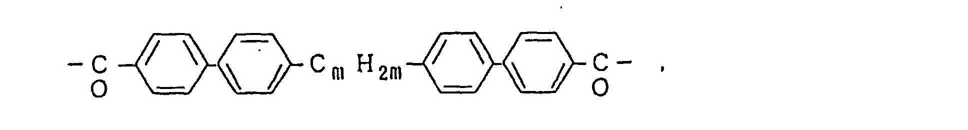 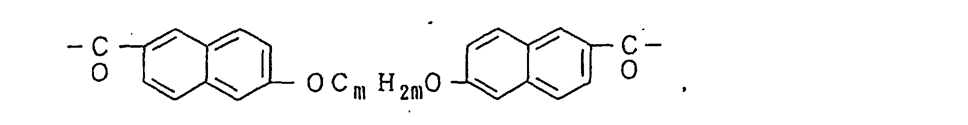 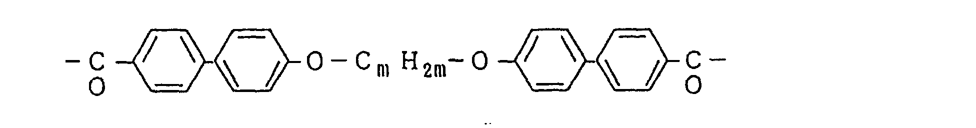 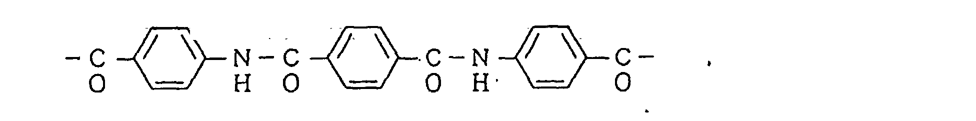 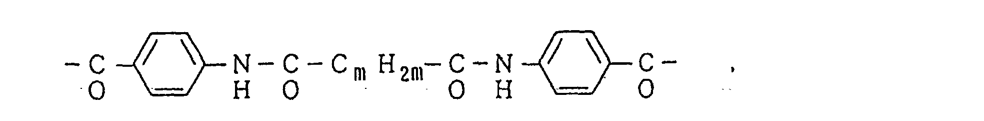 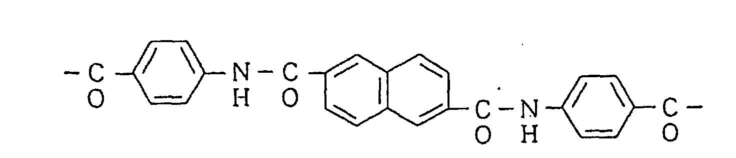 etc.
wherein m is an inteqer of 2-16.

Preferable Q: 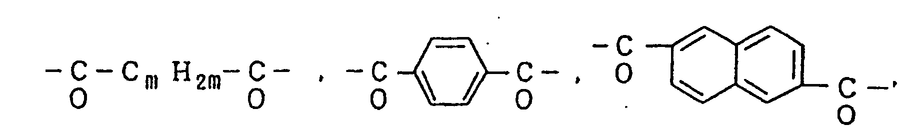 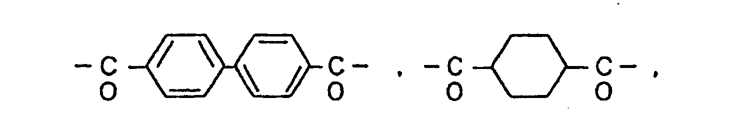 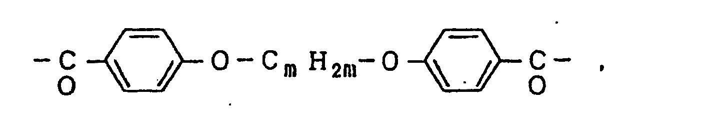 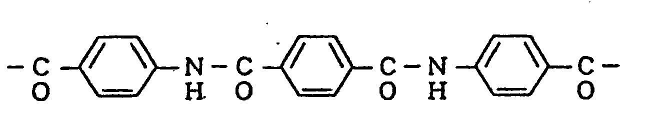 etc.
wherein m is an integer of 2-16, preferably 4-12. 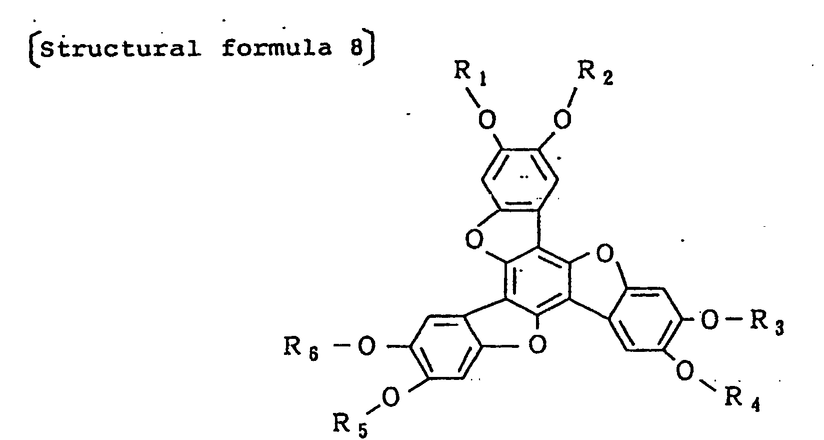 wherein R₁-R₆ are each independently a monofunctional or bifunctional substituent group selected from the following groups:

Mono functional substituent groups: 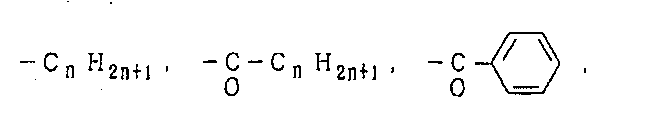 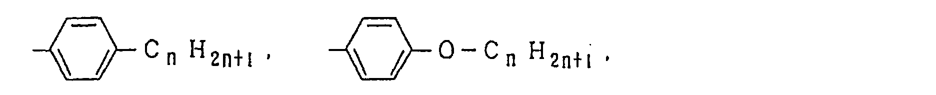 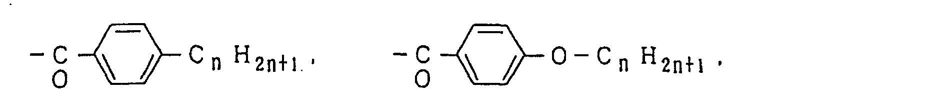 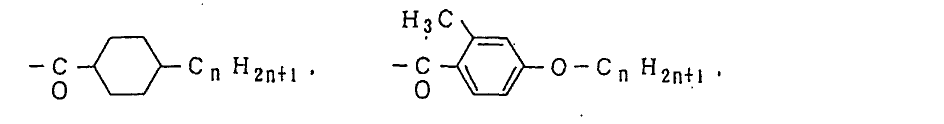 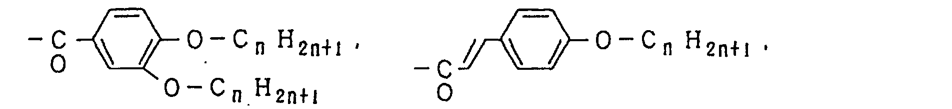 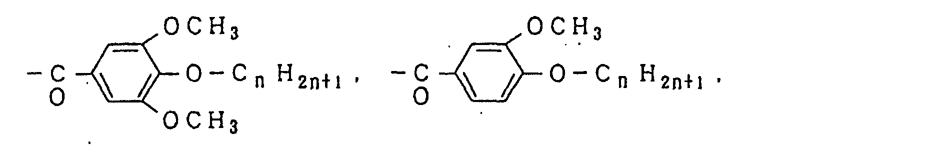 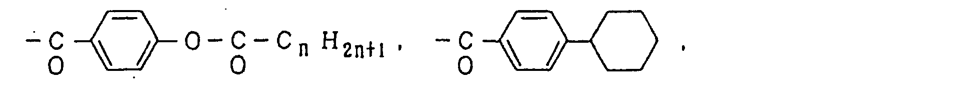 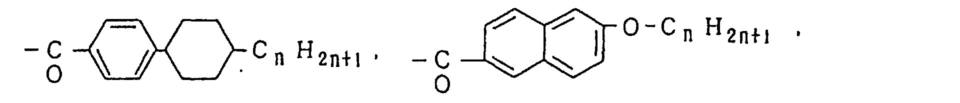 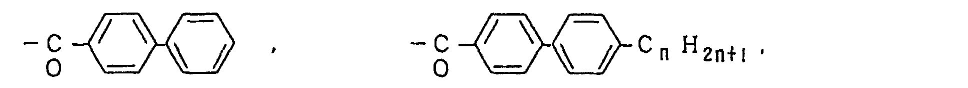 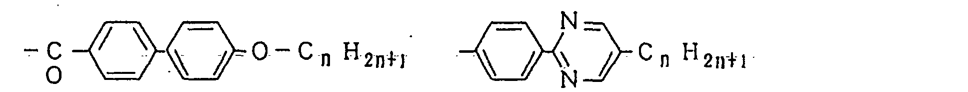 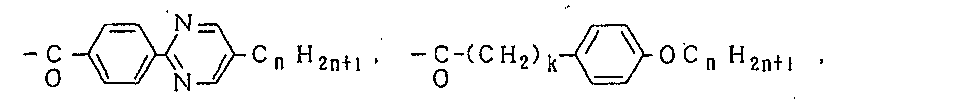 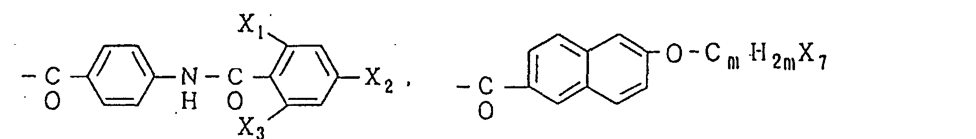 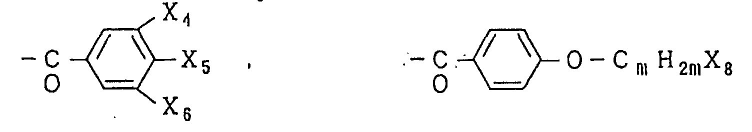 etc.
wherein CₙH₂ₙ₊₁ is a linear or branched alkyl group, n is an integer of 1-18, preferably 3-14, X₁-X₈ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, ℓ is an integer of 1-18, preferably 1-10, CₘH₂ₘ is a linear or branched alkylene chain, and m is an integer of 1-18, preferably 2-10.

Bifunctional substituent groups: 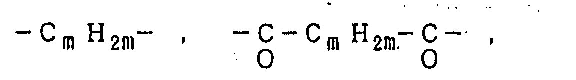 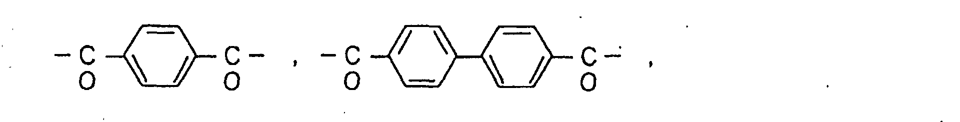 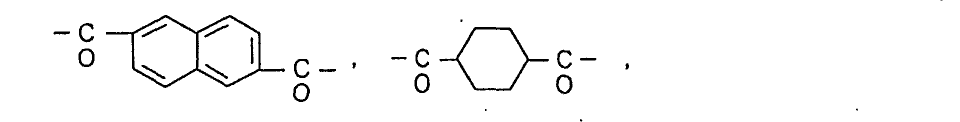 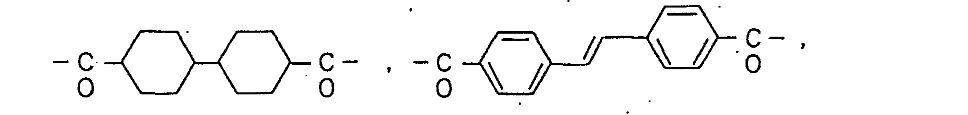 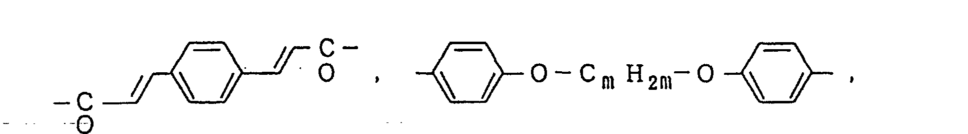 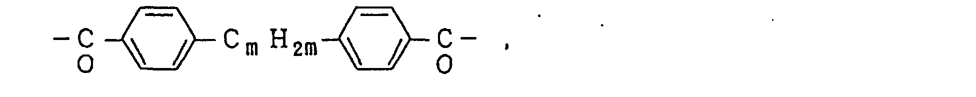 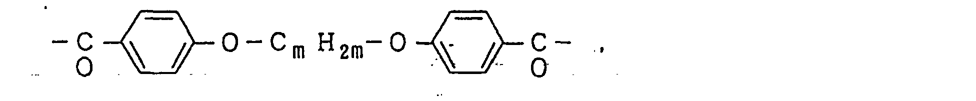 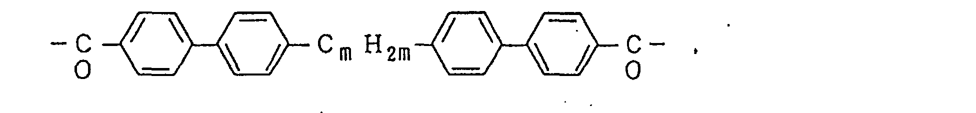 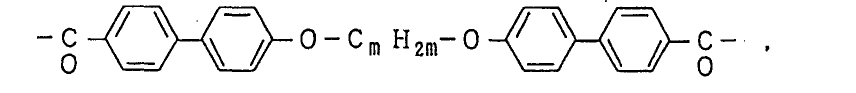 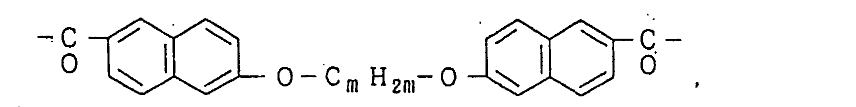 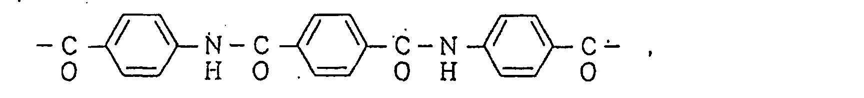 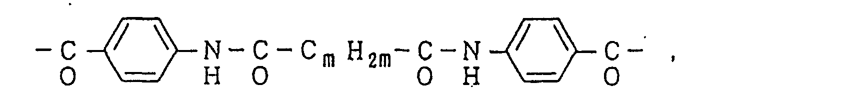 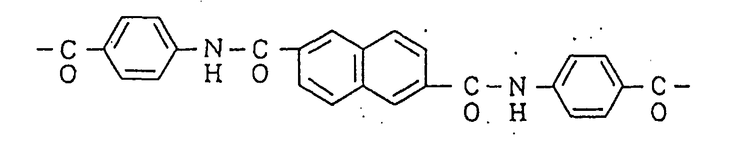 etc.
wherein CₘH₂ₘ is a linear or branched alkylene chain, and m is an integer of 2-16, preferably 4-12.

Examples of the concrete structures: 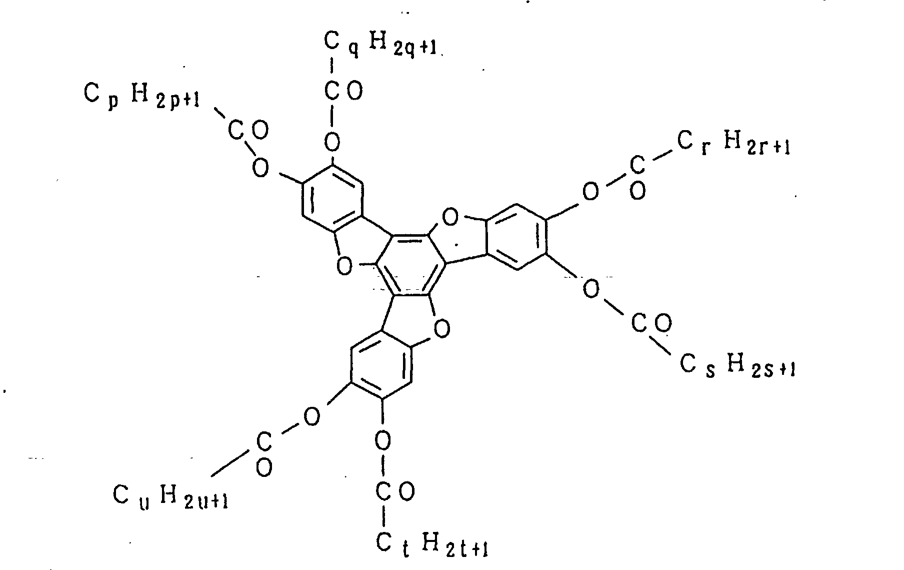 wherein p, q, r, s, t and u are each an integer of 1-18, preferably 3-14. 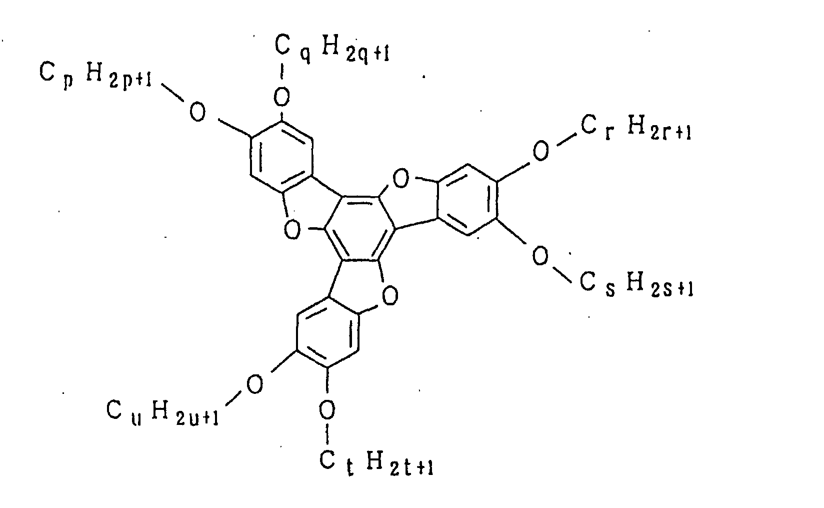 wherein p, q, r, s, t and u are each an integer o 1-18, preferably 3-14. 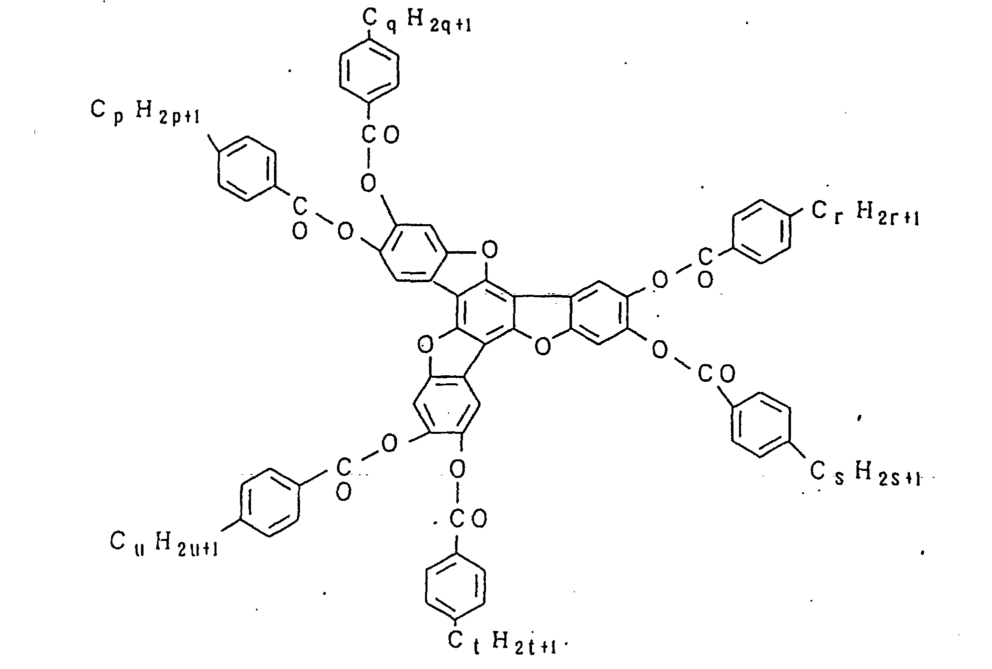 wherein p, q, r, s, t and u are each an integer of 1-18, preferably 3-14. 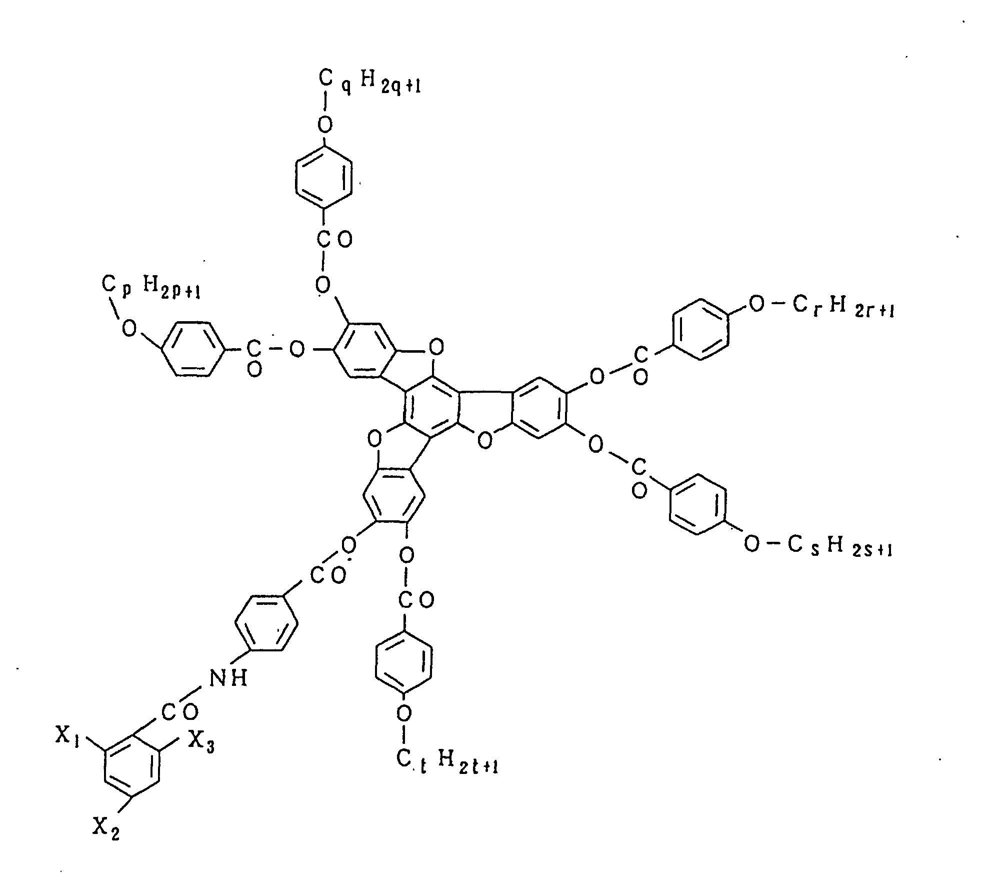 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 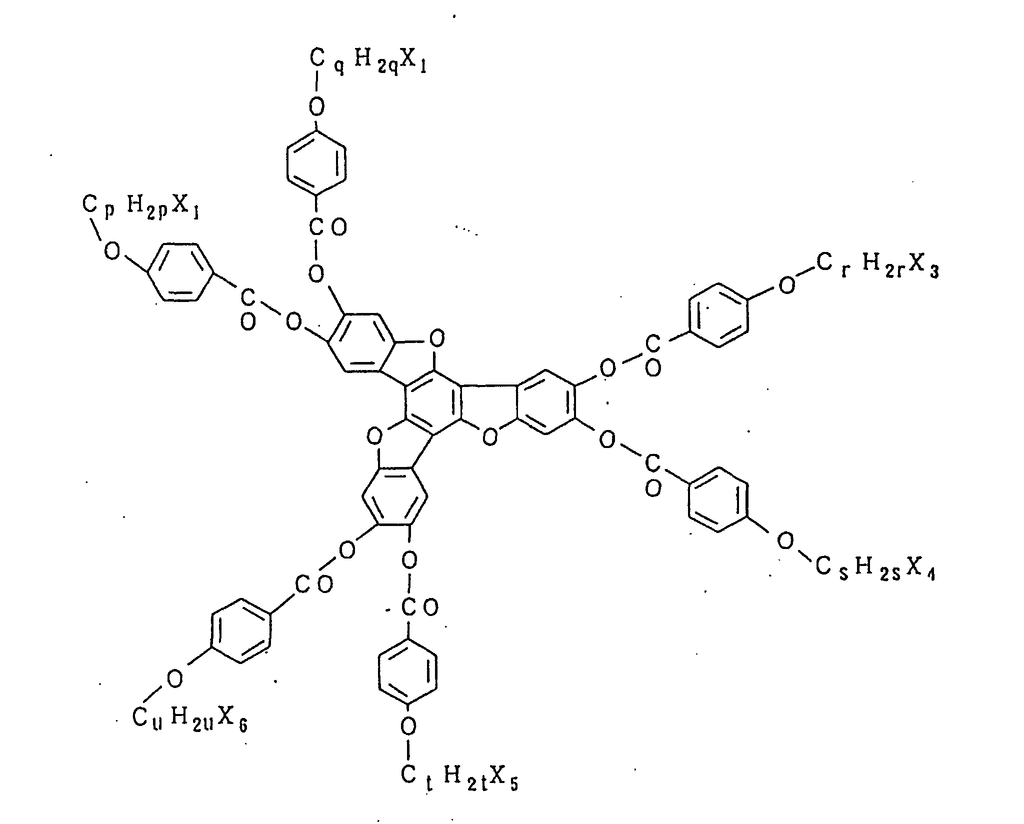 wherein p, q, r, s, t and u are each an integer of 1-18, preferably 3-14, X₁-X₆ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 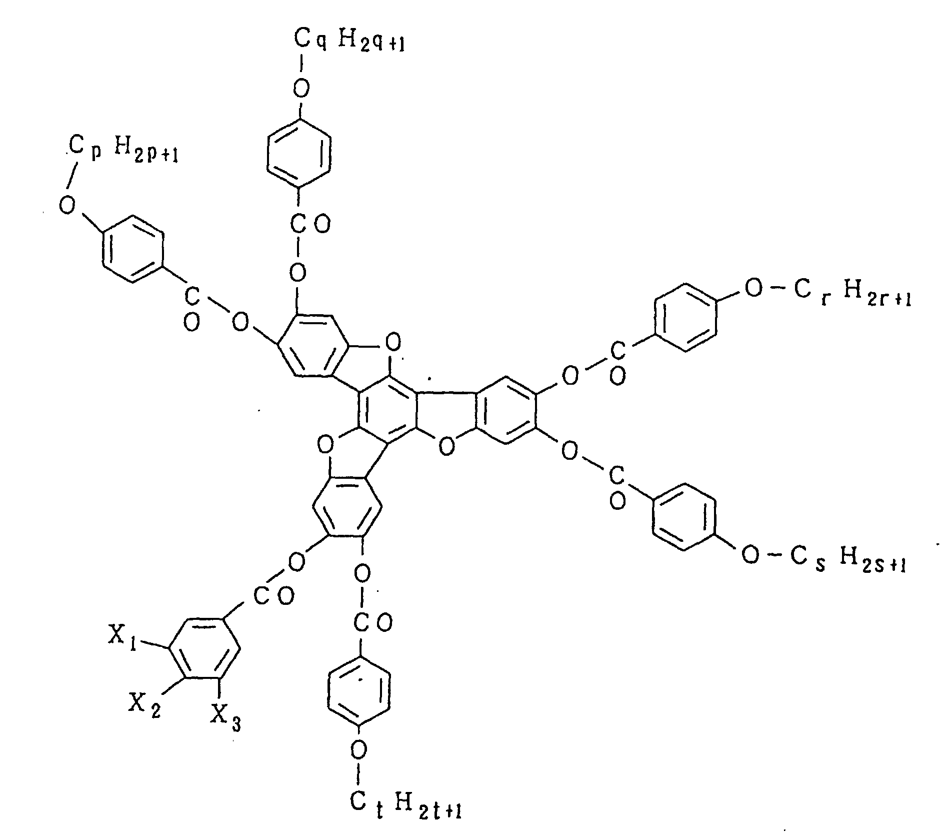 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 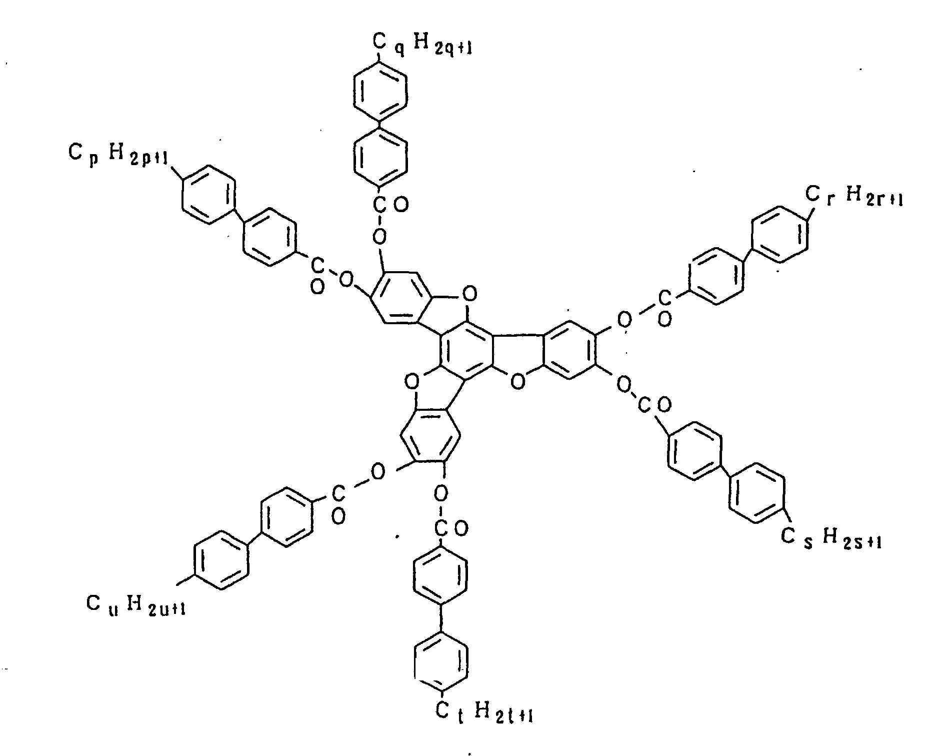 wherein p, q, r, s, t and u are each an integer of 1-18, preferably 3-14. 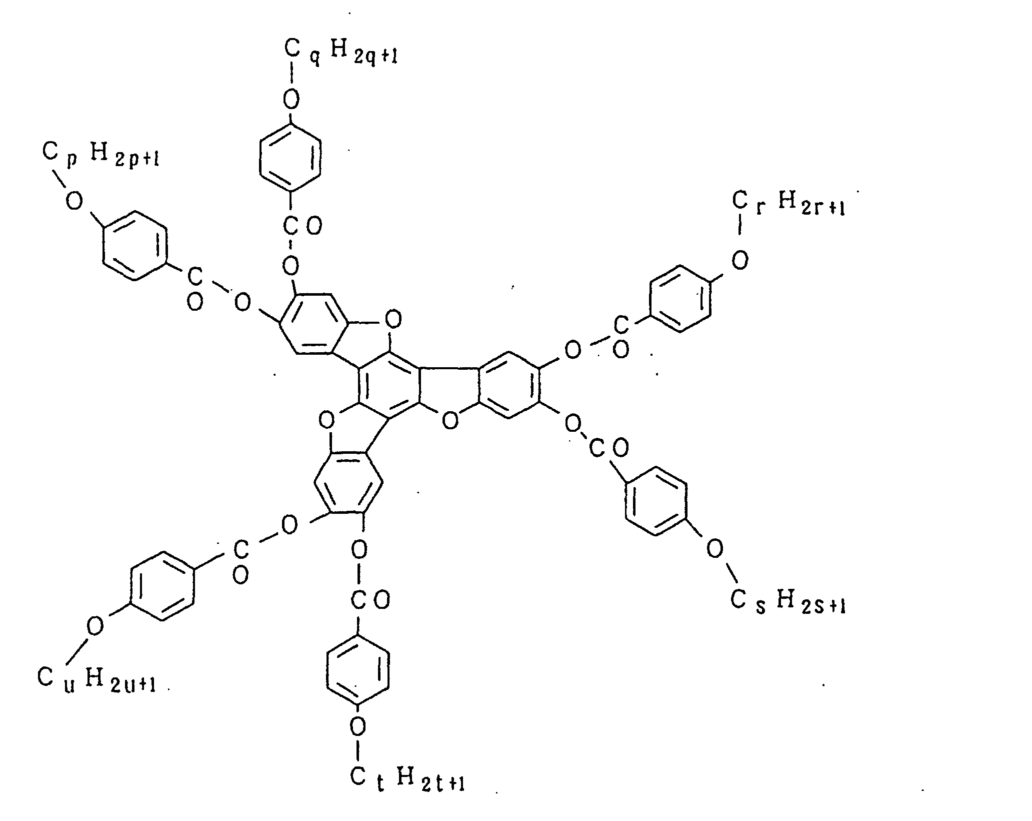 wherein p, q, r, s, t and u are each an integer of 1-18, preferably 3-14 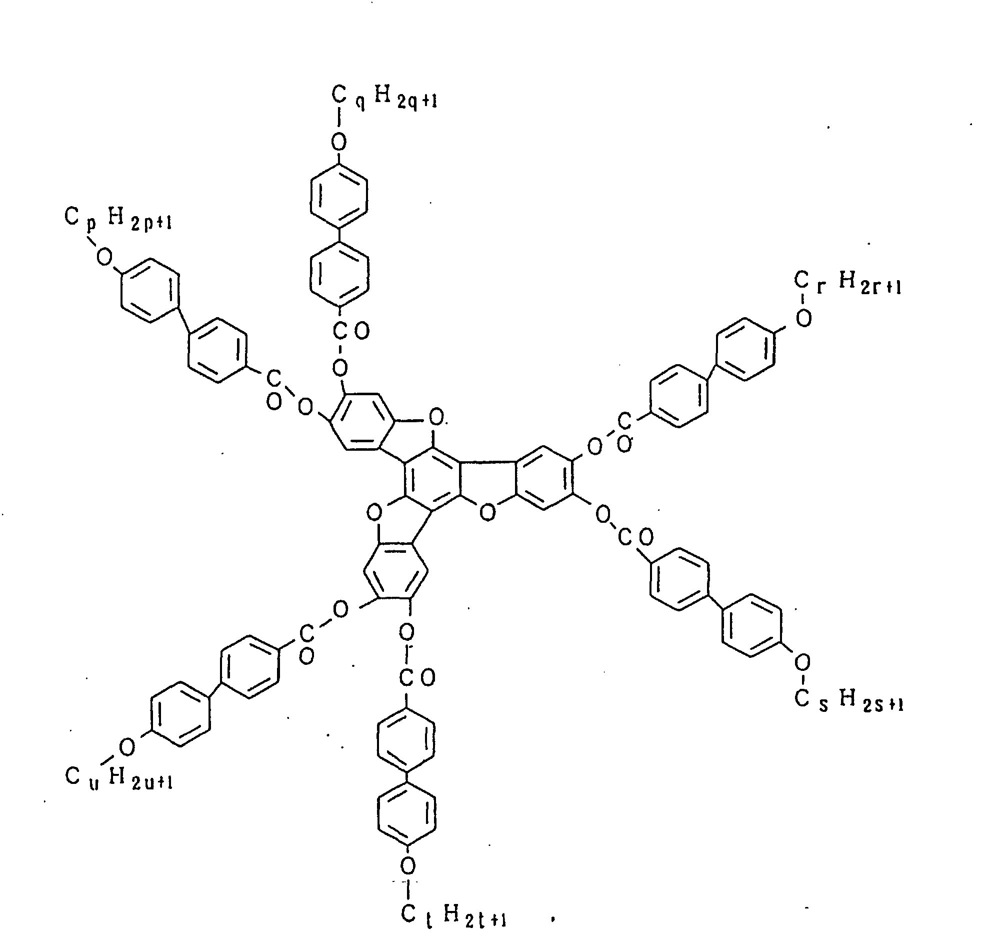 wherein p, q, r, s, t and u are each an integer of 1-18, preferably 3-14. 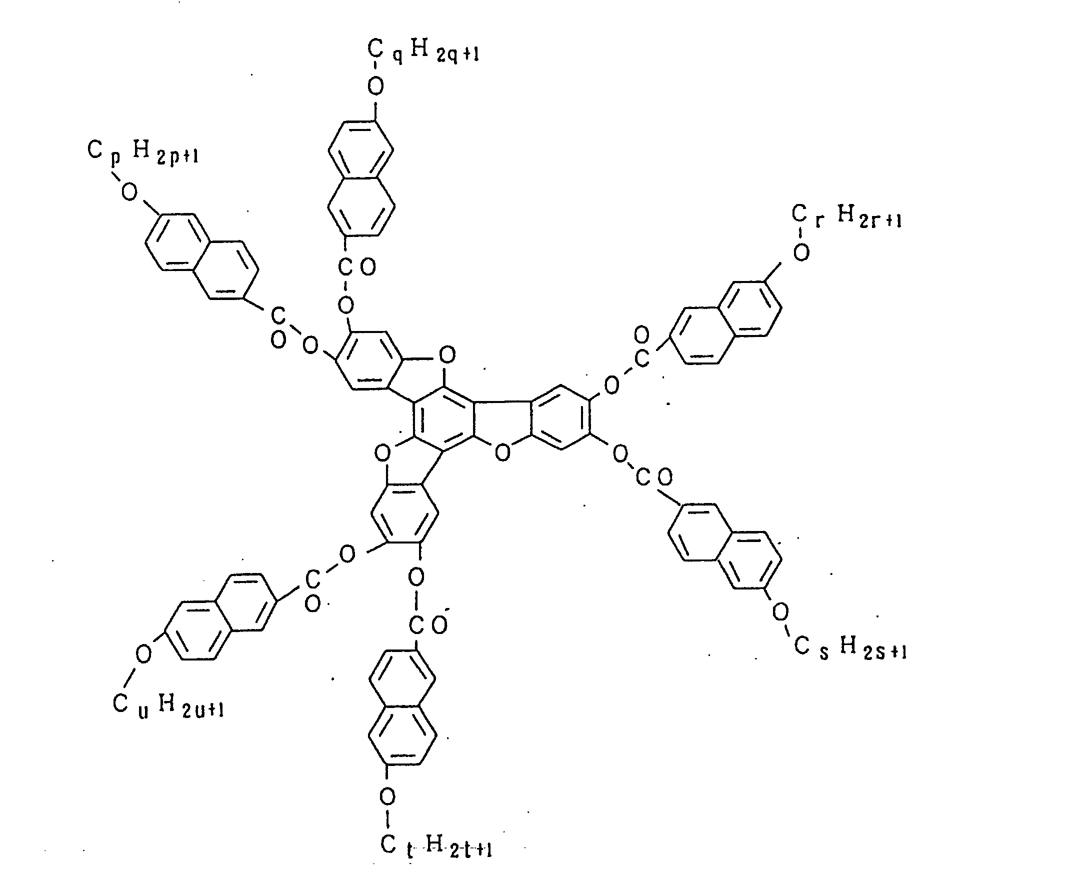 wherein p, q, r, s, t and u are each an integer of 1-18, preferably 3-14. 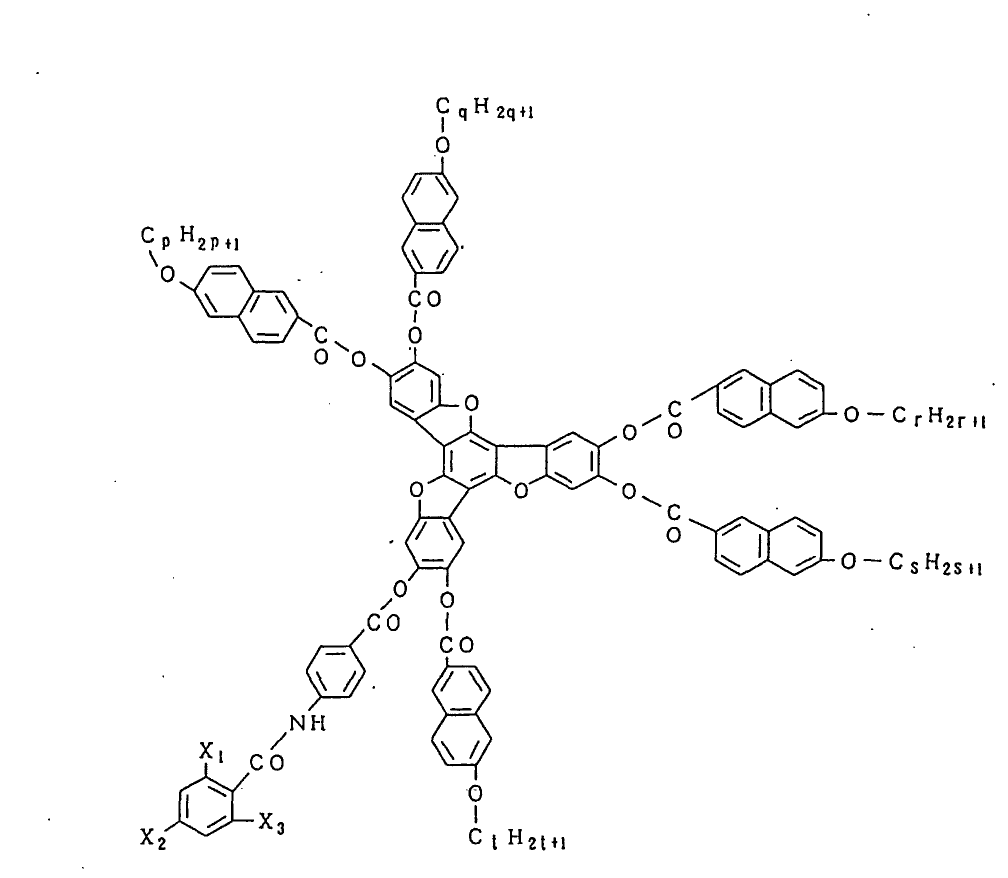 wherein p, q, r, s and t are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 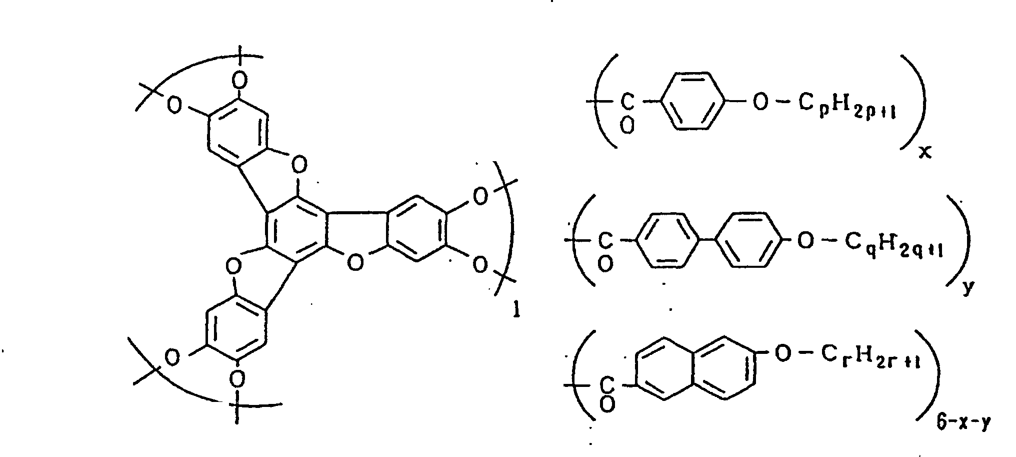 wherein 0 ≦ x ≦ 6, 0 ≦ y ≦ 6 in the molar ratio, and p, q and r are each an integer of 1-18, preferably 3-14.

Composition of the following: 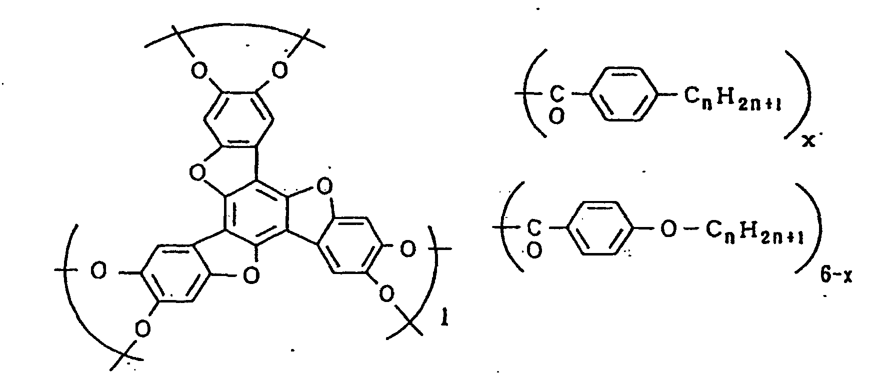 wherein 0 ≦ x ≦ 6 in the molar ratio, and n is an integer of 1-18, preferably 3-14.

Composition of the following: 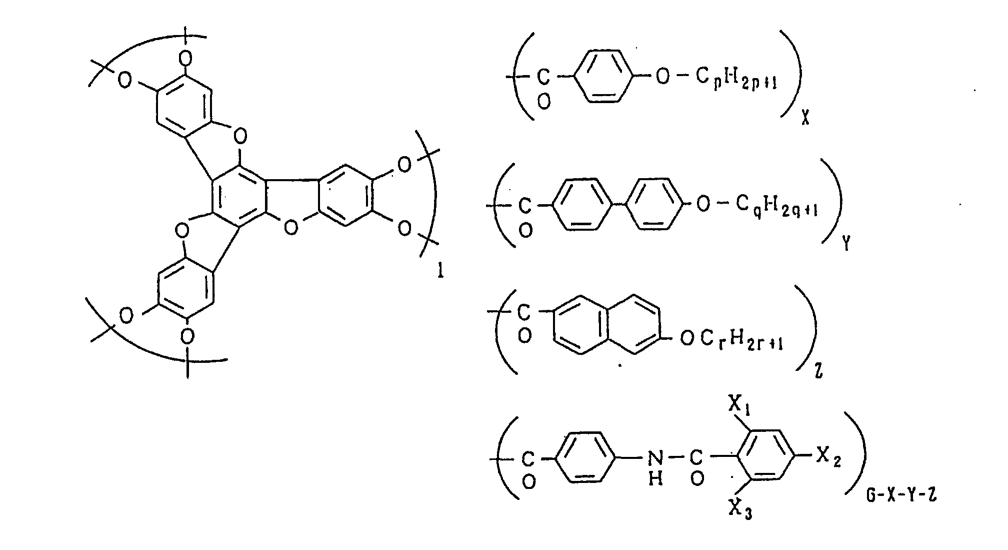 wherein 0 ≦ x ≦ 6, 0 ≦ y ≦ 6, 0 ≦ z ≦ 6 in the molar ratio, and p, q and r are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 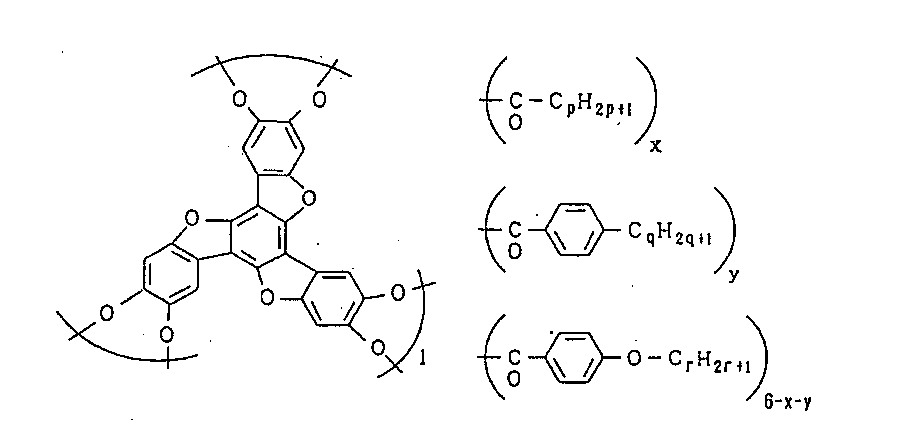 wherein 0 ≦ x ≦ 6, 0 ≦ y ≦ 6 in the molar ratio, and p, q and r are each an integer of 1-18, preferably 3-14.

Composition of the following: 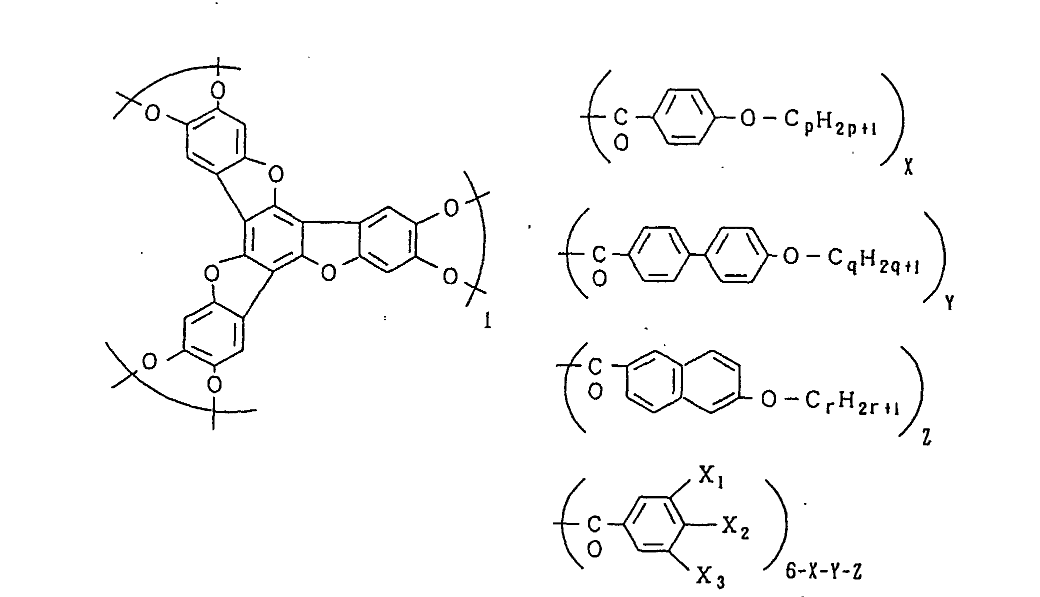 wherein 0 ≦ x ≦ 6, 0 ≦ y ≦ 6, 0 ≦ z ≦ 6 in the molar ratio, and p, q and r are each an integer of 1-18, preferably 3-14, X₁-X₃ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10.

Composition of the following: 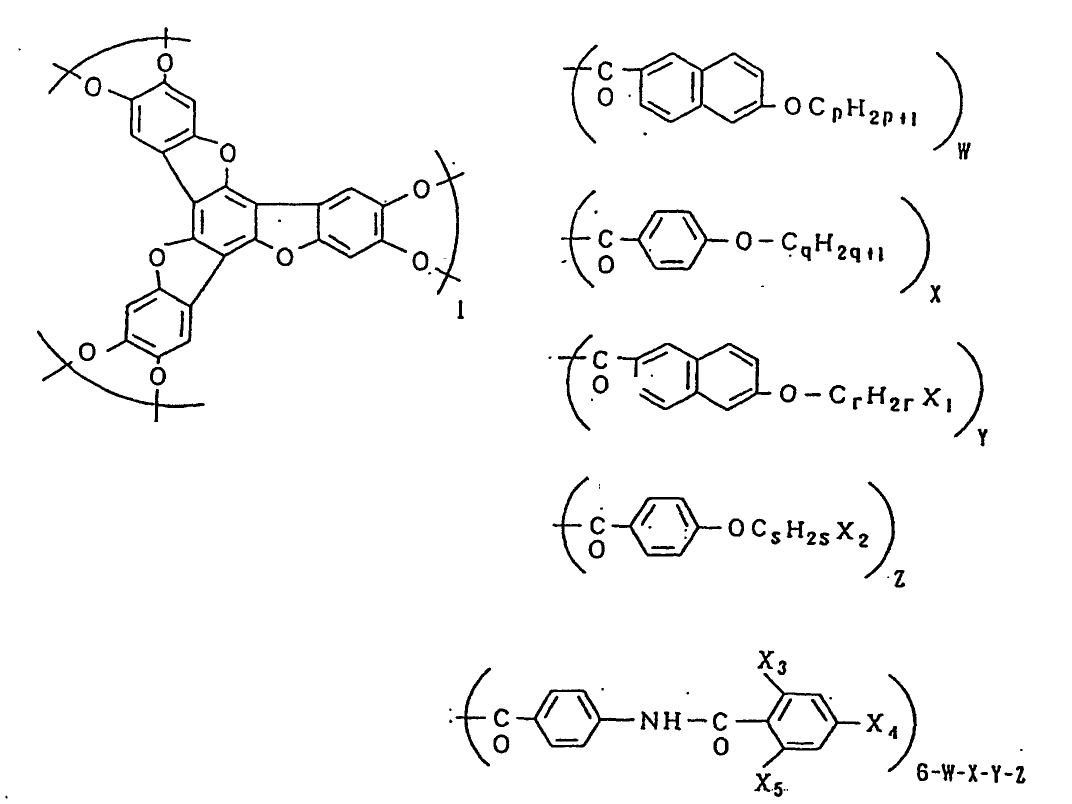 wherein 0 ≦ w ≦ 6, 0 ≦ x ≦ 6, 0 ≦ y ≦ 6, 0 ≦ z ≦ 6 in the molar ratio, and p, q, r and s are each an integer of 1-18, preferably 3-14, X₁-X₅ are each independently H-, F-, Cl-, Br-, C_{ℓ}H_{2ℓ+1}, C_{ℓ}H_{2ℓ+1}O-, C₆H₅-, C₆H₅CO- or C₆H₅O-, where C_{ℓ}H_{2ℓ+1} is a linear or branched alkyl group, and ℓ is an integer of 1-18, preferably 1-10. 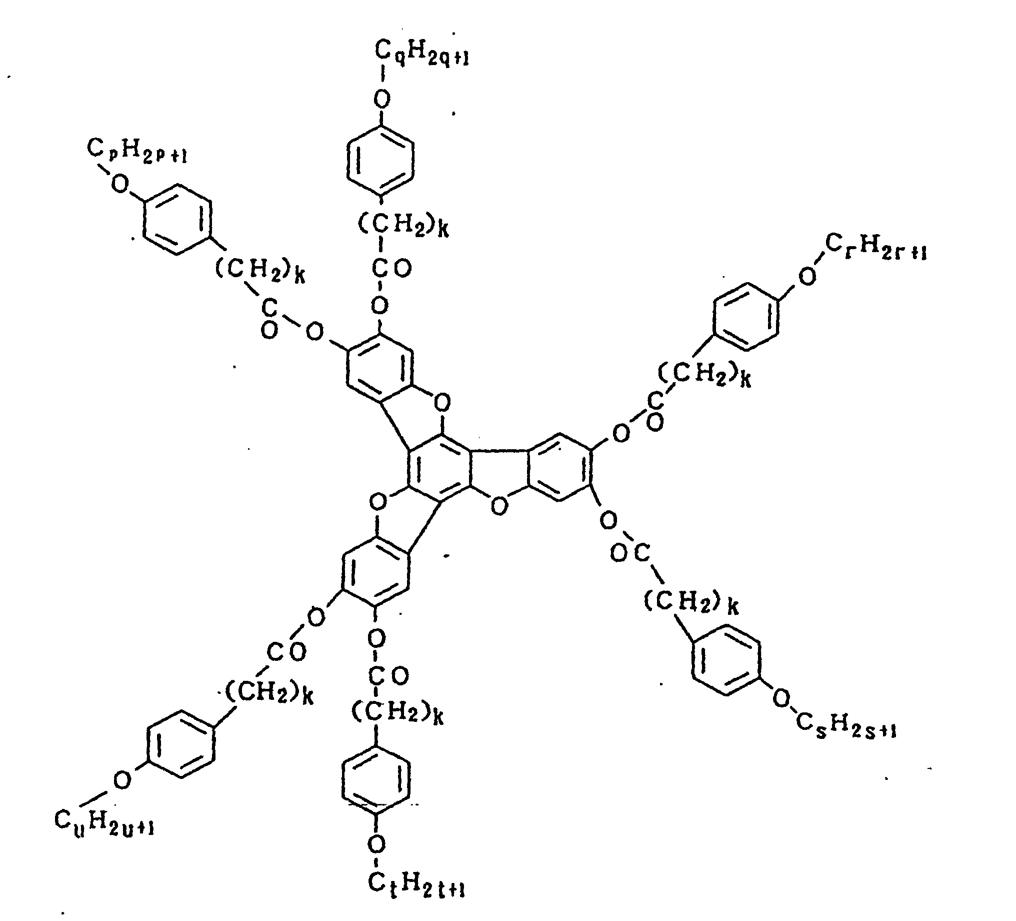 wherein p, q, r, s, t, and u are each an integer of 3-18, preferably 5-14, k is 1, 2 or 3. 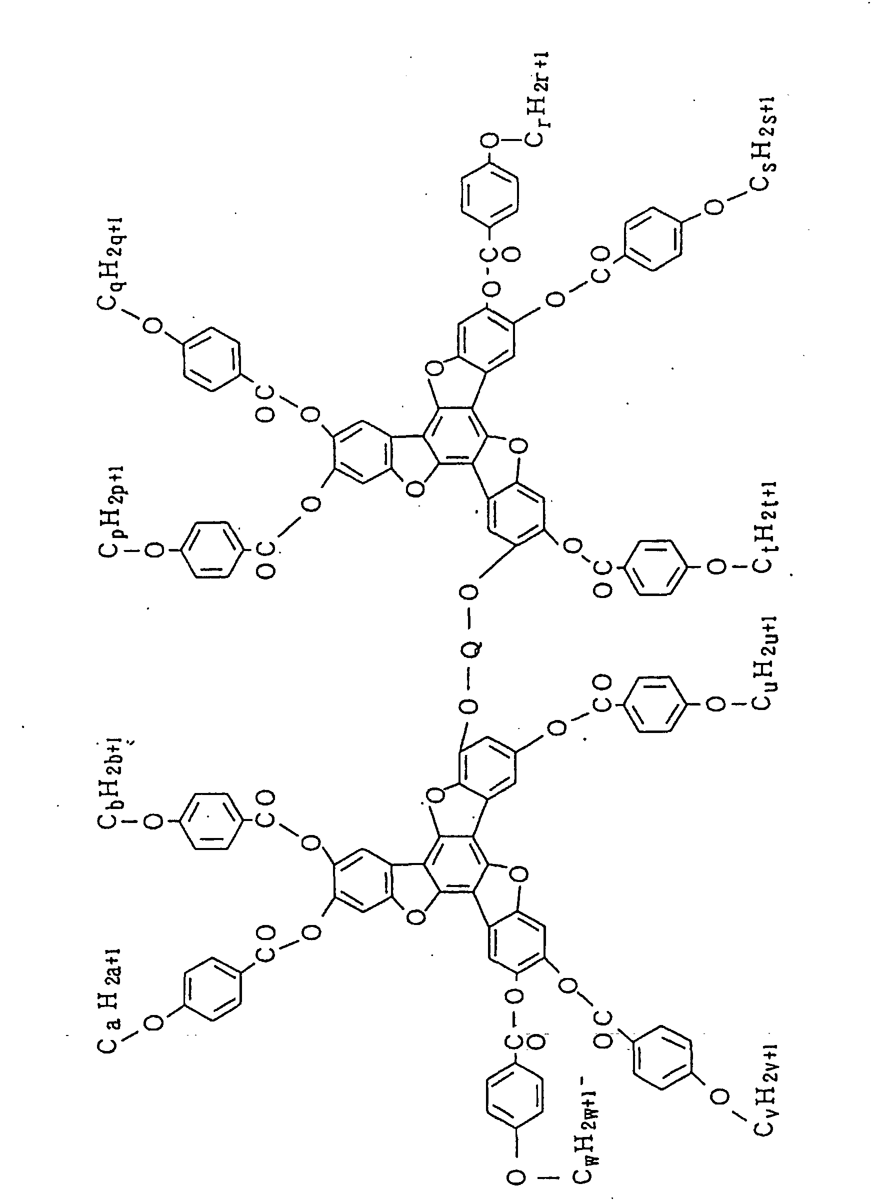 wherein p, q, r, s, t, u, v, w, a and b are each an integer of 1-18, preferably 3-14.

Q is the following: 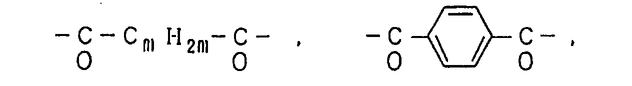 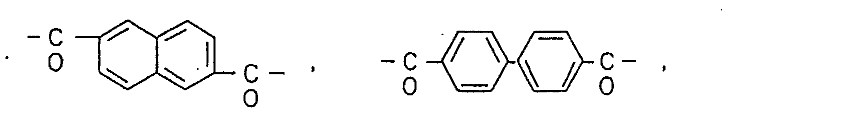 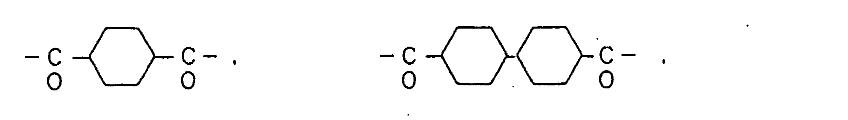 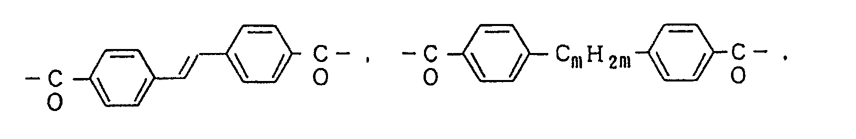 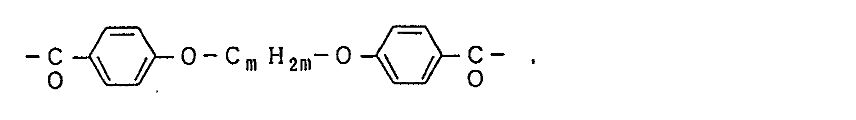 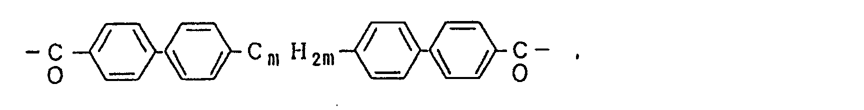 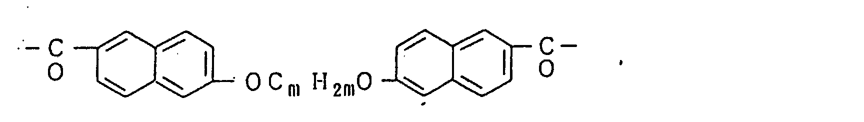 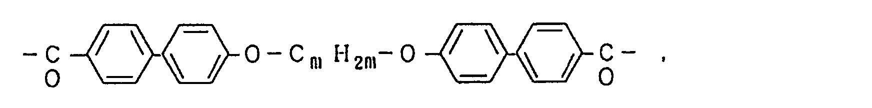 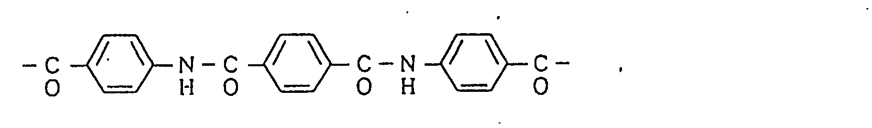 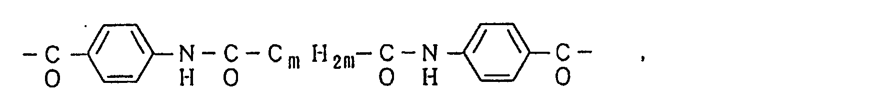 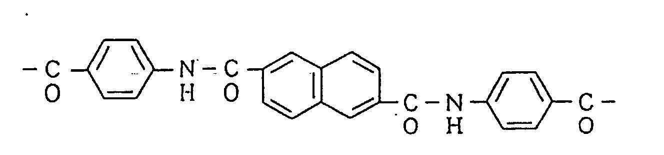 etc.
wherein m is an integer of 2-16.

Preferable Q: 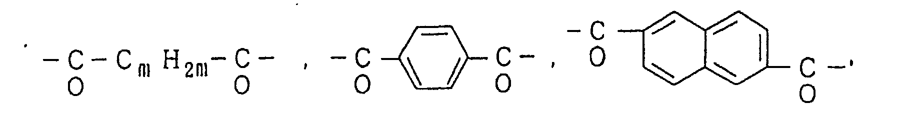 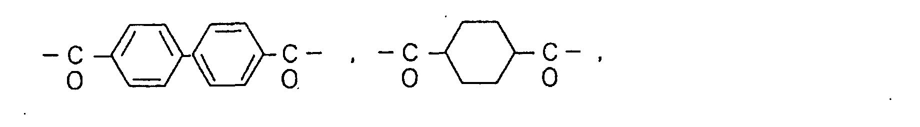 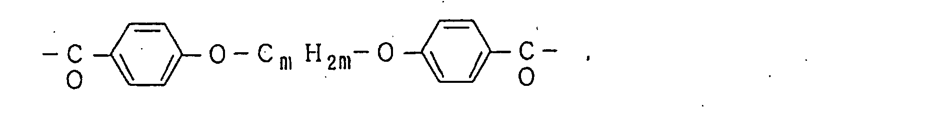 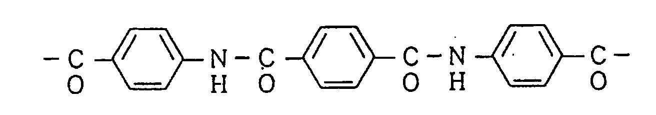 etc.
wherein m is an integer of 2-16, preferably 4-12. 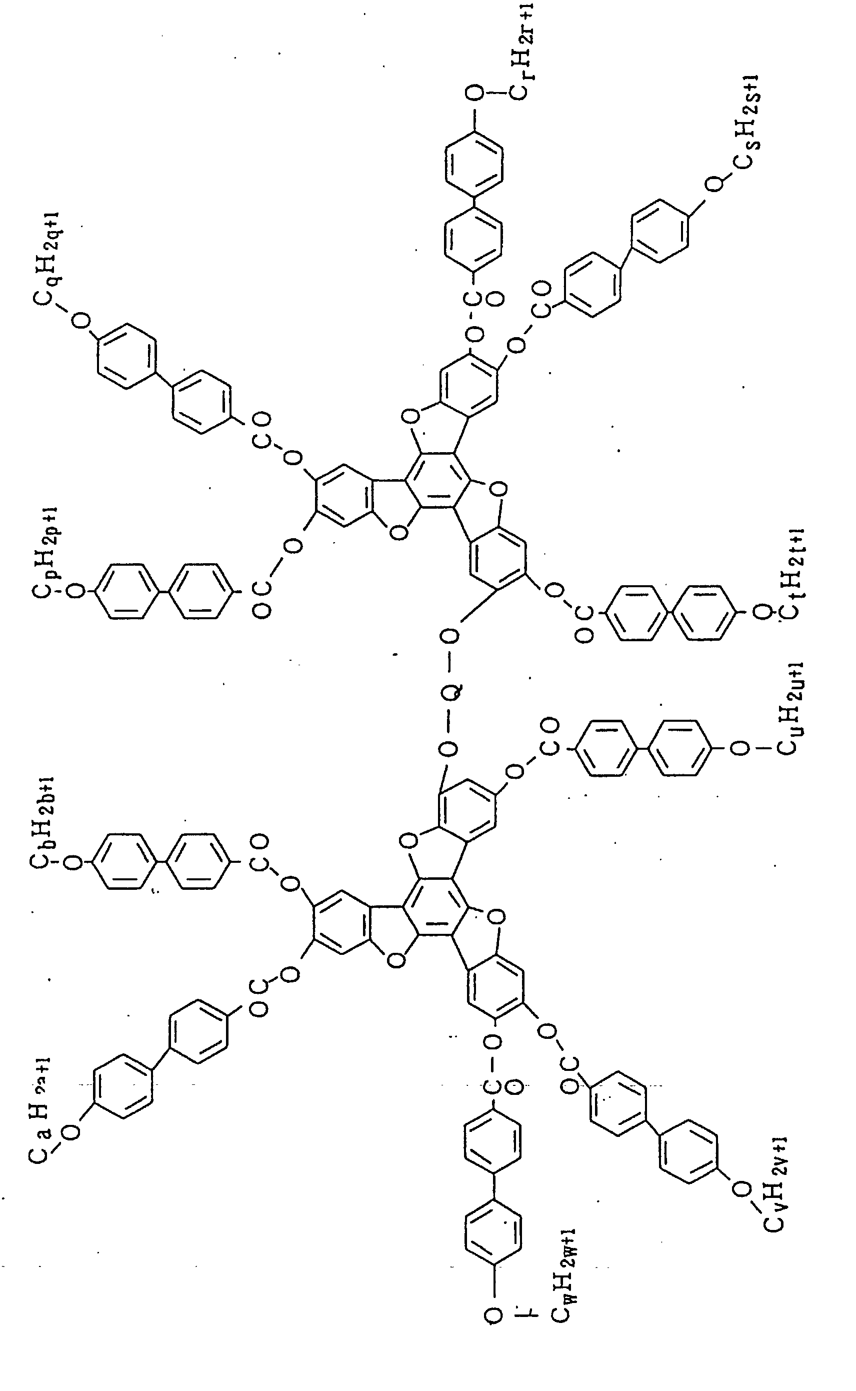 wherein p, q, r, s, t, u, v, w, a and b are each an integer of 1-18, preferably 3-14.

Q is the following: 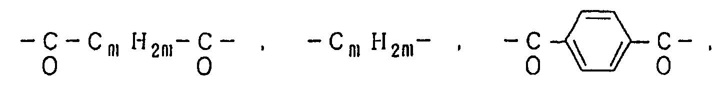 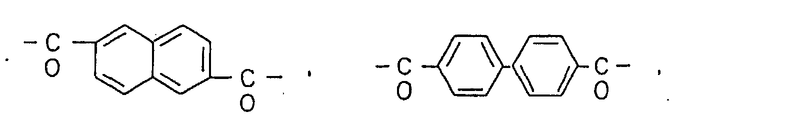 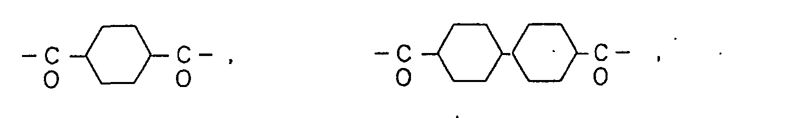 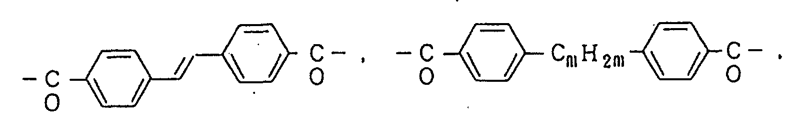 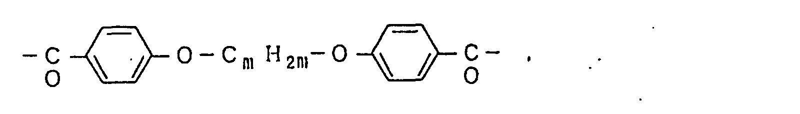 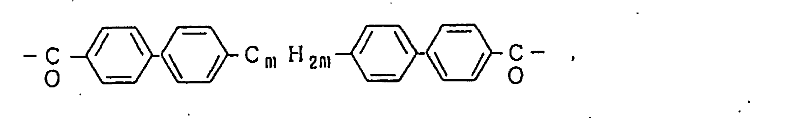 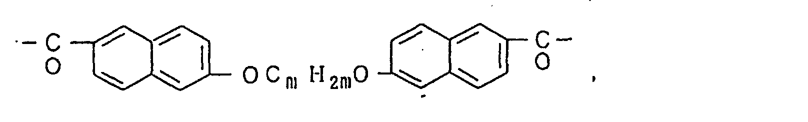 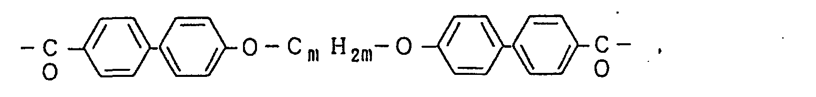 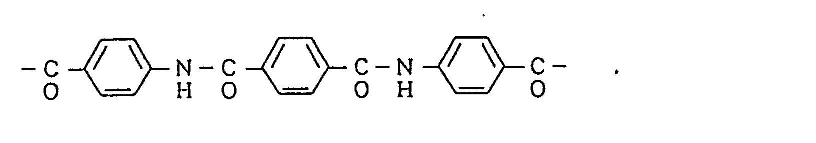 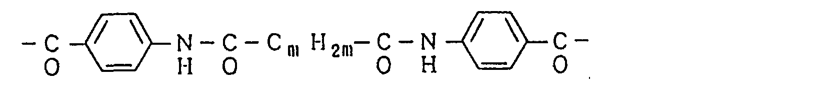 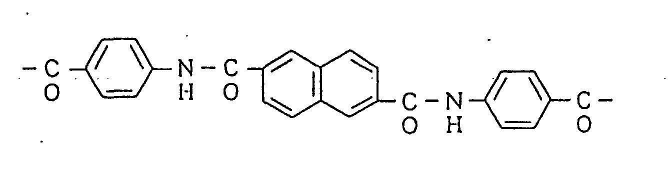 etc.
wherein m is an integer of 2-16.

Preferable Q: 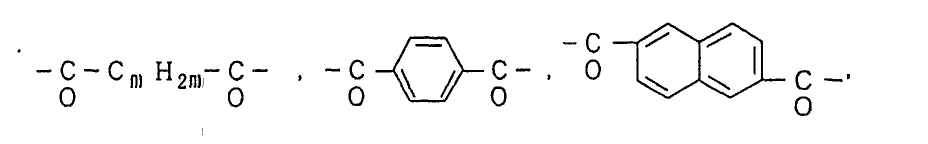 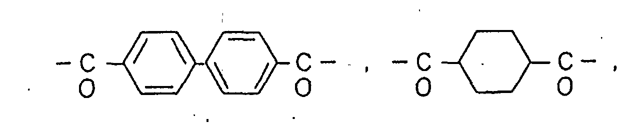 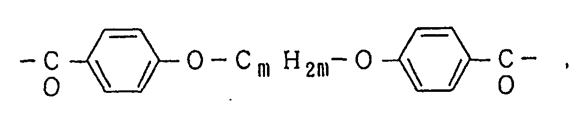 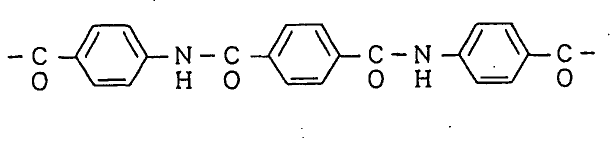 etc.
wherein m is an integer of 2-16, preferably 4-12. 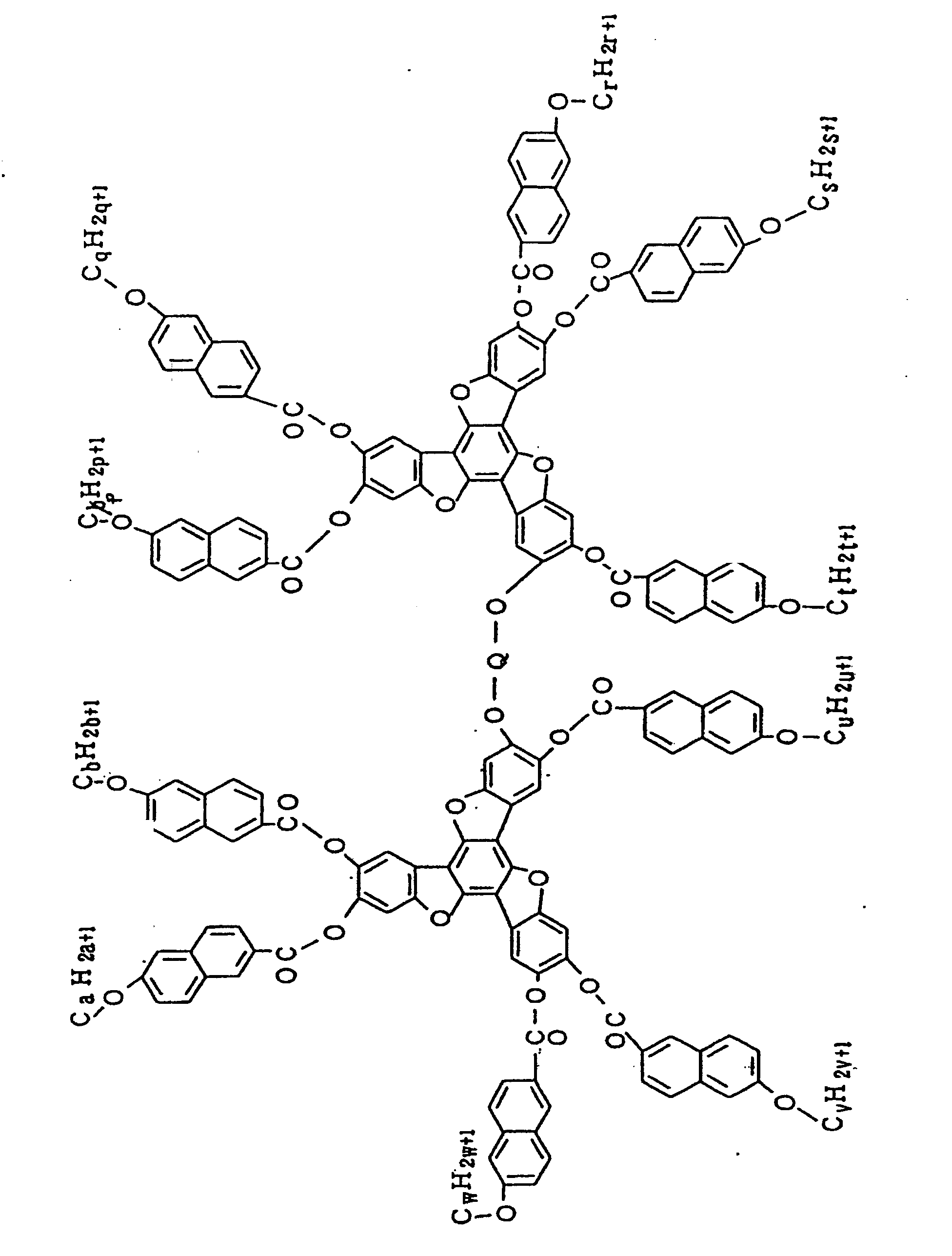 wherein p, q, r, s, t, u, v, w, a and b are each an integer of 1-18, preferably 3-14.

Q is the following: 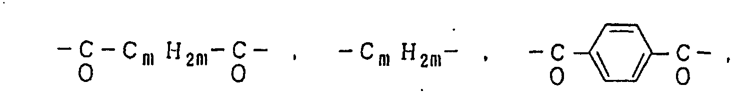 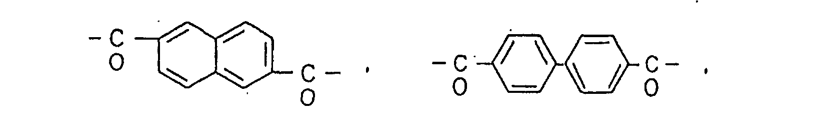 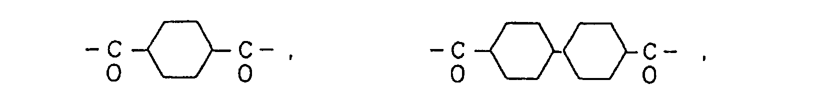 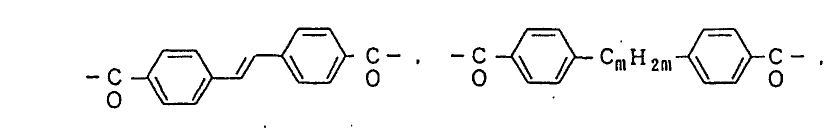 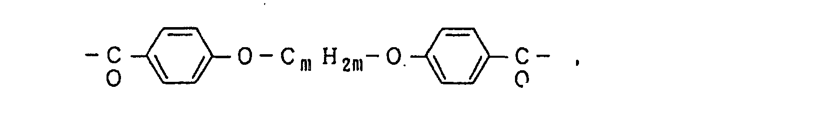 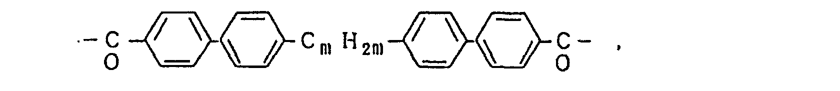 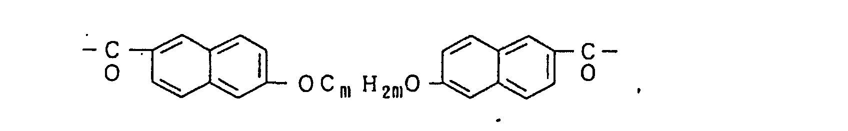 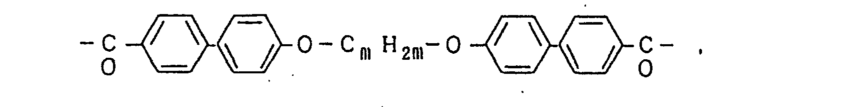 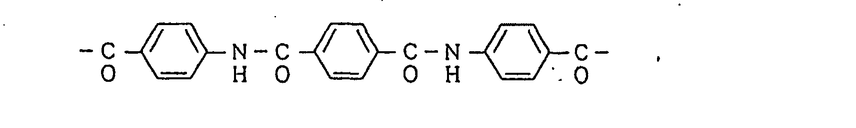 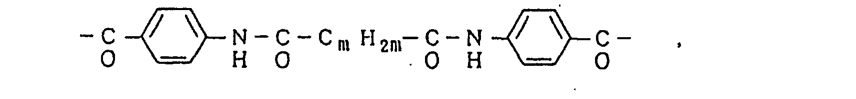 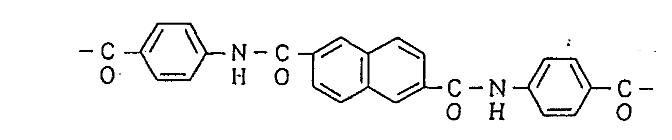 etc.
wherein m is an integer of 2-16.

Preferable Q: 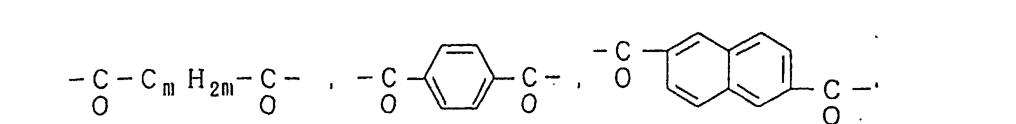 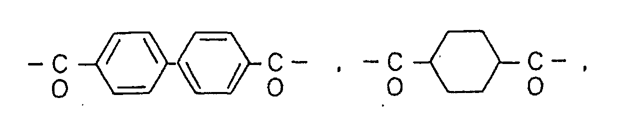 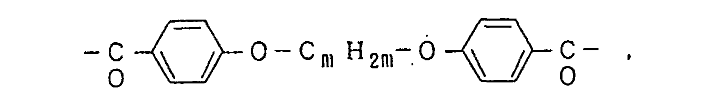 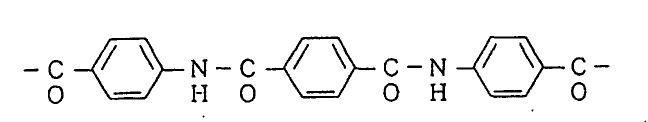 ,etc.
wherein m is an integer of 2-16, preferably 4-12. 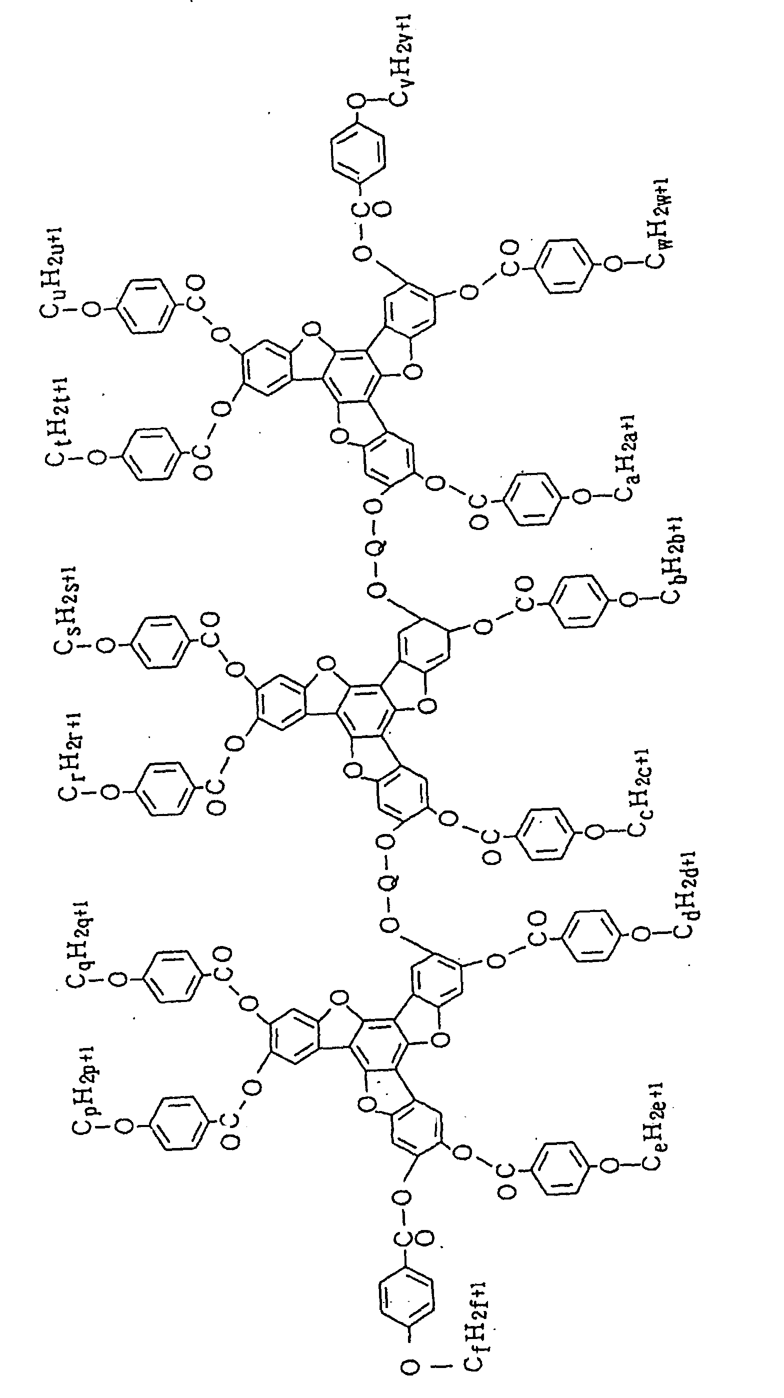 wherein p, q, r, s, t, u, v, w, a, b, c, d, e and f are each an integer of 1-18, preferably 3-14.

Q is the following: 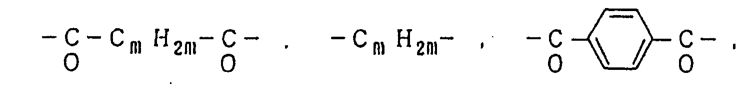 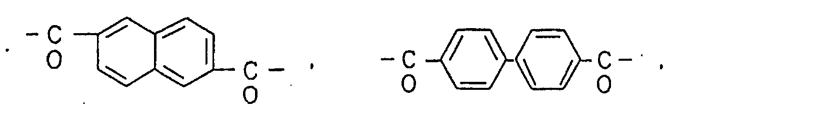 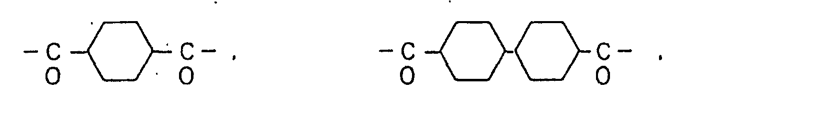 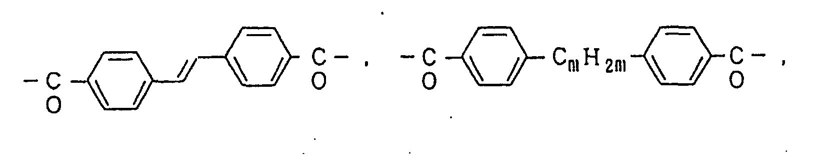 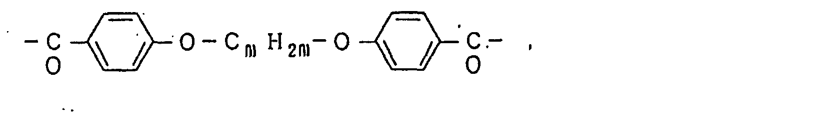 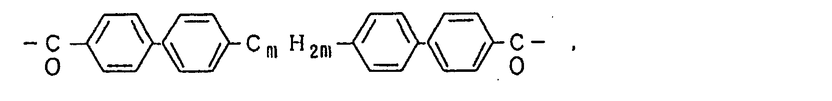 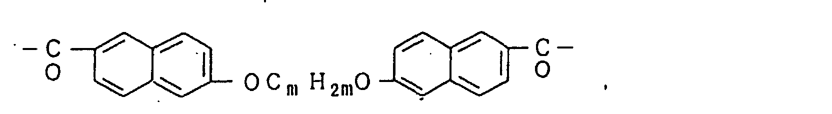 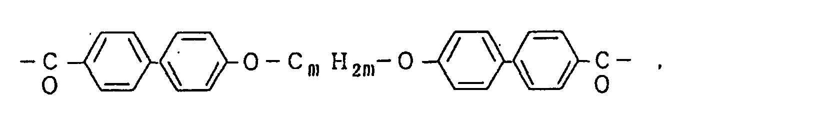 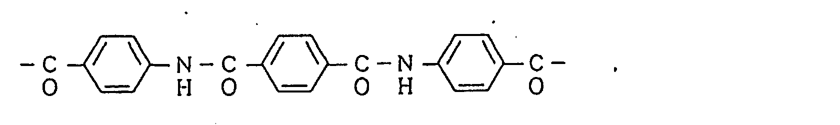 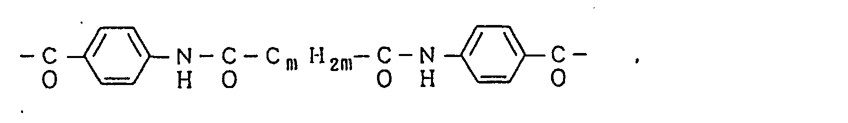 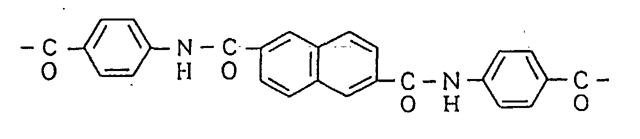 etc.
wherein m is an integer of 2-16.

Preferable Q: 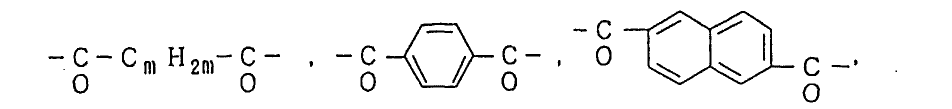 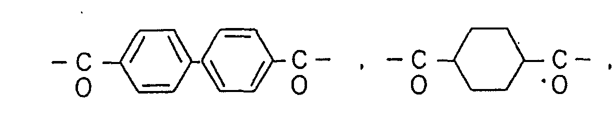 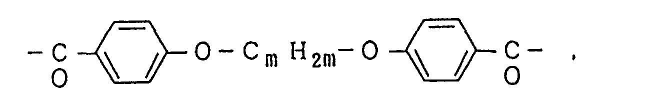 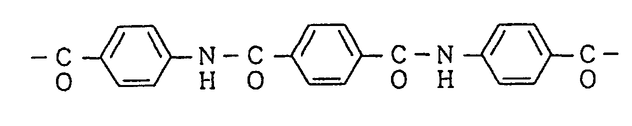 etc.
wherein m is an integer of 2-16, preferably 4-12.

Polymer represented by the following : 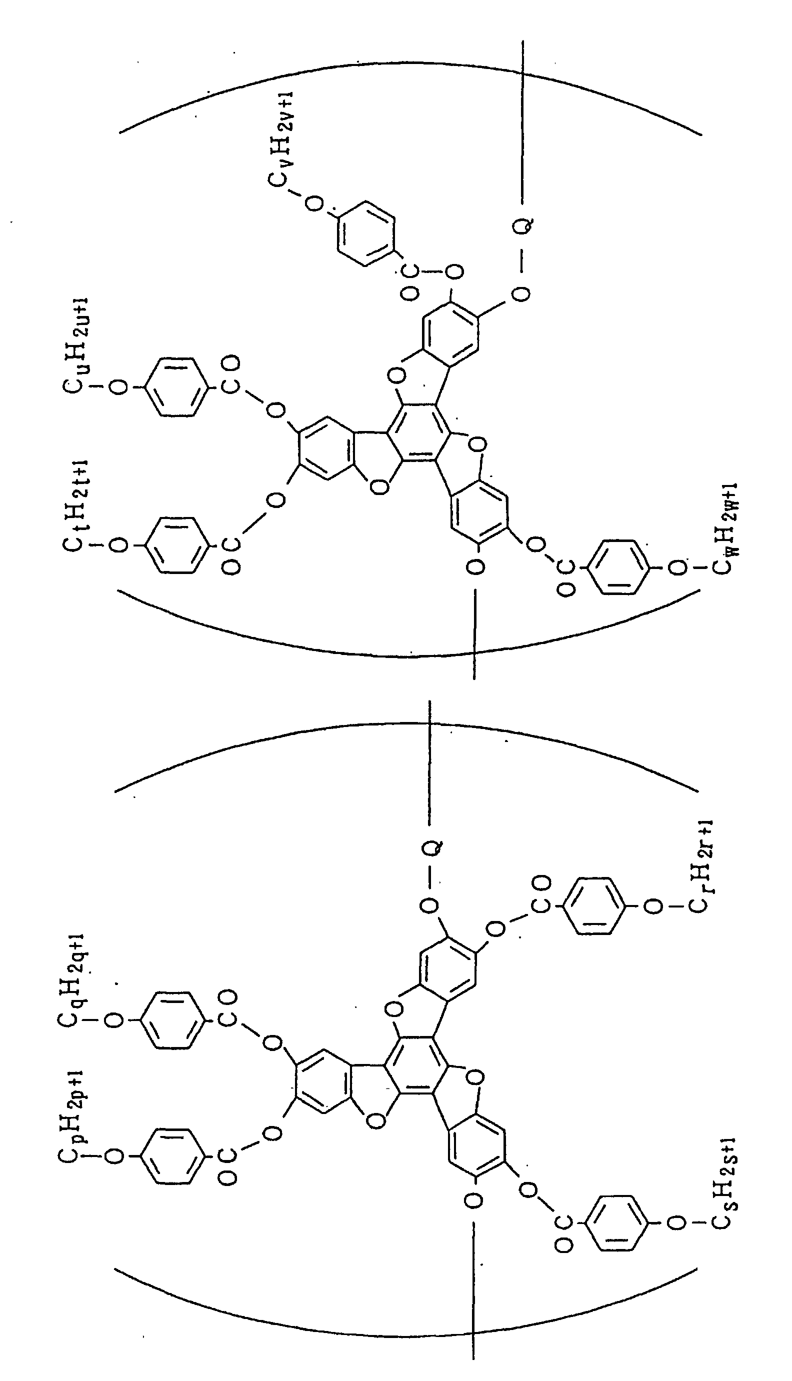 wherein p, q, r, s, t, u, v and w are each an integer of 1-18, preferably 3-14, and the average molecular weight is 5,000 - 100,000.

Q is the following: 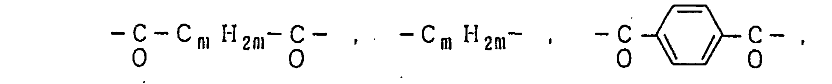 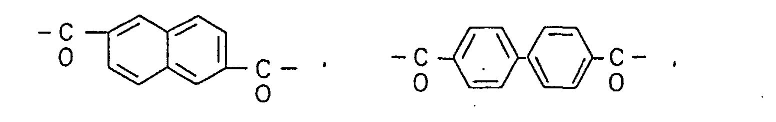 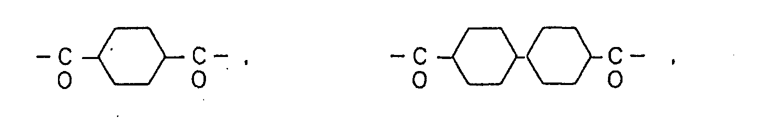 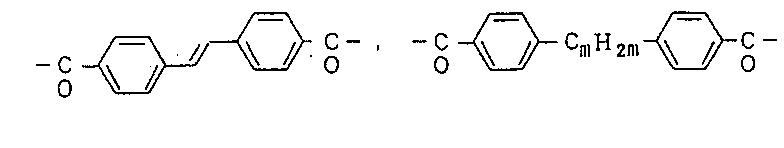 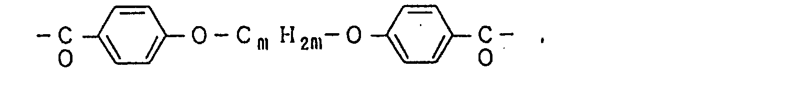 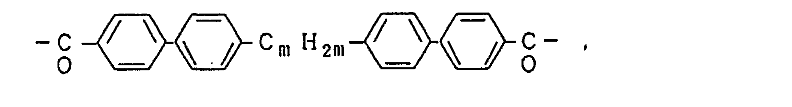 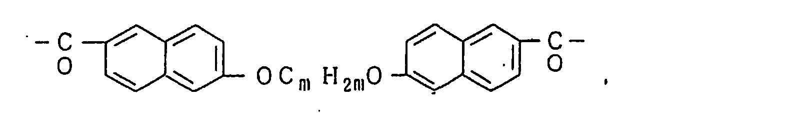 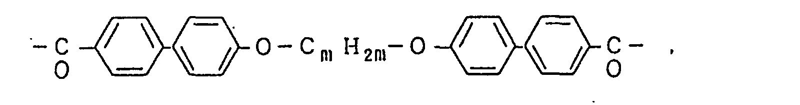 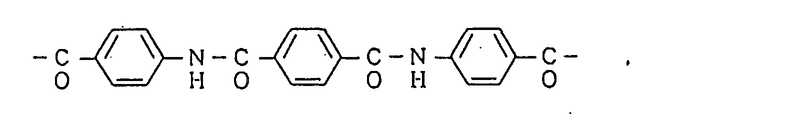 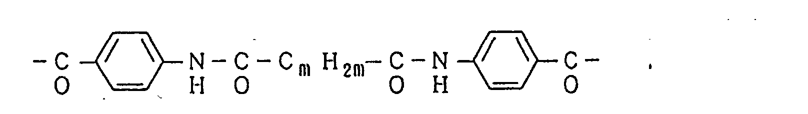 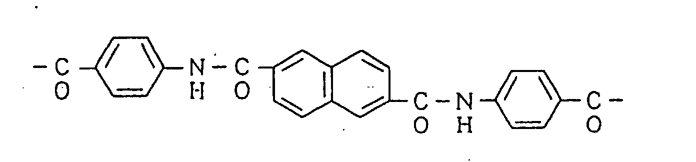 etc.
wherein m is an integer of 2-16.

Preferable Q: 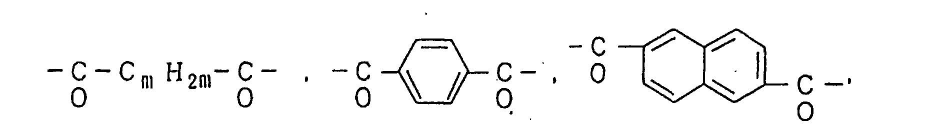 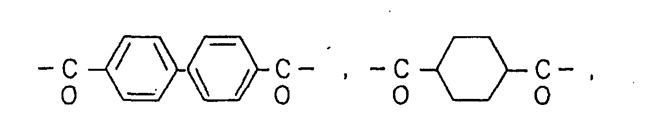 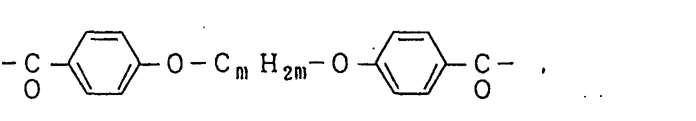 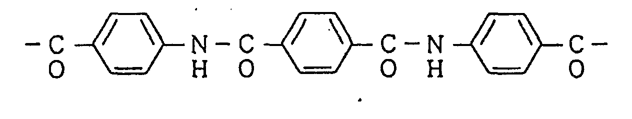 etc.
wherein m is an integer of 2-16, preferably 4-12. 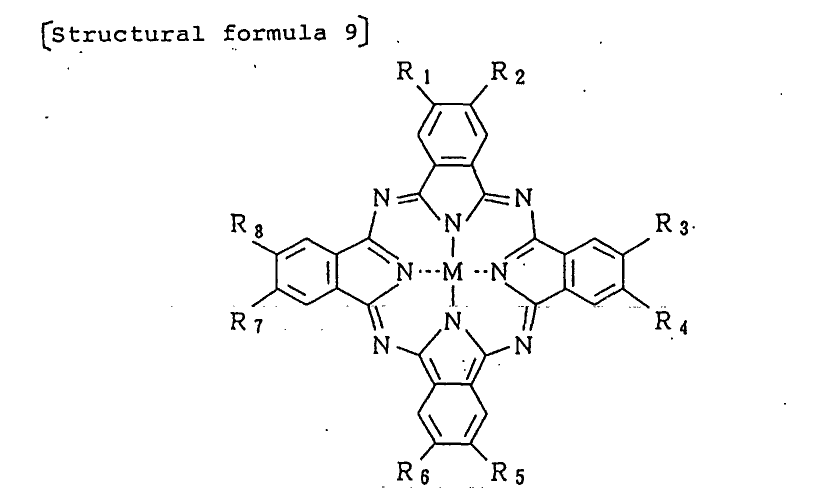 wherein R₁-R₈ are each a monofunctional or bifunctional substituent group selected from the following groups, wherein M represents two protons or a metal such as Mg, Fe, Co, Ni, Mn, Zn, Cu, Pb, Pd, Cd, Rh or Ru.

Mono functional substituent groups:

-CₙH₂ₙ₊₁,

-O-CₙH₂ₙ₊₁,

-S-CₙH₂ₙ₊₁,

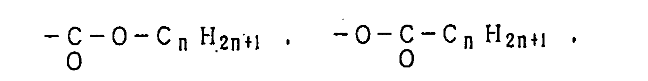

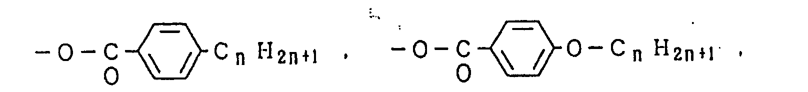

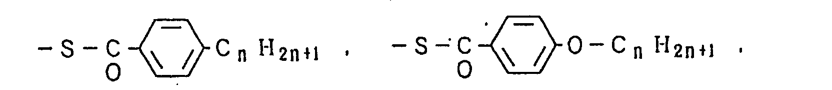

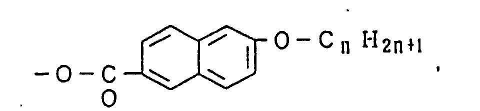

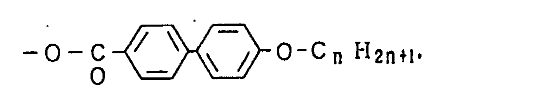

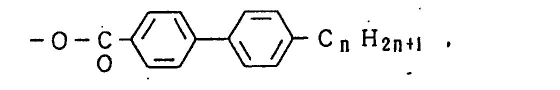

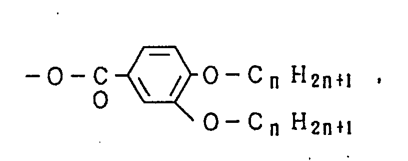

-CₖH₂ₖ-O-CₙH₂ₙ₊₁,

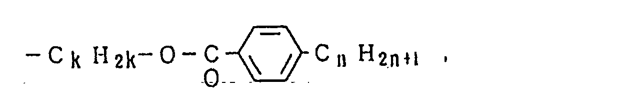

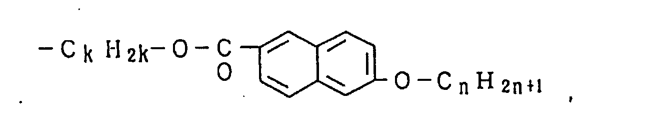

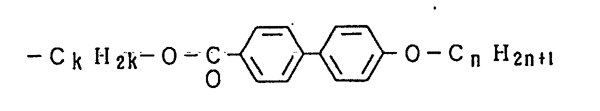

etc.
wherein CₙH₂ₙ₊₁ is a linear or branched alkyl group, n is an integer of 3-18, preferably 5-14, k is 1, 2 or 3.

Bifunctional substituent groups: 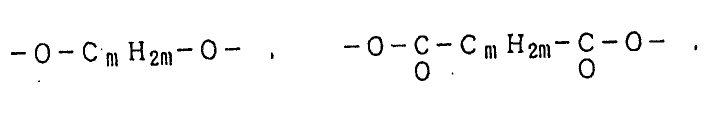 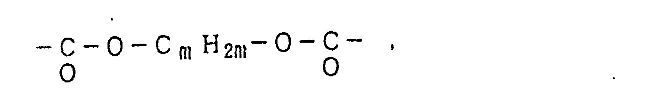 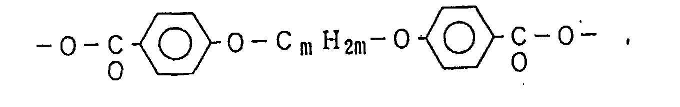 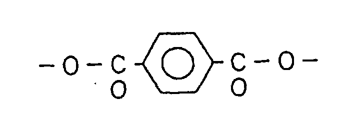 etc.
wherein CₘH₂ₘ is a linear or branched alkylene chain, and m is an integer of 2-16, preferably 4-12. 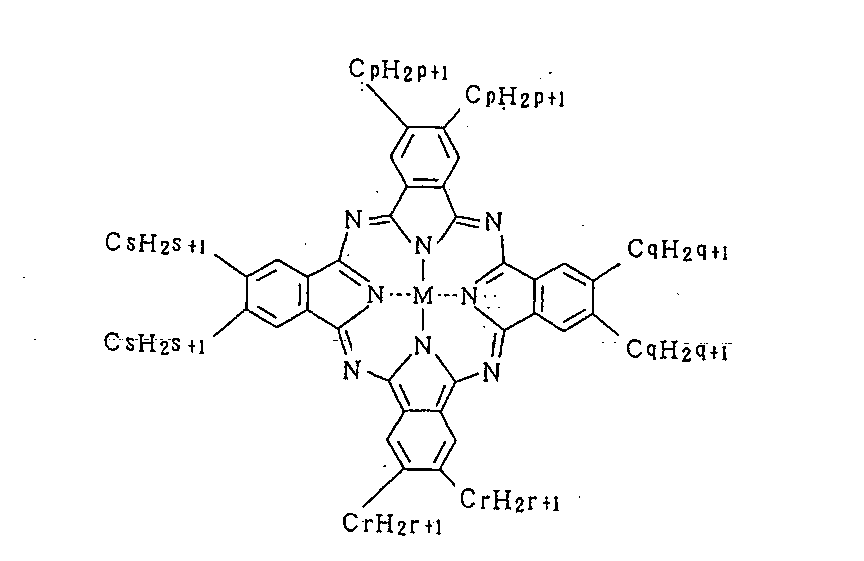 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14. 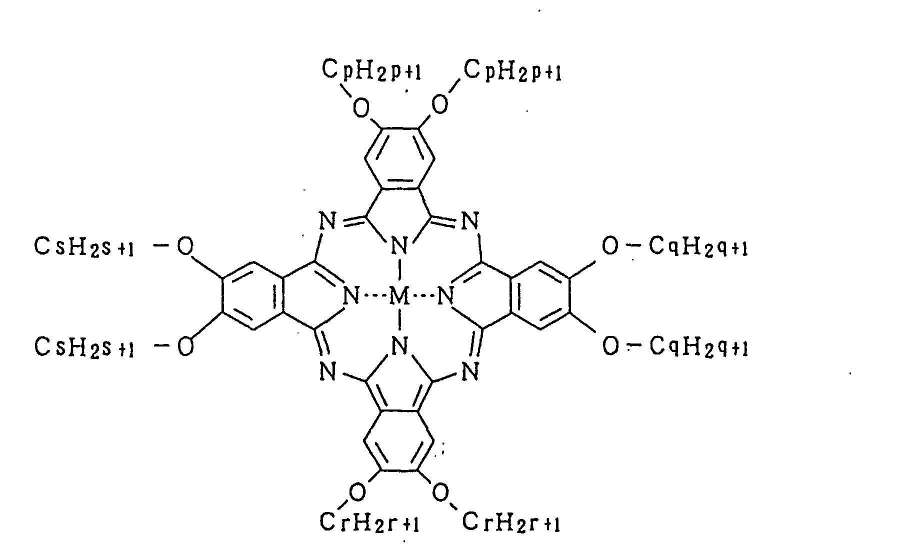 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14. 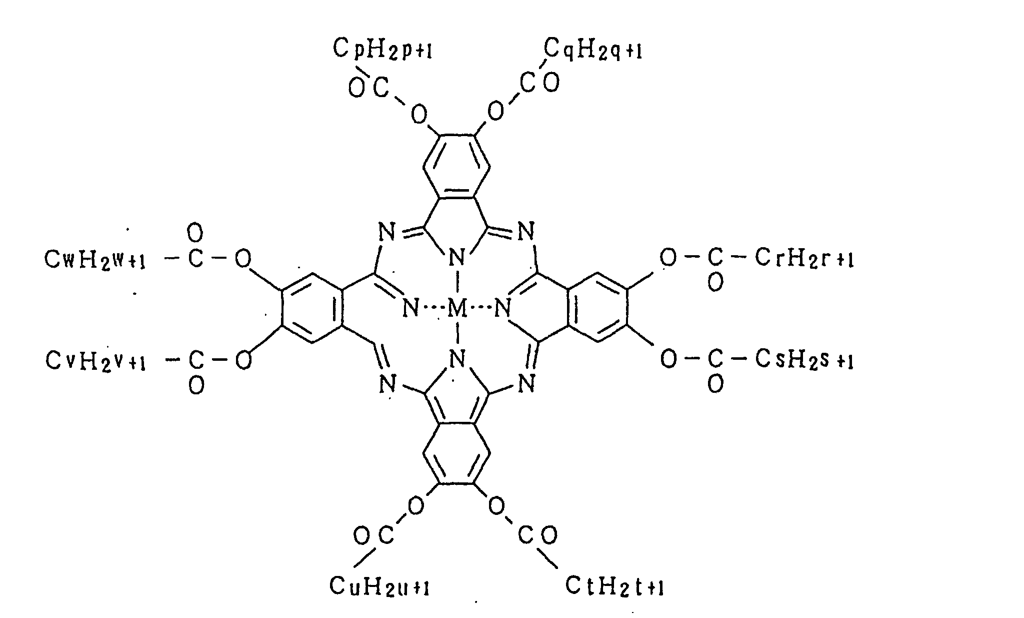 wherein M is two protons Mg, Fe, Co, Ni, Mn, Zn, Cu, Pb, Pd, Cd, Rh or Ru, preferably two protons Fe, Co, Ni, Zn or Cu. p, q, r, s, t, u, v and w are each an integer of 3-18, preferably 5-14. 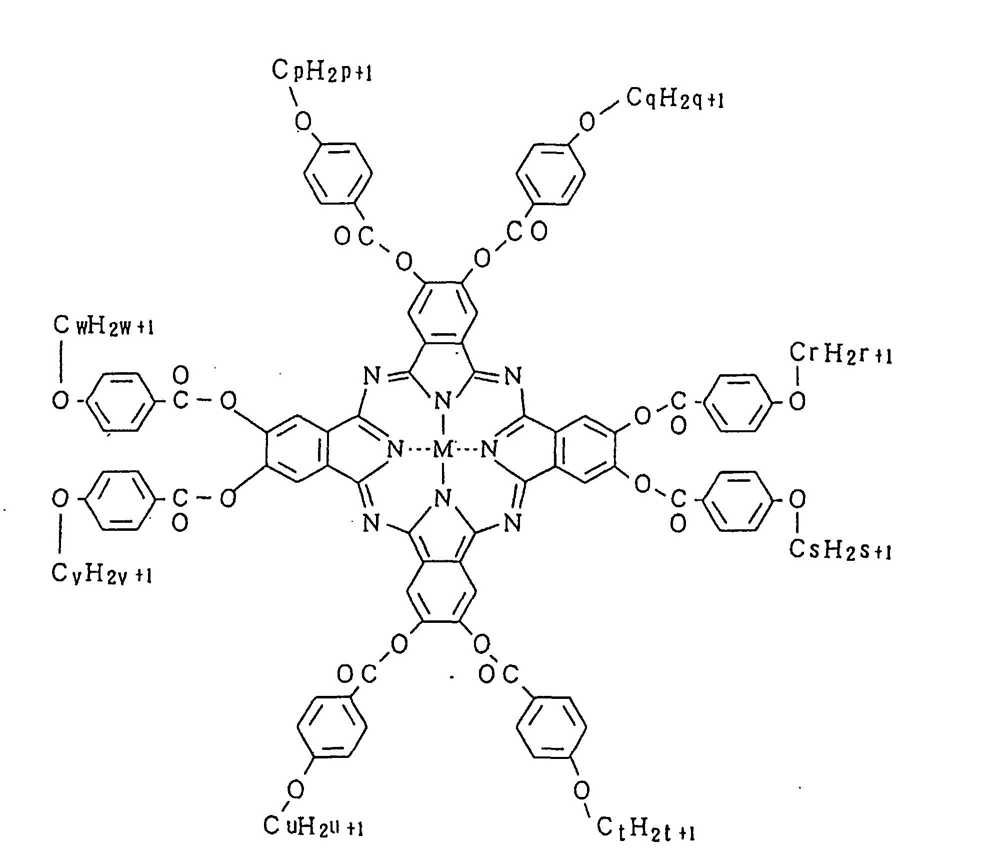 wherein M is two protons Mg, Fe, Co, Ni, Mn, Zn, Cu, Pb, Pd, Cd, Rh or Ru, preferably two protons Fe, Co, Ni, Zn or Cu. p, q, r, s, t, u, v and w are each an integer of 3-18, preferably 5-14. 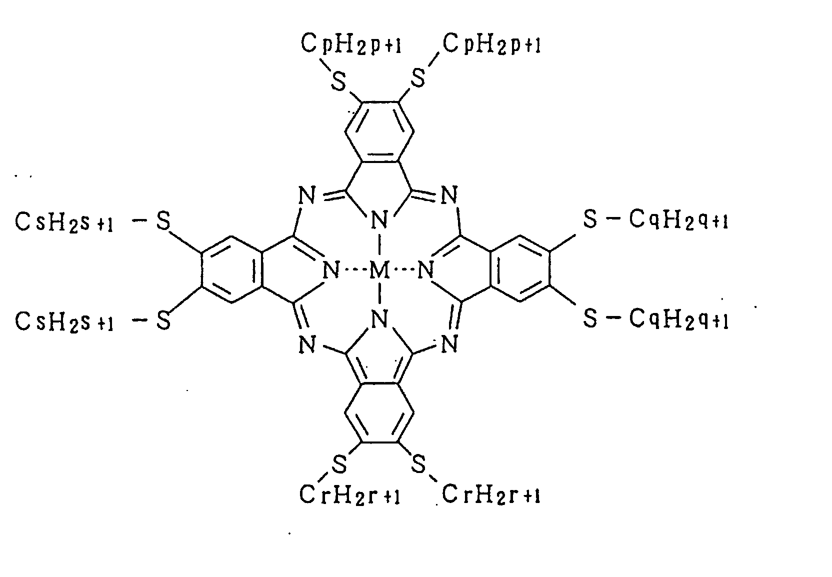 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14. 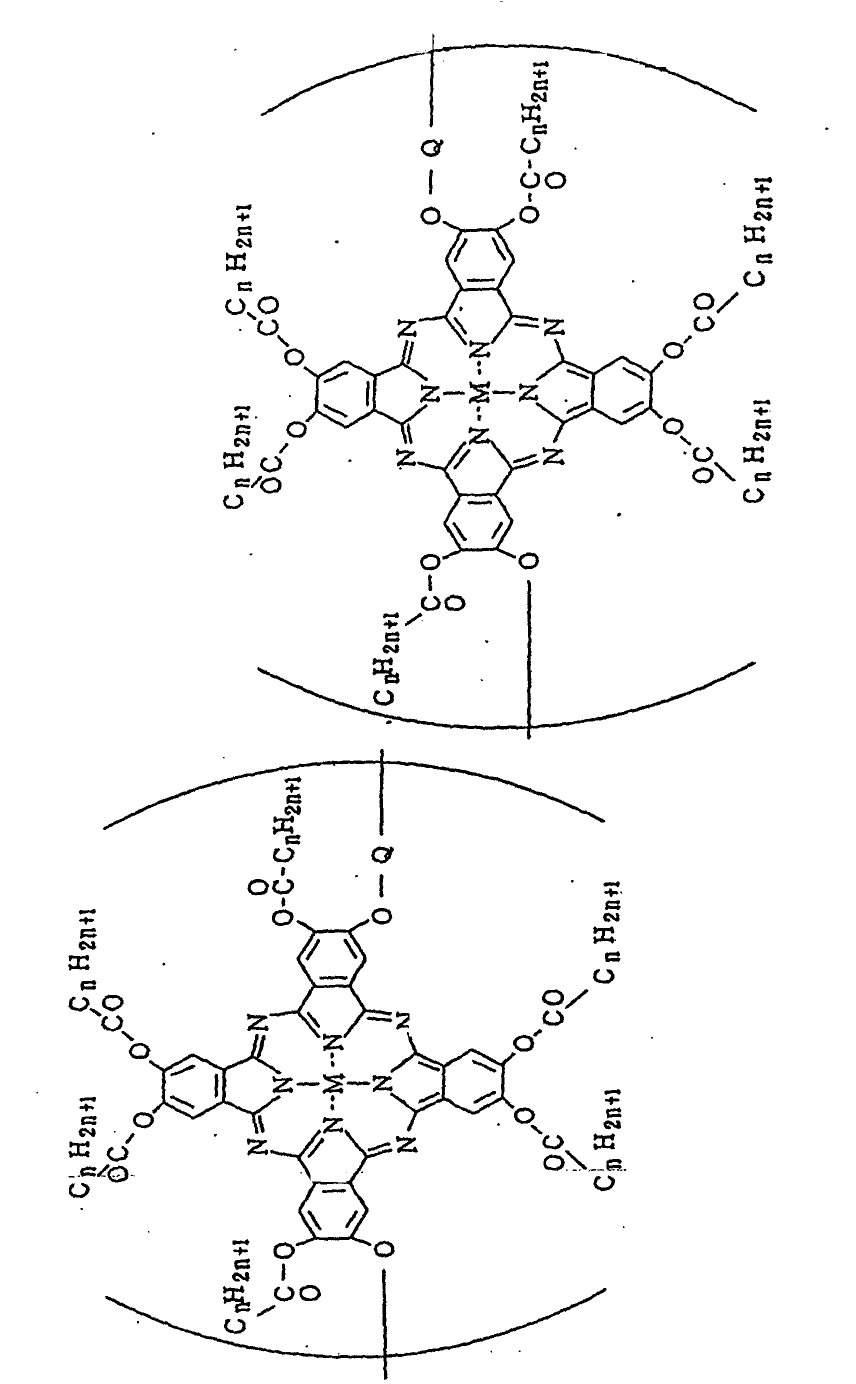 wherein M is two protons Mg, Fe, Co, Ni, Mn, Zn, Cu, Pb, Pd, Cd, Rh or Ru, preferably two protons Fe, Co, Ni, Zn or Cu. n is an integer of 3-18, preferably 5-14, and the average molecular weight is 8,000 - 100.000.

Q is the following: 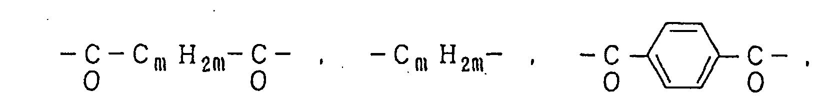 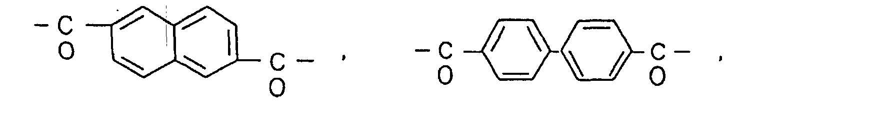 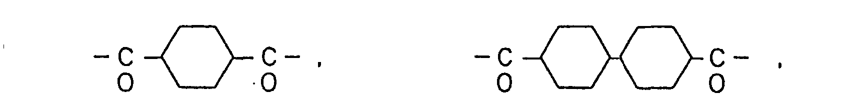 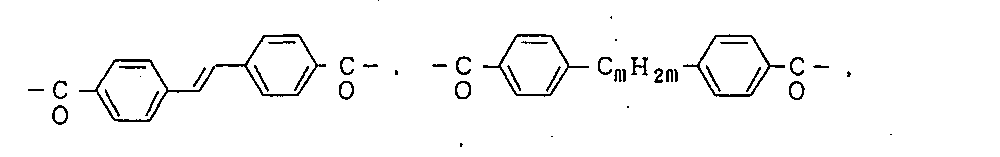 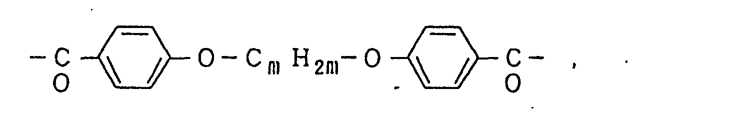 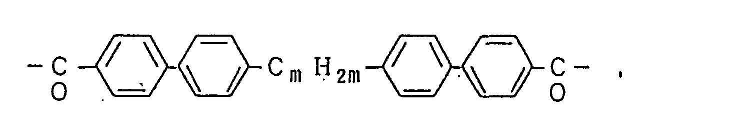 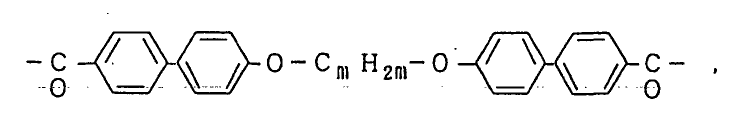 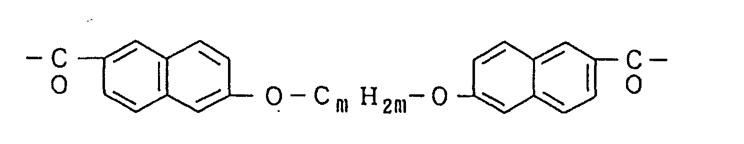 etc.
wherein m is an integer of 2-18.

Preferable Q: 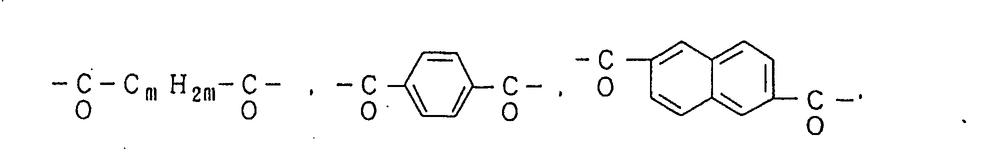 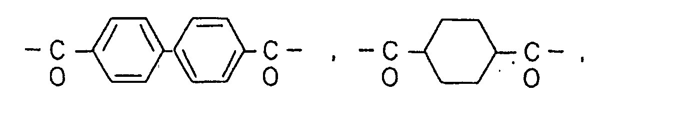 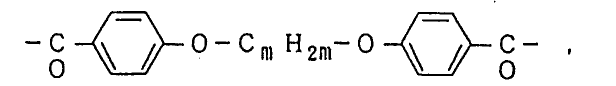 etc.
wherein m is an integer of 2-16, preferably 4-12. 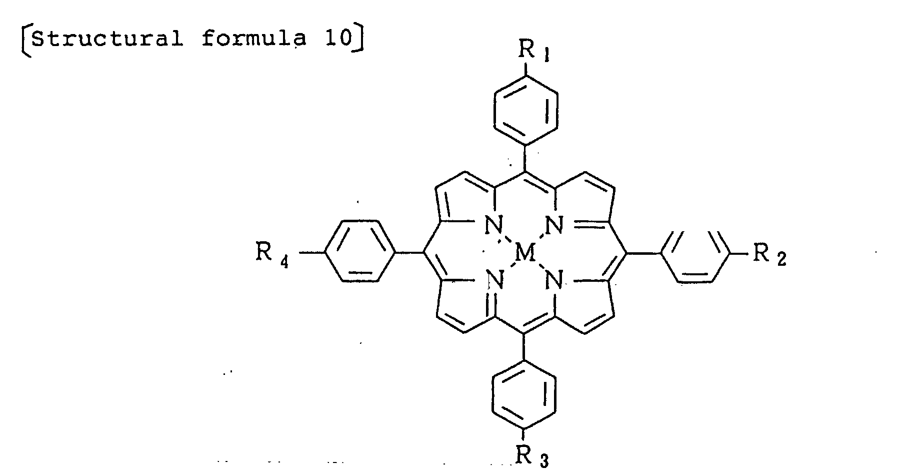 wherein R₁-R₄ are each independently a substituent group selected from the following groups, wherein M is two protons or a metal such as Mg, Fe, Co, Ni, Mn, Zn, Cu, Pb, Pd, Cd, Rh or Ru.

Mono functional substituent groups:

-CₙH₂ₙ₊₁,

-O-CₙH₂ₙ₊₁,

-S-CₙH₂ₙ₊₁,

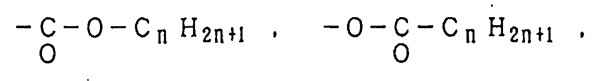

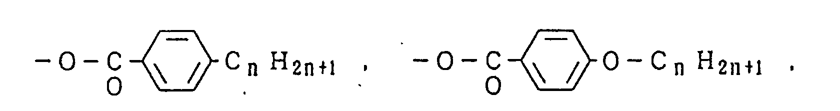

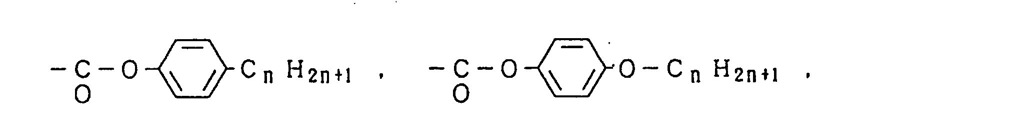

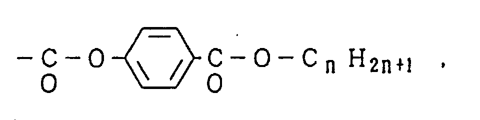

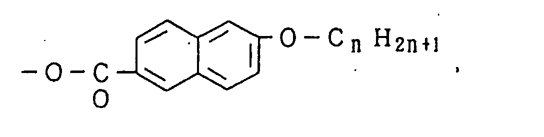

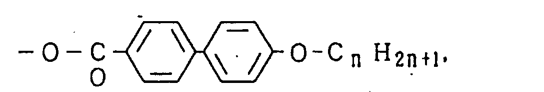

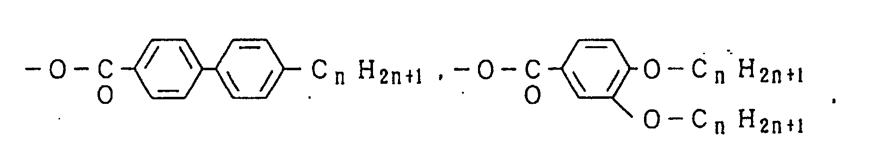

wherein CₙH₂ₙ₊₁ is a linear or branched alkyl group, and n is an integer of 3-18, preferably 5-14.

Bifunctional substituent groups: 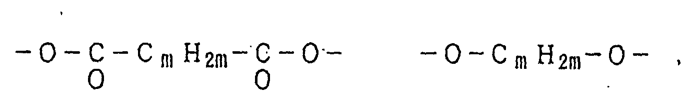 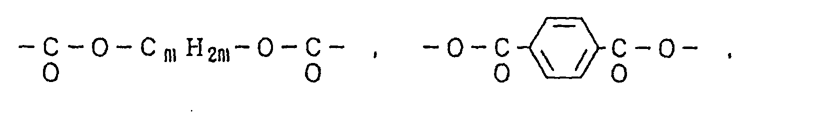 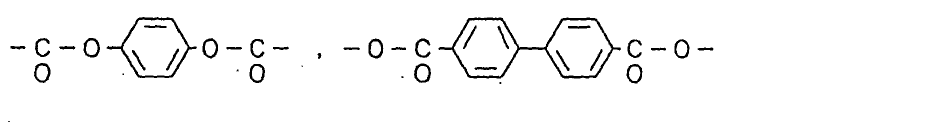 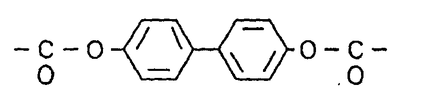 etc.
wherein CₘH₂ₘ is a linear or branched alkylene chain, and m is an integer of 2-16, preferably 4-12. 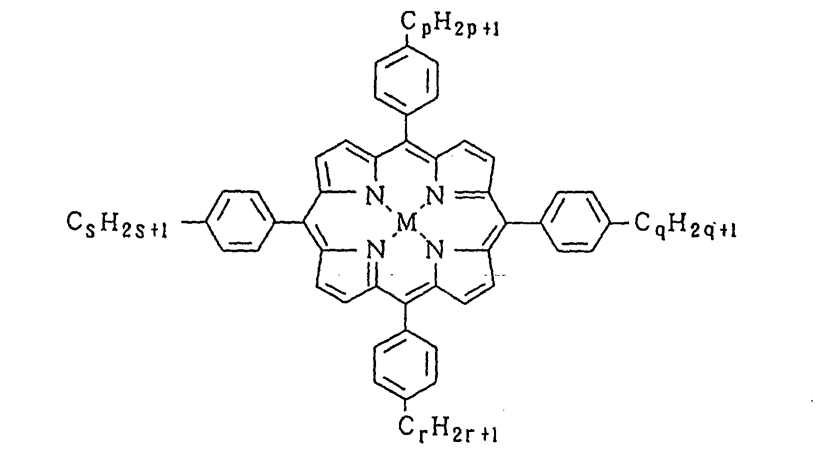 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14. 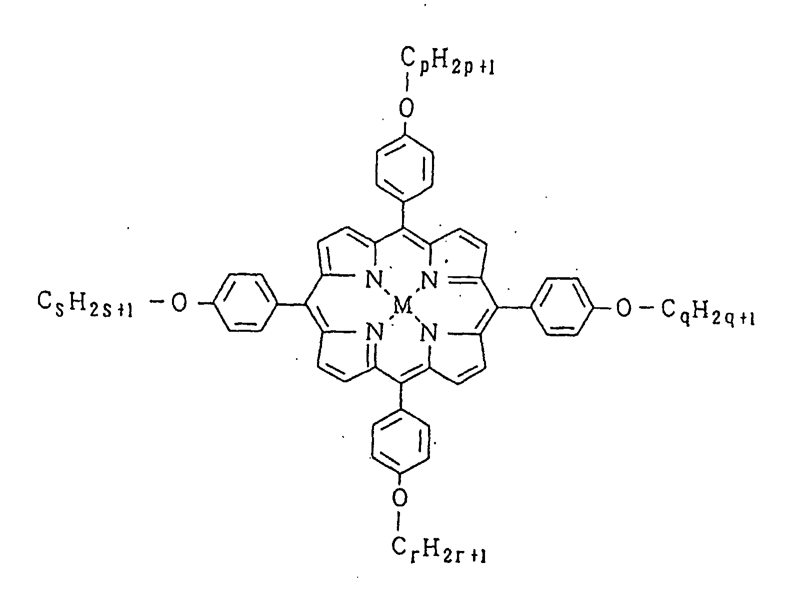 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14. 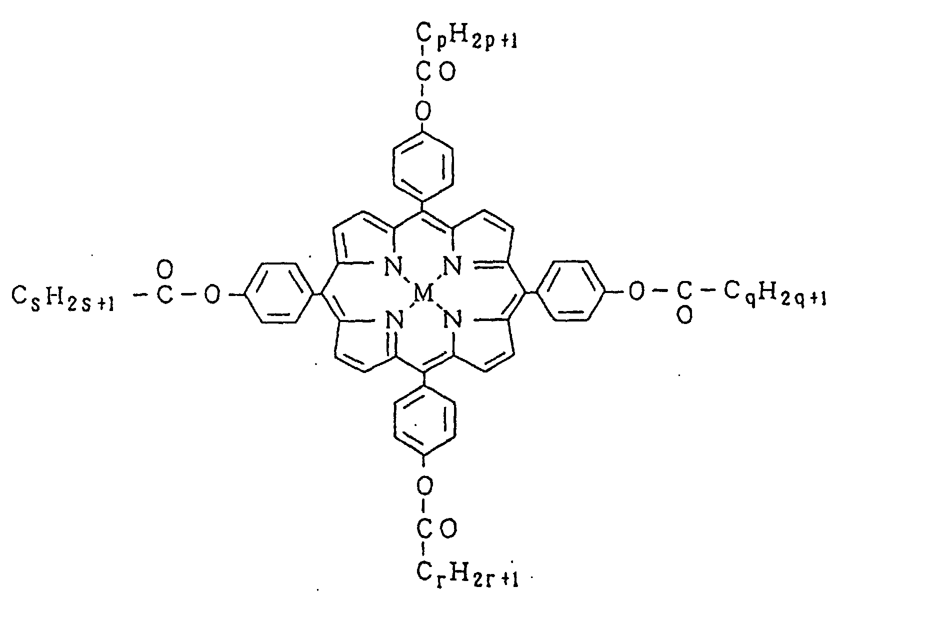 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14. 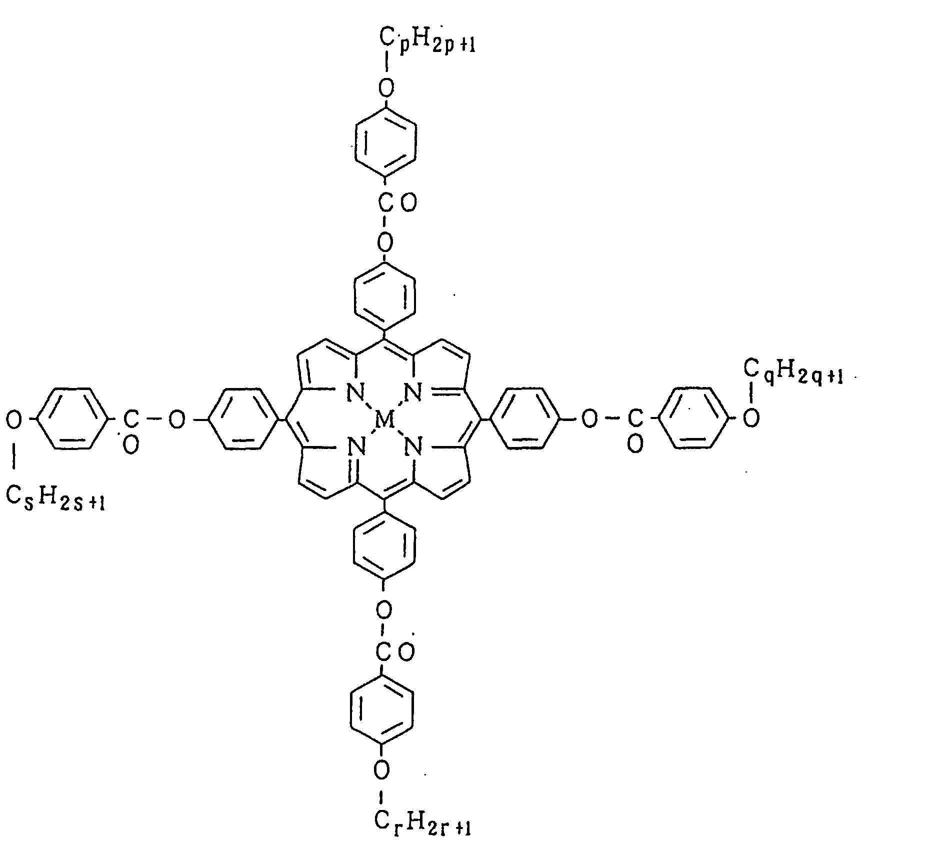 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14. 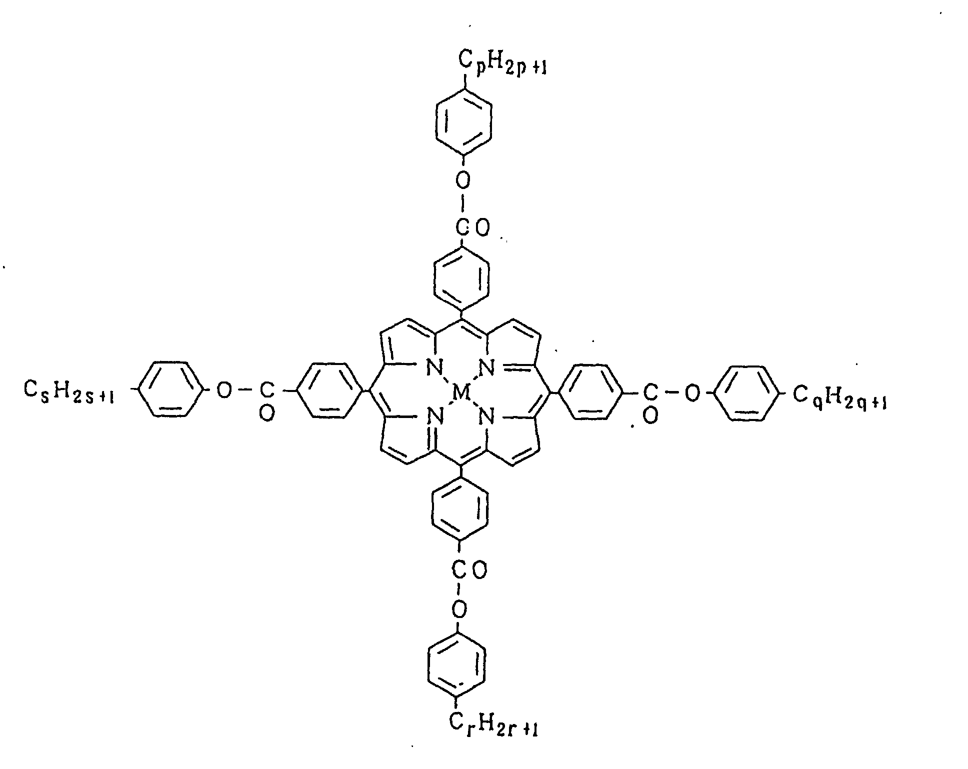 wherein M is two protons Mg, Fe, Co, Ni, Mn, Zn, Cu, Pb, Pd, Cd, Rh or Ru, preferably two protons Fe, Co, Ni, Zn or Cu. p, q, r and s are each an integer of 3-18, preferably 5-14.

Also, polymers such as polyacrylates or polysiloxanes having a compound having the above mentioned structural formula at the side chain are preferably used.

Examples thereof are as follows: 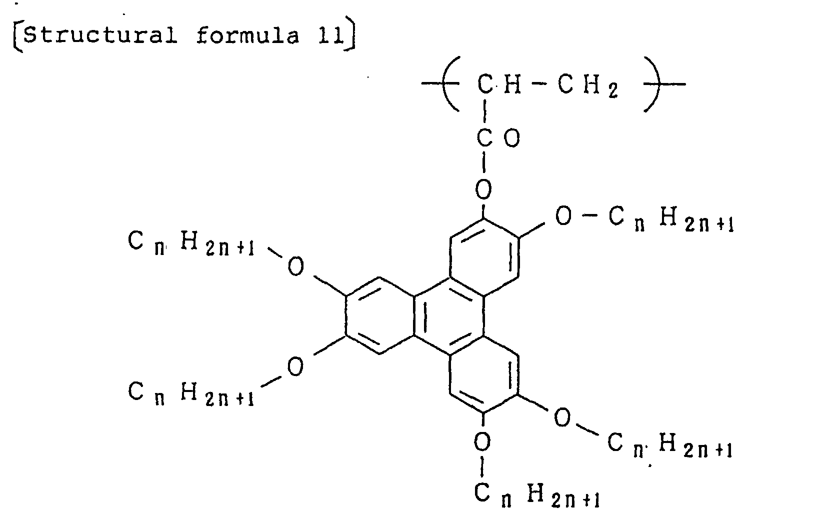 wherein n is an integer of 1-18, preferably 3-14. 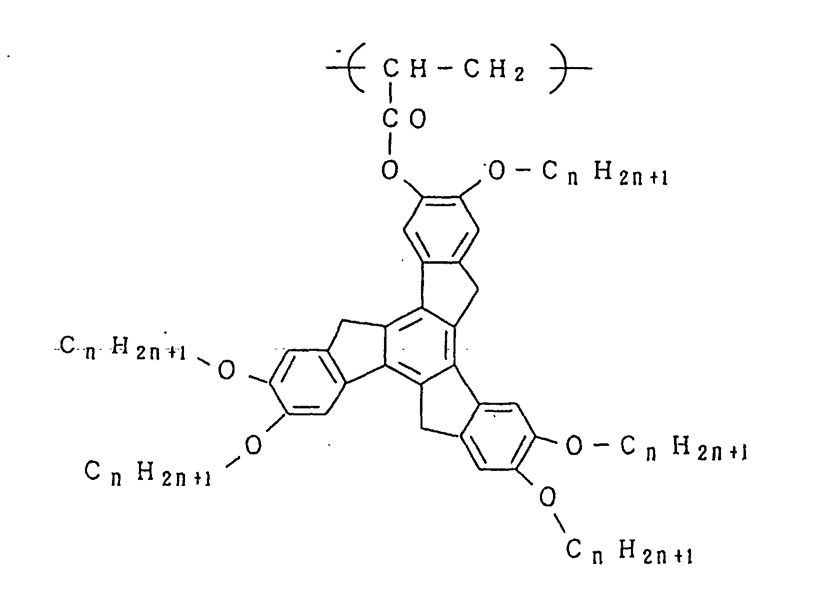 wherein n is an integer of 1-18, preferably 3-14. 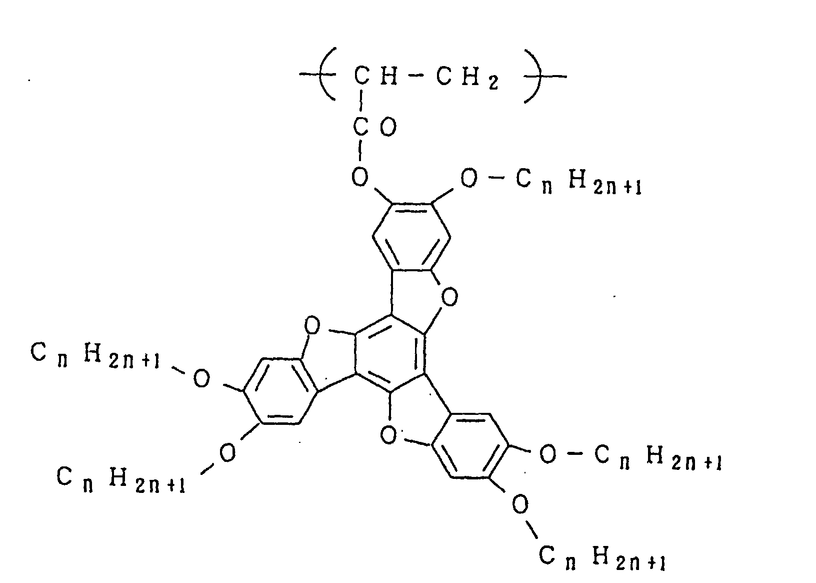 wherein n is an integer of 1-18, preferably 3-14. 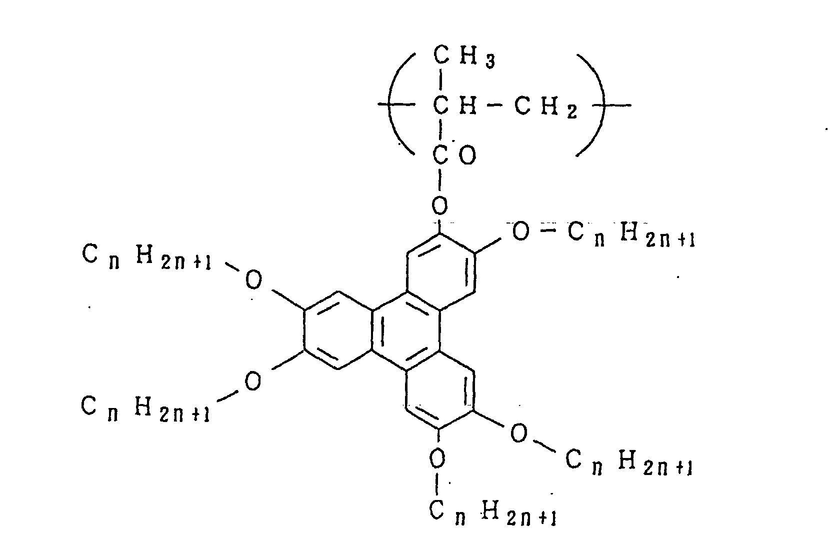 wherein n is an integer of 1-18, preferably 3-14. 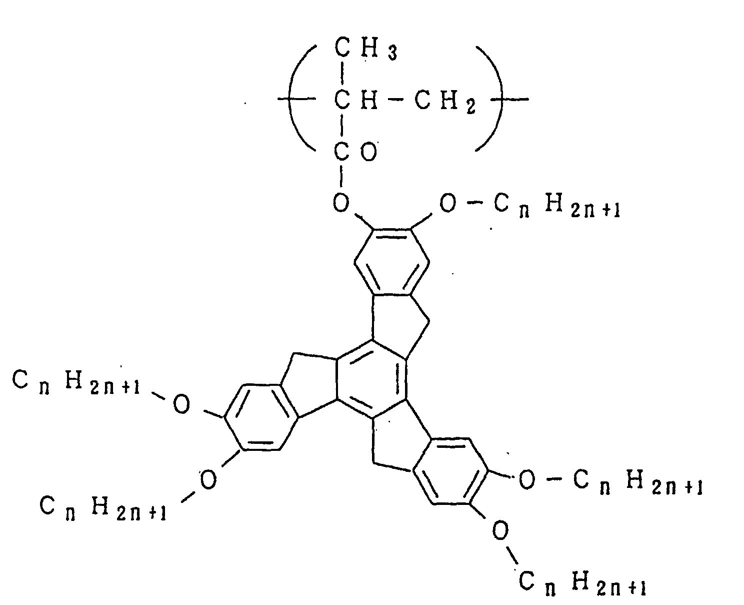 wherein n is an integer of 1-18, preferably 3-14. 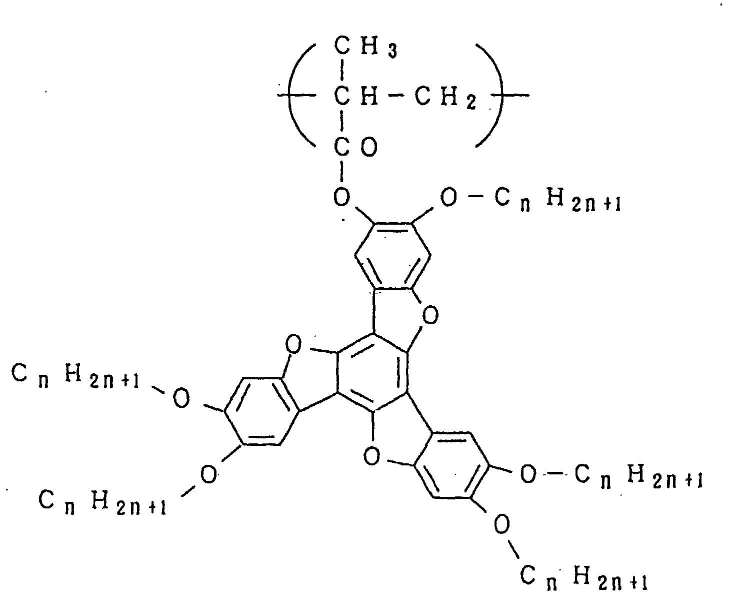 wherein n is an integer of 1-18, preferably 3-14. 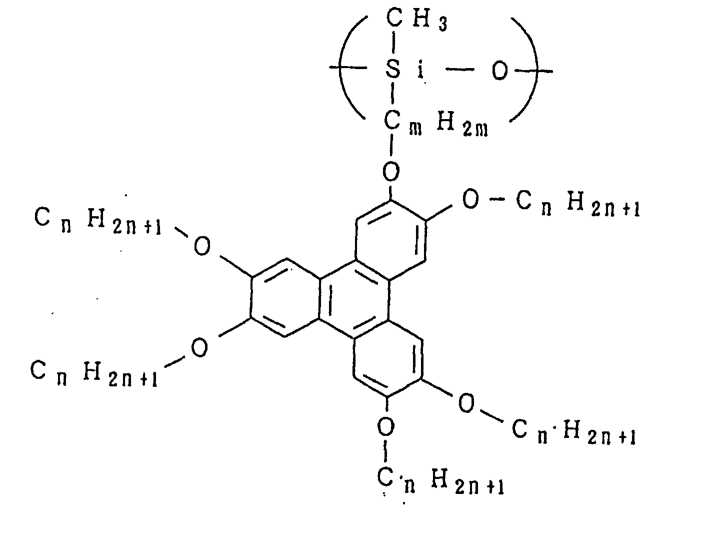 wherein n is an integer of 1-18, preferably 3-14, m is an integer of 2-16, preferably 4-12. 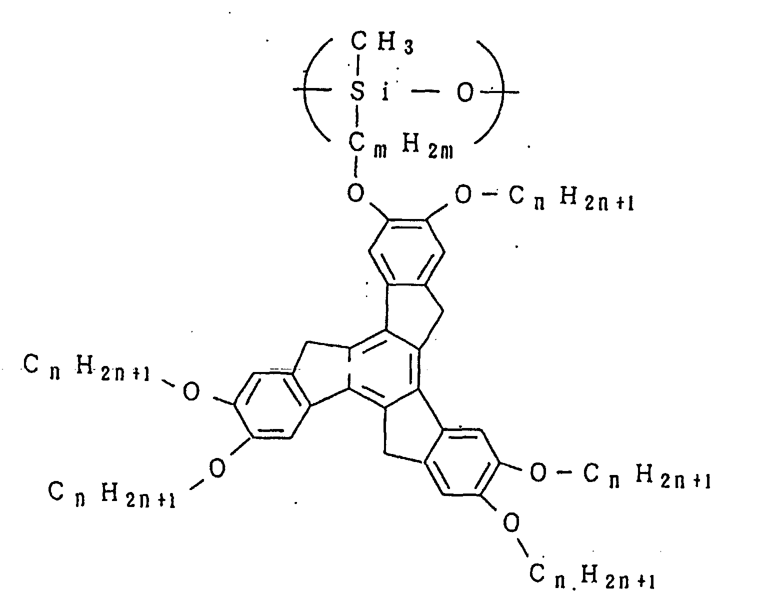 wherein n is an integer of 1-18, preferably 3-14, m is an integer of 2-16, preferably 4-12. 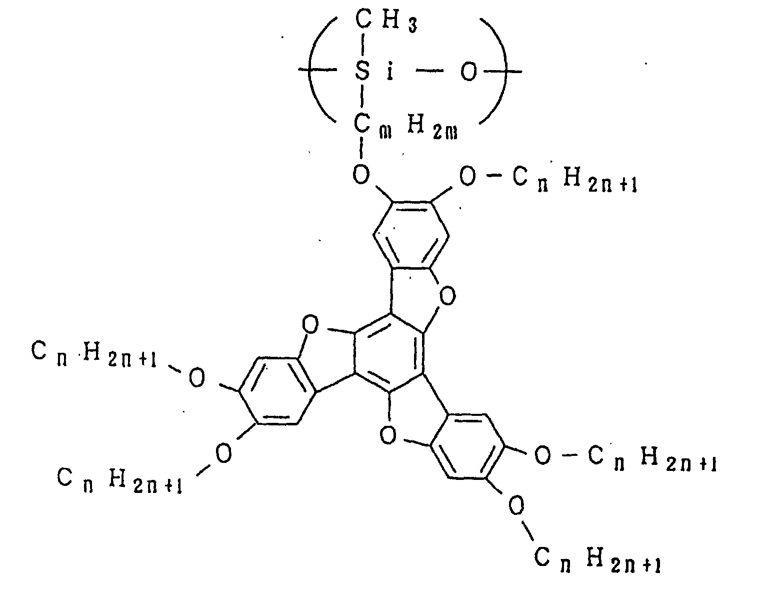 wherein n is an integer of 1-18, preferably 3-14, m is an integer of 2-16, preferably 4-12. 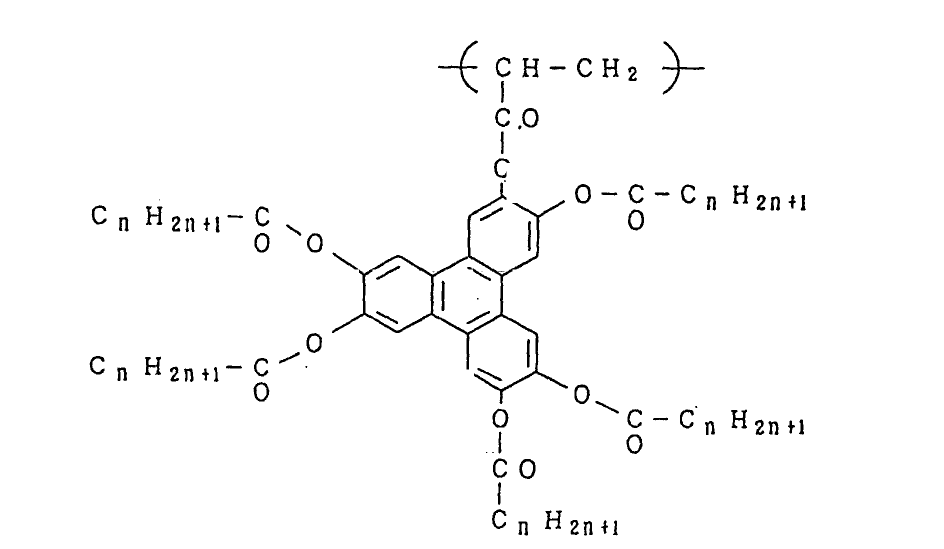 wherein n is an integer of 1-18, preferably 3-14. 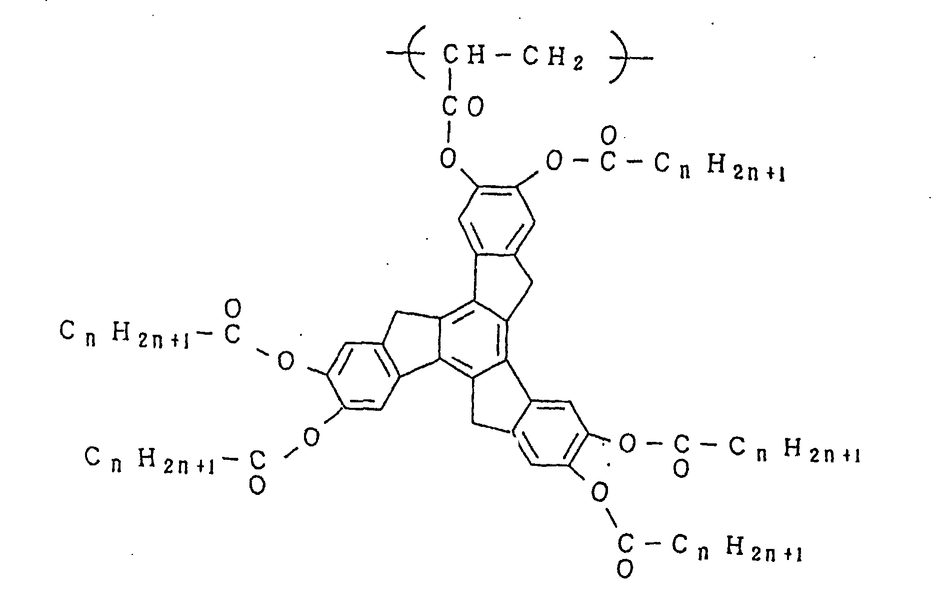 wherein n is an integer of 1-18, preferably 3-14. 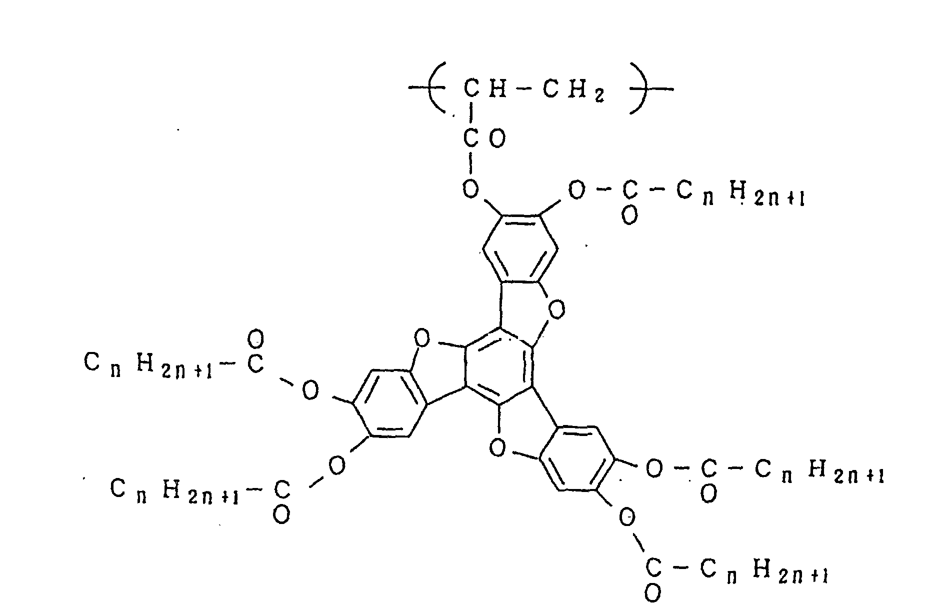 wherein n is an integer of 1-18, preferably 3-14. 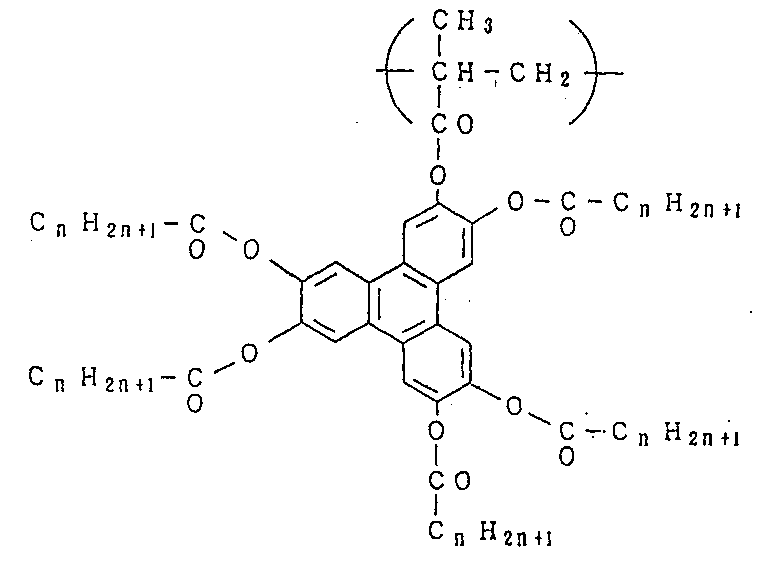 wherein n is an integer of 1-18, preferably 3-14. 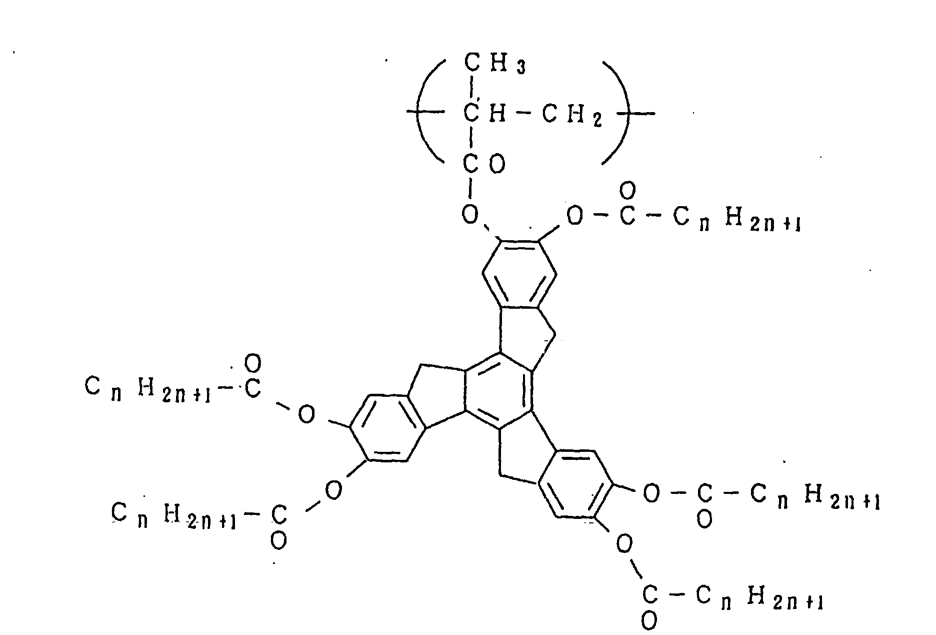 wherein n is an integer of 1-18, preferably 3-14. 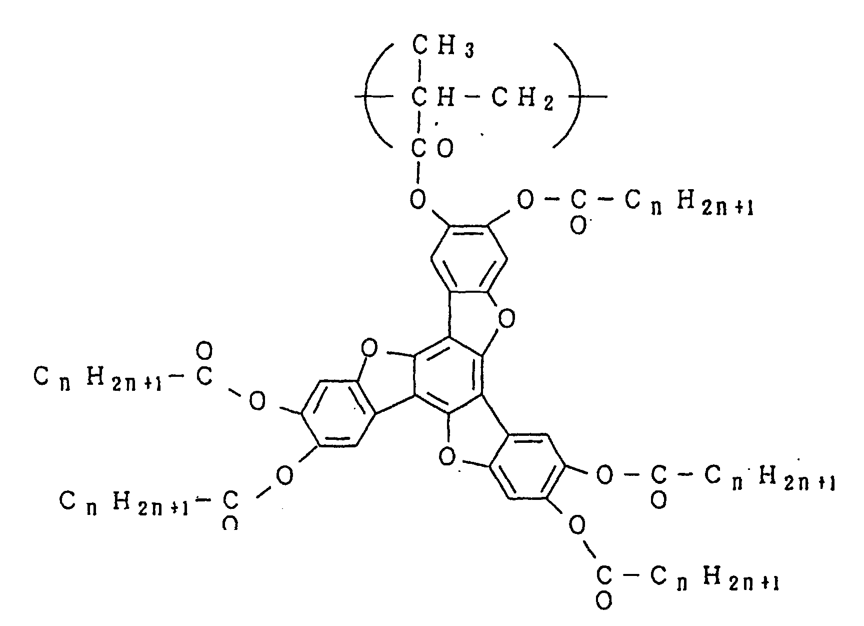 wherein n is an integer of 1-18, preferably 3-14. 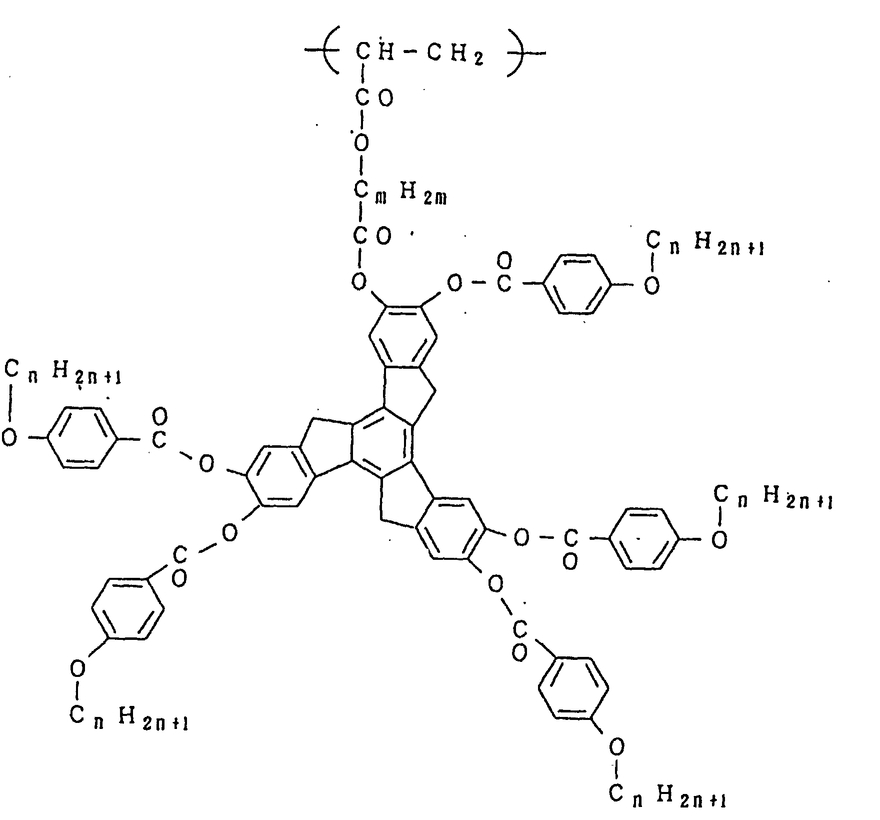 wherein n is an integer of 1-18, preferably 3-14. m is an integer of 2-16, preferably 4-12. 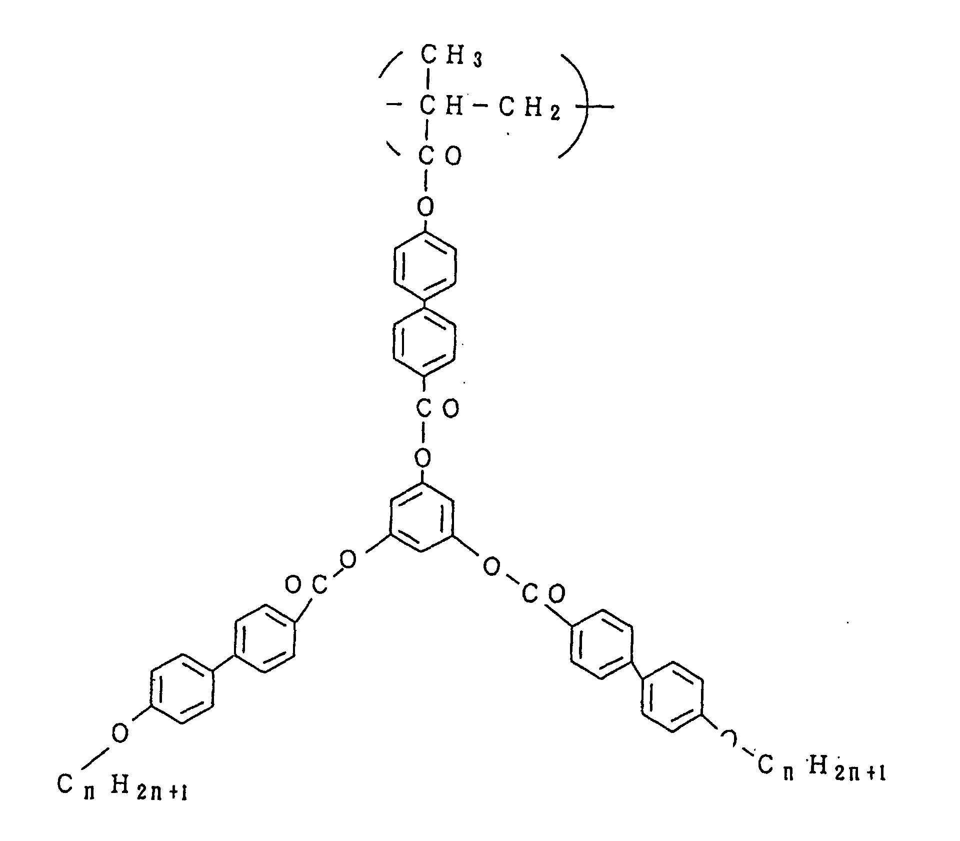 wherein n is an integer of 1-18, preferably 3-14. 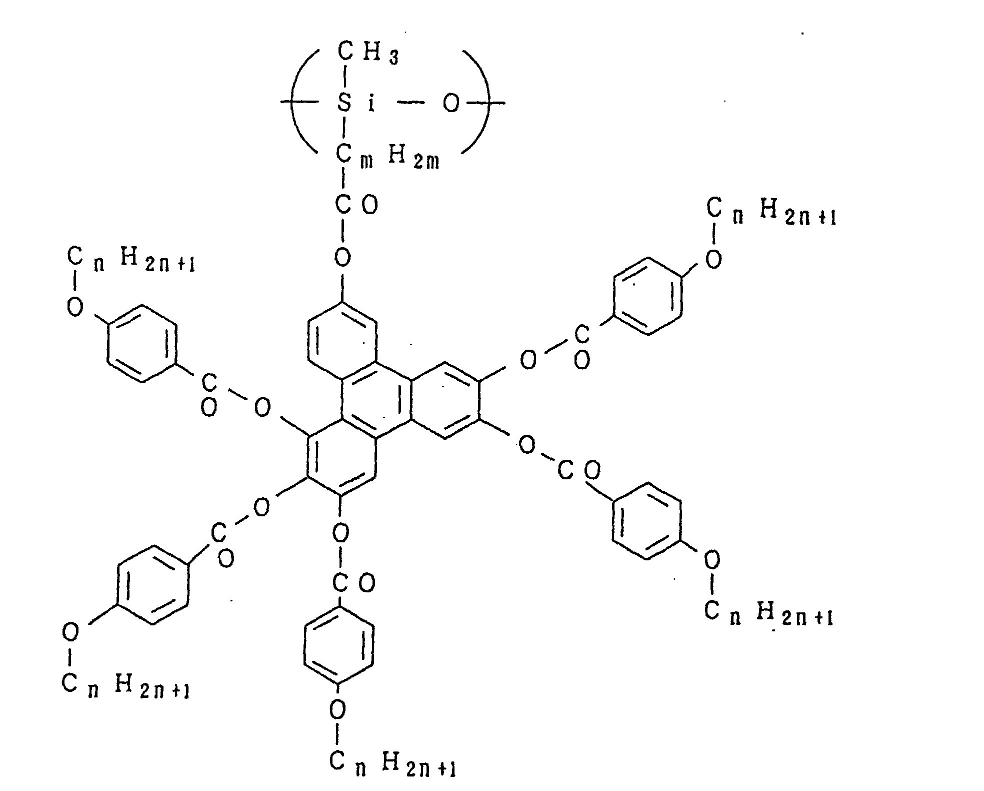 wherein n is an integer of 1-18, preferably 3-14. m is an integer of 2-16, preferably 4-12.

The average molecular weight of the above polymers are 5,000 - 100,000.

The above structural formulas are typical examples of discotic liquid crystalline compounds employable in the invention and there is made no limitation thereto. Discotic liquid crystalline compounds of any structure may each be used alone or in the form of a composition in so far as they possess any of the foregoing properties.

As the discotic liquid crystalline material, in order to avoid transition from liquid crystal phase to crystal phase, there is used a compound wherein all of plural substituent groups attached to the mesogen are not the same. Concerning a compound wherein all of the substituent groups are the same, it is desirable to use the compound as a composition with at least one another compound different (in mesogen and/or substituent groups) from the compound.

Most of discotic liquid crystalline compounds contain many ether linkages or ester linkages in the molecule. Known reaction methods are adoptable for the formation of those linkages. For example, for the formation of ether linkages, there may be adopted the Williamson method involving a nucleophilic substitution reaction of alkoxide ion with a primary alkyl halide. For the formation of ester linkages there may be used, for example, an acid chloride method involving reaction of an acid chloride with an alcohol, or a deacetylation reaction which is the reaction of an acetylated compound of alcohol with an carboxylic acid. There is no special limitation. Each discotic liquid crystalline compound employable in the present invention is not required to undergo a reaction control such as selecting a substituent group at each substitution site of a discogen constituting compound. For this reason, for example, though a concrete description of a structural formula is difficult, it is possible to react in a single reaction system the discogen constituting compound with compounds capable of becoming a variety of substituent groups in a larger number than the number of substitution sites of the discotic liquid crystalline compound to afford a discotic liquid-crystalline compound or a composition containing the said compound. In this case, it is possible that a certain substituent group will not be bound in the molecule of a certain discogen constituting compound but be bound in the molecule of another compound. In the present invention, since the transition from liquid crystal phase to crystal phase is not desirable, the use of such various kinds of substituent groups as mentioned above is preferred, in lowering the symmetricity of the molecular structure.

For obtaining a liquid crystalline optical film with a uniformly fixed hybrid orientation, using the above discotic liquid crystalline material, it is desirable in the invention to use a substrate which will be described below and to go through the following steps.

Reference will be made first to the substrate (hereinafter referred to as "alignment substrate").

In order to obtain the hybrid orientation in the present invention, it is preferred that the layer of the discotic liquid crystalline material be sandwiched in between different upper and lower interfaces. If the layer is sandwiched in between the same upper and lower interfaces, the orientation at the upper interface of the layer and that at the lower interface of the layer will be the same, thus making it difficult to obtain the hybrid orientation.

According to a concrete embodiment, an alignment substrate and an air interface are utilized and the lower surface of the discotic liquid crystalline layer is brought into contact with the alignment substrate, while the upper surface thereof is contacted with the air. It is also possible to use upper and lower substrates of different substrates, but in point of manufacturing process it is preferable to use a single alignment substrate and an air interface.

The alignment substrate employable in the present invention preferably has anisotropy so that the tilting direction of liquid crystal (projection of director to the alignment substrate) can be defined. If the alignment substrate used cannot define the tilting direction of liquid crystal, there will be obtained only a disorderly tilted structure (disordered vectors of projected director to the substrate).

As the alignment substrate employable in the present invention, one having anisotropy in a plane is preferred. Examples are film substrates of plastics such as polyimides, polyamide-imides, polyamides, polyether ketones, polyketone sulfides, polyether sulfon, polysulfon, polyphenylene sulfides, polyphenylene oxides, polyethylene terephthalates, polybutylene terephthalates, polyethylene naphthalates, polyacetals, polycarbonates, polyarylates, acrylic resins, polyvinyl alcohols, polypropylenes, cellulosic plastics, epoxy resins, and phenolic resins, uniaxially stretched film substrates thereof, metallic substrates such as aluminum, iron, and copper substrates with slits formed in the surfaces thereof, and glass substrates such as alkali glass, borosilicate glass and flint glass substrates having etched slits in the surfaces thereof.

The substrates exemplified above may have been subjected to a surface treatments such as a hydrophilicizing or a hydrophobicizing treatment. Also employable are rubbing-treated plastic film substrates obtained by rubbing the plastic film substrates exemplified above, as well as the above-exemplified substrates having rubbing-treated plastic film such as, for example, rubbing-treated polyimide films and rubbing-treated polyvinyl alcohol films. Further employable are the above exemplified substrates having an obliquely vapor-deposited film of silicon oxide.

Among the above various alignment substrates, as examples of those suitable for forming such a hybrid orientation of discotic liquid crystal as in the present invention there are mentioned substrates having a rubbing-treated polyimide film, as well as rubbing-treated polyimide, polyether ether ketone, polyether ketone, polyether sulfone, polyphenylene sulfide, polyethylene terephthalate, polyethylene naphthalate and polyarylate substrates, further, cellulosic plastic substrates.

In the liquid crystalline optical film of the present invention, the angle of the discotic liquid crystal director relative to the film plane is different between the upper surface and the lower surface of the film. At the substrate-side film surface said angle can be adjusted in the range of 60° to 90° or in the range of 0° to 50°. In view of the manufacturing process it is preferable that the angle between the discotic liquid crystal directors in the vicinity of the film interface with the orienting substrate be adjusted in the range of 60° to 90°.

The liquid crystalline optical film of the present invention is obtained by applying the foregoing discotic liquid crystalline material onto the alignment substrate and then going through orienting and fixing steps.

The application of the discotic liquid crystalline material can be effected by using a solution of the discotic liquid crystalline material in various solvents or by using said material in a molten condition. But the former, namely, solution is preferred.

The following description is now provided about the solution application.

A solution containing a predetermined concentration of the discotic liquid crystalline material is prepared by dissolving the same material in a solvent. As the solvent there usually is employed, though depending also on the kind of the discotic liquid crystalline material used, any of halogenated hydrocarbons such as chloroform, dichloromethane, carbon tetrachloride, dichloroethane, tetrachloroethane, trichloroethylene, tetrachloroethylene, chlorobenzene and o-dichlorobenzene, phenols such as phenol and p-chlorophenol, aromatic hydrocarbons such as benzene, toluene, xylene, methoxybenzene and 1,2-dimethoxybenzens, as well as acetone, ethyl acetate, t-butyl alcohol, glycerol, ethylene glycol, triethylene glycol, ethylene glycol monomethyl ether, diethylene glycol dimethyl ether, ethyl cellosolve, butyl cellosolve, 2-pyrrolidone, N-methyl-2-pyrrolidone, pyridine, triethylamine, dimethylformamide, dimethylacetamide, acetonitrile, butyronitrile, carbon disulfide, and mixture thereof.

The concentration of the solution cannot be said exactly because it depends on the solubility of the discotic liquid crystalline material used and the thickness of the desired liquid crystalline optical film, but usually it is in the range of 1 to 60 wt%, preferably 3 to 40 wt%.

The solution of the discotic liquid crystalline material thus prepared is then applied onto the alignment substrate described above, for example by spin coating method, roll coating method, or printing method, dipping/pulling-up method die coating method.

Thereafter, the solvent is removed, allowing a layer of the discotic liquid crystalline material having a uniform thickness to be formed on the substrate. Conditions for removing the solvent are not specially limited if only the solvent can mostly be removed and the material layer does not flow or drop. Usually the solvent is removed by air-drying at room temperature, drying on a hot plate, drying in a drying oven, or the spray of warm or hot air.

This solution applying and drying step intends to form a layer of the discotic liquid crystalline material having a uniform thickness on the substrate, in which stage the liquid crystalline material layer does not form a hybrid orientation yet. For forming a hybrid orientation it is desirable in the present invention to perform the following heat treatment.

The heat treatment is conducted at a temperature of not lower than the liquid crystal transition point of the discotic liquid crystalline material. More specifically, orientation is allowed to take place in the state of liquid crystal of the material. Alternatively, the material is once brought into an isotropic liquid state at a temperature higher than the temperature range in which liquid crystal phase is presented, and thereafter the temperature is dropped to the temperature range.

The heat treatment temperature is usually in the range of 50°C to 300°C, preferably 100°C to 250°C.

As to the time required for satisfactory orientation of liquid crystal, it cannot be said exactly because it differs depending on the kind of discotic liquid crystalline material used. But said time is usually in the range of 5 seconds to 2 hours, preferably 10 seconds to 40 minutes, more preferably 20 seconds to 20 minutes. If the time is shorter than 5 seconds, it is likely that the temperature of the discotic liquid crystalline material layer will not rise up to the predetermined level, resulting in an unsatisfactory orientation. A longer time than 2 hours is not desirable because of productivity.

Through the above steps it is possible to form a hybrid orientation in the liquid crystal.

In the above heat treatment step there may be used a magnetic or electric field for orienting the discotic liquid crystalline material. However, if a magnetic or electric field is applied while heat treatment is performed, a uniform field force acts on the liquid crystalline material layer, so that the liquid crystal layers orient in a certain direction and hence it becomes difficult to obtain the hybrid orientation intended in the invention in which the orientation of the director changes in the film thickness direction. If the field force is removed after an orientation other than the hybrid orientation is formed, e.g. homeotropic orientation or tilt orientation, it is possible to obtain a thermally stable hybrid orientation. However, this brings about no special merits in the manufacturing process.

The hybrid orientation in the state of liquid crystal thus obtained is then cooled, whereby the orientation form is fixed, thus giving the liquid crystalline optical film of the present invention.

Generally, in the case where a crystalline phase appears in the course of cooling, the orientation in the state of liquid crystal is destroyed by crystallization. In contrast therewith, the discotic liquid crystalline material used in the present invention does not have any crystalline phase, or even when it has a crystalline phase latently, the crystal phase does not appear during cooling, or although a clear crystal transition point or liquid crystal transition point is not confirmed, the material does not exhibit fluidity in the working temperature range of the film nor does its orientation form change even under the application of an external field or force. Since the liquid crystalline material used possesses such a property, the orientation form is not destroyed by crystallization.

The liquid crystalline optical film of the present invention can be suitably obtained by cooling it not to the liquid crystal phase transition point of the discotic liquid crystalline material. For cooling, it suffices to take out the discotic liquid crystalline material from the heat treatment atmosphere into the atmosphere of room temperature, whereby the discotic liquid crystal can be fixed uniformly. Moreover, forced cooling such as air cooling or water cooling, or slow cooling, may be performed, and no limitation is placed on the cooling speed.

In the hybrid orientation obtained according to the present invention, the angle in the film thickness direction is set in such a manner that the absolute value of the angle between the film director and the film plane is in the range of 60° to 90° at one of the vicinities of the upper and lower interfaces of the film, while at the opposite surface in the range of 0° to 50°, the angle can be set to a desired value by suitably selecting the discotic liquid crystalline material or the orienting substrate to be used. Moreover, even after formation of the film, adjustment to desired angles can be made by scraping the film surface uniformly or dissolving the film surface uniformly in a solvent. The solvent to be used is suitably selected according to the kind of discotic liquid crystalline material used and of alignment substrate used.

The liquid crystalline optical film of the present invention obtained by the above steps can exhibit various properties according to alignment because the hybrid orientation which cannot be obtained by conventional discotic liquid crystal is uniformly formed and stabilized, and the upper and lower parts of the film are not equal due to such an orientation form, and anisotropy exists in the in-plane direction.

When the liquid crystalline optical film of the present invention is used for an optical element, for example, when this film is arranged in a liquid crystal cell as a compensating film, the above-mentioned alignment substrate is peeled from the optical film so that the liquid crystalline optical film is used alone, the liquid crystalline optical film is used as formed on the alignment substrate, or the liquid crystalline optical film is laminated to another substrate different from the alignment film so as to be used.

When the liquid crystalline optical film is used alone, the alignment substrate is peeled from the liquid crystalline optical film at the interface, for example by a peeling method using rolls, a method involving dipping in a poor solvent which is poor for all of the constituent materials and subsequent mechanical peeling, a peeling method using an ultrasonic wave in a poor solvent, a peeling method which utilizes a temperature change based on the difference in thermal expansion coefficient between the alignment substrate and the film, or a method of dissolving off the alignment substrate or an alignment film formed on the alignment substrate. Since the peelability differs depending on the adherence between the discotic liquid crystalline material used and the alignment substrate used, there should be adopted a method most suitable for the system used.

Next, in the case of using the liquid crystalline optical film as formed on the alignment substrate, if the alignment substrate is transparent and optically isotropic, or if the alignment substrate is opaque or optically anisotropic, the liquid crystalline film formed on the alignment substrate may be used as a compensating element.

For example, in the case of using an opaque substrate such as a metallic thin film, it can be used for an application utilizing reflection property.

The liquid crystalline optical film of the present invention obtained by orientation-fixing the discotic liquid crystalline material on the alignment substrate may be peeled from the substrate, then laminated to another substrate more suitable for an optical use, and the resulting laminate constituted at least by both the liquid crystalline optical film and another substrate different from the alignment substrate may be used as an optical element, that is a compensating element.

For example, in the case where the alignment substrate used is necessary for obtaining the hybrid orientation form but exerts an undesirable influence on an liquid crystal display, the substrate may be removed from the liquid crystalline optical film after fixing the orientation form. More specifically, there may be adopted the following method.

A substrate (hereinafter, referred to as the "second substrate") suitable for a liquid crystal display element to be incorporated in a liquid crystal display and the liquid crystalline optical film on the alignment substrate are fixed together using an adhesive or a pressure-sensitive adhesive. Next, the alignment substrate and the liquid crystalline optical film are peeled from each other and the liquid crystalline optical film is transferred onto a side of the second substrate suitable for a liquid crystal display, whereby a compensating element can be produced.

The second substrate to be used for the transfer is not particularly limited if it has a moderate flatness. For example, in the case of a transparent optical element, a glass substrate or a transparent plastic film having optical isotropy are preferred. As examples of such a plastic film there are mentioned films of polymethacrylates, polystyrenes, polycarbonates, polyether sulfones, polyphenylene sulfides, polyarylates, amorphous polyolefins, triacetyl cellulose, and epoxy resins. Particularly preferred are films of polymethyl methacrylates, polycarbonates, polyarylates, triacetyl cellulose, and polyether sulfones. Even an optically anisotropic film may be used as it is if it can be used suitably for a desired optical element. Examples of such an optically anisotropic film includes retardation films such as a stretched polyethylene terephthalate film or polycarbonate.

A further examples of the transparent second substrate is a polarizing sheet. The polarizing sheet is an optical element necessary for a liquid crystal display. It is very preferable that the polarizing sheet is used as a substrate, because a new optical element can be obtained by laminating the liquid crystalline optical film of the present invention to the polarizing sheet.

A further example of the second substrate used may be made of a liquid crystal driving cell itself. The liquid crystal cell employs two upper and lower glass substrates each provided with an electrode. By transferring the liquid crystalline optical film of the present invention onto one or both of the upper and lower glass substrates, the glass itself of the cell becomes the desired supporting substrate for the optical film. Of course, by using the glass substrates forming the display cell as the alignment substrates, the liquid crystalline optical film of the present invention can be prepared.

Meanwhile, in the case where the liquid crystalline optical film of the present invention is used for a reflecting optical element, examples of the substrate used for the transfer are a transparent and opaque glass plate, a plastic film or a metallic plate. Such a metallic plate includes copper, stainles steel and aluminum.

It is not necessary that the second substrate described above essentially has an anchoring effect on the discotic liquid crystal. Moreover, it is not necessary to provide an alignment film between the second substrate and the liquid crystalline optical film.

The adhesive or pressure-sensitive adhesive for affixing the second substrate for transfer and the liquid crystalline optical film of the present invention is not specially limited insofar as it is of an optical grade. For example, there may be used an adhesive or pressure-sensitive adhesive prepared from acrylic resin, epoxy resin, ethylene-vinyl acetate copolymer, rubber, urethane resin, or a mixture thereof. The adhesive may be a thermosetting type, photocuring type or electron beam curing type, provided it is necessary for the adhesive to possess optical isotropy.

The transfer onto the second substrate which is suitable for the optical element made of the liquid crystalline optical film of the present invention is performed by peeling the alignment substrate from the optical film after adhesion. As mentioned above, examples of peeling methods are a peeling method using rolls, a method involving dipping in a poor solvent which is poor for all of the constituent materials and subsequent mechanical peeling, a peeling method using an ultrasonic wave in a poor solvent, a peeling method which utilizes a temperature change based on the difference in thermal expansion coefficient between the alignment substrate and the film, or a method of dissolving off the alignment substrate or an alignment film formed on the alignment substrate. Since the peelability differs depending on the adherence between the discotic liquid crystalline material used and the alignment substrate used, there should be adopted a method most suitable for the system used.

By the transfer onto the second substrate described above it is possible to obtain an optical element, that is, a compensating element wherein the angle between the discotic liquid crystal directors located near the film interface on the substrate side and the film plane is usually in the range of 0° to 50°.

On the surface of the liquid crystalline optical film of the present invention there may be disposed a protective film such as a transparent plastic film for surface protection.

The liquid crystalline optical film of the present invention is obtained by fixing the orientation form so as to form a hybrid orientation which cannot be obtained by conventional discotic liquid crystal. The liquid crystalline optical film exhibits a peculiar optical effect for light, and thus it may be used for various optical applications including an optical element. Therefore, the liquid crystalline optical film has great industrial value.

The following describes the case where the liquid crystalline optical film of the present invention is used as a compensating film for a liquid crystal display element (hereinafter referred to as "compensating film").

The compensating film of the present invention obtained as mentioned above shows a viewing angle compensation effect (viewing angle improvement effect) for a liquid crystal display having optical anisotropy. The type of the liquid crystal displays is not specially limited, but concrete examples of display are displays utilizing twisted nematic liquid crystal orientation such as a TN (twisted nematic) liquid crystal display and an STN (super twisted nematic) liquid crystal display, a super homeotropic liquid crystal display (J.F. Clerc, M. Aizawa, S. Yamauchi, J. Duchene: JAPAN DISPLAY 89 P. 188 (1898)), an OCB (optically compensated birefringence) mode liquid crystal display, an ECB (electrically controlled birefringence) mode liquid crystal display, a macromolecular dispersion liquid crystal display, a guest-host mode liquid crystal display and an anti-ferroelectric liquid crystal display. A display system includes a direct-view-type display system, a projection-type display system and a reflection-type display system.

A liquid crystal displays in which the compensating film of the present invention shows the viewing angle compensation effect most remarkably is a TN liquid crystal display which is driven by a normally-white mode. The TN liquid crystal display is classified according the driving method into a simple matrix method and an active-matrix method using a TFT (thin film transistor) electrode or a MIM (metal insulator metal) electrode. In the present invention, a difference in driving method is not essencial, and the orientation form of the liquid crystal in a liquid crystal driving cell (hereinafter referred to "liquid crystal cell") determines the viewing angle property of a liquid crystal display. The liquid crystal cell here is a TN liquid crystal cell, and the twist angle of the liquid crystal cell is in the range of 70° to 110°. The most general TN liquid crystal display employs a liquid crystal cell having the twist angle of about 90°. A retardation value at the time of not applying a voltage to the liquid crystal cell is usually in the range of 200 nm to 1200 nm, and preferably 400 nm to 600 nm. The retardation value of approximately 490 nm is used most widely. Transmission axes of the upper and lower polarizing sheets sandwiching the liquid crystal cell substantially intersect perpendicularly to each other at the time of driving the liquid crystal display by the normally white mode driving. Namely, the angle of the transmission axes of the two polarizing sheets is usually 90° ± 20°, preferably 90° ± 10°, particularly preferably 90°.

In addition, the TN liquid crystal display employs two modes according to the orientation restricting direction of the liquid crystal cell substrate and the arrangement of the polarizing sheet. One is a birefringence mode in which the orientation restricting direction at the substrate interface of the TN liquid crystal cell and the transmission axial direction of the polarizing plate are not parallel and not perpendicular. The other is a rotatory mode in which the orientation restricting direction and the transmission axial direction of the polarizing plate are parallel or perpendicular. In the birefringence mode, the angle between the orientation restricting direction and the transmission axis of the polarizing plate is usually in the range of 20° to 70°, preferably 35° to 55°, more preferably 40° to 50° when the absolute value of the angle is represented by an acute angle of 0° to 90°. In the rotatory mode, the angle is essentially a multiple of 90°.

The compensating film of the present invention shows the viewing angle compensating effect for a liquid crystal display employing both the birefringence mode and the rotatory mode using the TN liquid crystal cell.

The orientation direction of the TN liquid crystal cell can be restricted usually by forming an organic thin film made of polyimide or polyvinyl alcohol on the surface of the cell substrate and then carrying out a rubbing process.

The pixel dividing method in which a driving electrode is divided, a dual domain method in which a pre-tilt direction of liquid crystal is divided into two directions or into multi-directions, and a multi-domain method which are public knowledge are designed in order to enlarge the viewing angle of a liquid crystal display system on the liquid crystal cell side. By these methods, the compensating film of the present invention works efficiently on a liquid crystal display in which the viewing angle is improved to some degree, and thus it is possible to further enlarge the viewing angle.

The thickness of the compensating film which shows the viewing angle compensating effect for various liquid crystal displays having anisotropy, depends on method, type and optical parameters of an objective liquid crystal display. For this reason, the thickness cannot be determined exactly, but is usually in the rage of 0.1 µm to 100 µm, preferably 0.1 µm to 40 µm, more preferably 0.2 µm to 20 µm, particularly preferably 0.4 µm to 10 µm. If the film thickness is less than 0.1 µm, the satisfactory compensating effect might not be obtained. If the film thickness exceeds 100 µm, the display on a screen might be colored excessively. Thus, this case is not desirable.

In order to efficiently draw out the ability of the compensating film according to the present invention, it is preferable that the parameter and the axial arrangement of the compensating film be considered in detail. The following exemplifies optimization of the parameter and axial arrangement of the compensating film according to the present invention in the case where the TN liquid crystal display employing the normally white mode is used.

In general, optical parameters and physical property values which characterize the constitution of the compensating film are tilt angle of the director, film thickness, apparent in-plane retardation and average tilt angle. The description thereof will be given as follows.

First, it is preferable that the angle between the directors of the discotic liquid crystal and the plane of the compensating film be in the range of 60° to 90° in the vicinity of the upper interface and lower interface of the compensating film, and in the range of 0° to 50° on the other side. If this condition is not satisfied, compensation might not be sufficiently carried out when the refractive index is changed such that the directors of liquid crystal are substantially parallel with the substrate near the substrate interface and substantially perpendicular to the substrate in the center portion of the film thickness direction, which is a characteristic of the refractive index structure at the time of selective display. The angle between the director of the liquid crystal and the plane of the compensating film is more preferably in the range of 70° to 90° in the vicinity of the upper interface and lower interface, and in the range of 0° to 30° on the other side.

It is necessary to control the thickness of the compensating film according to a peculiar birefringence value of the liquid crystal. The peculiar birefringence value (hereinafter referred to as "Δn) is the difference between a refractive index in the perpendicular direction to the director (hereinafter referred to as "no") in the very small area of the discotic liquid crystalline material used for the compensating film and a refractive index in the parallel direction to the directors (hereinafter referred to as "ne") . The refractive indexes can be obtained by utilizing a property such that even if the refractive indexes continuously change, an Abbe refractometer provides information near a measuring interface. Moreover, the refractive indexes can be obtained by measuring a sample which is obtained in such a manner that the discotic liquid crystalline material is sandwiched between two substrates with the same interface and thus the hybrid orientation form is suppressed and the directors point in one direction. An absolute value of the product of the obtained peculiar birefringence value and the absolute film thickness of the compensating film is in the range of 20 nm to 1000 nm, preferably 50 nm to 600 nm, particularly preferably 100 nm to 400 nm. When the absolute value is in this range, the compensating film of the present invention exhibits a sufficient compensating effect. When the absolute value is less than 20 nm, it is likely that the viewing angle property of a liquid crystal display can be hardly changed. Moreover, when the absolute value exceeds 1000 nm, excessive coloring might occur on liquid crystal display. A plurality of the compensating film of the present invention can be used, but in this case, it is preferable that the absolute value of the product of the peculiar birefringence value and the absolute film thickness is in the aforementioned ranges in each compensating film.

Next, the description will be given as to an apparent in-plane retardation value. Since the director of the liquid crystal is not vertical to the film surface generally in the hybrid orientation described in the present invention, when the film is observed from a direction perpendicular to the film surface, birefringence occurs apparently. The direction obtained when the discotic liquid crystal director is projected onto the film plane corresponds to an apparent fast axis, while the in-plane direction perpendicular to the axis corresponds to a slow axis. The apparent retardation value at the front can be easily obtained by polarization optical measurements such as ellipsometry. The apparent retardation value of the compensating film according to the present invention is usually in the range of 5 nm to 500 nm, more preferably 10 nm to 300 nm, particularly preferably 15 nm to 150 nm against a monochromatic light of 550 nm. If the apparent retardation value is less than 5 nm, the compensating effect might be the same as that of a negative uniform uniaxial structure. If the apparent retardation value is larger than 500 nm, excessive coloring of a liquid crystal display might occur when viewed sideways. When a plurality of the compensating films according to the present invention are used, it is preferable that the absolute values of the apparent retardation of the respective films are in the aforementioned ranges.

The following describes an apparent average tilt angle as an optical parameter. The apparent average tilt angle corresponds an average value of the angle between the directors of liquid crystal and a substrate normal line. This average value can be obtained by using the crystal rotation method. The measuring method is as follows.
1) First, the compensating film of the present invention is sandwiched between polarizers intersecting perpendicularly to each other. At this time, this arrangement is such that a projecting vector of the director of the discotic liquid crystal on the film surface and a transmission axis of the polarizers makes an angle of 45°.
2) Next, the compensating film is tilted along the projecting vector of the directors on the film surface, and the transmittance is measured.
3) In average tilt angle is calculated according to a relationship between the tilt angle of the compensating film and the transmittance.

Here, a method of placing only one polarizer on the side which is nearer to the light source than the compensating film, and polarization-analyzing an emitted light so as to obtain an apparent retardation value can be adopted similarly.

However, since the compensating film has the hybrid orientation, this structure is not completely equivalent to that of the negative uniaxial structure in which birefringenge axes are oriented in a constant direction. Namely, the negative uniaxial structure generally has such a tilt angle that the transmittance becomes substantially zero, and this is because the incident light goes along the optic axis of a sample (however, light refraction at the film interface is considered). On the contrary, since the hybrid orientation described in the present invention does not have a uniform optic axis, there exist a tilt angle such that the transmittance becomes zero completely. For this reason, the tilt angle of an uniaxial tilt orientation in which the minimum value or a curved line showing a relationship between the transmittance and the incident angle is nearest to that of the compensating film, is determined as the average tilt angle of the compensating film. The average tilt angle obtained in such a manner is usually in the range of 2° to 60°, preferably 5° to 50°, more preferably 10° to 45°. If the average tilt angle is less than 2°, the compensating effect might be similar to that of the negative uniaxial structure. Moreover, If the average tilt angle exceeds 60°, the average refractive index in the thickness direction becomes larger than that in the in-plane direction, and thus the satisfactory compensating effect might not be obtained. Here, the average tilt angle corresponds to an average value of the angle in the film thickness direction between the directors of the discotic liquid crystal and the normal line on the film plane.

The above described tilt angle of the director, film thickness, apparent in-plane retardation value and average tilt angle as optical parameters and physical properties detail the structure of the compensating film. All the aforementioned values can be measured, and needless to say, it is preferable that they are in the above ranges. However, it becomes difficult to measure these values depending on the construction of the compensating film. In this case, since the values are correlated to each other, at least two of these values are measured, and it is satisfactory that the two values are in the above ranges. In the case the same liquid crystalline material is used for example, and the orientation is obtained in the same manner, in the present invention, the angle of the director of the discotic liquid crystal near the film interface and the average tilt angle is generally constant irrespective of the film thickness, and the retardation value is proportional to the film thickness.

The following describes the arranging method of the compensating film. The compensating film may be arranged between two polarizing plates of a liquid crystal display, and one or plural compensating films can be arranged. In the present invention, it is practically preferable that the viewing angle is compensated by using one or two compensating films. If more than three compensating films are used, the viewing angle can be compensated, but since the cost becomes higher, this case is not desirable. Concrete examples of the arranging position are as follows. However, these examples are typical arranging positions, and thus the present invention is not limited to them.

The following describes the case of using one compensating film. The compensating film is arranged between a polarizing plate and a liquid crystal cell, and the arranging position may be the upper surface or lower surface of the cell. Here, the vector direction in which the director of the discotic liquid crystal in the compensating film is projected onto the compensating film plane is referred to as the director direction hereinafter. It is desirable that the director direction is substantially parallel to a transmission axis or an absorbing axis of the adjacent polarizer. Namely, since the compensating film has the hybrid orientation, there exists an apparent retardation when viewed from the front. Therefore, if the director direction of the compensating film is greatly shifted from the transmission axis or absorbing axis of the polarizer, the display quality at the front might be deteriorated due to the retardations. On the contrary, when the director of the discotic liquid crystal in the compensating film is substantially parallel to the transmission axis or absorbing axis of the polarizer, influence of the birefringence of the compensating film is not exhibited at the front. As a result, viewing angle dependence can be compensated without deteriorating the high display quality at the front. Therefore, when the compensating film of the present invention is arranged, the angle between the director direction and the transmission axis or absorbing axis of the polarizing plate is usually ±30°, more preferably ±15°, particularly preferably the director direction coincides with the transmission axis or absorbing axis of the polarizer.

The following describes the case of using two compensating films. The two compensating films are arranged on the upper or lower surface of the liquid crystal cell sandwiched between a pair of polarizing plates. At this time, the two compensating films may be both on one side or one on the upper and one on the lower sides. The two compensating films may have the same parameters or different parameters. Similarly to the case of using one compensating film, the two compensating film are usually arranged with the director direction substantially parallel to the transmission axis or absorbing axis of the polarizer (when a plurality of films are arranged on the upper side of the cell, the upper polarizer) respectively.

However, when the retardations of the two compensating films at the front are substantially equal to each other (a difference is not more than 60 nm, more preferably not more than 30 nm), the two compensating films can be arranged by making the director directions of the films substantially perpendicular to each other without being limited by the axis of the polarizing plates. This is because the two compensating films can cancel the apparent retardations at the front. Namely, as long as the directors of both the films substantially intersect perpendicularly to each other, the viewing angle can be compensated without deteriorating the display quality of the liquid crystal display at the front irrespective of the relationship with the axis of the polarizing plate. Needless to say, the case where the respective compensating films are parallel to the transmission axis or absorbing axis of the polarizing plates is preferable. Moreover, it is quite all right that the two compensating films are arranged both on the same side or the one on the upper and the other on the lower sides of the cell.

Since the compensating films of the present invention have the hybrid orientation, the front and rear surfaces of the compensating film are not equal to each other, and thus the compensating effect slightly differs depending on which surface is nearer the liquid crystal cell. Therefore, a pre-determination cannot be made as to which surface should placed on the liquid crystal cell. The determination as to which of a surface where the angle between the director of the discotic liquid crystal and the film plane is larger (in the range of 60° to 90°) or surface where the angle is smaller (in the range of 0° to 50°) is placed on the liquid crystal cell side is made according to the type and mode of liquid crystal cell of a liquid crystal display. For this reason, it is desirable that the compensating film of the present invention be arranged so as to satisfy the conditions of the liquid crystal cell.

The use of one or plural compensating films greatly effects the improvement in the viewing angle of various liquid crystal displays, particularly the TN liquid crystal display. Moreover, the compensating film, together with a conventional optical film such as a film having a negative uniaxial refractive index structure and a film having a positive uniaxial refractive index structure can be used. However, only the compensating film of the present invention plays a conclusive part in the compensation of the viewing angle, so any combination of conventional optical films other than the compensating film cannot show a remarkable viewing angle enlarging effect like the compensating film of the present invention.

As mentioned above, in the liquid crystal display where at least one compensating film of the present invention is arranged, a slight change in colors and in contrast due to the viewing angle is hardly felt. Moreover, when the area of the display is enlarged, it is possible to display an image uniformly in the center portion and in the edge portion of the screen.

In addition, as mentioned above, two types of modes, that is, the rotatory mode and the birefringence mode are used according to arrangements of the polarizer and the TN liquid crystal cell substrate. The compensating film of the present invention can show the satisfactory viewing angle improving effect in both the modes.

### EXAMPLES

The following describes examples, but the present invention is not limited to them. In the examples, there were used the following analyzing methods.

### (Determination of Chemical Structure)

Determined using ¹H-NMR (JNM-GX400, a product of Japan Electron Optics Laboratory Co. Ltd.).

### (Observation with Optical Microscope)

Orthoscope observation and conoscope observation were conducted using a polarizing microscope BX-50 (a product of Olympus Optical Co., Ltd.). Identification of a liquid crystal phase was performed by texture observation under heating on a Mettler hot stage (EP-80).

### (Polarization Analysis)

Conducted using an ellipsometer DVA-36VWLD (a product of Mizoshiri Kogaku Kogyosho K.K.).

### (Measurement of Refractive Index)

Conducted using an Abbe's refractometer Type-4T (a product of Atago K.K.).

### (Measurement of Film Thickness)

Conducted using mainly a high-precision thin film step measuring instrument ET-10 (a product of Kosaka Kenkyusho K.K.). There also was adopted a method of determining the film thickness on the basis of both interference wave measurement (an ultraviolet-visible-near infrared spectrophotometer V-570 manufactured by Nippon Bunko Co.) and refractive index data.

### (Example 1)

50 mmol of hexahydroxytruxene, 100 mmol of p-pentylbenzoic acid chloride, 100 mmol of biphenyl-4-carboxylic acid and 100 mmol of stearic acid were dissolved in a mixed solvent obtained by 300 ml of pyridine and 300 ml of dimethyl formamide, and the obtained solution was referred to as a solution A.

300 ml of pyridine was added to 330 mmol of p-toluene sulfonic acid chloride and set aside for 30 minutes. Thereafter, 50 ml of dimethyl formamide was added thereto so that a solution B was obtained.

After the solutions A and B are mixed and the mixed solution was heated at 120°C for 8 hours in an atmosphere of nitrogen, a reactive solution was thrown onto ice to obtain 75 g of an yellowish-white discotic liquid crystal material (formula (1), powder).

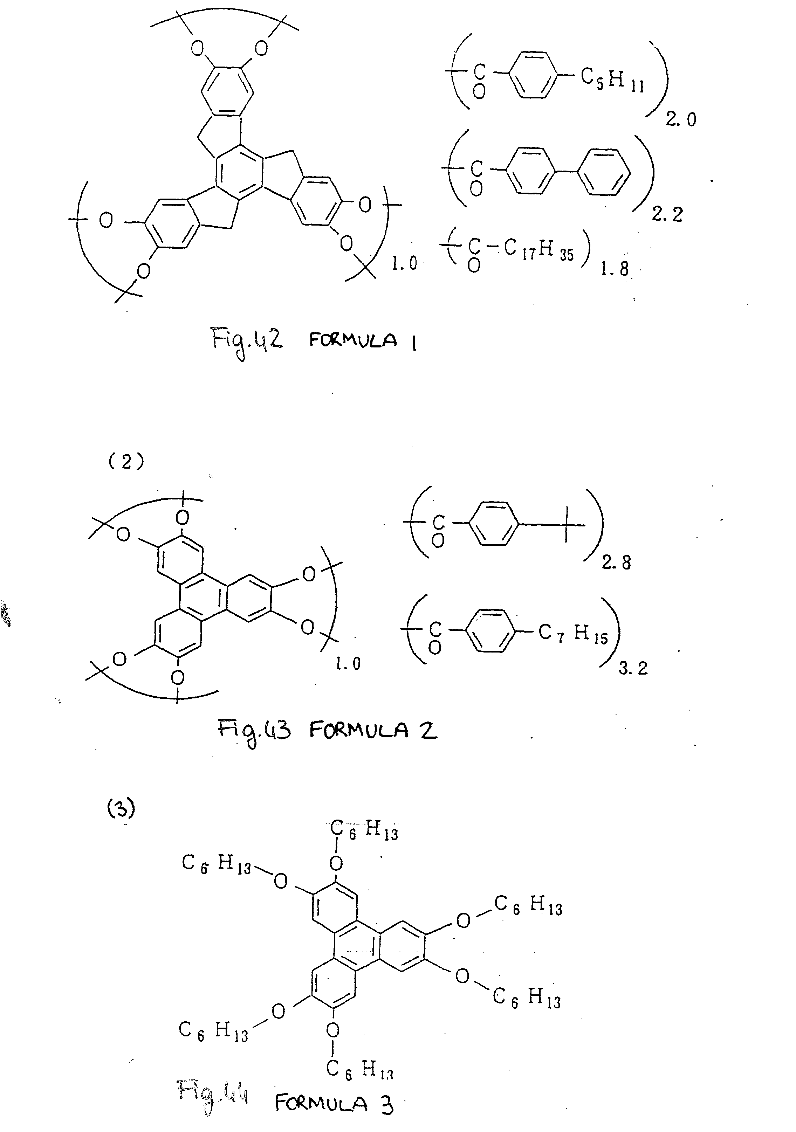

### Formula (1) (Fig.42).

The right-hand numerals of the parentheses each represent a molar composition ratio.

This compound was observed on the Mettler hot stage to find that the compound had a schlieren texture typical for a ND phase, with no crystal phase developed even on cooling. 10 g of the compound was dissolved in 90 g of chloroform to prepare a 10 wt% solution. This solution was then applied by the spin coating method onto a glass substrate of 15 cm × 15 cm having a rubbing-treated polyimide film, then dried on a hot plate of 50°C, heat-treated in an oven at 250°C for 15 minutes, thereafter taken out into room temperature and cooled to obtain a transparent single-layer film (liquid crystalline optical film 1) on the substrate. The thickness of the film was 6.0 µm. According to the conoscope observation, the center of isogyre was shifted in a direction along the rubbing direction. Therefore, it was confirmed that the optic axis was not in the direction of the substrate normal line.

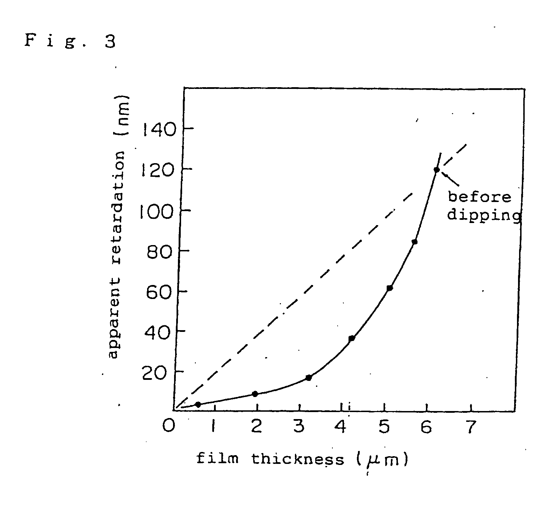

Next, the film on the substrate was cut into 5 pieces, the respective cut films were soaked into an ethanol solution containing 5 wt% of chloroform for constant time to elude a liquid crystal layer from the upper surface. When the soaking time was set to 15 seconds, 30 seconds, 1 minute, 2 minutes, 3 minutes and 5 minutes, the respective film thicknesses of the remained liquid crystal layers were respective, 5, 5 µm, 5.0 µm, 4.1 µm, 3.2 µm, 1.9 µm and 0.6 µm. As to the respective films, apparent in-plane retardations were measured by the ellipsometer, and a relationship between the film thicknesses and the retardations was obtained as shown in Fig. 3. Here, an apparent slow axis was located in an in-plane direction vertical to rubbing direction. As is clear from the drawing, the film thickness and the retardation did not make a straight-line relationship, and thus it became clear that the film has no negative uniaxial structure with a uniform tilt angle. A dotted line in the drawing represents a straight line observed in a film with a uniform tilt angle. According to the drawing, it is found that since the contribution to the retardation becomes larger on an upper part of the film, the angle between the directors and the substrate becomes smaller on an upper part of the film (corresponds to Fig. 2(c), when the director and the substrate make an angle of 90°, the retardation does not occur when viewed from the front). As a result, it was found that the orientation form of the liquid crystalline optical film 1 corresponded to the hybrid orientation. Here, the angle between the directors and the film plane on the upper and lower surfaces of the liquid crystalline optical film 1 of a sample not soaked into the solvent was about 90° on the substrate interface side, and about 0° on the air interface side.

In addition, while the obtained liquid crystalline optical film 1 was being reheated on the Mettler hot stage, shear was applied to the film 1. Even when shear was applied to the film, there was no fluidity in the rage of room temperature to 140°C, and the orientation structure was not disordered at all. Needle-like liquid crystal started to appear gradually at 150°C. As a result, the fixed structure was stabilized until 150°C, and thus it was found that there arose no problem practically.

### (Example 2)

50 mmol of hexaacetoxytriphenylene, 150 mmol of t-butylbenzoic acid and 150 mmol of heptyloxybenzoic acid were stirred vigorously with a mechanical stirrer in an atmosphere of nitrogen in a glass flask and a deacetylation was allowed to take place at 280°C for 3 hours while the stirring was continued to afford a discotic liquid crystalline material of the following formula (2):

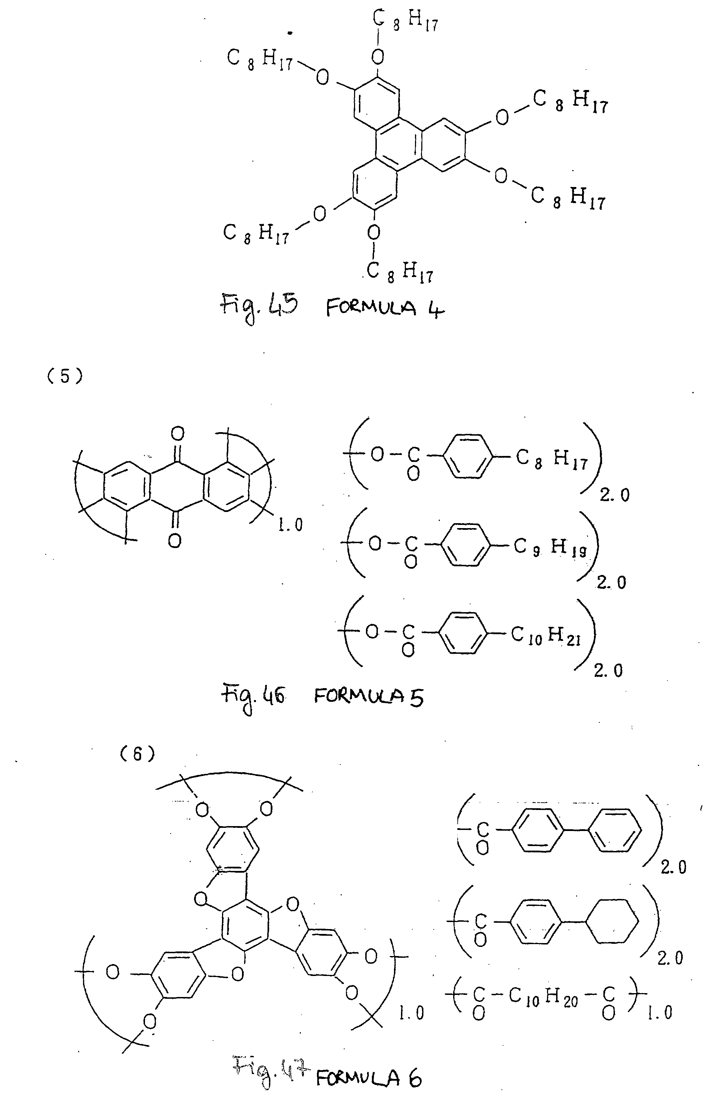

### Formula 2 (Fig.43)

The right-hand numerals of the parentheses each represent a molar composition ratio.

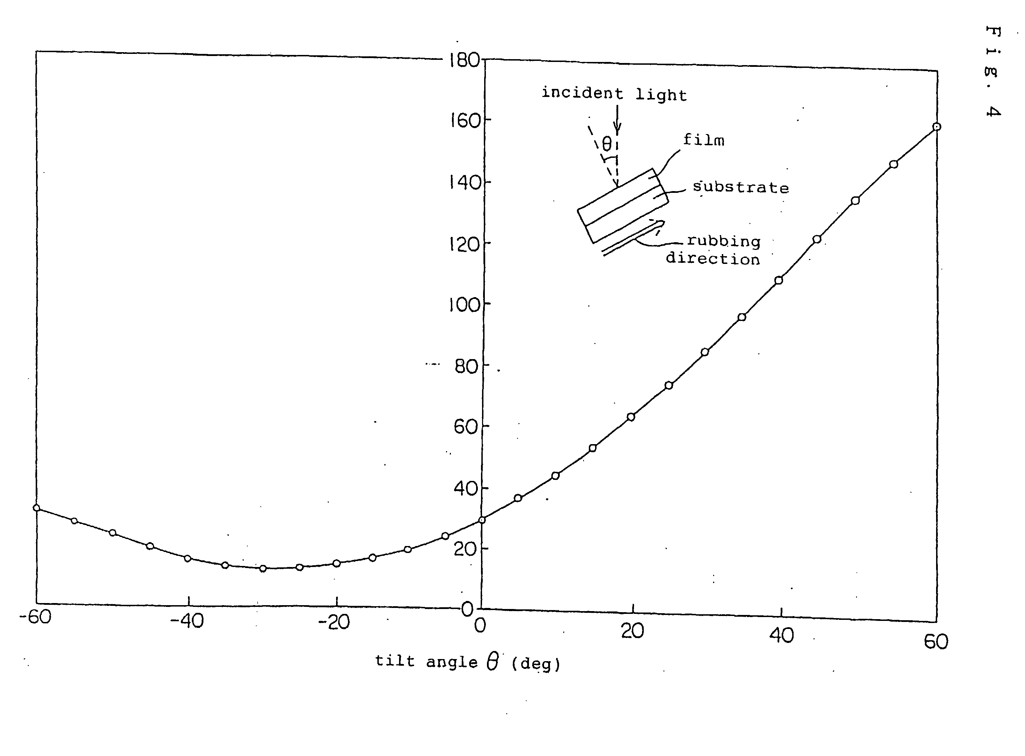

The obtained material was observed on the Mettler hot stage to find that it had ND phase and that no crystal phase was developed even on cooling from liquid crystal phase. A toluene solution of this compound is applied by the printing method onto glass having a rubbing-treated polyimide film, then air-dried, heat-treated at 200°C for 30 minutes, and thereafter cooled to solidify at room temperature. The resulting liquid crystalline optical film 2 on the substrate was transparent, free of any orientation defect, and had a thickness of 2 µm. According to the conoscope observation, the center of isogyre was out of a visual field of the microscope similarly to example 1, and thus it was found that the director of the liquid crystal was not in the thickness direction of the film. While the sample was being tilted along the rubbing direction, an apparent retardation was measured by the ellipsometer. As a result, an asymmetric result shown in Fig. 4 was obtained. According to this result, it was confirmed that the directors of the liquid crystal were tilted to the substrate normal line.

Next, the compound of the formula (2) was again orientated and stabilized by the same method as the above one on a glass substrate having a high refractive index (refractive index: 1.84) and a rubbing-treated polyimide film, and a refractive index of the compound was measured. When the compound was placed so that the glass substrate was brought into contact with a prism of the refractometer and that the substrate interface side of the liquid crystalline optical film is lower than the air interface side, the in-plane refractive index showed no anisotropy and obtained a constant value of 1.66, and the refractive index in the thickness direction obtained a substantially constant value of 1.56. As a result, it was found that disc like liquid crystal molecules were plane-oriented parallel with the substrate on the glass substrate side (the directors were perpendicular to the substrate plane). Next, when the liquid crystalline optical film was placed so that the air interface side was brought into contact with the prism of the refractometer, an in-plane refractive index parallel with the rubbing direction was 1.56, the in-plane refractive index vertical to the rubbing direction was 1.66, and the refractive index in the thickness direction was 1.66 irrespective of the direction of the sample, namely, constant. Accordingly, it was found that disc-like liquid crystal molecules on the air interface side were oriented in a direction perpendicular to the substrate and rubbing direction (the directors were parallel with the substrate plane).

Therefore, it was found that the single-layered liquid crystalline optical film 2 formed by discotic liquid crystal has the hybrid orientation.

Next, in order to accurately obtain the angle of a director direction on the substrate interface, the following process was performed.

Another glass substrate having rubbing-treated polyimide film and high refractive index was deposited in contact with the liquid crystalline optical film 2 deposited on the glass substrate having the rubbing-treated polyimide film and high refractive index. Namely, the liquid crystalline optical film 2 was sandwiched between the two rubbing-treated polyimide films. At this time, the rubbing directions of the upper and lower rubbing-treated films formed an angle of 180°. In this state, the liquid crystalline optical film 2 sandwiched between the glass substrates was heated at 200°C for 15 minutes. As to the resulting sample, the measurement of refractive index and the polarization analysis were conducted. As a result of the measurement of refractive index, the same value on the upper and lower parts of the liquid crystal film was obtained, and an in-plane refractive index showed no anisotropy and obtained a constant value of 1.66, and a refractive index in the thickness direction obtained a substantially constant value of 1.56. As a result, it was found that the directors were substantially perpendicular to the substrate plane. As a result of the polarization analysis, the refractive index structure is a substantially negative uniaxial structure, and a detailed analysis was conducted based on the crystal rotation method to find that the directors were slightly tilted near the substrate and that the angle between the substrate plane and the directors were about 86°. Moreover, the tilting direction of the directors was opposite to the rubbing direction (the angle between the vector representing the rubbing direction and the vector of the directors were 180°- 86° = 94°). Accordingly, if the director direction in the substrate interface is substantially determined by the interaction between the discotic liquid crystalline material and the orientation substrate interface, the director direction in the substrate interface in the hybrid orientation of the liquid crystalline optical film 2 deposited on the one orientation substrate is presumed to be 86° (the angle between the vector representing the rubbing direction and the vector of the directors is presumed to be 94°).

### (Example 3)

As the discotic liquid crystalline material, hexahexyloxytriphenylene (formula 3) and hexaoctyloxytriphenylene (formula 4) were used, and they were combined in the weight ratio 1:1 to obtain composite.

### Formula (3) (Fig.44)

### Formula (4) (Fig.45)

Next, the composite was heated to 150°C, a molten solution in an isotropic liquid state was applied by the die-coater method over a length of 10 m onto a 50 cm wide polyethylene terephthalate film substrate which had been subject to the rubbing treatment to form the discotic liquid crystalline layer on the polyethylene terephthalate substrate in a polydomain state. Here, the die was heated to 150°C so that the discotic liquid crystalline material was not solidified, but the polyethylene terephthalate film substrate was in an atmosphere of nitrogen, and the discotic liquid crystalline material layer was cooled at the same time the application onto the substrate.

Next, after the discotic liquid crystalline material layer was heated at 95°C for 10 minutes, it was cooled gradually to 80°C, 70°C and 50°C by letting a warm breeze blow, and finally cooled to room temperature. The resulting liquid crystalline optical film 3 was transparent and its thickness was about 25 µm.

As to the resulting liquid crystalline optical film 3, an incident light angle dependence of elliptic polarization detected by the polarization analysis was measured, and simulation was carried out by a computer.

As a result, the film 3 had the hybrid orientation, and the angle between the directors of liquid crystal and the liquid crystal film plane was about 80° in the polyethylene terephthalate interface, and was about 5° in the air interface.

### (Example 4)

As to the discotic liquid crystalline material, a compound of the following formula (5) was used, and the compound was dissolved in acetone so as to prepare a solution of 10 wt%.

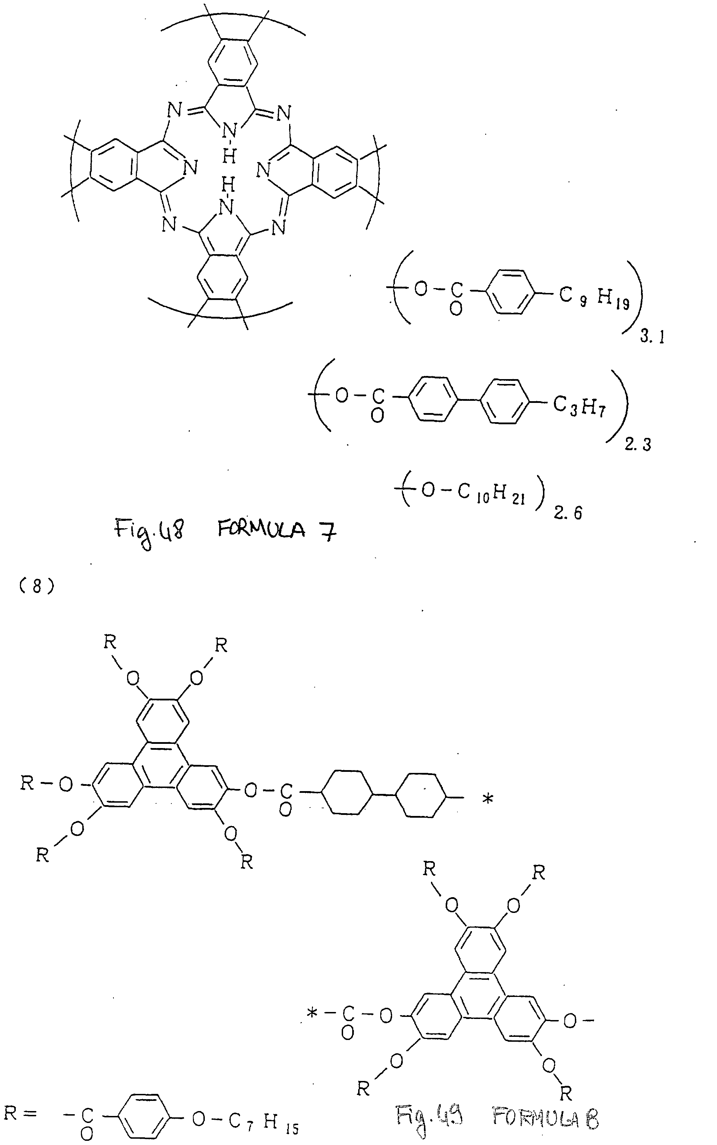

### Formula (5) (Fig.46)

The right-hand numerals of the parentheses each represent the preparing molar ratio of a material monomer used for composition

The solution was applied by a roll coater over a length of 10 m onto a 25 cm wide rubbing-treated polyethersulphone film substrate.

Then the substrate was dried by a warm breeze dryer, was heated at 150°C for 2 minutes, cooled by a cool breeze to be solidified.

The obtained liquid crystalline optical film 4 was brownish, and the thickness was 1.5 µm. As to the resulting film 4, the microscopic observation and measurement of refractive index were conducted to find that the hybrid orientation was formed. The angle between the directors of liquid crystal and the liquid crystalline optical film 4 plane was about 85° in the polyethersulphone film interface, and 15° in the air side.

### (Example 5)

The liquid crystalline optical film 4 was soaked into a solution containing acetone of 5 volume% for 5 minutes. As a result, the thickness of the film was changed from 1.5 µm into 0.9 □m. According to the polarization analysis of the film, the angle between the directors of liquid crystal and the liquid crystal film plane was about 85° in the polyethersulphone film interface, and about 45° in the air side. A liquid crystalline optical film 5 having the above structure was obtained.

### (Example 6)

As the discotic liquid crystalline material, a polymer with molecular weight of 15,000 obtained by linking mesogens by dodecanoic dioxide of the following formula (6) was used.

### Formula (6) (Fig. 47)

The right-hand numerals of the parentheses each represent a molar composition ratio.

The molecular weight was determined by GPC and in terms of polystyrene. This polymer had no liquid crystal phase, and exhibited glass transition at a temperature lower than ND phase. Tg was 75°C. The polymer was then dissolved in a mixed p-chlorophenol/tetrachloroethane solvent (weight ratio: 6:4) under heating to prepare a 12 wt% solution.

The solution was applied over a length of 10m onto a 25 cm wide polyimide film which had been subject to a rubbing treatment, by means of a roll coater, then dried with 100°C hot air, heat-treated at 250°C for 2 minutes and thereafter cooled to solidify the liquid crystal phase, thereby affording a liquid crystalline optical film 6.

The liquid crystalline optical film 6 was used to conduct a polarization optical measurement, but since a transmittance of the polyimide film was low, a satisfactory result was not obtained. Therefore, triacetyl cellulosic film having a pressure-sensitive adhesive was stuck to the surface of the liquid crystalline optical film 6 via the pressure-sensitive adhesive, the polyimide film was peeled therefrom, and the liquid crystalline optical film 6 was transferred onto the triacetyl cellulosic film to produce an optical element. The triacetyl cellulosic film had small birefringence, and thus the liquid crystal structure could be measured.

As a result of the measurement, the thickness of the liquid crystalline optical film was 8 µm and the hybrid orientation was formed. The angle between the directors of liquid crystal and the film plane was 20° in the pressure-sensitive adhesive interface, and 80° in the air side.

### (Example 7)

As the discotic liquid crystalline material, a compound of the following formula (7) having ND phase was used.

### Formula (7) (Fig.48)

The right-hand numerals of the parentheses each represent a molar composition ratio.

A 5 wt% chloroform solution of the compound was prepared, and high refractive index glass having a rubbing-treated polyimide film of 15 cm square was spin-coated with the solution, dried, heat-treated at 250°C and cooled to afford a liquid crystalline optical film 7. The film thickness was 0.5 µm, and the film was brownish.

It was confirmed by the measurement of refractive index that the hybrid orientation was formed, but in the measurement of refractive index, a borderline of dark and light was not clearer compared with the observation in example 2. As a result of the spectral measurement, it became clear that there exist an absorbing peak in the visible area.

### (Example 8)

As the discotic liquid crystalline material, compounds of the following formula (8) and formula (9) were mixed in the weight ratio 2:1, and an obtained compound was dissolved in butyl cellosolve to afford a 20 wt% solution.

### Formula (8) (Fig. 49)

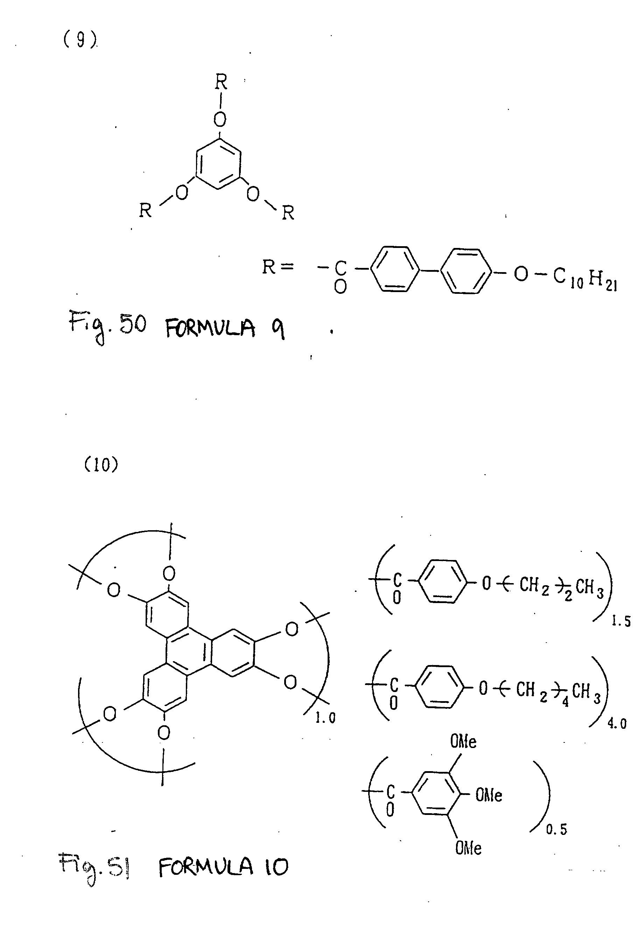

### Formula (9) (Fig.50)

The solution was applied by the printing method onto a rubbing-treated polyether ether keton film substrate which had been cut to 30 cm square and had a thickness of 100 µ, and was dried. This substrate was heat-treated in an oven at 220°C for 30 seconds, the temperature of the oven was set to 190°C so that the temperature of the substrate was lowered to 190°C for 2 minutes.

The substrate was taken out from the oven, and cooled to afford a transparent liquid crystalline optical film 8 of about 20 □m. The resulting liquid crystalline optical film 8 formed on the substrate had a self-supporting property. The film 8 was peeled from the polyether ether keton film substrate, and the measurement of birefringence and the measurement of refractive index were conducted. As a result, the hybrid orientation was confirmed. The angle between the directors of liquid crystal and the liquid crystalline optical film plane was about 85° in the interface which was first in contact with the polyether ether keton film substrate, and about 5° in the opposite interface.

Next, the liquid crystalline optical film 8 from which the orientation substrate had been peeled was inclined to a direction perpendicular to the rubbing direction so that the polarization analysis was conducted by the ellipsometer.

As a result, a principal axis of elliptic polarization of an incident light which had passed through the film was in a direction which was not parallel with nor perpendicular with the rubbing direction, and the direction of the principal axis depended on a wavelength of the incident light. Accordingly, it was confirmed that rotary polarization dispersion occurred in the film 8, and it was reconfirmed that not a negative uniaxial structure but the hybrid orientation was formed. In addition, the liquid crystalline optical film 8 was sandwiched between crossed Nicols polarizing plates so that the rubbing direction, a transmission axis of the upper polarizing plate and an absorbing axis of the lower polarizing plate were made coincide. As a result, when obliquely viewed along the rubbing direction, there was a dark field, but when obliquely viewed from the direction perpendicular to the rubbing direction, leakage of a light occurred, and thus there was a bright field. Accordingly, it was gathered that the hybrid orientation in which the directors of liquid crystal were slanted in the rubbing direction was formed.

### (Example 9)

The liquid crystalline optical film 7 from which the polyether ether keton film substrate had been peeled was soaked into a solution containing a 5 volume% acetone for 5 minutes. As a result, the thickness of the film was changed from 20 µm to 4 □m, and the polarization analysis thereof was conducted to afford a liquid crystalline optical film 9 in which the angle between the directors of liquid crystal and the liquid crystal film plane was about 60° in the interface which was in contact with the polyether ether keton film, and about 50° on the air side.

### (Example 10)

As the discotic liquid crystalline material, a material of the following formula (10) having ND phase was prepared.

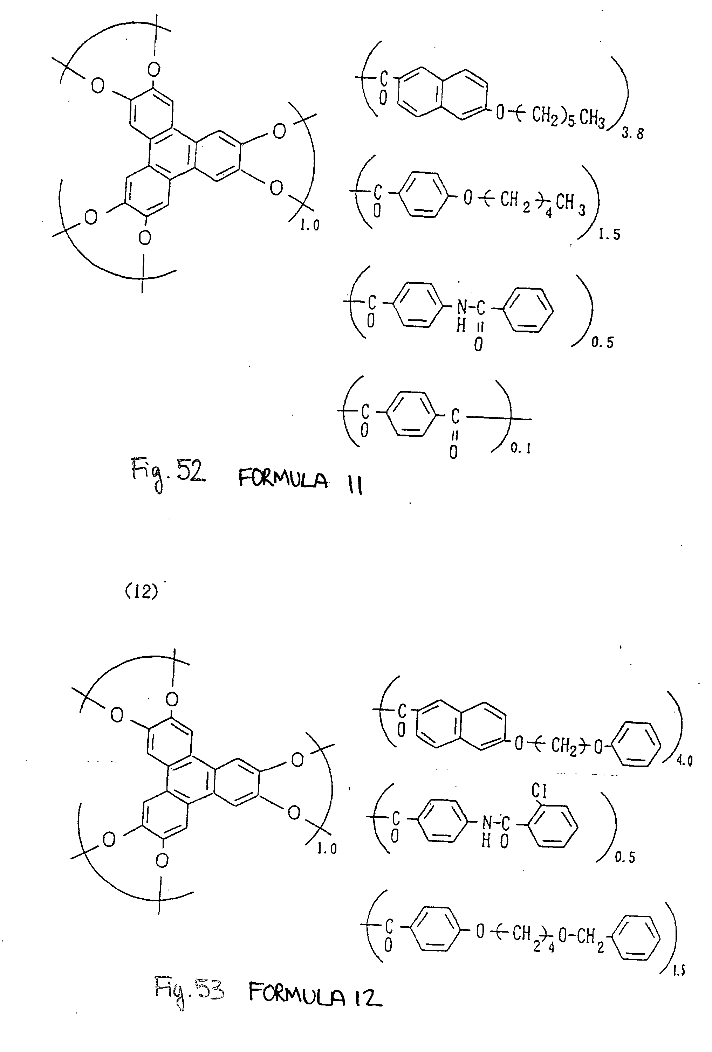

### Formula (10) (Fig. 51)

The right-hand numerals of the parentheses each represent a molar composition ratio.

High-refractive index glass having a 15 cm square rubbing-treated polyimide film was spin-coated with a 10 wt% chloroform solution, dried, was subject to the heat treatment at 250°C for 10 minutes to afford and cooled to afford a liquid crystalline optical film 10. The film thickness was 1.3 µm.

As to the resulting film, similarly in embodiment 2 the observation with microscope and the measurement of refractive index were conducted to find that the hybrid orientation was formed. The angle between the directors of liquid crystal and the film plane was about 90° in the glass interface and about 15° in the air interface.

### (Example 11)

As the discotic liquid crystalline material, a material of the following formula (11) having ND phase was prepared.

### Formula (11) (Fig. 52)

The right-hand numerals of the parentheses each represent a molar composition ratio.

A high-refractive index glass of 15 cm square having a rubbing-treated polyimide film was spin-coated with a 10 wt% chloroform solution, dried, was subject to the heat treatment at 250°C for 10 minutes and cooled to afford the liquid crystalline optical film 11. The film thickness was 1.2 µm.

As to the resulting film, similarly in embodiment 2, the observation with microscope and the measurement of refractive index were conducted to find that the hybrid orientation was formed. The angle between the directors of liquid crystal and the film plane was about 90° in the glass interface and about 20° in the air interface.

### (Example 12)

As the discotic liquid crystalline material, a material of the following formula (12) having ND phase was prepared.

### Formula (12) (Fig. 53)

The right-hand numerals of the parentheses each represent a molar composition ratio.

A high-refractive index glass of 15 cm square having a rubbing-treated polyimide film was spin-coated with a 10 wt% chloroform solution, dried, was subject to the heat treatment at 250°C for 10 minutes and cooled to afford the liquid crystalline optical film 12. The film thickness was 1.5 µm.

As to the resulting film, similarly in embodiment 2, the observation with microscope and the measurement of refractive index were conducted to find that the hybrid orientation was formed. The angle between the directors of liquid crystal and the film plane was about 90° in the glass interface and about 15° in the air interface.

### (Example 13)

As the discotic liquid crystalline material, a material of the following formula (13) having ND phase was prepared.

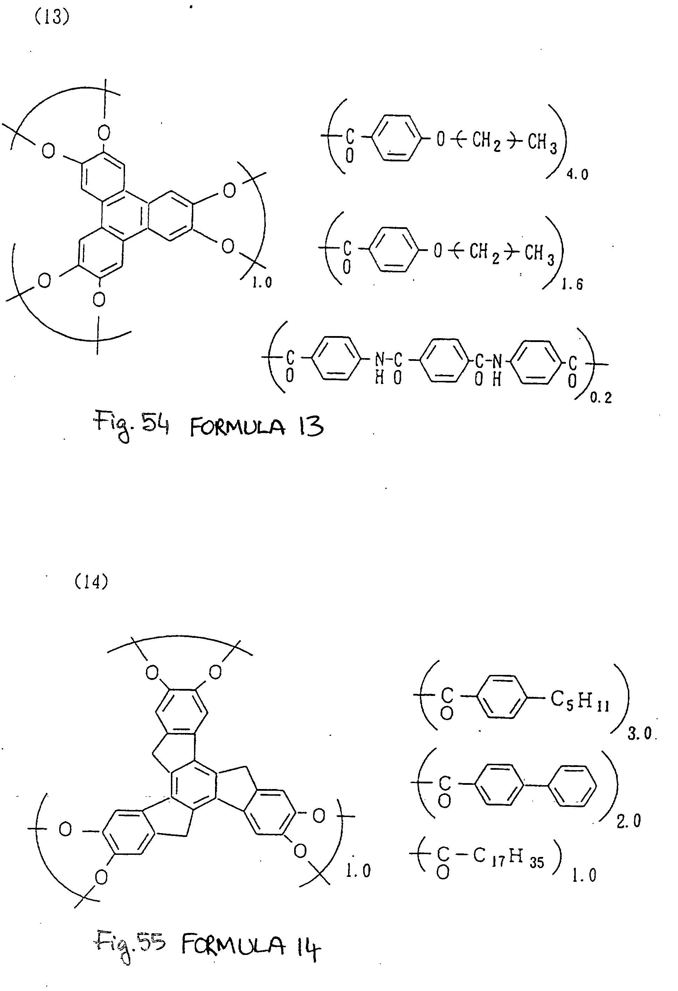

### Formula (13) (Fig.54)

The right-hand numerals of the parentheses each represent a molar composition ratio.

A high-refractive index glass of 15 cm square having a rubbing-treated polyimide film was spin-coated with a 10 wt% chloroform solution, dried, was subject to the heat treatment at 250°C for 10 minutes and cooled to afford the liquid crystalline optical film 13. The film thickness was 1.6 µm.

As to the resulting film, similarly in embodiment 2, the observation with microscope and the measurement of refractive index were conducted to find that the hybrid orientation was formed. The angle between the directors of liquid crystal and the film plane was about 90° in the glass interface and about 30° in the air interface.

### (Example 14)

50 mmol of hexahydroxytruxene, 150 mmol of p-pentylbenzoic acid chloride, 100 mmol of biphenyl-4-carboxylic acid and 50 mmol of stearic acid were dissolved in a mixed solvent obtained by 300 ml of pyridine and 300 ml of dimethyl formamide, and the obtained solution was referred to as a solution A. 300 ml of pyridine was added to 330 mmol of p-toluene sulfonic acid and set aside for 30 minutes. Thereafter, 50 ml of dimethyl formamide was added thereto so that a solution B was obtained. After the solutions A and B are mixed and the mixed solution was heated at 120°C for 8 hours in an atmosphere of nitrogen, a reactive solution was thrown onto ice to obtain 75 g of an yellowish-white discotic liquid crystal material (formula (14), powder). This material was observed on the Mettler hot stage to find that the compound had schlieren texture typical for a ND phase, with no crystal phase developed even on cooling. 8 g of the material was dissolved in 92 g of chloroform to prepare a 8 wt% solution. This solution was then applied by the spin coating method onto a glass substrate of 15 cm x 15 cm having a rubbing-treated polyimide film, then dried on a hot plate of 50°C, heat-treated in an oven at 250°C for 15 minutes, thereafter taken out into room temperature and cooled to obtain a transparent single-layer film 14 on the transparent substrate.

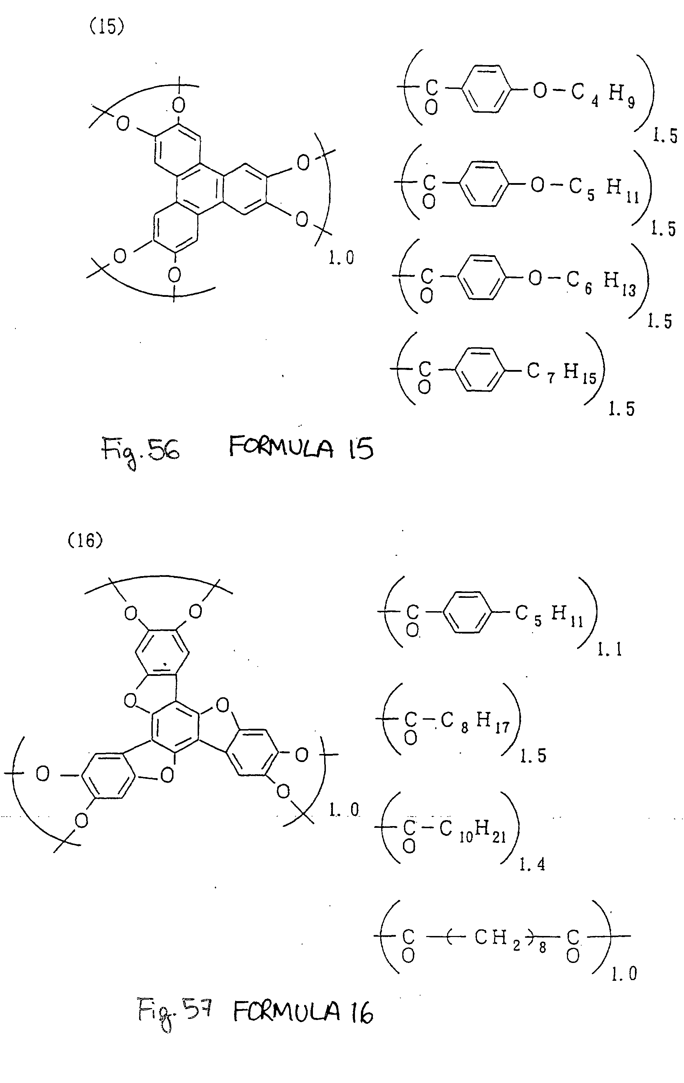

### Formula (14) (Fig.55)

The right-hand numerals of the parentheses each represent a molar composition ratio.

The thickness of the film was 2.0 µm. Moreover, according to the measurement of refractive index, mentioned later, the birefringence of the discotic liquid crystalline material of the formula (1) was 0.12, and a product of the birefringence and the film thickness was 240 nm.

In addition, the polarization analysis using the ellipsometer was conducted to find that the apparent retardation in the front was 56 nm. The slow axis was located in a film in-plane direction perpendicular to the rubbing direction.

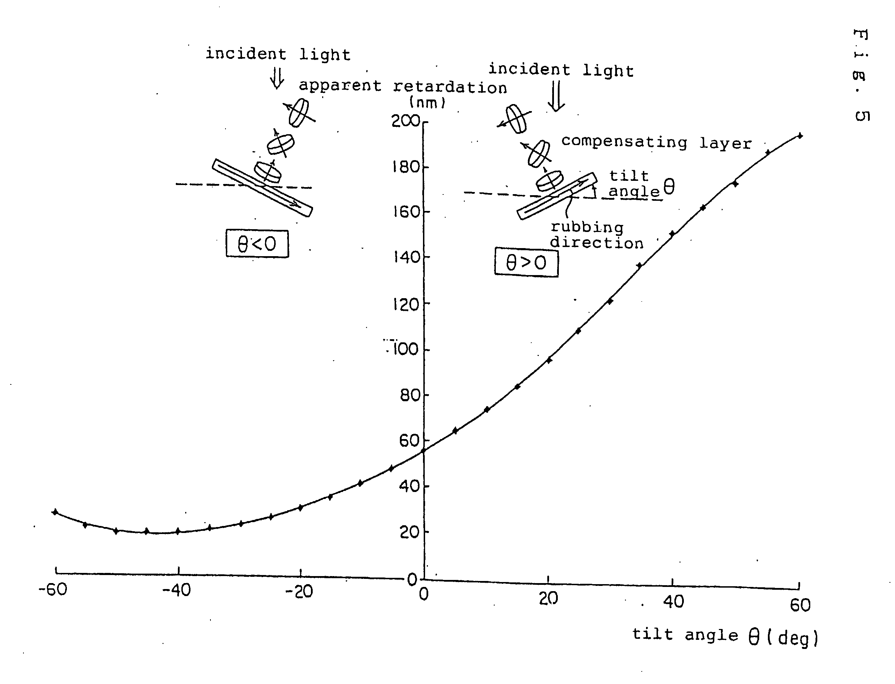

Next, the compensating film 14 on the substrate was sandwiched between the polarizers intersecting perpendicularly to each other, and this arrangement was such that a projecting vector of the directors of the discotic liquid crystal on the film surface and a transmission axis of the polarizers make an angle of 45°. Then, the compensating film 14 was inclined along the projecting vector of the directors on the film surface (coincides with the rubbing direction) to measure the apparent retardation. As a result, a graph of Fig. 5 was obtained. From a inclined angle a minimum value of the retardation so that the average tilt angle of 25° was obtained by considering the refractive index mentioned later. As shown in Fig. 5, the directors of liquid crystal were tilted in a direction shown in Fig. 5 with respect to the rubbing direction of the substrate.

The measurement of refractive index was conducted as follows. Similarly as the compensating film 14, a compensating film was formed on a high-refractive index glass having a rubbing-treated polyimide film, and the refractive index was measured by means of the Abbe's refractometer. The compensating film was placed so that the glass substrate was brought into contact with a prism of the refractometer and that the substrate interface side of the liquid crystalline optical film is lower than the air interface side, the in-plane refractive index showed no anisotropy and obtained a constant value of 1.68, and the refractive index in the thickness direction obtained a substantially constant value of 1.56. As a result, it was found that disc-like liquid crystal molecules were plane-oriented parallel with the substrate on the glass substrate side (the directors were perpendicular to the substrate plane). Next, when the compensating film was placed so that the air interface side was brought into contact with the prism of the refractometer, an in-plane refractive index parallel with the rubbing direction was 1.56, the in-plane refractive index perpendicular to the rubbing direction was 1.68, and the refractive index in the thickness direction was 1.68 irrespective of the direction of the sample, namely, constant. Accordingly, it was found that disc-like liquid crystal molecules on the air interface side were oriented in a direction perpendicular to the substrate and rubbing direction (the directors were parallel with the substrate plane). Such a refractive index structure is the same as that of the film 14. Therefore, it was found that the peculiar refractive index of the compensating film 14 was 1.56 (ne) in the direction parallel with the directors and 1.68 (no) in the direction perpendicular to the directors, and that a difference therebetween was 0.12.

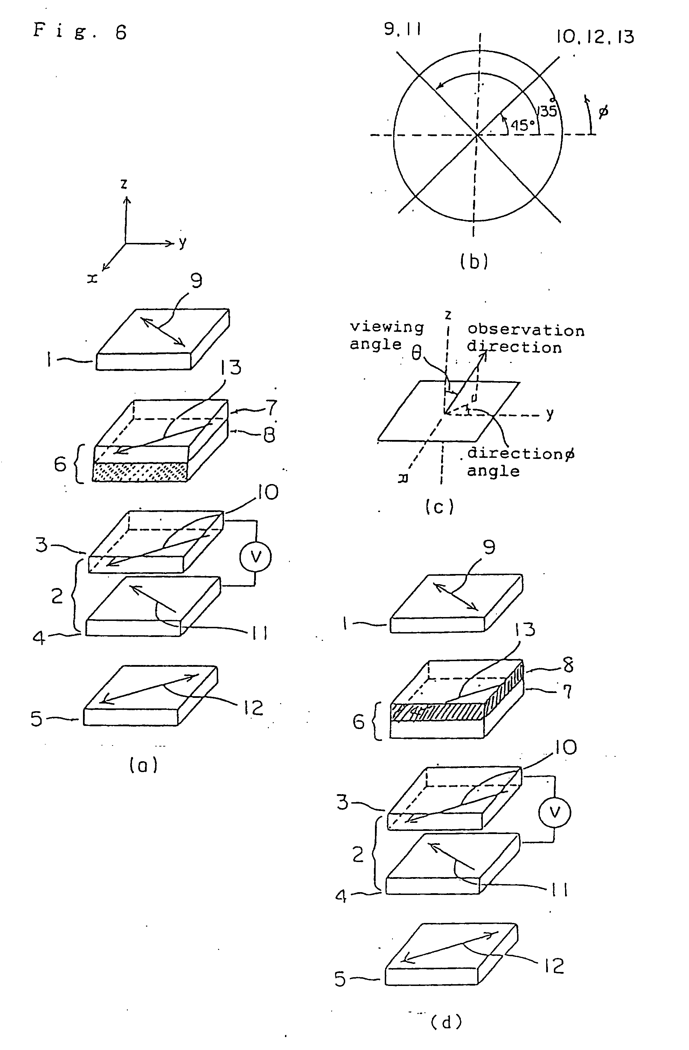

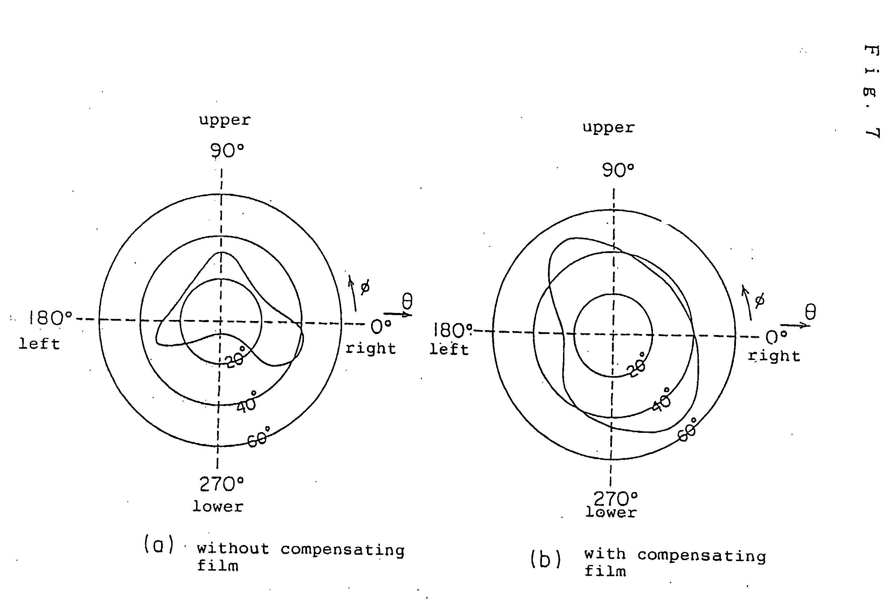

The single-layered compensating film 14 in which the hybrid orientation had been formed by the discotic liquid crystal was placed on a TN cell to be arranged as shown in Fig. 6(a), and viewing angle dependence of a contrast ratio was measured. The result was, as shown in Fig. 7, such that the viewing angle was greatly enlarged because of the compensating film. At the time of the arrangement shown in Fig. 6(d), a satisfactory viewing angle improving effect was obtained.

The TN cell was produced as follows. After a polyimide film was first formed on a glass substrate having ITO electrode, it was rubbed, and polymer beads were placed between upper and lower electrode substrates composing the cell so that a gap was formed. Then, Merck's liquid crystal ZLI-2293 containing a small amount of BDH's chiral liquid crystal C-15 was injected by capillarity into the gap, and the circumference of the substrates were solidified by an epoxy resin. The resulting TN cell was twisted left by 90°, and the retardation at the time of not supplying a voltage was 505 nm. A voltage for driving was set to 2.0 V at the time of non-selection (display in white) and 6.0 V at the time of selection (display in black).

### (Example 15)

Only the condition of the application of a solution was changed, and a single-layered compensating film 15 having a thickness of 1.2 µm was formed on the glass substrate having a rubbing-treated polyimide film in the similar manner to example 14. Parameters and physical property values of the film 2 were shown in Table 1.

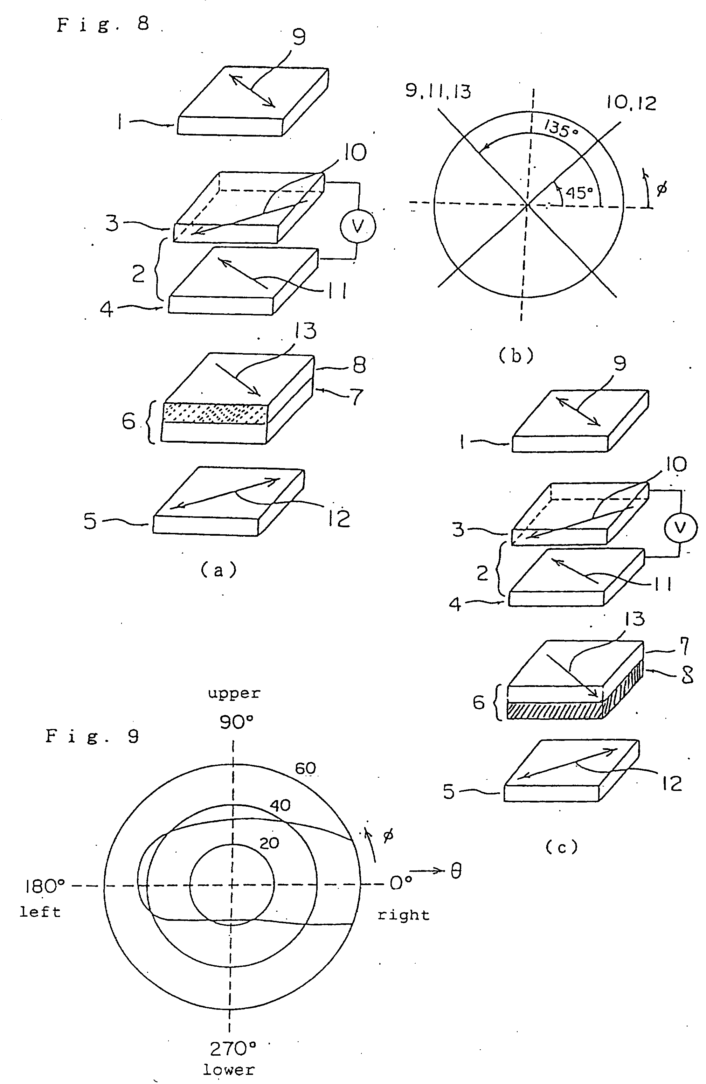

Viewing angle dependence of the contrast was measured in the arrangement of Fig. 8(a) by using the TN cell used in Example 14, and as shown in Fig. 9, a viewing angle enlarging effect due to the compensating film was obtained. At the time of the arrangement of Fig. 8(c), a satisfactory viewing angle improving effect was obtained.

### (Example 16)

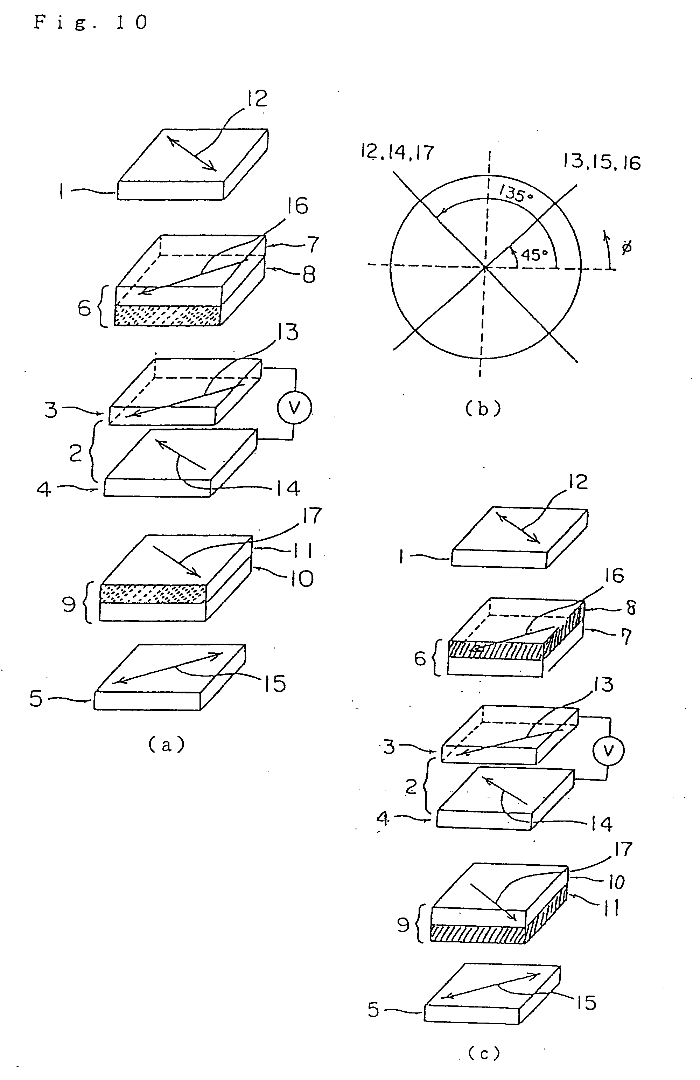

By using the compensating films 14 and 15 obtained in Examples 14 and 15, viewing angle dependence of contrast ratio in the arrangement shown in Fig. 10 was measured to obtain a viewing angle enlarging effect due to the compensating film as shown in Fig. 11. Moreover, at the time of the arrangement of Fig. 10(c), a satisfactory viewing angle improving effect was obtained.

### (Example 17)

50 mmol of hexaacetoxytriphenylene, 75 mmol of butoxybenzoic acid, 75 mmol of pentyloxybenzoic acid, 75 mmol of hexyloxybenzoic acid and 75 mmol of heptyloxybenzoic acid were stirred vigorously with a mechanical stirrer in a nitrogen atmosphere in a glass flask and a deacetylation was allowed to take place at 280°C for 8 hours while the stirring was continued to afford a discotic liquid crystalline material of the following formula (15):

### Formula (15) (Fig. 56)

The right-hand numerals of the parentheses each represent a molar composition ratio.

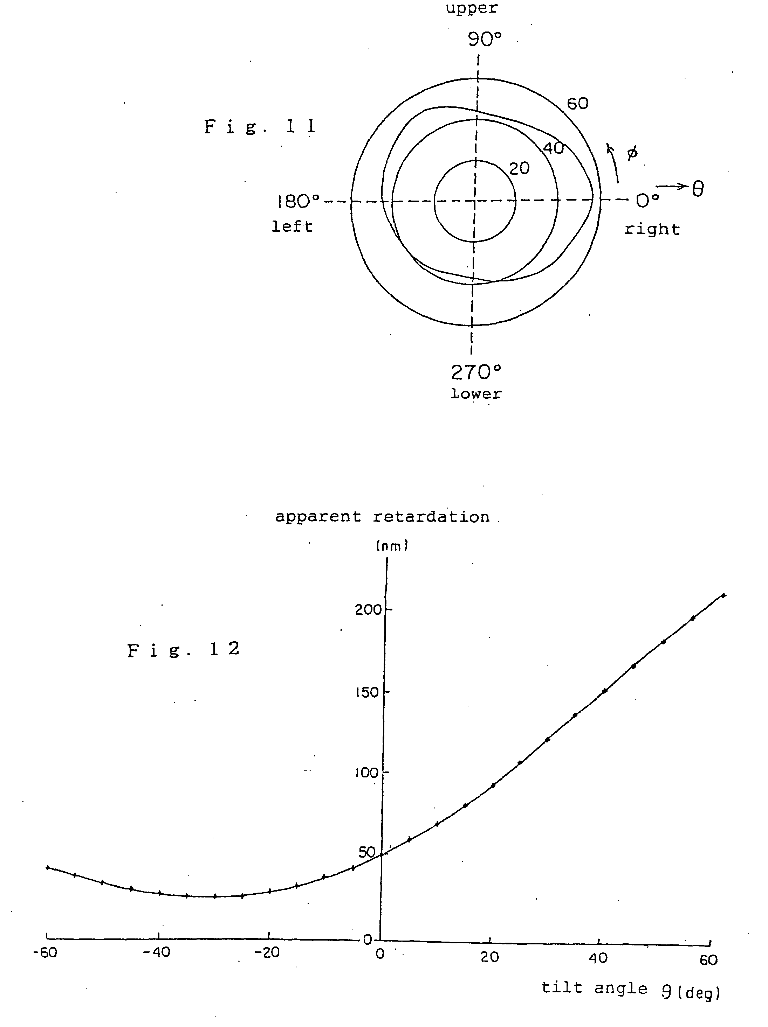

The material thus obtained was observed on the Mettler hot stage to find that it had ND phase and that no crystal phase was developed even on cooling from liquid crystal phase. Further, no fluidity was observed at temperature below 120°C. A xylene solution containing 10 wt% of this material was prepared and then applied by the printing method onto a glass substrate (30 cm square, 1.1 mm thick) having a rubbing-treated polyimide film, then air-dried, heat-treated at 200°C for 30 minutes, and thereafter, cooled to solidify at room temperature. The resulting compensating film 17 on the substrate was transparent, free of any orientation defect, and had a thickness of 3.2 □m. Refractive index measurement showed that the liquid crystal directors were nearly perpendicular to the alignment substrate on the substrate interface side and nearly parallel to the substrate on the air interface side and that ne=1.55, no=1.64. Thus, the difference in refractive index between no and ne was 0.09 and the product between it and the film thickness was 290 nm. An apparent in-plane retardation value was 50 nm, and a slow axis was located in an in-plane direction perpendicular to the rubbing direction. Moreover, the compensating film 17 was tilted along the rubbing direction and an apparent retardation value was measured so that an average tilt angle was obtained as 18° according to the result of Fig. 12.

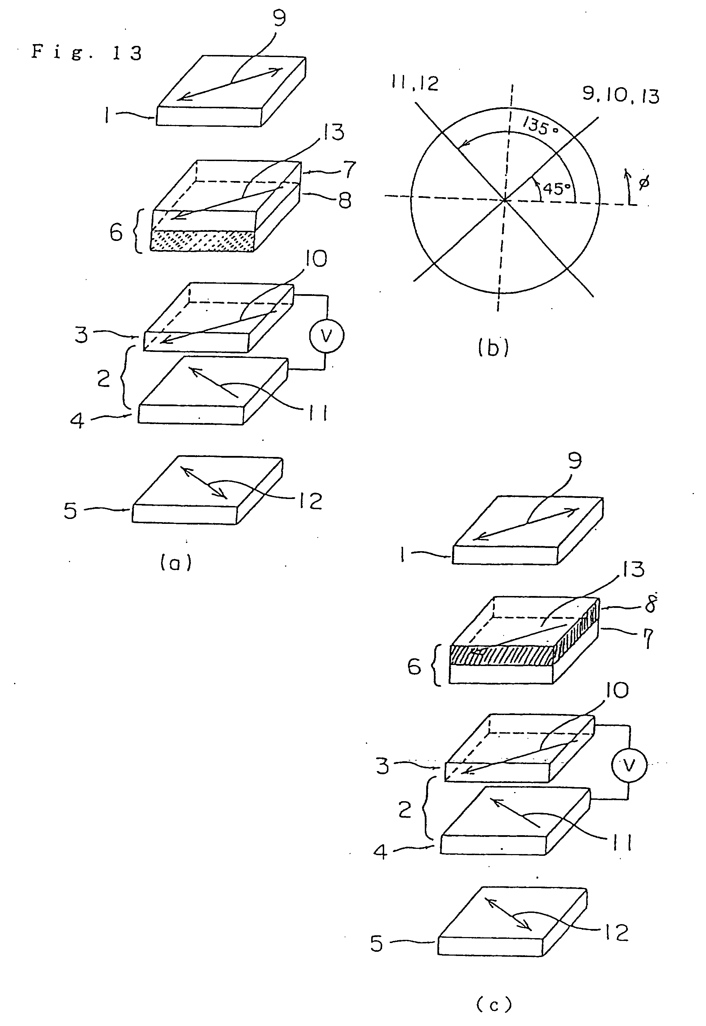

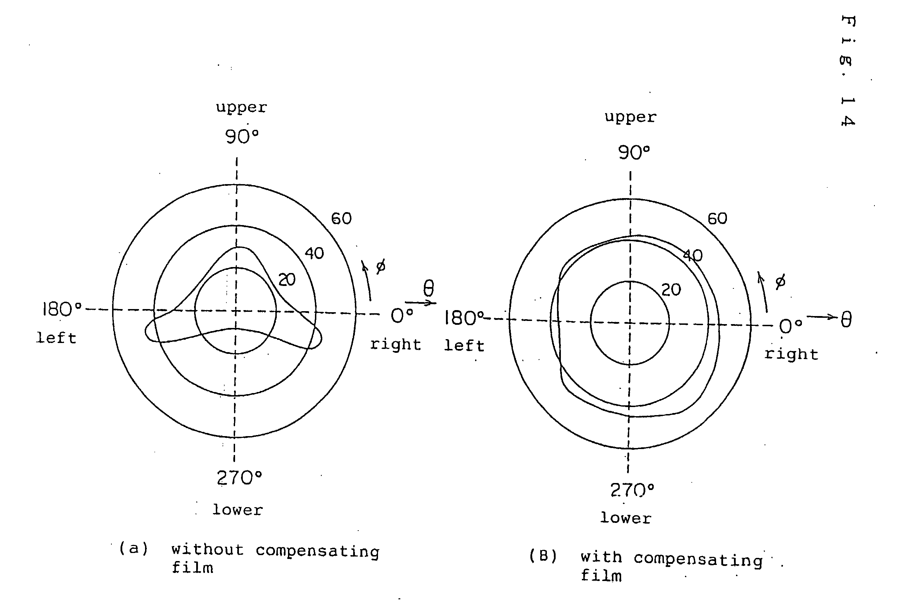

By using the TN cell used in Example 14, ability of the compensating film 3 was examined. The measurement of the arrangement contrast shown in Fig. 13(a) was conducted, to obtain an isocontrast curved line of Fig. 14, namely, the viewing angle enlarging effect was obtained. Moreover, at the time of the arrangement of Fig. 13(c), a satisfactory viewing angle improving effect was obtained.

### (Example 18)

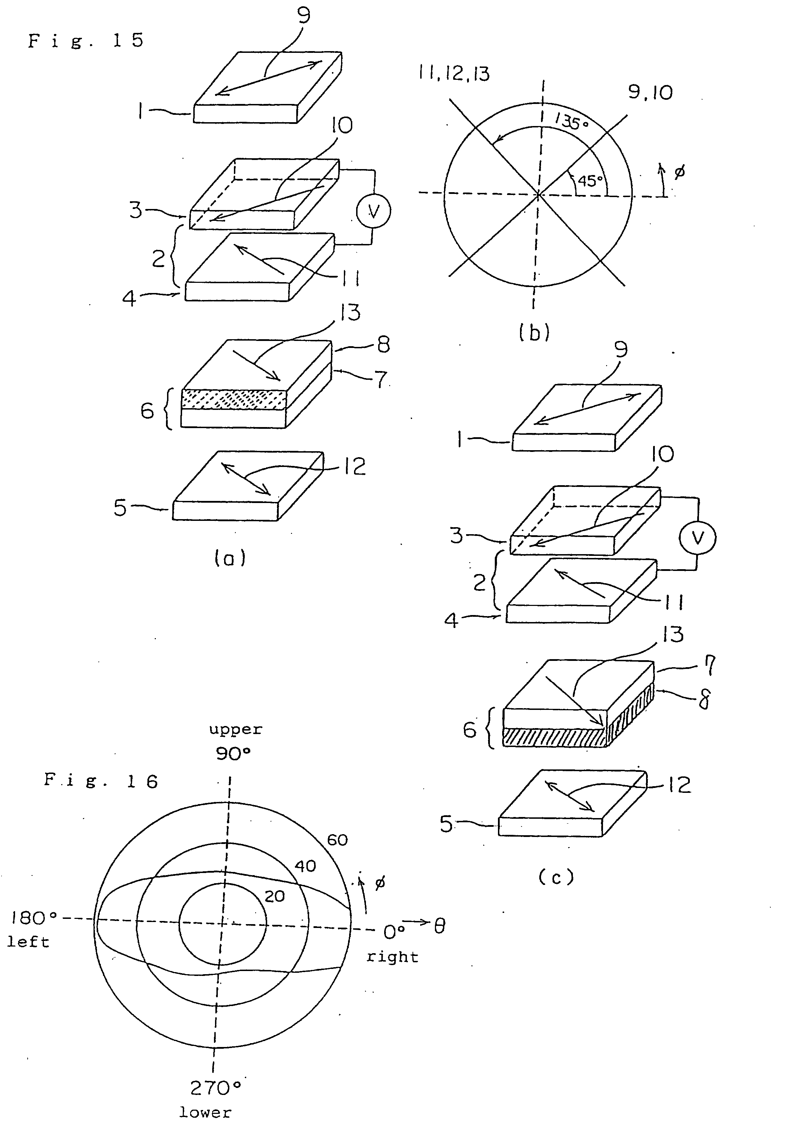

The compensating film 17 obtained in Example 17 (which is on the substrate) was used, and members shown in Fig. 15 (a) was arranged. As a result, the viewing angle was enlarged sideways as shown in Fig. 16. Moreover, at the time of the arrangement of Fig. 15(c), a satisfactory viewing angle improving effect was obtained.

### (Example 19)

### Formula (16) (Fig.57)

The right-hand numerals of the parentheses each represent a molar composition ratio.

As the discotic liquid crystalline material, a polymer with molecular weight of 12,000 obtained by linking mesogens by the decane diacid unit of the following formula (16) was used. The molecular weight was determined by GPC and in terms of polystyrene. This polymer had no liquid crystal phase, and exhibited glass transition at a temperature lower than ND phase. Tg was 70°C. The polymer was then dissolved in a mixed p-chlorophenol/tetrachloroethane solvent (weight ratio: 6:4) under heating to prepare a 12 wt% solution.

The solution was applied over a length of 10m onto a 25 cm wide polyimide film (obtained by rubbing a Du Pont's "kapton" film with a thickness of 100 µm) which had been subject to a rubbing treatment, by means of a roll coater, then dried with 100°C hot air, heat-treated at 250°C for 2 minutes and thereafter cooled to solidify the liquid crystal phase, thereby affording a compensating film 19 on the rubbing-treated polyimide film.

Parameters and physical property values of the film 19 was shown in Table 1. A film thickness, a refractive index, a director angle were measured on the rubbing-treated polyimide film, and it was difficult in this state to measure an in-plane retardation value and an average tilt angle, so the measurement was conducted after peeling and transferring operations, mentioned below.

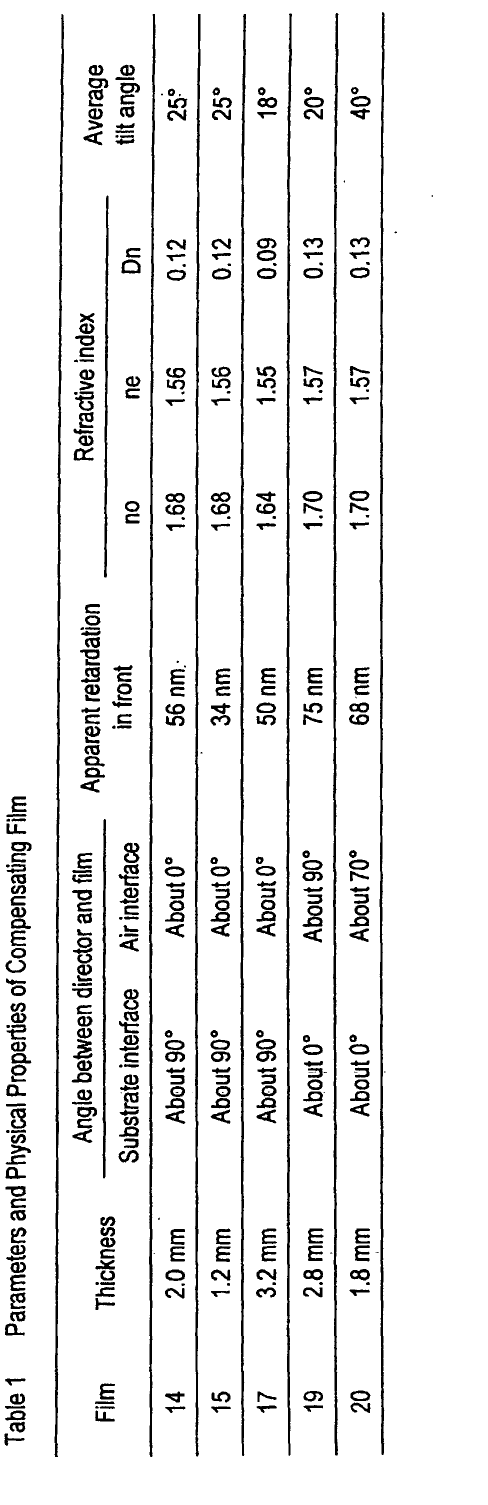

Since the polyimide film lacks transparency and involves a problem in its use as a compensating substrate, the compensating film 4 was transferred onto a polyether sulfone of an optical grade through a pressure-sensitive adhesive. More specifically, the polyether sulfone which has been applied with the pressure-sensitive adhesive and the film 4 on the rubbing-treated polyimide film were laminated together so that the adhesive layer and the film 4 were in contact with each other, followed by peeling of the rubbing-treated polyimide film.

Due to the transfer operation, the relation between the compensating film 4 and the substrate on the polyimide film and that on the polyether sulfone having the adhesive layer are reverse to each other. Directors of the film 4 after peeling are substantially parallel to the film plane on the side contacting the adhesive layer, while on the air side they are nearly perpendicular to the film plane.

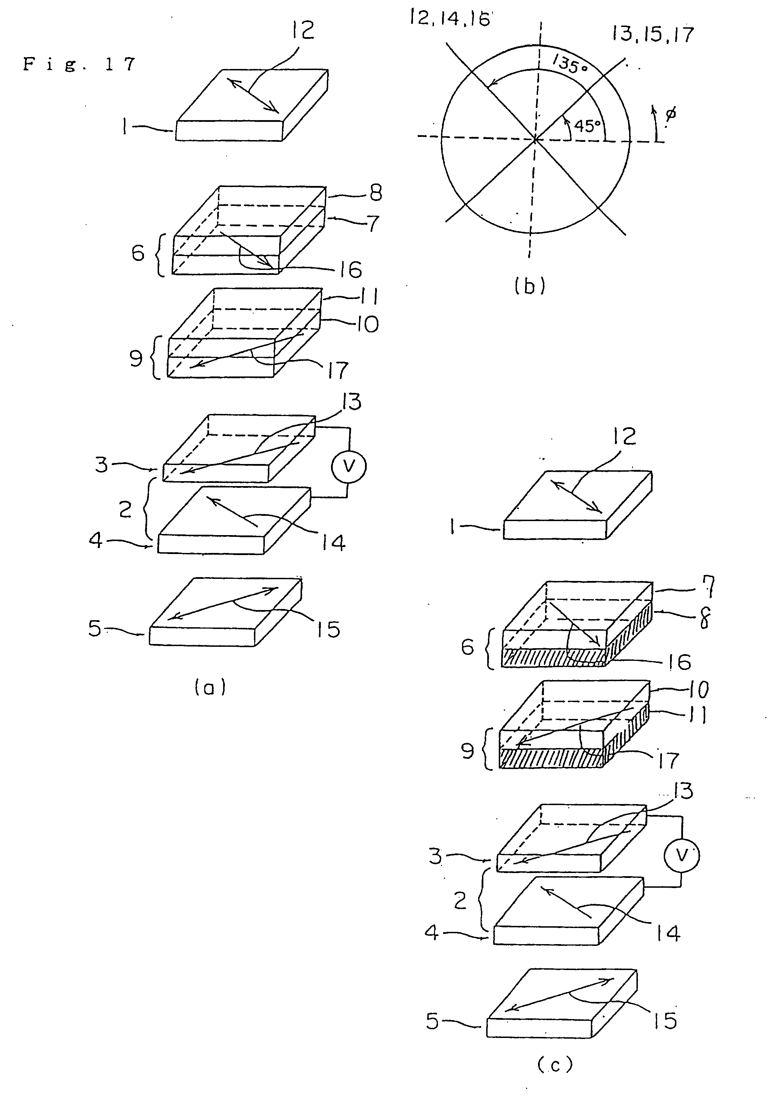

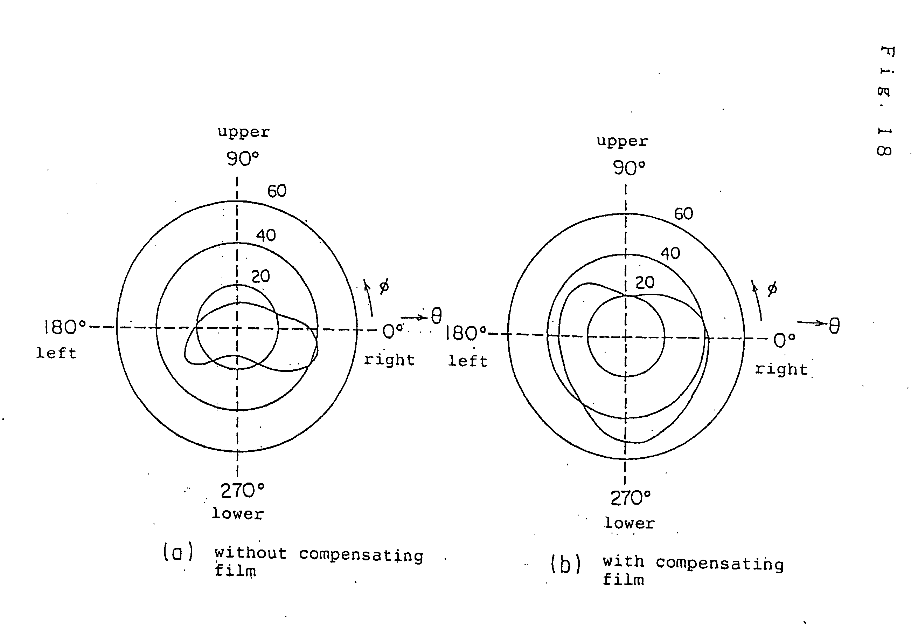

The compensating film 19 (compensating element) on the polyether sulfone having the pressure-sensitive layer was used so that the compensating effect was examined. A liquid crystal cell had a TFT electrode substrate, was twisted left by 90° at the time of not supplying a voltage, and the retardation value was 495 nm. The liquid crystal cell, a pain of polarizing sheets and two sheets of the compensating films 4 were used to be arranged as shown in Fig. 17(a). 8-gradation gray scale display was carried out by using a pattern generator on the market. Fig. 18 showed an area where a contrast ratio of white and black is not less than 30 and the order of 8-tone gray scale is never inverted. According to Fig. 18, it was found that the viewing angle range where high-quality display is carried out was greatly enlarged. Moreover, at the time of the arrangement of Fig. 17(c), a satisfactory viewing angle improving effect was obtained.

### (Example 20)

The compensating film 4 on the polyether sulfon having the pressure-sensitive adhesive layer obtained in Example 19 was soaked into a solution containing 3 wt% acetone for 3 minutes at room temperature, a part of the liquid crystal layer was eluded and air-dried to afford a new compensating film 20. The structure of the compensating film 20 was as shown in Table 1.

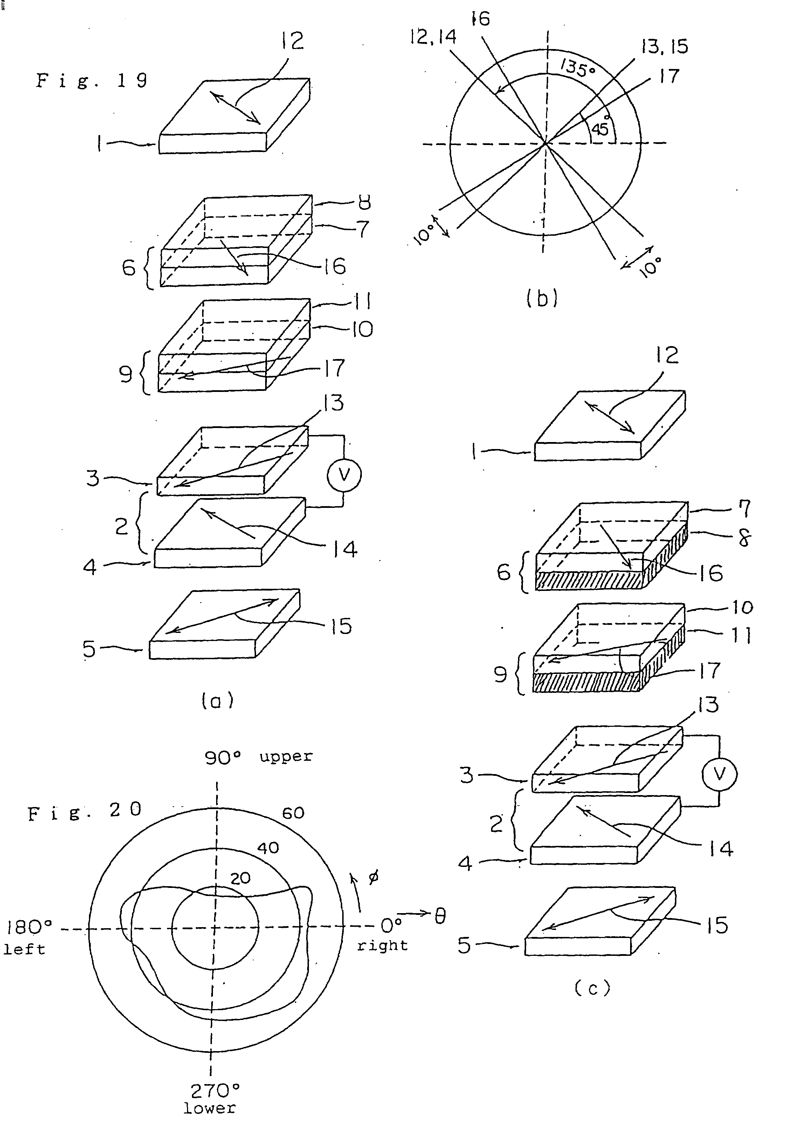

The polarizing plate, TFT liquid crystal cell and pattern generator same as in Example 20 were used, and two sheets of the compensating films 20 were arranged as shown in Fig. 19 (a), so that a viewing angle property was examined. As a result, the contrast and gradation inversion were as shown in Fig. 20. According to this results, the viewing angle enlarging effect of the compensating film 20 was confirmed. Moreover, at the time of the arrangement of Fig. 19(c), a satisfactory viewing angle improving effect was obtained.

### (Example 21)

As the discotic liquid crystalline material, a material of the formula (10) having ND phase was used, to produce a single-layered compensating film 21 (thickness: 1.2 µm) on a glass substrate having a rubbing-treated polyimide film in the similar manner to in Example 14.

As to the resulting film, in the manner similar to in Example 14, the observation with the optical microscope and the measurement of refractive index were conducted, and as a result it was found that the hybrid orientation was formed. The angle between the liquid crystal directors and the film plane was about 90° in the glass interface and about 15° in the air interface. Moreover, the average tilt angle was 38°.

Next, the viewing angle enlarging effect was examined by using the TN cell used in Example 14, and as a result it was confirmed that the effect same as in Example 14 was obtained.

### (Example 22)

As the discotic liquid crystalline material, a material of the formula (11) having ND phase was used, to produce a single-layered compensating film 22 (thickness: 1.2 µm) on a glass substrate having a rubbing-treated polyimide film in the similar manner to in Example 14.

As to the resulting film, in the manner similar to in Example 14, the observation with the optical microscope and the measurement of refractive index were conducted, and as a result it was found that the hybrid orientation was formed. The angle between the liquid crystal directors and the film plane was about 90° in the glass interface and about 20° in the air interface. Moreover, the average tilt angle was 33°.

Next, the viewing angle enlarging effect was examined by using the TN cell used in Example 14, and as a result it was confirmed that the effect same as in Example 14 was obtained.

### (Example 23)

As the discotic liquid crystalline material, a material of the formula (12) having ND phase was used, to produce a single-layered compensating film 23 (thickness: 1.5 µm) on a glass substrate having a rubbing-treated polyimide film in the similar manner to in Example 14.

As to the resulting film, in the manner similar to in Example 14, the observation with the optical microscope and the measurement of refractive index were conducted, and as a result it was found that the hybrid orientation was formed. The angle between the liquid crystal directors and the film plane was about 90° in the glass interface and about 15° in the air interface. Moreover, the average tilt angle was 36°.

Next, the viewing angle enlarging effect was examined by using the TN cell used in Example 14, and as a result it was confirmed that the effect same as in Example 14 was obtained.

### (Example 24)

As the discotic liquid crystalline material, a material of the formula (13) having ND phase was used, to produce a single-layered compensating film 24 (thickness: 1.6 µm) on a glass substrate having a rubbing-treated polyimide film in the similar manner to in Example 14.

As to the resulting film, in the manner similar to in Example 14, the observation with the optical microscope and the measurement of refractive index were conducted, and as a result it was found that the hybrid orientation was formed. The angle between the liquid crystal directors and the film plane was about 90° in the glass interface and about 30° in the air interface. Moreover, the average tilt angle was 30°.

Next, the viewing angle enlarging effect was examined by using the TN cell used in Example 14, and as a result it was confirmed that the effect same as in Example 14 was obtained.

### (Example 25)

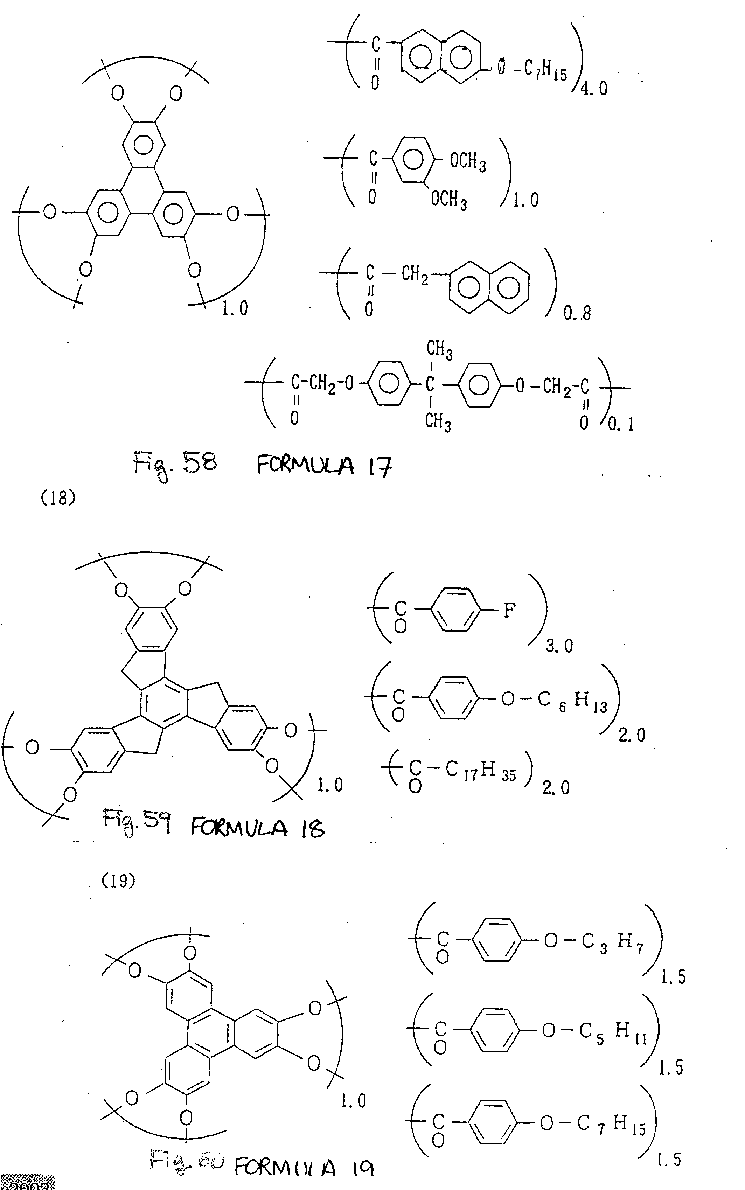

### Formula (17) (Fig.58)

The right-hand numerals of the parentheses each represent a molar composition ratio.

As the discotic liquid crystalline material, a compound of the formula (17) was composed. The compound has ND phase, and the orientation of the ND phase could be solidified by cooling with it being remained. The compound was being heated and was dissolved in butyl cellosolve to afford a 10 wt% solution.

Next, a discotic liquid crystalline material solution was applied by the die-coat method over 100m length onto a 60 cm wide rubbing-treated polyethylene naphthalate film, dried by warm breeze of 60°C, then was subject to heat treatment at 220°C for 10 minutes, thereafter cooled to afford a single-layered compensating film 25 having a thickness of 1.2 µm on the rubbing-treated polyethylene naphthalate film.

Since the polyethylene naphthalate film lacks transparency and involves a problem in its use as a compensating element, the compensating film 25 was transferred onto a triacetyl cellulose film through a ultraviolet curing type adhesive to produce a compensating element. More specifically, the triacetyl cellulose film onto which the adhesive had been applied and the compensating film 25 on the rubbing-treated polyethylene were laminated together so that the adhesive and the film 8 were in contact with each other and cured by an ultraviolet light, followed by peeling off the rubbing-treated polyethylene naphthalate film from the film 25.

Due to the transfer operation, liquid crystal directors near the upper and lower interfaces of the compensating film 8 were nearly parallel with the film plane on the side contacting the adhesive layer on the triacetyl cellulose film, while on the air side they are nearly perpendicular to the film plane.

The apparent retardation in the front was 40 nm, and a slow axis was located in the direction perpendicular to the direction corresponding to the rubbing direction of the polyethylene naphthalate film.

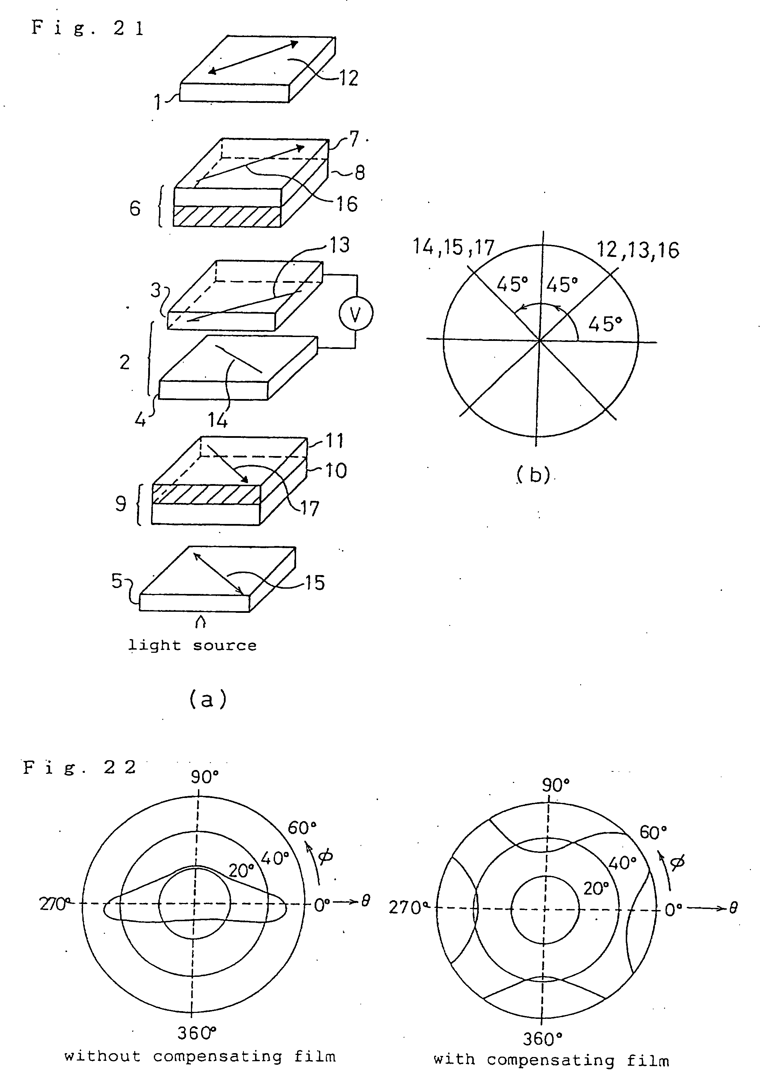

Two sheets of the compensating films 25 on the triacetyl cellulose film through the adhesive layer were prepared, and the compensating effect thereof was examined as follows. A TN liquid crystal cell, a polarizing sheets and the compensating film 8 were arranged as shown in Fig. 21, and a viewing angle property was examined. A parameter of the TN liquid crystal cell had a left-handed twist of 90° and the retardation value was 440 nm at the time of not supplying a voltage. Fig. 22 shows an isocontrast curved line in which a binary contrast ratio of white and black is 50. According to this result, it was found that the compensating effect of the compensating film 25, that is, display having a large viewing angle was obtained.

### (Example 26)

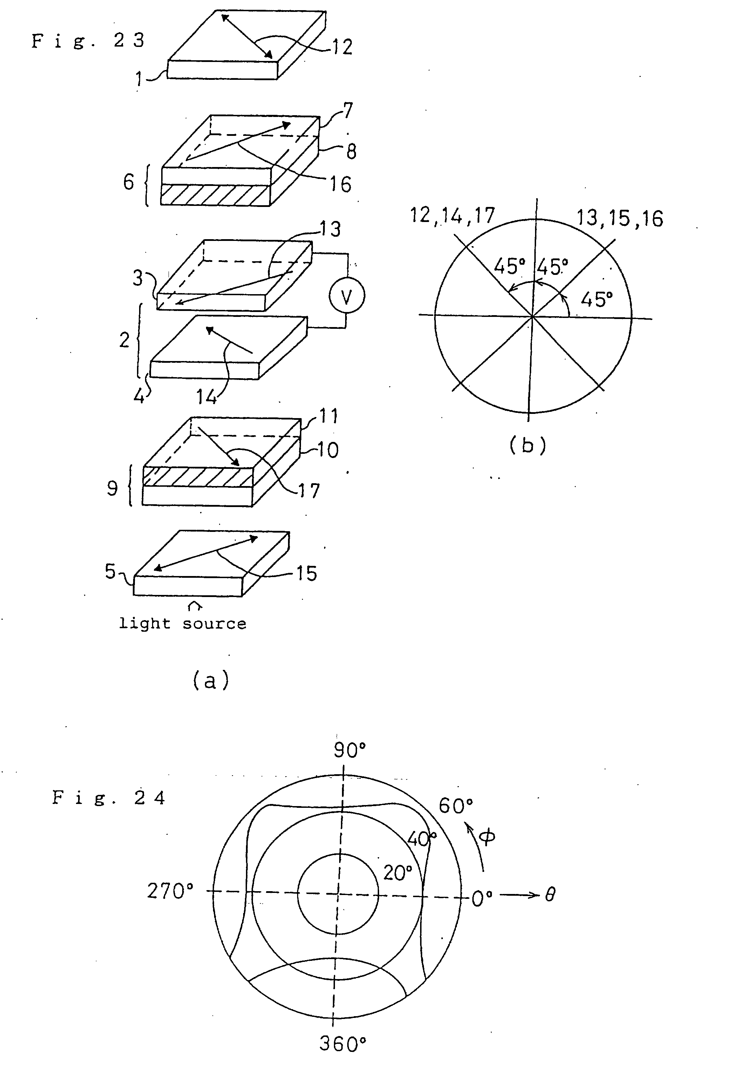

The compensating film 25 obtained in Example 25 having the arrangement shown in Fig. 23 was used, and its viewing angle property was examined. As shown in Fig. 24, it was found that display having a large viewing angle was obtained.

### (Example 27)

50 mmol of hexahydroxytruxene, 100 mM of p-fluorobenzoic acid chloride, 100 mmol of p-hexyloxybenzoic acid chloride and 100 mmol of stearic acid chloride were dissolved in 1 lit. of dried pyridine, and an obtained solution was stirred at 90°C for 5 hours in an atmosphere of nitrogen. Then the reactive solution was thrown into 10 lit. of water, a precipitate was separated by filtration, washed by 0.1N hydrochloric acid and by pure water, dried to afford a discotic liquid crystalline material of the following formula (18) (70g of yellowish-white powder).

### Formula (18) (Fig. 59)

The right-hand numerals of the parentheses each represent a molar composition ratio.

This material was observed on the Mettler hot stage to find that the compound showed schlieren texture typical for the ND phase, with no crystal phase developed even on cooling. 5 g of the material was dissolved in 45 g of chloroform to prepare a 10 wt% solution. This solution was then applied by the spin coating method onto a glass substrate of 15 cm × 15 cm having a rubbing-treated polyimide film, then dried on a hot plate of 80°C, heat-treated in an oven at 230°C for 20 minutes, thereafter taken out into room temperature and cooled to obtain a single-layered compensating film 27 on the transparent substrate.

The thickness of the film was 2.1 µm. Moreover, according to the measurement of refractive index, mentioned later, the birefringence of the discotic liquid crystalline material of the formula (18) was 0.11, and a product of the birefringence and the film thickness was 230 nm.

In addition, the polarization analysis using the ellipsometer was conducted to find that the apparent retardation in the front was 52 nm. The slow axis was located in a film in-plane direction perpendicular to the rubbing direction.

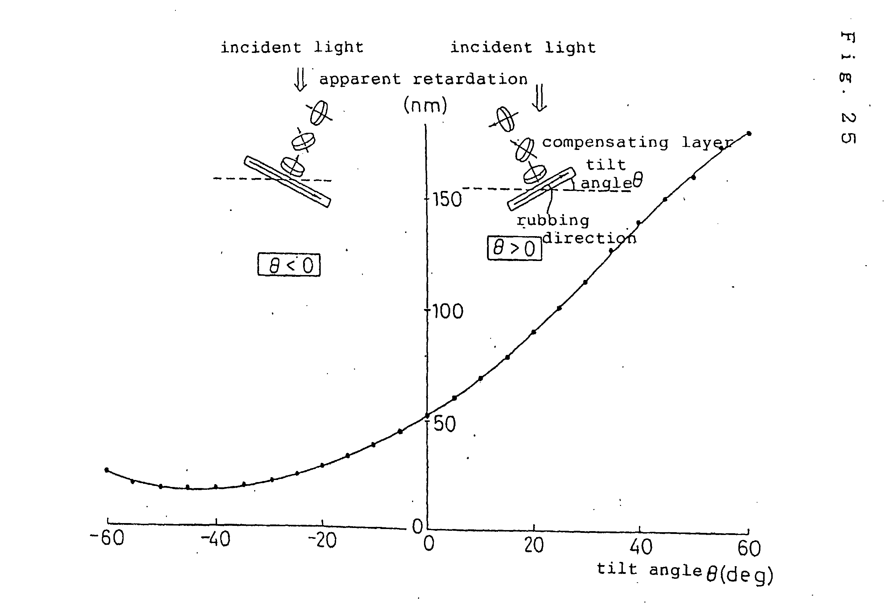

Next, the compensating film 27 on the substrate was sandwiched between the polarizers intersecting perpendicularly to each other, and this arrangement was such that a projecting vector of the directors of the discotic liquid crystal on the film surface and a transmission axis of the polarizers make an angle of 45°. Then, the compensating film 27 was tilted along the projecting vector of the directors on the film surface (coincides with the rubbing direction) to measure a the apparent retardation. As a result, a graph of Fig. 25 was obtained. From a inclined angle showing a minimum value of the retardation, the average tilt angle of 26° was obtained by considering the refractive index mentioned later. As shown in Fig. 5, the directors of liquid crystal were tilted in a direction shown in Fig. 25 with respect to the rubbing direction of the substrate.

The measurement of refractive index was conducted as follows. Similarly as the compensating film 27, a compensating film was formed on a high-refractive index glass having a rubbing-treated polyimide film, and the refractive index was measured by means of the Abbe's refractometer. The compensating film was placed so that the glass substrate was brought into contact with a prism of the refractometer and that the substrate interface side of the liquid crystalline optical film is lower than the air interface side, the in-plane refractive index showed no anisotropy and obtained a constant value of 1.64, and the refractive index in the thickness direction obtained a substantially constant value of 1.53. As a result, it was found that disc-like liquid crystal molecules were plane-oriented parallel with the substrate on the glass substrate side (the directors were perpendicular to the substrate plane). Next, when the compensating film was placed so that the air interface side was brought into contact with the prism of the refractometer, an in-plane refractive index parallel with the rubbing direction was 1.53, the in-plane refractive index perpendicular to the rubbing direction was 1.64, and the refractive index in the thickness direction was 1.64 irrespective of the direction of the sample, namely, constant. Accordingly, it was found that disc-like liquid crystal molecules on the air interface side were oriented in a direction perpendicular to the substrate and rubbing direction (the directors were parallel with the substrate plane). Such a refractive index structure is the same as that of the film 27. Therefore, it was found that the peculiar refractive index of the compensating film 1 was 1.56 (ne) in the direction parallel with the directors and 1.64 (no) in the direction perpendicular to the directors, and that a difference therebetween was 0.11.

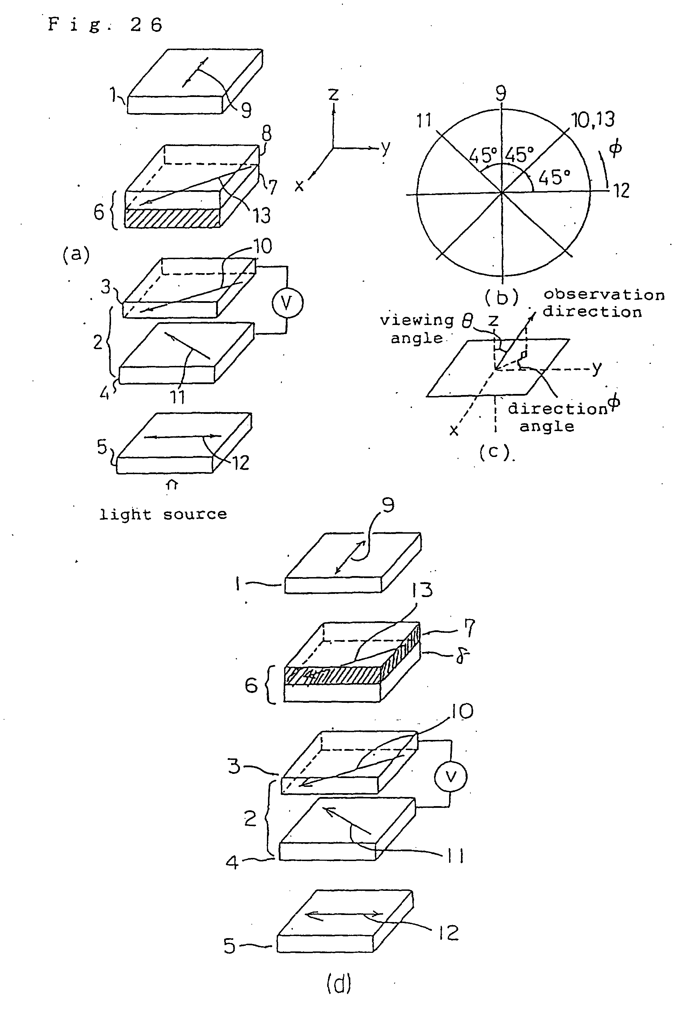

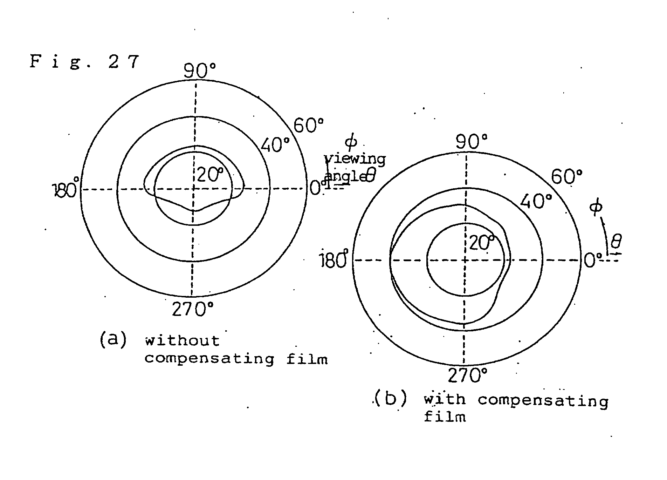

The compensating film 27 having such a structure was placed on a TN test cell to be arranged as shown in Fig. 26(a), and viewing angle dependence of a contrast value was measured. The TN cell had a left-handed twist of 90°, and the retardation at the time of not supplying a voltage was 505 nm. As a result, as shown in Fig. 27, display having a big viewing angle was obtained. Moreover, at the time of the arrangement shown in Fig. 26(d), a satisfactory viewing angle improving effect was obtained.

### (Example 28)

Only the condition of the application of a solution was changed, and a single-layered compensating film 28 having a thickness of 1.2 µm was formed on the glass substrate having a rubbing-treated polyimide film in the similar manner to example 27. The apparent retardation in the front of the film 2 was 30 nm. The average tilt angle and refractive index in the interface were measured to find that they are the same as those of the film 1 within an error range.

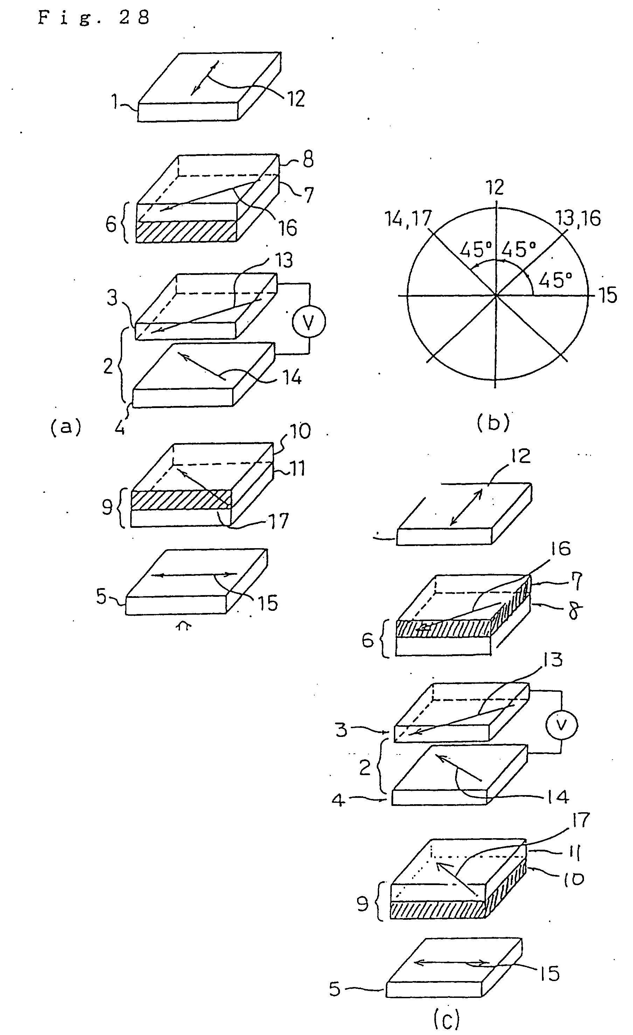

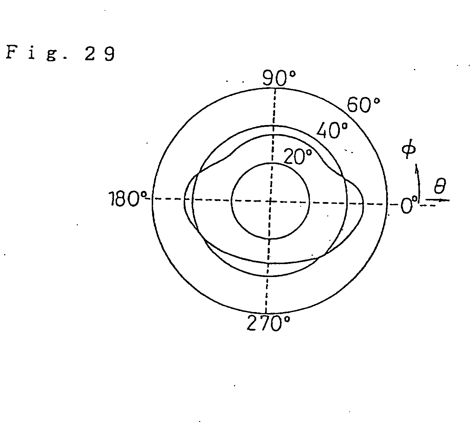

Viewing angle dependence of the contrast was measured in the arrangement of Fig. 28 (a) by using the TN cell used in Example 27, and as shown in Fig. 29, a viewing angle enlarging effect due to the compensating film was obtained. At the time of the arrangement of Fig. 28(c), a satisfactory viewing angle improving effect was obtained.

### (Example 29)

50 mmol of hexaacetoxytriphenylene, 75 mmol of propoxybenzoic acid, 150 mmol of pentyloxybenzoic acid, 75 mmol of hexyloxybenzoic acid and 75 mmol of heptyloxybenzoic acid were stirred vigorously with a mechanical stirrer in a nitrogen atmosphere in a glass flask and a deacetylation was allowed to take place at 280°C for 8 hours. The product was dissolved in tetrachloroethane, thereafter the solution was dropped into a large amount of methanol to be reprecipitated, and the precipitate was dried to afford a discotic liquid crystalline material of the following formula (19):

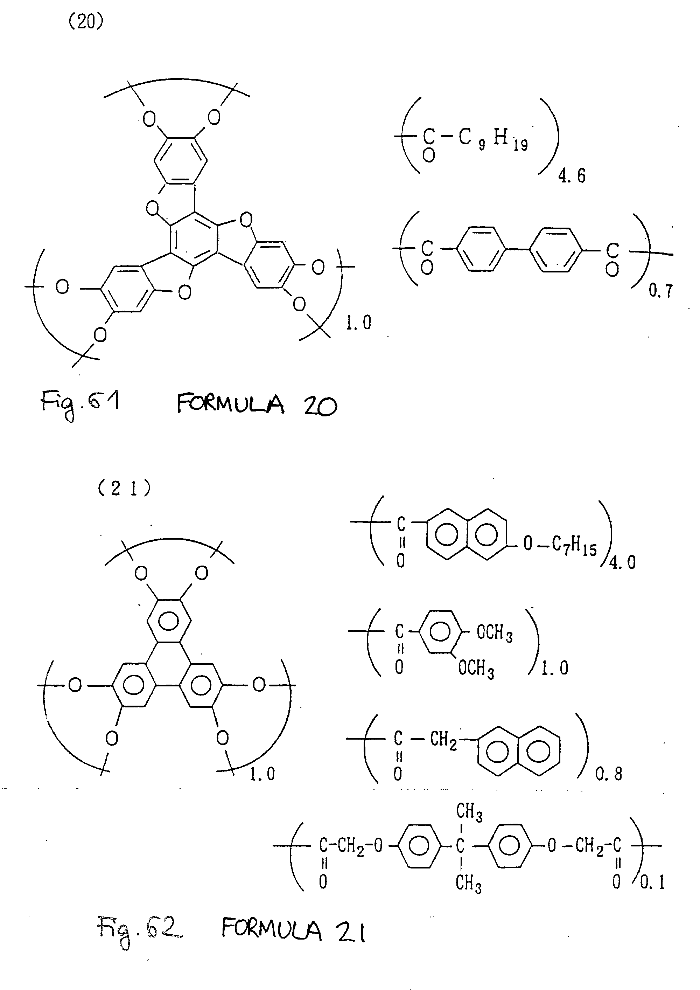

### Formula (19) (Fig.60)

The right-hand numerals of the parentheses each represent a molar composition ratio.

The material thus obtained was observed on the Mettler hot stage to find that it had ND phase and that no crystal phase was developed even on cooling from liquid crystal phase. Further, no fluidity was observed at temperature below 110°C. A xylene solution containing 10 wt% of this material was prepared and then applied by the printing method onto a glass substrate (30 cm square, 1.1 mm thick) having a rubbing-treated polyimide film, then air-dried, heat-treated at 200°C for 30 minutes, and thereafter, cooled to solidify at room temperature. The single-layered resulting compensating film 29 on the substrate was transparent, free of any orientation defect, and had a thickness of 1.0 µm. Refractive index measurement showed that the liquid crystal directors were nearly perpendicular to the alignment substrate on the substrate interface side and nearly parallel to the substrate on the air interface side and that ne=1.55, no=1.65. Thus, the difference in refractive index between no and ne was 0.10 and the product between it and the film thickness was 100 nm. An apparent in-plane retardation value was 45 nm, and a slow axis was located in an in-plane direction perpendicular to the rubbing direction. Moreover, the compensating film 29 was inclined along the rubbing direction and an apparent retardation value was measured so that an average tilt angle was obtained as 40°.

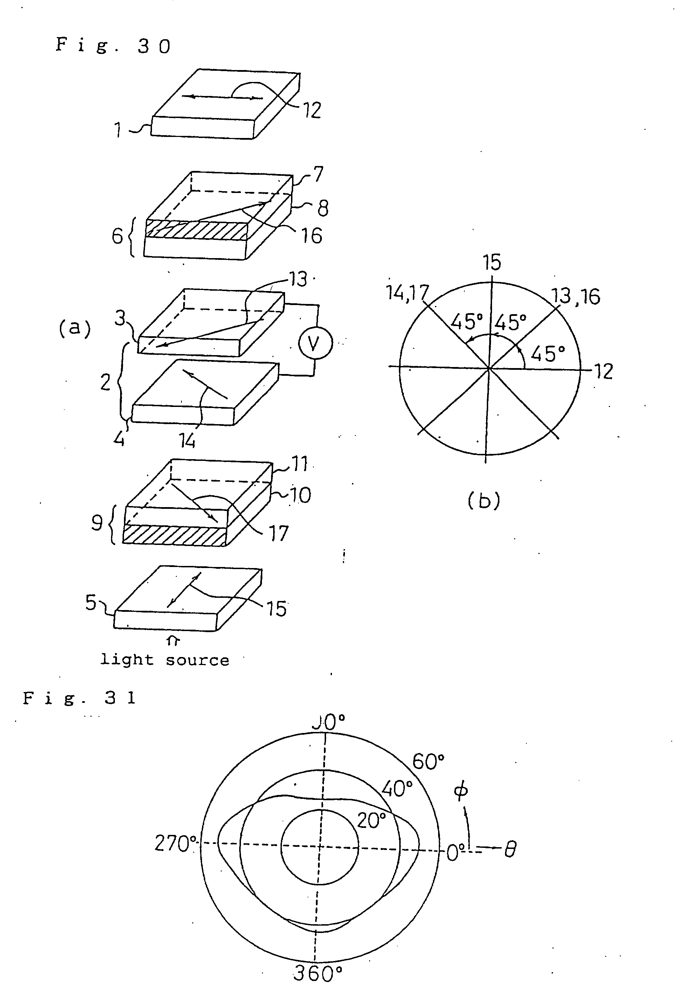

A liquid crystal cell having a TFT electrode substrate, a polarizing sheets and two sheets of the compensating films 29 were arranged as shown in Fig. 30, and the viewing angle property was examined. The parameters of the liquid crystal cell were such that twisted-left-by 90° structure was provided at the time of not supplying a voltage, and the retardation value was 495 nm. 8-gradation gray scale display was carried out by using a pattern generator on the market. Fig 31 showed an area where a contrast ratio of white and black is not less than 30 and the order of 8-tone gray scale is never inverted.

### (Comparative Example 1)

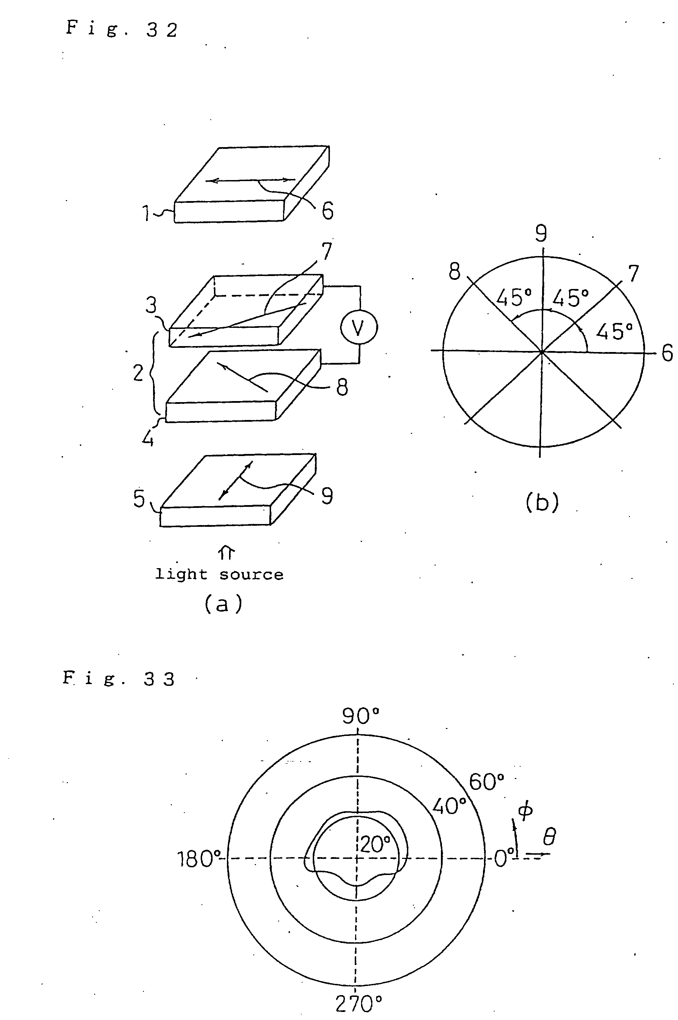

8-gradation gray scale display was carried out on the TFT liquid crystal cell of Example 29 in the arrangement of Fig. 32 in the birefringence mode by not using a compensating plate. The viewing angle property was such that the viewing angle was narrow as shown in Fig. 33.

### (Comparative Example 2)

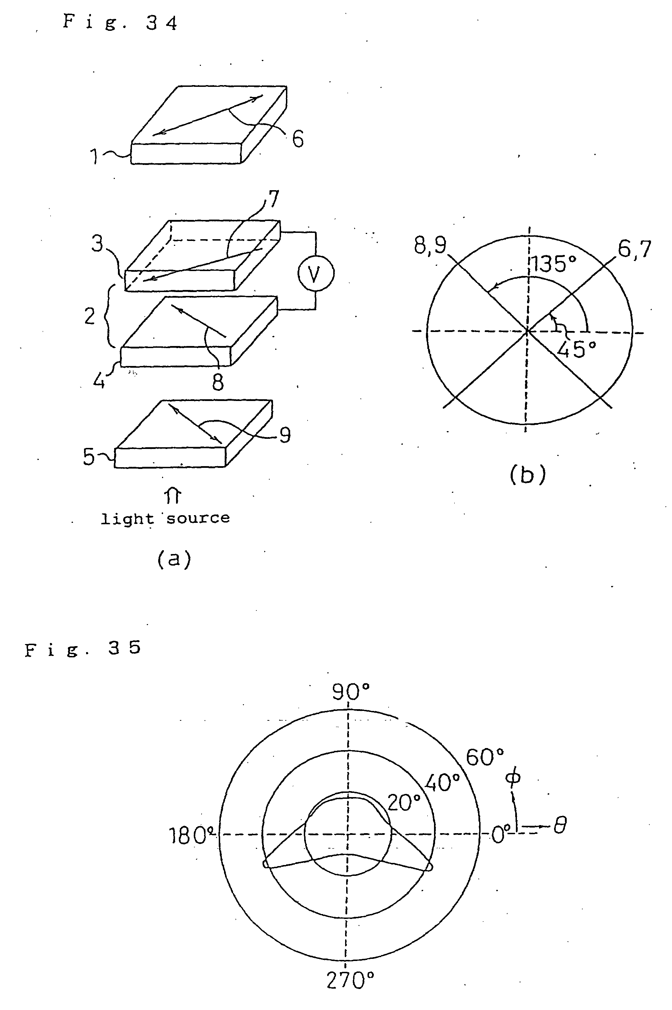

8-gradation gray scale display was carried out on the TFT liquid crystal cell of Example 29 in the arrangement of Fig. 34 in the rotatory mode by not using a compensating plate. The viewing angle property was such that the viewing angle was wider than that in the birefringence mode of comparative example 1 as shown in Fig. 33, but it was narrower than that in the birefringence mode using the compensating plate of Example 29. In particular, in the direction of 90°, black blocked-up and inversion of gradation were remarkable.

### (Example 30)

As the discotic liquid crystalline material, an oligomer composition obtained by linking a part of mesogens by the biphenyl dicarboxylic acid unit of the following formula (20) was used.

### Formula (20) (Fig.61)

The right-hand numerals of the parentheses each represent a molar composition ratio.

This oligomer had no crystalline phase, and exhibited glass transition at a temperature lower than ND phase. The oligomer was then dissolved in butyl cellosolve under heating to prepare a 12 wt% solution.

The solution was applied by the die-coat method over a length of 100m onto a 25 cm wide polyethylene terephthalate (obtained by rubbing a Teijin Ltd. "Tetron film" with a thickness of 50 µm) which had been subject to a rubbing treatment, by means of a roll coater, then dried with 100°C hot air, heat-treated at 180°C for 10 minutes and thereafter cooled to solidify the liquid crystal phase, thereby affording the single-layered compensating film 30 having a thickness of 1.5 µm on the rubbing-treated polyethylene terephthalate film.

Since the polyethylene terephthalate film has birefringence and involves a problem in its use as a compensating element, the compensating film 30 was transferred onto an isotropy polycarbonate through a two-part epoxy adhesive to afford a compensating element. More specifically, the polycarbonate film onto which the adhesive had been applied and the film 30 on the rubbing-treated polyethylene terephthalate film were laminated together so that the adhesive and the film were in contact with each other, and the adhesive was cured, followed by peeling off the rubbing-treated polyethylene terephthalate film from the film 30.

Due to the transfer operation, the relation between the compensating film 30 and the substrate on the polyethylene terephthalate film and that on the polycarbonate film having the adhesive layer are reverse to each other. Directors of the film 4 after peeling are substantially parallel to the film plane in the interface contacting the adhesive layer, while on the air side they are nearly perpendicular to the film plane.

The apparent retardation in the front was 25 nm, the slow axis was located in a direction perpendicular to the direction corresponding to the rubbing direction of the polyethylene terephthalate film, and the average tilt angle was 16°.

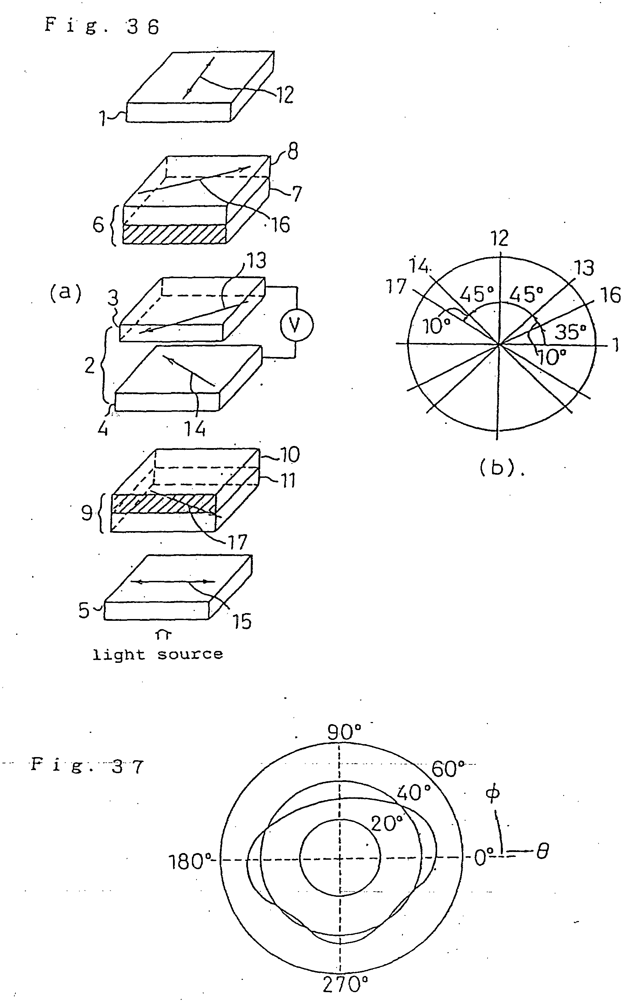

Two sheets of the compensating films 4 on the polycarbonate film having the adhesive layer was used so that the compensating effect was examined. A liquid crystal cell having a MIM electrode substrate, a polarizing sheets and two sheets of the compensating films 30 were arranged as shown in Fig. 36, and the viewing angle property was examined. Parameters of the liquid crystal cell were a twist angle of 90° (left) and a retardation of 480 nm at the time of not supplying a voltage. 8-gradation gray scale display was carried out by using a pattern generator on the market. Fig. 37 showed an area where a binary contrast ratio of white and black is not less than 30 and the order of 8-tone gray scale is never inverted. Therefore, it was found that display having a large viewing angle could be obtained.

### (Example 31)

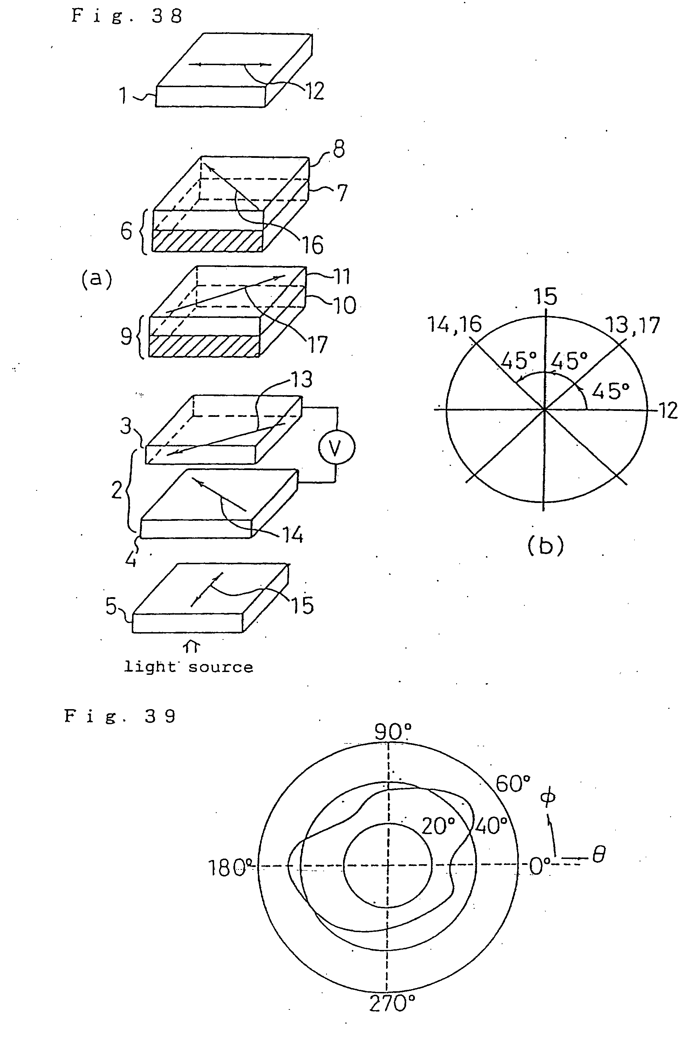

The MIM liquid crystal cell and two sheets of the films 30 of Example 30 were arranged as shown in Fig. 38, and the viewing angle property was examined. Fig. 39 showed an area where a binary contrast ratio of white and black is not less than 30 and the order of 8-tone gray scale is never inverted. Therefore, it was found that display having a large viewing angle could be obtained.

### (Example 32)

As the discotic liquid crystalline material, a material of the formula (10) having ND phase was used to produce a single-layered compensating film 32 (thickness: 1.2 µm) on a glass substrate having a rubbing-treated polyimide film in the similar manner to in Example 27.

As to the resulting film 32, in the manner similar to in Example 27, the observation with the optical microscope and the measurement of refractive index were conducted, and as a result it was found that the hybrid orientation was formed. The angle between the liquid crystal directors and the film plane was about 90° in the glass interface and about 15° in the air interface. Moreover, the average tilt angle was 38°.

Next, the viewing angle enlarging effect was examined by using the TN cell used in Example 27, and as a result it was confirmed that the effect same as in Example 27 was obtained.

### (Example 33)

As the discotic liquid crystalline material, a material of the formula (11) having ND phase was used to produce a single-layered compensating film 33 (thickness: 1.2 µm) on a glass substrate having a rubbing-treated polyimide film in the similar manner to in Example 27.

As to the resulting film 33, in the manner similar to in Example 27, the observation with the optical microscope and the measurement of refractive index were conducted, and as a result it was found that the hybrid orientation was formed. The angle between the liquid crystal directors and the film plane was about 90° in the glass interface and about 20° in the air interface. The average tilt angle was 33°.

Next, the viewing angle enlarging effect was examined by using the TN cell used in Example 27, and as a result it was confirmed that the effect same as in Example 27 was obtained.

### (Example 34)

As the discotic liquid crystalline material, a material of the formula (12) having ND phase was used, to produce a single-layered compensating film 34 (thickness: 1.5 µm) on a glass substrate having a rubbing-treated polyimide film in the similar manner to in Example 27.

As to the resulting film 34, in the manner similar to in Example 27, the observation with the optical microscope and the measurement of refractive index were conducted, and as a result it was found that the hybrid orientation was formed. The angle between the liquid crystal directors and the film plane was about 90° in the glass interface and about 15° in the air interface. The average tilt angle was 36°.

The viewing angle enlarging effect was examined by using the TN cell used in Example 27, and as a result it was confirmed that the effect same as in Example 27 was obtained.

### (Example 35)

As the discotic liquid crystalline material, a material of the formula (13) having ND phase was used, to produce a single-layered compensating film 35 (thickness: 1.6 µm) on a glass substrate having a rubbing-treated polyimide film in the similar manner to in Example 27.

As to the resulting film 35, in the manner similar to in Example 27, the observation with the optical microscope and the measurement of refractive index were conducted, and as a result it was found that the hybrid orientation was formed. The angle between the liquid crystal directors and the film plane was about 90° in the glass interface and about 30° in the air interface. The average tilt angle was 30°.

The viewing angle enlarging effect was examined by using the TN cell used in Example 27, and as a result it was confirmed that the effect same as in Example 27 was obtained.

### (Example 36)

### Formula (21) (Fig.62)

The right-hand numerals of the parentheses each represent a molar composition ratio.

As the discotic liquid crystalline material, a compound of the formula (21) was composed. The compound has ND phase, and the orientation of the ND phase could be solidified by cooling with it being remained. The compound was being heated and was dissolved in butyl cellosolve to afford a 10 wt% solution.

Next, A discotic liquid crystalline material solution was applied by the die-coat method over 100m length onto a 60 cm wide rubbing-treated polyethylene naphthalate film, dried by warm breeze of 60°C, then was subject to heat treatment at 220°C for 10 minutes, thereafter cooled to afford a single-layered compensating film 36 having a thickness of 1.2 µm and an average tilt angle of 35° on the rubbing-treated polyethylene naphthalate film.

Since the polyethylene naphthalate film lacks transparency and involves a problem in its use as a compensating element, the compensating film 36 was transferred onto a triacetyl cellulose film through a ultraviolet curing type adhesive to produce a compensating element. More specifically, the triacetyl cellulose film onto which the adhesive had been applied and the compensating film 36 on the rubbing-treated polyethylene were laminated together so that the adhesive and the film 9 were in contact with each other and cured by an ultraviolet light, followed by peeling off the rubbing-treated polyethylene naphthalate film from the film 36.

Due to the transfer operation, liquid crystal directors near the upper and lower interfaces of the compensating film 9 were nearly parallel with the film plane on the side contacting the adhesive layer on the triacetyl cellulose film, while on the air side they are nearly perpendicular to the film plane.

The apparent retardation in the front was 40 nm, and a slow axis was located in the direction perpendicular to the direction corresponding to the rubbing direction of the polyethylene naphthalate film.

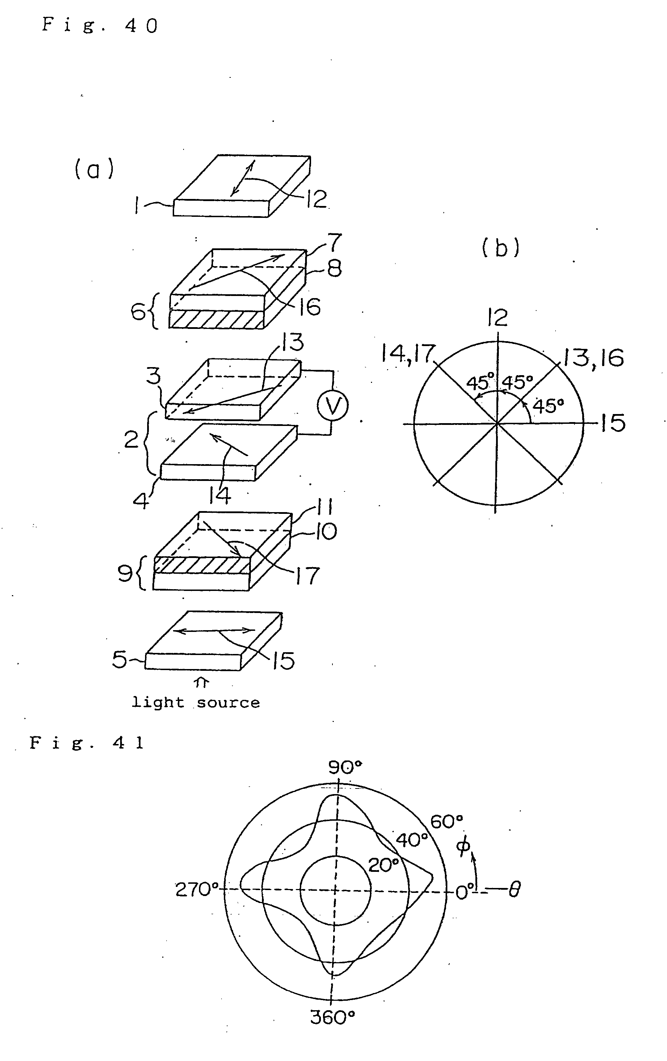

Two sheets of the compensating films 36 each on the triacetyl cellulose film through the adhesive layer were prepared, and the compensating effect thereof was examined as follows. A TN liquid crystal cell, a polarizing sheets and the compensating film 36 were arranged as shown in Fig. 40, and a viewing angle property was examined. A parameter of the TN liquid crystal cell were a twist angel of 90° (left) and a retadation of 440 nm at the time of not supplying a voltage. Fig. 41 shows an isocontrast curved line in which a binary contrast ratio of white and black is 50. According to this result, it was found that the compensating effect of the compensating film 36, that is, display having a large viewing angle was obtained.

The liquid crystalline optical film of the present invention was obtained by hybrid-orienting a discotic liquid crystal and then solidifying the hybrid oriented liquid crystal. Such a film is optically valuable and is very stable. Moreover, since the film of the present invention obtained by hybrid-orienting and solidifying discotic liquid crystals has a peculiar optical property which could not be obtained conventionally, it is expected to be used in various optical fields, and thus produces a particular effect such as an excellent industrial value.

The compensating film of the present invention exhibits an excellent compensating effect for various displays. In particular, when the compensating film is used in a TN liquid crystal display driven by the simple matrix method or a TN liquid crystal display driven by the active matrix method (MIM-LCD and TFT-LCD) the property of liquid crystal displays, namely, the viewing angle property can be remarkably improved without deteriorating a hue and lowering brightness. Since a display medium of high quality is an object of the TFT-LCD, the compensating film of the present invention is significant for improving the viewing angle property, and thus liquid crystal televisions of high quality and wide-screen liquid crystal displays can be realized. Therefore, the compensating film of the present invention is very valuable in the industrial fields.

### BRIEF DESCRIPTION OF THE DRAWINGS

Fig. 1 is a drawing explaining the peculiar refractive index distribution and the director of discotic liquid crystal.
Fig. 2 is a drawing of orientation structures of the discotic liquid crystal; arrows in the drawing represent the director; (a) shows a negative uniaxial structure in which the director is perpendicular to a substrate surface; (b) shows a negative uniaxial structure in which the director is tilted at a constant angle to the substrate surface; and (c) shows a hybrid structure of a liquid crystalline optical film according to the present invention in which the director gradually changes in the thickness direction.
Fig. 3 shows a relation between the residual film thickness and the apparent retardation value when the upper surface of a liquid crystal film obtained in Example 2 is scraped off by a solvent. The solid line shows measurements, and the dotted line shows the relation in the case of a negative uniaxial structure where the director is tilted at a constant angle.
Fig. 4 shows the relation between the tilt angle and the apparent retardation of the sample obtained in Example 2.
Fig. 5 shows the result of measuring an apparent retardation when a compensating film on a substrate in Example 4 is inclined along a rubbing direction of the substrate. In the drawing, the explanation about the tilting direction of the film is shown. The tilting direction of the directors of liquid crystal in the drawing is represented based on the result of the measurement.
Fig. 6 is a perspective view (a and d) of a liquid crystal display used in Example 14 and shows axial arrangements (a, b and d) of the members. (c) explains a direction angle φ and a viewing angle θ.
   - 1: upper polarizing plate
   - 2: TN liquid crystal cell
   - 3: upper electrode substrate having a rubbing-treated polyimide film
   - 4: lower electrode substrate having a rubbing-treated polyimide film
   - 5: lower polarizing plate
   - 6: compensating film (compensating element) on a transparent substrate
   - 7: compensating film 14
   - 8: substrate (a glass substrate having a rubbing-treated polyimide film)
   - 9: transmission axis of the upper polarizing plate
   - 10: rubbing direction of the upper electrode substrate
   - 11: rubbing direction of the lower electrode substrate
   - 12: transmission axis of the lower polarizing plate
   - 13: rubbing direction of the substrate
Fig. 7 shows the viewing angle property obtained in Example 14 (perspective view (a) of Fig. 6). The curved line in the drawing is an isocontrast curved line of a contrast 30. The three concentric circles represent the viewing angle θ = 20°, 40 and 60°, crosses dotted line represent the azimuthal angle θ = 0, 90°, 180° and 270°. (a) shows the case of no compensating film (without the member 6 in Fig. 6), and (b) shows the case of with compensating film.
Fig. 8 is a perspective view (a and c) of a liquid crystal display used in Example 15 and shows axial arrangements (a, b and c) of each member.
   - 1: upper polarizing plate
   - 2: TN liquid crystal cell
   - 3: upper electrode substrate having a rubbing-treated polyimide film
   - 4: lower electrode substrate having a rubbing-treated polyimide film
   - 5: lower polarizing plate
   - 6: compensating film (compensating element) on a transparent substrate
   - 7: compensating film 15
   - 8: substrate (a glass substrate having a rubbing-treated polyimide film)
   - 9: transmission axis of the upper polarizing plate
   - 10: rubbing direction of the upper electrode substrate
   - 11: rubbing direction of the lower electrode substrate
   - 12: transmission axis of the lower polarizing plate
   - 13: rubbing direction of the substrate
Fig. 9 shows the viewing angle property (an isocontrast curved line of contrast 30) obtained with Example 15 (perspective view (a)).
Fig. 10 is a perspective view (a and c) of a liquid crystal display used in Example 16 and shows axial arrangements (a, b and c) of each member.
   - 1: upper polarizing plate
   - 2: TN liquid crystal cell
   - 3: upper electrode substrate having a rubbing-treated polyimide film
   - 4: lower electrode substrate having a rubbing-treated polyimide film
   - 5: lower polarizing plate
   - 6: compensating film (compensating element) on a transparent substrate
   - 7: compensating film 14
   - 8: substrate (a glass substrate having a rubbing-treated polyimide film)
   - 9: compensating film on a transparent substrate
   - 10: compensating film 15
   - 11: substrate (a glass substrate having a rubbing-treated polyimide film)
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: rubbing direction of the substrate
   - 17: rubbing direction of the substrate
Fig. 11 shows the viewing angle property (an isocontrast curved line of contrast 30) obtained in Example 16 (perspective view (a)).
Fig. 12 shows the result of measuring the apparent retardation when the compensating film of sample of Example 17 is inclined along the rubbing direction of the substrate.
Fig. 13 is a perspective view (a and c) of a liquid crystal display used in Example 17 and shows axial arrangement (a, b and c) of each member.
   - 1: upper polarizing plate
   - 2: TN liquid crystal cell
   - 3: upper electrode substrate having a rubbing-treated polyimide film
   - 4: lower electrode substrate having a rubbing-treated polyimide film
   - 5: lower polarizing plate
   - 6: compensating film (compensating element) on a transparent substrate
   - 7: compensating film 17
   - 8: substrate (a glass substrate having a rubbing-treated polyimide film)
   - 9: transmission axis of the upper polarizing plate
   - 10: rubbing direction of the upper electrode substrate
   - 11: rubbing direction of the lower electrode substrate
   - 12: transmission axis of the lower polarizing plate
   - 13: rubbing direction of the substrate
Fig. 14 shows the viewing angle property (an isocontrast curved line of contrast 30) obtained in Example 17 (perspective view (a)). (a) shows the case of no compensating film (without the member 6 in Fig. 12), and (b) shows the case of with the compensating film.
Fig. 15 is a perspective view (a and c) of a liquid crystal display used in Example 18, and shows axial arrangements (a, b and c) of each member.
   - 1: upper polarizing plate
   - 2: TN liquid crystal cell
   - 3: upper electrode substrate having a rubbing-treated polyimide film
   - 4: lower electrode substrate having a rubbing-treated polyimide film
   - 5: lower polarizing plate
   - 6: compensating film (compensating element) on a transparent substrate
   - 7: compensating film 17
   - 8: substrate (a glass substrate having a rubbing-treated polyimide film)
   - 9: transmission axis of the upper polarizing plate
   - 10: rubbing direction of the upper electrode substrate
   - 11: rubbing direction of the lower electrode substrate
   - 12: transmission axis of the lower polarizing plate
   - 13: rubbing direction of the substrate
Fig. 16 shows the viewing angle property (a isocontrast curved line of contrast 30) obtained in Example 18 (perspective view (a)).
Fig. 17 is a perspective view (a and c) of a liquid crystal display used in Example 19, and shows axial arrangements (a, b and c) of each member.
   - 1: upper polarizing plate
   - 2: TN liquid crystal cell
   - 3: ITO electrode substrate having a rubbing-treated polyimide film
   - 4: TFT electrode substrate having a rubbing-treated polyimide film
   - 5: lower polarizing plate
   - 6: compensating film (compensating element) on a transparent substrate
   - 7: compensating film 19
   - 8: substrate (a polyether sulfon film having a pressure-sensitive adhesive layer)
   - 9: compensating film on a transparent substrate
   - 10: compensating film 19
   - 11: substrate (a polyether sulfon film having a pressure-sensitive adhesive layer)
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: direction corresponding to the rubbing direction of the polyimide film before peeling
   - 17: direction corresponding to the rubbing direction of the polyimide film before peeling
Fig. 18 shows the viewing angle property obtained in Example 19 (perspective view (a)). The area represented by a slanted line surrounded by a curved line is an area where contrast is not less than 30 and that 8-gradation gray scale is never inverted. (a) shows the case of no compensating film (without the members 6 and 9 in Fig. 16), and (b) shows the case of with the compensating film.
Fig. 19 is a perspective view (a and c) of a liquid crystal display used in Example 20, and shows axial arrangements (a, b and c) of each member.
   - 1: upper polarizing plate
   - 2: TN liquid crystal cell
   - 3: ITO electrode substrate having a rubbing-treated polyimide film
   - 4: TFT electrode substrate having a rubbing-treated polyimide film
   - 5: lower polarizing plate
   - 6: compensating film on a transparent substrate
   - 7: compensating film 20
   - 8: substrate (a polyether sulfon film having a pressure-sensitive adhesive layer)
   - 9: compensating film (compensating element) on a transparent substrate
   - 10: compensating film 20
   - 11: substrate (a polyether sulfon film having a pressure-sensitive adhesive layer)
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: direction corresponding to the rubbing direction of the polyimide film before peeling
   - 17: direction corresponding to the rubbing direction of the polyimide film before peeling
Fig. 20 shows the viewing angle property obtained in Example 20 (perspective view (a)). The area represented by a slanted line surrounded by a curved line is an area where contrast is not less than 30 and that 8-gradation gray scale is never inverted.
Fig. 21 is a perspective view (a) of a liquid crystal display used in Example 25, and shows axial arrangements (a and b) of each member.
   - 1: upper polarizing plate
   - 2: TN liquid crystal cell
   - 3: upper ITO electrode substrate having a rubbing-treated polyimide film
   - 4: lower ITO electrode substrate having a rubbing-treated polyimide film
   - 5: lower polarizing plate
   - 6: compensating film (compensating element) on a triacetyl cellulose film
   - 7: compensating film 25
   - 8: triacetyl cellulose film having an adhesive layer)
   - 9: compensating film (compensating element) on a triacetyl cellulose film
   - 10: compensating film 25
   - 11: triacetyl cellulose film having an adhesive layer)
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: direction corresponding to the rubbing direction of the polyethylene naphthalate film after peeling
   - 17: direction corresponding to the rubbing direction of the polyethylene naphthalate film after peeling
Fig. 22 shows the isocontrast curved line (contrast 50) obtained in Example 25 (perspective view (a)).
Fig. 23 is a perspective view (a) of a liquid crystal display used in Example 26, and shows axial arrangements (a and b) of each member.
   - 1: upper polarizing plate
   - 2: TN liquid crystal cell
   - 3: upper ITO electrode substrate having a rubbing-treated polyimide film
   - 4: lower ITO electrode substrate having a rubbing-treated polyimide film
   - 5: lower polarizing plate
   - 6: compensating film (compensating element) on a triacetyl cellulose film
   - 7: compensating film 25
   - 8: triacetyl cellulose film having an adhesive layer)
   - 9: compensating film (compensating element) on a triacetyl cellulose film
   - 10: compensating film 25
   - 11: triacetyl cellulose film having an adhesive layer)
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: direction corresponding to the rubbing direction of the polyethylene naphthalate film after peeling
   - 17: direction corresponding to the rubbing direction of the polyethylene naphthalate film after peeling
Fig. 24 shows the isocontrast curved line (contrast 50) obtained in Example 26 (perspective view (a)).
Fig. 25 is a graph showing results of measuring the apparent retardation when a compensating film on a substrate in Example 27 is tilted along the rubbing direction of the substrate. A drawing which explains the tilting direction of the film is also shown. The tilting direction of the liquid crystal director is shown based on the obtained results.
Fig. 26 is a perspective view (a and d) of a liquid crystal display used in Example 27, and shows axial arrangements (a, b and d) of each member. (c) is a drawing explaining a direction angle θ and a viewing angle θ.
   - 1: upper polarizing plate
   - 2: TN liquid crystal cell
   - 3: upper ITO electrode substrate having a rubbing-treated polyimide film
   - 4: lower ITO electrode substrate having a rubbing-treated polyimide film
   - 5: lower polarizing plate
   - 6: compensating film (compensating element) on a transparent substrate
   - 7: substrate (a glass substrate having a rubbing-treated polyimide film)
   - 8: compensating film 27
   - 9: transmission axis of the upper polarizing plate
   - 10: rubbing direction of the upper electrode substrate
   - 11: rubbing direction of the lower electrode substrate
   - 12: transmission axis of the lower polarizing plate
   - 13: rubbing direction of the substrate
Fig. 27 the viewing angle property obtained in Example 27 (perspective view (d)). The curved line in the drawing is an isocontrast curved line of a contrast 30. The three concentric circles represent the viewing angles θ = 20°, 40 and 60°, crossed dotted lines represent the azimuthal angle θ = 0, 90°, 180° and 270°. (a) shows the case of no compensating film, and (b) shows the case of with the compensating film.
Fig. 28 is a perspective view (a and c) of a liquid crystal display used in Example 28 and shows axial arrangements (a, b and c) of each member.
   - 1: upper polarizing plate
   - 2: TN liquid crystal cell
   - 3: upper ITO electrode substrate having a rubbing-treated polyimide film
   - 4: lower ITO electrode substrate having a rubbing-treated polyimide film
   - 5: lower polarizing plate
   - 6: compensating film (compensating element) on a transparent substrate
   - 7: substrate (a glass substrate having a rubbing-treated polyimide film)
   - 8: compensating film 28
   - 9: compensating film (compensating element) on a transparent substrate
   - 10: substrate (a glass substrate having a rubbing-treated polyimide film)
   - 11: compensating film 28
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: rubbing direction of the substrate
   - 17: rubbing direction of the substrate
Fig. 29 shows the viewing angle property (an isocontrast curved line of contrast 30) obtained in Example 28 (perspective view (a)).
Fig. 30 is a perspective view (a) of a liquid crystal display used in Example 29 and shows axial arrangements (a and b) of each member.
   - 1: upper polarizing plate
   - 2: TN liquid crystal cell
   - 3: upper ITO electrode substrate having a rubbing-treated polyimide film
   - 4: lower ITO electrode substrate having a rubbing-treated polyimide film
   - 5: lower polarizing plate
   - 6: compensating film (compensating element) on a transparent substrate
   - 7: substrate (a glass substrate having a rubbing-treated polyimide film)
   - 8: compensating film 29
   - 9: compensating film (compensating element) on a transparent substrate
   - 10: substrate (a glass substrate having a rubbing-treated polyimide film)
   - 11: compensating film 29
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: rubbing direction of the substrate
   - 17: rubbing direction of the substrate
Fig. 31 shows the viewing angle property obtained in Example 29 (perspective view (a)). The inside of the curved line is an area where contrast is not less than 30 and that 8-gradation gray scale is never inverted.
Fig. 32 is a perspective view (a) of a liquid crystal display used in Comparative Example 1, and shows axial arrangements (a and b) of each member.
   - 1: upper polarizing plate
   - 2: TN liquid crystal cell
   - 3: upper ITO electrode substrate having a rubbing-treated polyimide film
   - 4: lower ITO electrode substrate having a rubbing-treated polyimide film
   - 5,: lower polarizing plate
   - 6: transmission axis of the upper polarizing plate
   - 7: rubbing direction of the upper electrode substrate
   - 8: rubbing direction of the lower electrode substrate
   - 9: transmission axis of the lower polarizing plate
Fig. 33 shows the viewing angle property obtained in Comparative Example 1. The inside of the curved line is an area where contrast is not less than 30 and that 8-gradation gray scale is never inverted.
Fig. 34 is a perspective view (a) of a liquid crystal display using a rotary polarization mode without using a compensating plate of Comparative Example 2, and shows the axial arrangements of each member (a and b). The members and reference numerals thereof are the same as those in Fig. 10. Only the axial direction of the polarizing plate is different from that in Fig. 31.
Fig. 35 shows the viewing angle property obtained in Comparative Example 1. The inside of the curved line is an area where contrast is not less than 30 and that 8-gradation gray scale is never inverted.
Fig. 36 is a perspective view (a) of a liquid crystal display used in Example 30, and shows axial arrangements (a and b) of each member.
   - 1: upper polarizing plate
   - 2: TN liquid crystal cell
   - 3: upper ITO electrode substrate having a rubbing-treated polyimide film
   - 4: upper ITO electrode substrate having a rubbing-treated polyimide film
   - 5: lower polarizing plate
   - 6: compensating film (compensating element) on a transparent substrate
   - 7: substrate (a polycarbonate film having a pressure-sensitive adhesive layer)
   - 8: compensating film 30
   - 9: compensating film (compensating element) on a transparent substrate
   - 10: substrate (a polycarbonate film having a pressure-sensitive adhesive layer)
   - 11: compensating film 30
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: direction corresponding to the rubbing direction of the polyethylene terephthalate film before peeling
   - 17: direction corresponding to the rubbing direction of the polyethylene terephthalate film before peeling
Fig. 37 shows the viewing angle property obtained in Example 30 (viewing angle (a)). An inside of the curved line is an area where contrast is not less than 30 and that 8-gradation gray scale is never inverted.
Fig. 38 is a perspective view (a) of a liquid crystal display used in Example 31, and shows the axial arrangements (a and b) of each member. The members and reference numerals thereof are the same as those in Fig. 36.
Fig. 39 shows the viewing angle property obtained in Example 31. The inside of the curved line is an area where contrast is not less than 30 and that 8-gradation gray scale is never inverted.
Fig. 40 is a perspective view (a) of a liquid crystal display used in Example 36, and shows axial arrangements (a and b) of each member.
   - 1: upper polarizing plate
   - 2: TN liquid crystal cell
   - 3: upper ITO electrode substrate having a rubbing-treated polyimide film
   - 4: lower ITO electrode substrate having a rubbing-treated polyimide film
   - 5: lower polarizing plate
   - 6: compensating film (compensating element) on a triacetyl cellulose film
   - 7: compensating film 36
   - 8: triacetyl cellulose film having an adhesive layer)
   - 9: compensating film (compensating element) on a triacetyl cellulose film
   - 10: compensating film 36
   - 11: triacetyl cellulose film having an adhesive layer
   - 12: transmission axis of the upper polarizing plate
   - 13: rubbing direction of the upper electrode substrate
   - 14: rubbing direction of the lower electrode substrate
   - 15: transmission axis of the lower polarizing plate
   - 16: direction corresponding to the rubbing direction of the polyethylene naphthalate film after peeling
   - 17: direction corresponding to the rubbing direction of the polyethylene naphthalate film after peeling
Fig. 41 shows the isocontrast curved line (contrast 50) obtained in Example 36.

## Claims

1. A liquid crystalline optical film formed by a single-layered film of a discotic liquid crystalline material having a stabilized amorphous glasses state in which the liquid crystal orientation is frozen, said orientation form being a hybrid orientation in which the angle between the discotic crystal director near the upper interface of the film and a film plane is different from the angle between the discotic crystal director near the lower interface of the film and the film plane.

2. The liquid crystalline optical film according to claim 1, wherein the hybrid orientation is such that on one side of the film the discotic liquid crystal director makes an angle of between 60° and 90° relative to the film plane, while on the other side of the film the discotic liquid crystal director makes an angle of between 0° and 50° relative to the film plane.

3. The liquid crystalline optical film according to claim 1 or 2 formed on a substrate.

4. A liquid crystal display element compensating film comprising a liquid crystalline film according to claim 1.

5. The liquid crystal display element compensating film according to claim 4, at least one sheet of said liquid crystal display element compensating film being used for a liquid crystal element employing a normally white mode provided with a twisted nematic liquid crystal cell and with a pair of upper and lower polarizers sandwiching the liquid crystal cell.

6. The liquid crystal display element compensating film according to claim 4, or 5, at least one sheet of said liquid crystal display element compensating film being used on one or both sides of the twisted nematic liquid crystal cell between a pair of upper and lower polarizers sandwiching a twisted nematic liquid crystal cell.

7. A liquid crystal display element compensating film, constituted by a compensating film used for a birefringence mode and normally white mode liquid crystal display element having a twisted nematic liquid crystal cell and a pair of polarizers whose transmission axes intersect perpendicularly to each other, said compensating film comprising a liquid crystalline film according to claim 1.

8. A liquid crystal display element compensating film, constituted by a compensating film used for a rotatory mode and normally white mode liquid crystal display element having a twisted nematic liquid crystal cell and a pair of polarizer whose transmission axes intersect perpendicularly to each other, said compensating film comprising a liquid crystalline film according to claim 1.

9. A liquid crystal display incorporating therein at least one sheet of the liquid crystal display element compensating film described in claims 4-8.

10. An optical element comprising at least the liquid crystalline optical film described in claim 1 or 2 and a substrate and wherein the angle between the discotic liquid crystal director in the vicinity of the film interface on the substrate side and the film plane is in the range of 0° to 50.

11. An optical element comprising a substrate and the liquid crystalline optical film of claim 1 or 2, said substrate having no anchoring effect on the discotic liquid crystal.

12. An optical element comprising a substrate not having an alignment film and the compensating film of claim 1 or 2.

13. A compensating element comprising the optical element of claim 10, 11 or 12.

14. The compensating element according to claim 13, at least one sheet of said compensating element being used for a normally white mode liquid crystal display element having a twisted nematic liquid crystal cell and a pair of upper and lower polarizers sandwiching the twisted nematic liquid crystal cell.

15. The compensating element according to claim 13 or 14, at least one sheet of said compensating element being used on one or both sides of the twisted nematic liquid crystal cell between a pair of upper and lower polarizers sandwiching a twisted nematic liquid crystal cell.

16. The compensating element according to claim 13, used as a compensating film for a birefringence mode and normally white mode liquid crystal display element having a twisted nematic liquid crystal cell and a pair of polarizing plates whose transmission axes intersect perpendicularly to each other.

17. The compensating element according to claim 13, used as a compensating film for a rotatory mode and normally white mode liquid crystal display element having a twisted nematic liquid crystal cell and a pair of polarizers in which transmission axes intersect perpendicularly to each other.

18. A liquid crystal display incorporating therein at least one sheet of the compensating element described in claims 13, 14, 15 or 17.

## Patentansprüche

1. Optischer Flüssigkristallfilm, hergestellt durch einen einschichtigen Film aus einem diskotischen Flüssigkristallmaterial mit einem stabilisierten amorphen glasartigen Zustand, in dem die Flüssigkristallorientierung eingefroren wird, wobei die Orientierung eine hybride Orientierung ist, in der der Winkel zwischen dem diskotischen Kristalldirektor nahe der oberen Grenzfläche des Films und einer Filmebene sich von dem Winkel zwischen dem diskotischen Kristalldirektor nahe der unteren Grenzfläche des Films und der Filmebene unterscheidet.

2. Optischer Flüssigkristallfilm nach Anspruch 1, bei dem die hybride Orientierung derart ist, dass auf einer Seite des Films der diskotische Flüssigkristalldirektor einen Winkel zwischen 60° und 90° zur Filmebene bildet, während auf der anderen Seite des Films der diskotische Flüssigkristalldirektor einen Winkel zwischen 0° und 50° zur Filmebene bildet.

3. Optischer Flüssigkristallfilm nach Anspruch 1 oder 2, der auf einem Substrat ausgebildet ist.

4. Kompensierender Film für ein Flüssigkristallanzeigeelement, der einen Flüssigkristallfilm nach Anspruch 1 umfasst.

5. Kompensierender Film für ein Flüssigkristallanzeigeelement nach Anspruch 4, wobei mindestens eine Bahn des kompensierenden Films für ein Flüssigkristallanzeigeelement für ein Flüssigkristallelement verwendet wird, in dem ein normalerweise weißer Modus eingesetzt wird, der mit einer verdrillten nematischen Flüssigkristallzelle und einem Paar oberer und unterer Polarisatoren, zwischen denen die Flüssigkristallzelle sandwichartig liegt, versehen ist.

6. Kompensierender Film für ein Flüssigkristallanzeigeelement gemäß Anspruch 4 oder 5, wobei mindestens eine Bahn des kompensierenden Films für ein Flüssigkristallanzeigeelement auf einer oder beiden Seiten der verdrillten nematischen Flüssigkristallzelle zwischen einem Paar oberer und unterer Polarisatoren, zwischen denen eine verdrillte nematische Flüssigkristallzelle sandwichartig liegt, verwendet wird.

7. Kompensierender Film für ein Flüssigkristallanzeigeelement, gebildet durch einen kompensierenden Film, der für ein Flüssigkristallanzeigelement im Doppelbrechungsmodus und im normalerweise weißen Modus mit einer verdrillten nematischen Flüssigkristallzelle und einem Paar Polarisatoren verwendet wird, deren Übertragungsachsen einander senkrecht schneiden, wobei der kompensierende Film einen Flüssigkristallfilm nach Anspruch 3 umfasst.

8. Kompensierender Film für ein Flüssigkristallanzeigeelement, gebildet durch einen kompensierenden Film, der für ein Flüssigkristallanzeigelement im Rotationsmodus und im normalerweise weißen Modus mit einer verdrillten nematischen Flüssigkristallzelle und einem Paar Polarisatoren verwendet wird, deren Übertragungsachsen einander senkrecht schneiden, wobei der kompensierende Film einen Flüssigkristallfilm nach Anspruch 1 umfasst.

9. Flüssigkristallanzeige, in die mindestens eine Bahn des in den Ansprüchen 4 bis 8 beschriebenen kompensierenden Films für ein Flüssigkristallanzeigeelement inkorporiert ist.

10. Optisches Element, umfassend mindestens den in Anspruch 1 oder 2 beschriebenen optischen Flüssigkristallfilm und ein Substrat und worin der Winkel zwischen dem diskotischen Flüssigkristalldirektor in der Nähe der Filmgrenzfläche auf der Substratseite und der Filmebene im Bereich von 0° bis 50° liegt.

11. Optisches Element, umfassend ein Substrat und den optischen Flüssigkristallfilm von Anspruch 1 oder 2, wobei das Substrat keinen Verankerungseffekt auf den diskotischen Flüssigkristall hat.

12. Optisches Element, umfassend ein Substrat, das keinen Ausrichtungsfilm aufweist, und den kompensierenden Film nach Anspruch 1 oder 2.

13. Kompensierendes Element, umfassend das optische Element nach Anspruch 10, 11 oder 12.

14. Kompensierendes Element nach Anspruch 13, wobei mindestens eine Bahn des kompensierenden Elements für ein Flüssigkristallanzeigeelement im normalerweise weißen Modus mit einer verdrillten nematischen Flüssigkristallzelle und einem Paar oberer und unterer Polarisatoren, zwischen denen die verdrillte nematische Flüssigkristallzelle sandwichartig liegt, verwendet wird.

15. Kompensierendes Element nach Anspruch 13 oder 14, wobei mindestens eine Bahn des kompensierenden Elements auf einer oder beiden Seiten der verdrillten nematischen Flüssigkristallzelle zwischen einem Paar oberer und unterer Polarisatoren, zwischen denen eine verdrillte nematische Flüssigkristallzelle sandwichartig liegt, verwendet wird.

16. Kompensierendes Element nach Anspruch 13, das als kompensierender Film für ein Flüssigkristallanzeigeelement im Doppelbrechungsmodus und im normalerweise weißen Modus mit einer verdrillten nematischen Flüssigkristallzelle und einem Paar polarisierender Platten, deren Übertragungsachsen einander senkrecht schneiden, verwendet wird.

17. Kompensierendes Element nach Anspruch 13, das als kompensierender Film für ein Flüssigkristallanzeigeelement im Rotationsmodus und im normalerweise weißen Modus mit einer verdrillten nematischen Flüssigkristallzelle und einem Paar Polarisatoren, deren Übertragungsachsen einander senkrecht schneiden, verwendet wird.

18. Flüssigkristallanzeige, in die mindestens eine Bahn des in den Ansprüchen 13, 14, 15 oder 17 beschriebenen kompensierenden Elements eingebaut ist.

## Revendications

1. Film optique à cristaux liquides formé par un film à couche unique d'un matériau à cristaux liquides discotiques ayant un état vitreux amorphe stabilisé dans lequel l'orientation des cristaux liquides est figée, ladite orientation étant une orientation hybride dans laquelle l'angle entre le directeur des cristaux discotiques près de l'interface supérieure du film et un plan du film est différent de l'angle entre le directeur des cristaux discotiques près de l'interface inférieure du film et le plan du film.

2. Film optique à cristaux liquides selon la revendication 1, dans lequel l'orientation hybride est telle que sur un côté du film, le directeur des cristaux discotiques forme un angle compris entre 60° et 90° par rapport au plan du film, tandis que sur l'autre côté du film le directeur des cristaux discotiques forme un angle compris entre 0° et 50° par rapport au plan du film.

3. Film optique à cristaux liquides selon la revendication 1 ou 2, formé sur un substrat.

4. Film compensateur d'élément d'affichage à cristaux liquides, comprenant un film à cristaux liquides selon la revendication 1.

5. Film compensateur d'élément d'affichage à cristaux liquides selon la revendication 4, au moins une feuille dudit film compensateur d'élément d'affichage à cristaux liquides étant utilisée pour un élément à cristaux liquides utilisant un mode normalement blanc doté d'une cellule à cristaux liquides nématiques en hélice et d'une paire de polariseurs supérieur et inférieur encadrant la cellule à cristaux liquides.

6. Film compensateur d'élément d'affichage à cristaux liquides selon la revendication 4 ou 5, au moins une feuille dudit film compensateur d'élément d'affichage à cristaux liquides étant utilisée sur un ou les deux côtés de la cellule à cristaux liquides nématiques en hélice entre une paire de polariseurs supérieur et inférieur encadrant une cellule à cristaux liquides nématiques en hélice.

7. Film compensateur d'élément d'affichage à cristaux liquides, constitué d'un film compensateur utilisé pour un élément d'affichage à cristaux liquides à mode de biréfringence et à mode normalement blanc comportant une cellule à cristaux liquides nématiques en hélice et une paire de polariseurs dont les axes de transmission se coupent perpendiculairement l'un à l'autre, ledit film compensateur comprenant un film à cristaux liquides selon la revendication 1.

8. Film compensateur d'élément d'affichage à cristaux liquides, constitué d'un film compensateur utilisé pour un élément d'affichage à cristaux liquides à mode de biréfringence et à mode normalement blanc comportant une cellule à cristaux liquides nématiques en hélice et une paire de polariseurs dont les axes de transmission se coupent perpendiculairement l'un à l'autre, ledit film compensateur comprenant un film à cristaux liquides selon la revendication 1.

9. Affichage à cristaux liquides, incorporant dans celui-ci au moins une feuille du film compensateur d'élément d'affichage à cristaux liquides décrit selon les revendications 4 à 8.

10. Élément optique, comprenant au moins le film optique cristallin à cristaux liquides décrit selon la revendication 1 ou 2 et un substrat et dans lequel l'angle entre le directeur du cristal liquide discotique au voisinage de l'interface du film sur le côté du substrat et le plan du film est de 0° à 50°.

11. Élément optique, comprenant un substrat et le film optique à cristaux liquides selon la revendication 1 ou 2, ledit substrat n'ayant aucun effet d'ancrage sur le cristal liquide discotique.

12. Élément optique, comprenant un substrat ne comportant pas un film d'alignement et le film compensateur selon la revendication 1 ou 2.

13. Élément compensateur, comprenant l'élément optique selon la revendication 10, 11 ou 12.

14. Élément compensateur selon la revendication 13, au moins une feuille dudit élément compensateur étant utilisée pour un élément d'affichage à cristaux liquides à mode normalement blanc comportant une cellule à cristaux liquides nématiques en hélice et une paire de polariseurs supérieur et inférieur encadrant la cellule à cristaux liquides nématiques en hélice.

15. Élément compensateur selon la revendication 13 ou 14, au moins une feuille dudit élément compensateur étant utilisée sur un ou les deux côtés de la cellule à cristaux liquides nématiques en hélice entre une paire de polariseurs supérieur et inférieur encadrant une cellule à cristaux liquides nématiques en hélice.

16. Élément compensateur selon la revendication 13, utilisé comme un film compensateur pour un élément d'affichage à cristaux liquides à mode de biréfringence et à mode normalement blanc comportant une cellule à cristaux liquides nématiques en hélice et une paire de plaques polarisantes dont les axes de transmission se coupent perpendiculairement l'un à l'autre.

17. Élément compensateur selon la revendication 13, utilisé comme un film compensateur pour un élément d'affichage à cristaux liquides à mode rotatif et à mode normalement blanc comportant une cellule à cristaux liquides nématiques en hélice et une paire de polariseurs dans lesquels les axes de transmission se coupent perpendiculairement l'un à l'autre.

18. Affichage à cristaux liquides, incorporant dans celui-ci au moins une feuille de l'élément compensateur décrit selon les revendications 13, 14, 15 ou 17.
